Europäisches Patentamt

(19)     European Patent Office

Office européen des brevets

(11)     EP 0 801 636 B1

(12)     EUROPÄISCHE PATENTSCHRIFT

(45) Veröffentlichungstag und Bekanntmachung des Hinweises auf die Patenterteilung:
**28.03.2001 Patentblatt 2001/13**

(51) Int Cl.⁷: $C04B\ 7/38$, C04B 7/43, C04B 7/02

(21) Anmeldenummer: 96943010.7

(22) Anmeldetag: **04.11.1996**

(86) Internationale Anmeldenummer:
**PCT/DE96/02093**

(87) Internationale Veröffentlichungsnummer:
**WO 97/16389 (09.05.1997 Gazette 1997/20)**

(54) **VERFAHREN ZUM HERSTELLEN VON ZEMENTKLINKER SOWIE DESSEN VORRICHTUNG**

METHOD OF PRODUCING CEMENT CLINKER AND ASSOCIATED DEVICE

PROCEDE DE PRODUCTION DE CLINKER ET DISPOSITIF CORRESPONDANT

(84) Benannte Vertragsstaaten:
**AT BE CH DE DK ES FR GB GR IE IT LI LU NL PT SE**

(30) Priorität: **03.11.1995 DE 19540996**

(43) Veröffentlichungstag der Anmeldung:
**22.10.1997 Patentblatt 1997/43**

(73) Patentinhaber:
• **Lörke, Paul**
 **51105 Köln (DE)**
• **Lörke, Alexander**
 **51105 Köln (DE)**
• **KRUPP POLYSIUS AG**
 **59269 Beckum (DE)**
• **E. SCHWENK Baustoffe KG**
 **89077 Ulm (DE)**

(72) Erfinder:
• **Lörke, Paul**
 **51103 Köln (DE)**
• **Lörke, Alexander**
 **51105 Köln (DE)**

(74) Vertreter: **Tetzner, Michael, Dipl.-Ing. et al**
 **Van-Gogh-Strasse 3**
 **81479 München (DE)**

(56) Entgegenhaltungen:
 **DE-A- 3 100 661       DE-A- 3 418 685**
 **FR-A- 1 493 146       FR-A- 2 511 611**
 **GB-A- 2 131 408**

• **DATABASE WPI Week 8634 Derwent Publications Ltd., London, GB; AN 86-224597 XP002028701 & SU 1 206 247 A (CEMENT IND. RES. INST.)**

## Beschreibung

Die Erfindung betrifft ein Verfahren (entsprechend dem Oberbegriff des Anspruches 1) sowie eine Anlage (gemäß dem Oberbegriff des Anspruches 19) zur Herstellung von Zementklinker aus basischen und sauren Rohmaterialien.

Um die Reaktionsfähigkeit von Zementrohmehl zu erhöhen, werden üblicherweise die Ausgangsrohmaterialen feiner gemahlen und dadurch die Siebrückstände auf dem 80 µm- und 200 µm-Prüfsieb verringert, was jedoch zu einer Erhöhung des Energiebedarfs und der Betriebskosten für das Mahlen dieser Rohmaterialien führt.

Es ist auch bekannt, daß unter einer relativ hoch gehaltenen Reaktionsfähigkeit des Rohmehls die Siebrückstände auf dem 80 µm-Sieb von ca. 10 % bis zu ca. 20 % und auf dem 200 µm-Sieb von ca. 1 % bis zu 5 % erhöht werden können. Das entspricht einem Korngrößenverhältnis einer 0,01 bis 80 µm-Kornfraktion zu einer 80,01 bis 500 µm-Kornfraktion von 9:1 bis 4:1. Trotzdem ist dies mit hohem Energiebedarf und hohen Betriebskosten für das Ermahlen von Rohmehl verbunden.

Aus der DE 31 00 661 A sind ferner ein Verfahren zur Herstellung von Zementklinker sowie eine Vorrichtung zur Durchführung dieses Verfahrens bekannt. Hierbei erfolgt eine stufenweise thermische Behandlung mittels Vorwärmstufe, Calcinierstufe, Sinterstufe und Kühlstufe, wobei Wärme aus Brennstoff sowohl der Calcinierstufe als auch der Sinterstufe zugeführt werden soll. Bei dieser bekannten Ausführung geht es vor allem darum, die bei der Herstellung von Zement in einem Sinterofen bei den dort herrschenden hohen Temperaturen entstehenden nitrosen Bestandteile auf das durch Umweltschutzbestimmungen zulässige Maß zu reduzieren, gleichwohl aber die technische Arbeitsfähigkeit der Abgase der Sinterstufe zur Vorwärmung und Calcinierung der Zementrohmaterialien möglichst effektiv zu nutzen. Dazu wird in dieser Druckschrift generell ein Verfahren vorgeschlagen, bei dem die Calcinierstufe in eine Vorcalcinierstufe und eine Nachcalcinierstufe unterteilt ist, wobei die Calcinierstufe durch die Abgase der Sinterstufe und die Nachcalcinierstufe mit Heißgasen aus der Brennstoffverbrennung mittels Luft beheizt werden und wobei in die heißen Abgase der Sinterstufe ein Reduktionsmittel und/oder ein Katalysator zur thermisch-chemischen Reaktion mit in den Abgasen enthaltenen nitrosen Bestandteilen eingeführt wird. Diese Einführung von Reduktionsmittel und/oder Katalysator soll zwischen Sinterstufe und Vorcalcinierstufe erfolgen.

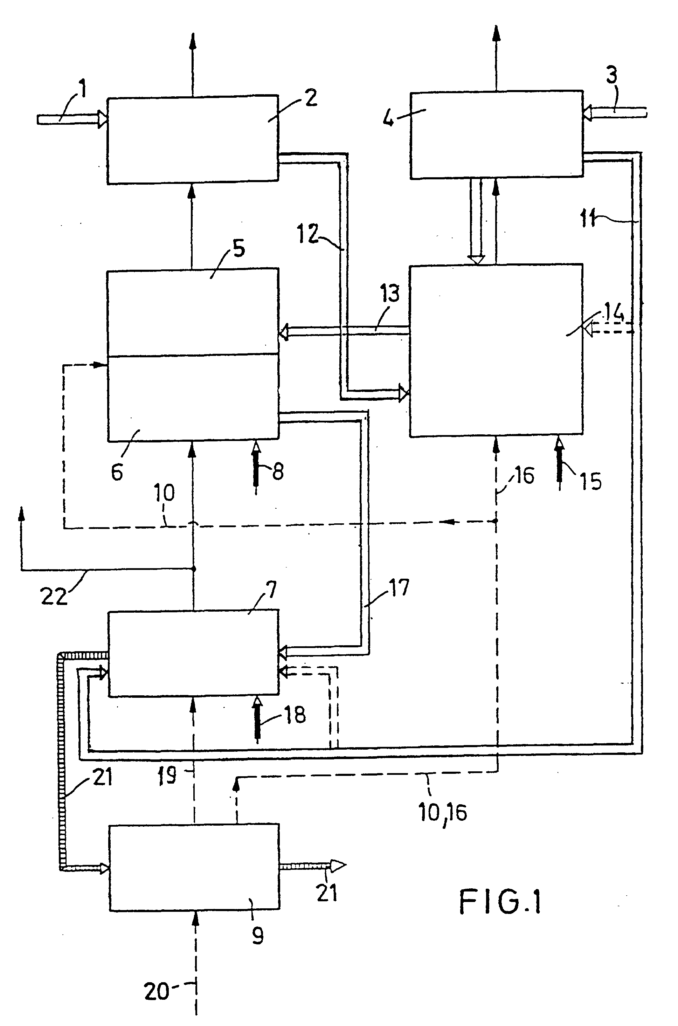

Zu dem vorgenannten Zweck wird beispielsweise (etwa entsprechend der dortigen Fig.1) das in nicht näher erläuterter Weise zerkleinerte gesamte Rohmaterial (Zementrohmehl) in zwei Teilmengen unterteilt, von denen eine erste Teilmenge in einer eigenen, nur mit den Abgasen der Vorcalcinierstufe beaufschlagten Vorwärmstufe vorgewärmt wird, während die zweite Teilmenge parallel zur ersten in mindestens einer, nur mit den Abgasen der Nachcalcinierstufe beaufschlagten Vorwärmstufe vorgewärmt wird. Der Vorcalcinierstufe ist in Strömungsrichtung der Gase eine Reaktionszone vorgeschaltet, die ausschließlich mit den Abgasen der Sinterstufe beaufschlagt und in der ein Brennstoff als Reduktionsmittel verbrannt wird. Die zweite Teilmenge des vorgewärmten Rohmaterials aus der entsprechenden Vorwärmstufe wird in die Reaktionszone als Katalysator eingeführt, während der aus der anderen Vorwärmstufe kommende Anteil der ersten Rohmaterial-Teilmenge direkt in die Vorcalcinierstufe eingeleitet wird.

Diese Druckschrift (DE 31 00 661 A) befaßt sich somit schwerpunktmäßig mit der Reduzierung von nitrosen Bestandteilen aus den Abgasen der Sinterstufe, wozu das zugeführte Gesamtrohmaterial lediglich in geeigneter Weise in zwei Teilströme unterteilt wird.

Der Erfindung liegt die Aufgabe zugrunde, ein Verfahren der im Oberbegriff des Anspruches 1 vorausgesetzten Art sowie eine Anlage entsprechend dem Oberbegriff des Anspruches 19 in der Weise weiterzuentwikkeln, daß zum einen bei einem Aufmahlen der Rohmaterialien in unterschiedliche Rohmehlanteile mit einstellbaren, optimalen Verhältnissen zwischen feineren und gröberen Kornfraktionen und zum andern bei optimal angepaßten Verfahrensbedingungen für die unterschiedlichen Rohmehlbestandteile beim Vorwärmen, Calcinieren und Sintern sowohl der Energieaufwand für Mahlen und Brennen als auch die Betriebs- und Investitionskosten reduziert werden können und dabei die Durchsatzleistung der Herstellungsanlage bei gleichzeitiger Senkung des spezifischen Brennstoffbedarfs erhöht werden kann.

Diese Aufgabe wird verfahrenstechnisch durch die kennzeichnenden Merkmale des Anspruches 1 und in anlagentechnischer Hinsicht durch die Kennzeichnungsmerkmale des Anspruches 19 gelöst.

Vorteilhafte Ausgestaltungen und Weiterbildungen dieser Erfindung sind zum einen in den Unteransprüchen 2 bis 18 (in bezug auf das Verfahren) und zum andern in den Unteransprüchen 20 bis 30 (in bezug auf die Anlage) angegeben.

Nach diesem erfindungsgemäßen Verfahren wird nun grundsätzlich so vorgegangen, daß die basischen Rohmaterialbestandteile zumindest in eine Feinkornfraktion mit Korngrößen von 0,01 bis 80 µm und eine Grobkornfraktion mit Korngrößen von 80,01 bis 2000 µm bei einem Verhältnis von Feinkornfraktion zu Grobkornfraktion von 1,5:1 bis 1:9 für ein Sintern unter dynamischen Bedingungen aufgemahlen werden und daß auf < 80 µm aufgemahlene saure Rohmehlbestandteile im Gemisch zumindest mit der basischen Rohmehl-Feinkornfraktion wärmebehandelt werden, wobei der Anteil dieser basischen Rohmehl-Feinkornfraktion in bezug auf diese sauren Rohmehlbestandteile in einem Bereich gehalten wird, der beim Sintern nur für die Bildung von CS und/oder $C_3S_2$ sowie für $C_2AS$, $C_3A$, $C_{12}A_7$ und

$C_4FA$ ausreichend ist.

Im Gegensatz zu allen bisherigen Vorstellungen wird ein deutlich gröber gehaltenes Rohmehl zu Zementklinker wärmebehandelt und gesintert, wenn entsprechend dem erfindungsgemäßen Verfahren vorgegangen (bzw. eine entsprechend der Erfindung ausgebildete Anlage verwendet) wird. Durch diese erfindungsgemäße Ausführung können somit in äußerst vorteilhafter Weise der Energieaufwand für das Mahlen der Zementrohmaterialien und für das Wärmebehandeln/Brennen dieser Rohmaterialien zu Zementklinker und darüber hinaus auch die Betriebs- und Investitionskosten sowohl für den Anlagenteil zum Mahlen als auch für den Anlagenteil zum Wärmebehandeln - im Vergleich zu den bekannten Ausführungen - erheblich reduziert werden. Dies wird nachfolgend noch näher erläutert.

Durch das erfindungsgemäße Aufmahlen und Aufteilen wird erreicht, daß vor der Bildung der Klinkerschmelze in der Sinterzone neben den konventionellen topochemisch gebildeten $C_2AS$, $C_3A$, $C_{12}A_7$ und $C_4FA$ anstatt des schwer schmelzbaren $C_2S$ weitgehend die leichtschmelzbaren $CS$ und $C_3S_2$ entstehen. Durch diese Maßnahme ist es möglich, den Klinker-Schmelzgehalt in der Sinterstufe zu erhöhen und die Schmelztemperatur zu senken, wodurch die Klinkerbildung beschleunigt und die Sintertemperatur bei der Klinkerbildung gesenkt werden. Dabei wird auch der Energieaufwand beim Rohmehlmahlen erheblich verringert und die Leistung der Mahlanlage erhöht. Die Zementeigenschaften werden durch die bessere Mineralausbildung besonders des Alits und Belits verbessert. Ferner wird der Staubausstoß aus dem Ofen dabei verringert, so daß der Wärmeverlust beim Ofen reduziert wird.

Die dabei auftretenden Phänomene werden wie folgt erklärt:

Die Klinkerbildung ist in Abhängigkeit des Aggregatzustands (flüssig oder fest) in den zwei Entwicklungsstufen zu betrachten. Die erste Entwicklungsstufe der Mineralbildung besteht aus der topochemischen Reaktionen (Festkörperreaktionen), die bis 1.250°C andauert. Die zweite Entwicklungsstufe der Klinkerbildung beginnt bei 1.250°C und vollzieht sich vornehmlich oberhalb einer Temperatur von 1.300°C aufgrund des Schmelzprozesses.

Aus dem Stand der Technik ist dazu bekannt, daß es zur Senkung des Brennstoffbedarfs beim Klinkerbrennen und zur Erhöhung der Qualität des Klinkers zweckmäßig ist, die Geschwindigkeit der Mineralbildung nicht nur durch die Schmelze, sondern auch durch topochemische Reaktionen zu beschleunigen. Üblicherweise ist die erhöhte Reaktionsfähigkeit des Rohmehls bei unverändertem KSt II durch ein relativ feines Mahlen, relativ niedrige SM und TM sowie durch Ausnutzung von Mineralisatoren zu erzielen.

Die bestehenden Vorstellungen einer optimalen fraktionären Zusammensetzung des Rohmehls, d.h. daß der Gehalt an Teilchen größer 80 μm nicht mehr als 10-15 % betragen darf, sind nicht vollständig begründet. Zum Nachweis sei erwähnt, daß durch die Festkörperreaktionen zwischen den Calcit- und $SiO_2$-Trägerteilchen von <60-80 μm eine zu früh stattfindende Belitbildung wegen eines zunehmenden Zeit- und Temperaturabstandes zwischen der Alit- und der Belitbildung zum Kristallwachstum des topochemisch gebildeten Belits und des restlichen Freikalks führt. Dadurch wird die Auflösung von rekristallisiertem Belit und von rekristallisiertem Freikalk in der Schmelze behindert, was eine Verzögerung der Alitbildung bedingt, d.h. eine Erhöhung der Sintertemperatur erfordert. Hieraus folgt also, daß eine Beschleunigung der topochemischen Reaktionen im allgemeinen nicht immer zur Erhöhung der Geschwindigkeit der Klinkerbildung führt, die Klinkerbildung kann sogar behindert werden.

Es stellt sich daher die Frage, wie die Klinkerbildung zu optimieren ist.

Hierzu ist bekannt, daß die Geschwindigkeit der Mineralbildung durch die Schmelze etwa um das 10.000-100.000fache höher ist als durch die copochemishen Reaktionen. Daraus ist zu schließen, daß eine Verzögerung der topochemischen Reaktionen vielfach auf der Entwicklungsstufe der Reaktionen in der Schmelze nachzuholen ist. Das heißt, daß sich latente Reserven zur Steigerung der Durchsatzleistung des Ofens auch in der Sinterzone befinden. Selbstverständlich ist, daß unter einer erhöhten Durchsatzleistung des Ofens bei im übrigen gleichen Bedingungen aufgrund einer Senkung der spezifischen Wärmeverluste der geringste spezifische Energiebedarf für die Klinkerbildung zu erzielen ist. Um die Klinkerbildung zu beschleunigen, gibt es deswegen zahlreiche Versuche, den Anteil der Klinkerschmelze zu erhöhen. Allerdings sind die oben beschriebenen Möglichkeiten bei der herkömmlichen Technologie zur Zemencherstellung aufgrund der erforderlichen Eigenschaften des Zementes und der daraus resultierenden notwendigen chemischen Zusammensetzungen des Rohmehls stark beschränkt.

Es ist darüber hinaus sehr wichtig, daß die Geschwindigkeit der Klinkerbildung durch die Schmelze praktisch von der Größe der Teilchen, besonders von Calcit, wenig abhängig ist. Dies ist anderweitig bestätigt, zum Beispiel bei der Schottertechnologie zur Herstellung des Zementklinkers und bei metallurgischen Vorgängen, bei denen die Reaktionen völlig in der Schmelze ablaufen, obwohl die Korngrößenfraktionen der Ausgangsrohstoffe sehr grobkörnig sein können (bis 50 mm).

Deswegen ist entgegen der bekannten Vorstellungen zu schließen, daß eine Behinderung der Klinkerbildung durch die Schmelze nicht von der Größe der Calcitteilchen (Kalksteinteilchen) abhängig ist, sondern von der Ableitung der $Ca^{2+}$-Ionen, die sich an der Grenze zwischen den Schmelz- und Festphasen, d.h. an der Grenzschicht, befinden. Solange, bis die Grenzschicht hinsichtlich der $Ca^{2+}$-Ionen gesättigt ist, wird die Auflösung der Freikalkfestphase in der Schmelze behindert.

Die Beseitigung der negativen Bremswirkung von der mit $Ca^{2+}$-Ionen gesättigten Grenzschicht auf die Geschwindigkeit der Klinkerbildung ist nur durch eine Erhöhung der Reaktionsoberfläche zwischen den Fest- und Schmelzphasen zu erzielen. Dazu ist es notwendig, den Anteil der Schmelze zu erhöhen.

Sehr hilfreich ist bei einem erhöhten Anteil der Klinkerschmelze eine mechanische Beanspruchung, da dabei gegenüber dem unter üblichem Eutektikum herabgesetzten Anteil der Klinkerschmelze ein effektiver Abtrag der gesättigten Zone erfolgt. Somit wird die langsamste Reaktionsstufe durch die Schmelze beschleunigt. Als Folge wird die Klinkerbildung besonders beim Rohmehl, das den grob gemahlenen Kalkstein enthält, erheblich beschleunigt.

Bei der daraus resultierenden Frage "Wie kann dabei der Anteil an Schmelze erhöht werden?" hilft eine Betrachtung des Zustandsdiagramms in den C - S - A- und C - S - A - F-Systemen.

Eine Analyse der 3- und 4-Stoffsysteme zeigt, daß es für das Rohmehl, dessen Hauptbestandteile $CaO$, $SiO_2$, $Al_2O_3$ und $Fe_2O_3$ sind, außer den üblichen, am C - A - Rand vorliegenden Eutektika zur Herstellung sowohl von grauem als auch von weißem Portlandzement ($C_3S - C_2S - C_3A - C_4AF$ oder $C_2S - C_3A - C_{12}A_7 - C_4AF$; grau) ($C_2S - C_3A - C_{12}A_7$; weiß) es noch am C - S - Rand gegenüberliegende Eutektika mit gleichem oder einem niedrigeren Schmelzpunkt gibt ($CS - CAS_2 - S$; $C_3S_2 - CS - C_2AS$; $C_3S_2 - CS - C_2AS - C_4AF$). Wie sich aus den Existenzbereichen der zur Klinkersinterung neu zu betrachtenden Eutektika ergibt, sind sie nur bei Vorhandensein von CS und $C_3S_2$ anstatt des $C_2S$ zu bilden.

Aus dem Vergleich der chemischen Zusammensetzungen der zur Verfügung stehenden Eutektika folgt, daß die Bildung der nicht zur Klinkersinterung auszunutzenden Eutektika mit sinkenden oder gleichen Schmelzpunkten durch eine erhebliche Erhöhung des $SiO_2$-Anteils bei gleichem oder einem verminderten CaO-Anteil im Gemisch möglich ist. Es ist zu erkennen, daß das Verhältnis zwischen sauren Oxiden in den neu zu betrachtenden Eutektika im genauen Gegensatz zu den üblichen Eutektika mit dem Rohmehl zur Portlandzement-Herstellung fast völlig übereinstimmt. Es gibt allen Grund zu der Annahme, daß beim Ablauf der Klinkerbildung durch die oben erwähnten neu zu betrachtenden Eutektika alle sauren Oxide des Rohmehls ohne Ausnahme vollständig mit einem entsprechenden CaO-Anteil in die Schmelze einbezogen werden. Bezüglich der konventionellen Technologie, deren Klinkerschmelzzusammensetzung dem höchsten Anteil an $Al_2O_3$ und $Fe_2O_3$ entspricht, wurde ebenfalls schon nachgewiesen, daß, während die $Al_2O_3$- und $Fe_2O_3$-Oxide des Rohmehls praktisch gänzlich in die Schmelze übergehen, das $SiO_2$-Oxid nur teilweise (weniger 10 % vom Gesamtgehalt des $SiO_2$) in der Schmelze aufgelöst werden kann. Dies ist aber aufgrund der neuen theoretischen Vorstellungen nur dann möglich, wenn der vorherrschende Teil des CaO zu Festkörperreaktionen fähig ist.

Aufgrund dessen ist zu erwarten, daß der Schmelzanteil beim Ablauf der Klinkerbildung durch die neuen Eutektika erheblich erhöht werden kann. Dies ergibt sich aus folgenden Erläuterungen und Berechnungen, bei denen die Reaktionsabläufe einmal mit den üblicherweise zugrunde gelegten Eutektika, und zum anderen über die neuen Eutektika erklärt werden.

Wie bereits aus dem Wert des SM eindeutig folgt, ist der $SiO_2$-Anteil im Rohmehl viel größer als der $Al_2O_3$- und $Fe_2O_3$-Anteil insgesamt. Deswegen, weil das $SiO_2$-Oxid des Rohmehls nach der neuen Technologie völlig zu den leichtschmelzbaren Silikaten, wie CS, $C_3S_2$ und $C_2AS$, chemisch eingebunden wird, um das neue Eutektikum zu bilden, kann der Schmelzanteil in der Sinterzone bei der gleichzeitigen Bildung von üblichen schmelzbildenden Mineralien ($C_3A$, $C_4AF$) erheblich erhöht werden.

Der Anteil der Schmelze, der theoretisch bei der Klinkerbildung in der Sinterzone, bezogen auf die neuen und üblichen Eutektika des Zustandsdiagramms, entstehen könnte, ist für zwei graue Klinker, die sich in ihren SM und TM unterscheiden, sowie für einen weißen Klinker berechnet worden.

Die berechneten Daten zeigen, daß die neu betrachteten Eutektika ($CS - CAS_2 - S$; $C_3S_2 - CS - C_2AS$; $C_3S_2 - CS - C_2AS - C_4AF$) hinsichtlich des Klinkerschmelzanteils viel günstiger sind, als die üblichen Eutektika des grauen und des weißen Klinkers ($C_3S - C_2S - C_3A - C_4AF$ oder $C_2S - C_3A - C_{12}A_7 - C_4AF$ grau; $C_2S - C_3A - C_{12}A_7$ weiß). Das heißt, daß bei der Alitbildung durch das neue Eutektikum der Schmelzanteil in der Sinterzone für den weißen Zementklinker von etwa 11 % bis 21-23 % und für den grauen Zementklinker von etwa 21 % bis 45-47 % vorübergehend erhöht werden kann. Dies bewirkt wiederum eine erhebliche Beschleunigung der kristall - chemischen Umwandlungen. Das heißt, es ist am günstigsten, wenn die chemische Zusammensetzung der Schmelze zur Herstellung des weißen Zementklinkers dem Eutektikum im System $C_3S_2 - CS - C_2AS$ und die des grauen Klinkers dem Eutektikum im System $C_3S_2 - CS - C_2AS - C_4AF$ entspricht.

Daraus folgt die Frage: Wenn ein ganz anderes Eutektikum günstiger als das bei der konventionellen Technologie ist, warum stellt sich der Ablauf der Alitbildung selber über das übliche Eutektikum ein? Um hinsichtlich dieser Frage die Erscheinung der Klinkerbildung zu deuten, seien im folgenden der Mechanismus und die Kinetik der Klinkerbildung betrachtet.

Die vorhandenen experimentellen und thermodynamischen Untersuchungen zeigen, daß das Mineral, welches sich im heterogenen $CaO - SiO_2$-System unabhängig von $CaO:SiO_2$-Verhältnis unter metastabilen Bedingungen als erstes bildet, $C_2S$ ist. Bei einem $CaO:SiO_2$-Molekülverhältnis von 1:1 oder 3:2, können dem entsprechend CS oder $C_2S_2$ erst dann gebildet werden, nachdem der festkörperreaktionsfähige Anteil des CaO, dessen $Ca^{2+}$-Ionen die beweglichsten sind, völlig eingebunden ist. Dies bedeutet, daß die gewünschte CS- oder $C_2S_2$-Bildung im $CaO - SiO_2$-System verlangsamt wird, d.h. eine bestimmte Zeit erfordert. Deswegen kann die sofortige Bildung der neu betrachteten Eutektika (die dem CS - CAS$_2$ - S oder C$_3$S$_2$ - CS - C$_2$AS- oder C$_3$S$_2$ - CS - C$_2$AS - C$_4$AF-System entsprechen) im Rohmehl zur Portlandzement-Herstellung nicht erzielt werden, nachdem es bei der Aufheizung unter metastabilen Bedingungen auf die notwendige Temperatur erhitzt ist. Die Hauptursache ist dabei das Fehlen der vor der Bildung der Schmelze für das neu zu betrachtende Eutektikum notwendigen leichtschmelzbaren CS-, C$_3$S$_2$- und C$_2$AS-Silikate anstatt des C$_2$S. Dies bezieht sich ebenso auf das heterogene CaO - SiO$_2$-Gemisch bei einem CaO: SiO-Molekülverhältnis von 1:1 als auch auf ein aus den CaO-, SiO$_2$-, Al$_2$O$_3$- und Fe$_2$O$_3$-Oxiden vorbereitetes heterogenes Gemisch eines der neu zu betrachtenden Eutektika. Das heißt, daß das Schmelzen eines heterogenen Gemischs, dessen chemische Zusammensetzung bezüglich der Hauptbestandteile (CaO, SiO$_2$, Al$_2$O$_3$ und Fe$_2$O$_3$) mit einem der neu zu betrachtenden Eutektika übereinstimmt. bei entsprechender Temperatur nur nach der vollständigen chemischen Einbindung aller Bestandteile stattfinden könnte. Sofern der Schmelzpunkt des im CS - CAS$_2$ - S -System befindlichen Eutektikums im Temperaturbereich der gleichzeitigen Bildung von C$_2$S, C$_3$S$_2$ und CS liegt und C$_2$S sich als erstes unter den Silikaten bildet, wird die Bildung dieses Eutektikums, das bei 1170 °C entsteht, so lange behindert, bis der C$_2$S zum CS völlig umgewandelt ist. Dabei muß der zur Festkörperreaktion fähige verfügbare CaO-Anteil dem im CS - CAS$_2$ - S -System befindlichen Eutektikum entsprechen. Praktisch bedeutet dies, daß bei der Aufheizung des Rohmehls im Ofen unter metastabilen Bedingungen die.Bildung des im CS - CAS$_2$ - S -System befindlichen Eutektikums nicht möglich ist.

Bezüglich der Stabilität sowie der erforderlichen Zeit, die die C$_2$S - CS-Umwandlung bei der Aufheizung des Rohmehls im Ofen gewährleisten könnte, sind deshalb die Eutektika im C$_3$S$_2$ - C$_2$AS - CS- und C$_3$S$_2$ - C$_2$AS - CS - C$_4$AF- System mit den Schmelzpunkten von 1.310°C und ca. 1.260°C zur Klinkerbildung am günstigsten zu betrachten.

Unter den erläuterten Bedingungen ist die Bildung des ausgewählten Eutektikums im C$_3$S$_2$ - C$_2$AS - CS- und C$_3$S$_2$ - C$_2$AS - CS - C$_4$AF-System durch topochemische Reaktionen im Rohmehl zur Zementklinkerherstellung nur dann möglich, wenn der Anteil an fein gemahlenen, d.h. zu Festkörperreaktionen fähigen Calcitpartikeln neben den C$_{12}$A$_7$ (C$_3$A) und C$_4$AF nur für die Bildung von CS und C$_3$S$_2$ anstelle des C$_2$S sowie für C$_2$AS ausreicht, und wenn eine optimal ausreichende Zeit für die C$_2$S → CS-Umwandlungen zur Verfügung steht.

Sofern die Festkörperreaktionen weiterhin durch das Vorhandensein der Calcitpartikel und der Partikel von sauren Mineralien <80 µm sichergestellt werden können, darf bei der Rohmehlherstellung der Gehalt der Calcitpartikeln <80 µm nur für die Bildung von C$_3$S$_2$, CS, C$_2$AS sowie C$_{12}$A$_7$ (C$_3$A) und C$_4$AF zur Verfügung stehen. Der Rest an calcithaltigen Komponenten des Rohmehls muß nach durchgeführten Berechnungen, um zu Festkörperreaktionen unfähig zu sein, in einer Menge von etwa 40-80 % in Partikeln über 80 µm vorliegen. Nur in diesem Fall wird die Klinkerschmelze neben den C$_3$A und C$_4$AF noch zusätzlich aus CS, C$_3$S$_2$ und C$_2$AS gebildet.

Dies bedeutet wiederum, daß der Anteil der Schmelze erhöht wird, wodurch die Geschwindigkeit der Klinkerbildung beschleunigt wird. Der zeitlich später entsäuerte grobkörnige Calcit tritt in die Sinterzone im Zustand von feinem kristallinischem, hochreaktivem Freikalk ein. Dieser Freikalk sintert und granuliert mit der Klinkerschmelze besser als der rekristallisierte Freikalk mit grob-kristallinem Gefüge, der aus feinkörnigen Calcitpartikeln durch Kristallwachstum des früher ausgebildeten Freikalks nach der bekannten Technologie entstand.

Als Folge daraus muß ein vernünftiges Verhältnis zwischen den festreaktionsfähigen Partikeln und schmelzreaktionsfähigen Partikeln eingestellt werden.

Selbstverständlich ist, daß die Partikel der tonigen, kieselsäurehaltigen, quarzhaltigen und eisenhaltigen Stoffe, die als saure Bestandteile betrachtet werden, auch festreaktionsfähig werden müssen. Um festreaktionsfähig zu werden, müssen die Partikel der sauren Rohmehlbestandteile auch entsprechend fein aufgemahlen werden. Üblicherweise müssen die Partikel der sauren Rohmehlbestandteile unter 80 µm liegen.

Die Optimierung der fraktionären Zusammensetzung des Rohmehls muß, wie bereits oben erklärt ist, darauf abgestellt sein, daß der Anteil der festreaktionsfähigen Partikel des Calcits nur für die Bildung der sauren Rohmehlbestandteile zu C$_3$A, C$_4$AF, C$_2$AS sowie CS oder C$_3$S$_2$, ausreichend ist.

Durch die Vergröberung des Rohmehls wird nicht nur der Ablauf der Festkörperreaktion, sondern auch der Mechanismus der Bildung des Alits aus der Schmelze verändert. Alit wird nunmehr nicht über die Reaktion in der Schmelze der Sinterzone zwischen dem topochemisch gebildeten Belit und dem restlichen Freikalk gebildet, sondern er kristallisiert so wie der Belit unmittelbar aus der Schmelze bei Einbeziehung des restlichen Freikalks ohne Bildung des topochemischen Belits unmittelbar vor der Schmelzbildung. Dadurch ist ein geringer Energiebedarf zur Bildung des Alits erforderlich.

Vereinfacht ausgedrückt bedeutet dies, daß durch die entsprechende Abnahme der Feinheit von Kalksteinkomponenten die Bildung des Belits in der ersten Stufe der Klinkerbildung (der Festkörperreaktionen) weitgehend vermieden wird.

In diesem Fall ist es besonders wünschenswert, daß die Klinkerbildung bei unverändertem Alitgehalt (KSt II) vorzugsweise in der Schmelze stattfindet, ohne dabei den Fe- und Al-Oxidanteil zu erhöhen sowie die Mineralisatoren zu verwenden.

Bei diesem erfindungsgemäßen Verfahren hat sich gezeigt, daß mit einer Optimierung der fraktionären Zusammensetzung von Rohmehl ein gezielter Einfluß auf den Mechanismus der Klinkerbildung erzielt werden kann, wodurch der Anteil der Klinkerschmelze erhöht werden kann. Das Mahlen des Rohmehls sollte so an den Klinkerbrennprozeß angebunden werden, daß der in der Schmelze umzusetzende übrige Teil des Rohmehls gröber gemahlen wird.

Nachfolgend seien einige Ausführungsbeispiele des erfindungsgemäßen Verfahrens näher beschrieben:

Um das Verfahren zu prüfen, wurden ein hochprozentiger Kalkstein und ein Kalkmergel als basischer Rohmaterialbestandteile sowie ein Ton, ein Schiefer und zwei Pyritabbrände als saure Rohmaterialbestandteile verwendet. Die chemische Zusammensetzung der Rohmaterialbestandteile ist in Tabelle 1 dargestellt.

Tabelle 1:

| Chemische Zusammensetzung der Rohmaterialbestandteile. | | | | | | |
|---|---|---|---|---|---|---|
| Chemische Bestandteile | Rohstoffe für das 1, Rohmehl | | | Rohstoffe für das 2, Rohmehl | | |
| | Hochprozentiger Kalkstein | Ton | Pyritabbrand 1 | Kalkmergel | Schiefer | Pyritabbrand 2 |
| Glühverlust | 42,79 | 13,33 | 0,95 | 36,17 | 25,96 | 0,10 |
| $SiO_2$ | 0,80 | 51,97 | 4,24 | 11,17 | 25,36 | 14,28 |
| $Al_2O_3$ | 0,22 | 11,18 | 0,51 | 2,63 | 6,37 | 3,41 |
| $Fel_2O_3$ | 0,38 | 4,49 | 80,93 | 1,73 | 3,92 | 74,62 |
| CaO | 55,10 | 11,96 | 2,35 | 45,56 | 33,29 | 3,71 |
| MgO | 0,43 | 1,48 | 1,67 | 1,15 | 1,43 | 1,55 |
| $SO_3$ | 0,12 | 0,12 | 4,56 | 0,78 | 0,78 | 2,01 |
| $K_2O$ | 0,06 | 2,92 | 0,67 | 0,05 | 1,34 | 0,22 |
| $Na_2O$ | 0,04 | 1,78 | 0,49 | 0,04 | 0,90 | 0,10 |
| Rest | 0,06 | 0,77 | 3,63 | 0,72 | 0,65 | |
| Summe | 100,00 | 100,00 | 100,00 | 100,00 | 100,00 | 100,00 |

Der hochprozentige Kalkstein und Kalkmergel wurden getrennt ir einer Laborkugelmühle extrem grob auf 33, 40, 50, 60, 70, 80 und 90 % Rückstand auf dem 80 μm-Sieb bei einem konstanten Rückstand auf dem 200 μm-Sieb von 5 % in einem Korngrößenbereich von 0,01 bis 500 μm und, wie es nach allgemein gültigen Vorstellungen für übliche Technologie erforderlich ist, auf 20 % Rückstand auf dem 80 μm-Sieb und auf 5 % Rückstand auf dem 200 μm-Sieb in einem Korngrößenbereich von 0,01 bis 315 μm feinaufgemahlen.

Ton, Schiefer und beide Pyritabbrände wurden - ebenfalls nach allgemeinen Vorstellungen der üblichen Tech-nologie - unter 80 μm aufgemahlen.

Um den Einfluß des Verhältnisses der < 80 μm-Kornfraktion zu der >80 μm-Kornfraktion der basischen Roh-mehlbestandteile auf die Reaktivität des Rohmehls zu untersuchen, wurden aufgrund der durchgeführten Berechnungen 7 Rohmehle aus auf verschiedene Verhältnisse der 0,01 bis 80 μm-Kornfraktion zur 80,01 bis 500 μm-Kornfraktion aufgemahlenem hochprozentigen Kalkstein und unter 80 μm aufgemahlenem Ton und Pyritabbrand 1 sowie 7 weitere Rohmehle aus auf verschiedene Verhältnisse der 0,01 bis 80 μm-Kornfraktion zur 80,01 bis 500 μm-Kornfraktion auf-gemahlenem Kalkmergel und unter 80 μm aufgemahlenem Schiefer und Pyritabbrand 2 hergestellt (Tabelle 2). Damit die Ergebnisse der neuen Technologie (erfindungsgemäßes Verfahren) mit der bekannten Technologie verglichen werden können, wurde darüber hinaus noch ein Referenzrohmehl aus dem auf 20 %-Ruckstand auf dem 80 μm-Sieb und 5 %-Rückstand auf dem 200 μm-Sieb in einem Korngrößenbereich von 0,01 bis 315 μm aufgemahlenen, hochprozen-tigen Kalkstein und dem auf unter 80 μm aufgemahlenen Ton und Pyritabbrand 1, sowie ein Referenzrohmehl aus dem auf 20 %-Rückstand auf dem 80 μm-Sieb und 5 %-Rückstand auf dem 200 μm-Sieb in einem Korngrößenbereich von 0,01 bis 315 μm aufgemahlenen Kalkmergel und auf unter 80 μm gemahlenem Schiefer und Pyritabbrand 2 vorbereitet. Die auf der Basis des hochprozentigen Kalksteins und des Kalkmergels hergestellten Rohmehle unterscheiden sich in ihrem Verhältnis der Kalkstein- und Kalkmergelfraktionen zwischen < 80 μm und > 80 μm. Die Kalkstein-und Kalkmergelfraktion von 200 bis 500 μm wurde bezüglich des Rohmehls entsprechend mit 3,63 und 3,87 % konstant gehalten.

Die Homogenisierung der Rohmehle wurde innerhalb von jeweils zwei Stunden in einem Mischer mit Gummikugeln als Mischkörper durchgeführt.

Für die nachfolgenden Brennversuche wurden aus den Rohmehlen Tabletten mit konstantem Gewicht von 4 g, konstantem Durchmesser von 20 mm bei konstantem Preßdruck von 200 bar hergestellt. Die gepreßten Tabletten wurden in einem Laborelektroofen bei 1.450°C auf folgende Weise gebrannt.

Für jedes Brennen wurden von jedem Rohmehl 2 Tabletten in den auf 700°C vorgeheizten Laborofen eingestellt. Anschließend wurden die Tabletten von 700°C auf 1.450°C mit einer gleichmäßigen Aufheizgeschwindigkeit von 17°C/min aufgeheizt und abschließend jeweils 35 min isotherm gehalten. Danach wurden die gebrannten Tabletten aus dem Ofen geholt und rasch an ruhender Luft auf Raumtemperatur abgekühlt.

Jeweils eine Tablette eines Rohmehls wurde auf notwendige Feinheit zerkleinert und der Gehalt an Freikalk nach Naßchemie bestimmt.

Die chemische Charakteristik der Rohmehle und der in Abhängigkeit von den Kornfraktionenverhältnissen der Rohmehle festgestellte Energieaufwand für das Rohmehlmahlen sowie der Freikalkgehalt im Brenngut sind in Tabellen 2 und 3 anzuschauen.

Tabelle 2:

| Untersuchungsergebnisse aufgrund des Rohmehls 1 | | | | | | | | |
|---|---|---|---|---|---|---|---|---|
| Roh-mehl | Zusammensetzung des Rohmehls [%] | | | Kst II | SM | TM | Verhältnis der <80µm-zur> 80µm-Fraktion des Kalksteins (Rückstand auf dem 80µm-Sieb des Rohmehls [%]) | Freikalkgehalt [%] | Sp.Energieauf-wand für das Rohmehlmahlen [kWh/t] |
| | Kalkstein | Ton | Pyritab-brand 1 | | | | | | |
| Referenzrohmehl nach bekannter Technologie | | | | | | | | | |
| 1 | 72,68 | 25,94 | 1,38 | 96,4 | 2,5 | 1,2 | 4:1 (14,5) | 0,95 | 12,4 |
| Rohmehle nach neuer Technologie | | | | | | | | | |
| 2* | 72,68 | 25,94 | 1,38 | 96,4 | 2,5 | 1,2 | 2:1 (24,0) | 1,56 | 8,5 |
| 3 | 72,68 | 25,94 | 1,38 | 96,4 | 2,5 | 1,2 | 1,5:1 (29,1) | 0,61 | 4,9 |
| 4 | 72,68 | 25,94 | 1,38 | 96,4 | 2,5 | 1,2 | 1:1 (36,3) | 0,54 | 4,7 |
| 5 | 72,68 | 25,94 | 1,38 | 96,4 | 2,5 | 1,2 | 1:1,5 (43,6) | 0,50 | 4,4 |
| 6 | 72,68 | 25,94 | 1,38 | 96,4 | 2,5 | 1,2 | 1:2 (48,7) | 0,72 | 4,1 |
| 7 | 72,68 | 25,94 | 1,38 | 96,4 | 2,5 | 1,2 | 1:3 (54,5) | 0,82 | 3,8 |
| 8* | 72,68 | 25,94 | 1,38 | 96,4 | 2,5 | 1,2 | 1:4 (58,1) | 1,84 | 3,6 |
| 9* | 72,68 | 25,94 | 1,38 | 96,4 | 2,5 | 1,2 | 1:9 (65,4) | 3,82 | 3,4 |

Tabelle 3:

| Rohmehl | Zusammensetzung des Rohmehls [%] | | | Kst II | SM | TM | Verhältnis der <80µm-zur> 80µm-Fraktion des Kalkmergels (Rückstand auf dem 80µm-Sieb des Rohmehls [%]) | Freikalkgehalt [%] | Sp. Energieaufwand für das Rohmehlmahlen [kWh/t] |
|---|---|---|---|---|---|---|---|---|---|
| | Untersuchungsergebnisse aufgrund des Rohmehls 2. | | | | | | | | |
| | Kalkmergel | Schiefer | Pyritabbrand 2 | | | | | | |
| | Referenzrohmehl nach bekannter Technologie | | | | | | | | |
| 1 | 77,41 | 22,36 | 0,23 | 93,2 | 2,45 | 1,45 | 4:1 (15,5) | 0,74 | 14,8 |
| | Rohmehle nach neuer Technologie | | | | | | | | |
| 2* | 77,41 | 22,36 | 0,23 | 93,2 | 2,45 | 1,45 | 2:1 (25,5) | 0,95 | 10,4 |
| 3 | 77,41 | 22,36 | 0,23 | 93,2 | 2,45 | 1,45 | 1,5:1 (23,01) | 0,71 | 6,2 |
| 4 | 77,41 | 22,36 | 0,23 | 93,2 | 2,45 | 1,45 | 1:1 (38,7) | 0,38 | 6,0 |
| 5 | 77,41 | 22,36 | 0,23 | 93,2 | 2,45 | 1,45 | 1:1,5 (46,4) | 0,46 | 5,5 |
| 6 | 77,41 | 22,36 | 0,23 | 93,2 | 2,45 | 1,45 | 1:2 (51,8) | 0,52 | 5,1 |
| 7 | 77,41 | 22,36 | 0,23 | 93,2 | 2,45 | 1,45 | 1:3 (58,0) | 0,63 | 4,8 |
| 8 | 77,41 | 22,36 | 0,23 | 93,2 | 2,45 | 1,45 | 1:4 (61,9) | 0,84 | 4,5 |
| 9* | 77,41 | 22,36 | 0,23 | 93,2 | 2,45 | 1,45 | 1:9 (69,6) | 1,52 | 3,1 |

Die in den Tabellen 2 und 3 dargestellten Ergebnisse des Freikalkgehalts zeigen, daß bei einer Verringerung des Kornfraktionenverhältnisses der basischen Rohmehlbestandteile der beiden von Natur aus unterschiedlichen untersuchten Rohmehle von 4:1 bis 2:1 bzw. bei einer Zunahme des Rückstands von Rohmehl auf dem 80 μm-Sieb von 14,5-15,5 % bis 24,0-25,5 % der Freikalkgehalt im Brenngut der beiden Rohmehle steigt, d.h. daß die Reaktionsfähigkeit der Rohmehle in Übereinstimmung mit den konventionellen Vorstellungen dabei behindert wird.

Bei einer weiteren Verringerung des Kornfraktionenverhältnisses der basischen Rohmehlbestandteile im Bereich von 1,5:1 bis 1:3 - 1:4 wird jedoch die Brennbarkeit des Rohmehls bei maximaler Reaktionsfähigkeit in der Mitte dieses Bereiches im Vergleich zum Referenzrohmehl erhöht. Die Senkung des Kornfraktionenverhältnisses des Kalksteins oder Kalkmergels bis zu 1:9 führt zur Behinderung der Rohmehlreaktivität, was durch eine Erhöhung des Freikalkgehalts bis auf 3,82 bzw. 1,52 % bestätigt wird.

Aus den durchgeführten Laboruntersuchungen folgt, daß das optimale Kornfraktionenverhältnis der < 80 μm-Kornfraktion zur > 80 μm-Kornfraktion der basischen Rohmehlbestandteile der untersuchten Rohmehlen zwischen 1,5:1 und 1:4 liegt.

Ferner folgt daraus, daß der Energieaufwand für das Ermahlen des Rohmehls mit einer Senkung des Kornfraktionenverhältnisses von Kalkstein- und Kalkmergelpartikeln erheblich sinkt.

Nach einer weiteren Ausgestaltung der Erfindung wird vorgeschlagen, daß zur Zementherstellung die sauren Rohmehlbestandteile und/oder Sekundärstoffe mit einem Modul (M) = CaO + MgO + FeO + 0,31 $Fe_3O_4$ / (0,93-1,4) * $SiO_2$ + 0,94*$Al_2O_3$ + 0,7*$Fe_2O_3$ + 0,7*0,69*$Fe_3O_4$ von 0,25-1,2 für eine Schmelztemperatur von maximal 1.300°C aufgemahlen werden.

Durch diese Maßnahme ist es möglich, den Klinker-Schmelzgehalt in der Sinterstufe zusätzlich zu erhöhen und die Schmelztemperatur zu senken. Dies ist der Grund dafür, die Klinkerbildung zu beschleunigen und Sintertemperatur bei der Klinkerbildung zu senken. Selbstverständlich wird dabei der spezifische Energieaufwand beim Rohmehlmahlen und bei der Klinkersinterung zusätzlich erheblich verringert und die Durchsatzleistung der Mahlanlage und des Drehrohrofens erhöht. Der Staubausstoß aus dem Ofen wird dabei verringert, wodurch der Wärmeverlust beim Ofen reduziert wird. Die Betriebskosten bei der Klinkerherstellung werden somit gesenkt.

Dies läßt sich folgendermaßen erklären :

Es gibt mehrere an $SiO_2$ reiche Roh- und Sekundärstoffe, die bezüglich ihrer chemischen Zusammensetzung an Hauptbestandteilen ($SiO_2$, $Al_2O_3$, $Fe_2O_3$ und CaO) einem an $SiO_2$ reichen bereits betrachteten Eutektikum entsprechen. Die chemische Übereinstimmung der Roh- und Sekundärstoffe der neu betrachteten, insbesondere als optimal ausgewählten an $SiO_2$ reichen Eutektika ist noch keine ausreichende Voraussetzung für die Bildung der an $SiO_2$ reichen, leichtschmelzbaren Schmelze. Dazu ist noch erforderlich, daß die chemischen Haupt- und Nebenbestandteile entsprechend fein und regelmäßig untereinander verteilt wurden. D.h. daß die vorliegenden Roh- und Sekundärstoffe chemisch homogen werden müssen, oder noch genauer ausgedrückt, chemisch und mineralogisch an entsprechende Minerale zur Bildung der neu zu betrachtenden Eutektika angebunden werden müssen. Als solche der neu zu betrachtenden Eutektika angebunden werden müssen. Als solche können beispielsweise Schiefer, Ölschieferton, Basalt, Tefritbasalt, Phosphorschlacke, Hüttenschlacke, Klinker des Welzverfahrens und andere Roh- und Sekundärstoffe betrachtet werden. Da sich die topochemische Bildung sowohl des CS als auch des $C_3S_2$ sogar bei einem CaO:$SiO_2$-Molekülverhältnis von 1:1 bis 3:2 durch das $C_2S$-Mineral vollzieht, ist ein Temperatur- und Zeitabstand zur $C_2S \rightarrow CS$ und $C_3S_2$-Umwandlung erforderlich. Dabei bildet sich das $C_3S_2$-Mineral durch das $C_2S$- Mineral über 1.000-1.200°C und CS-Mineral durch das $C_2S$-Mineral über 1.100-1.300°C. Deswegen dürfen die sauren Rohstoffe, die chemisch heterogen sind und darüber hinaus, zur Bildung des erforderlichen Eutektikums, durch eine bestimmte Menge des festreaktionsfähigen, basischen Rohmehlanteils chemisch korrigiert werden, bei der Rohmehlaufbereitung fein unter 80 μm gemahlen werden. Um die chemischmineralogische Zusammensetzung der oben aufgezählten leichtschmelzbaren Roh- und Sekundärstoffe und dergleichen unmittelbar vor der Schmelzbildung in der Sinterzone zu bewahren, ist es zweckmäßig, im Gegensatz zu den heterogenen sauren Rohstoffen oder einem aus sauren Komponenten bestehenden Gemisch die leichtschmelzbaren sauren Rohmehlbestandteile auch so wie basische Rohmehlbestandteile grob zu mahlen. Dabei wird der Schmelzanteil bzw. die Reaktionsfähigkeit des Rohmehls erhöht.

Um das Verfahren zu prüfen, wurden nach einem weiteren Ausführungsbeispiel der Erfindung zwei hochprozentige Kalksteine und ein Kalkmergel als basische Rohmehlbestandteile sowie ein Schiefer, ein Basalt, eine Phosphorschlacke und ein Pyritabbrand als saure Rohmehlbestandteile verwendet. Die chemische Zusammensetzung der Rohstoffe ist in Tabelle 4 dargestellt.

Die hochprozentigen Kalksteine, Kalkmergel und die als saure Rohmehlbestandteile verwendeten Basalt, Phosphorschlacke und Schiefer wurden getrennt in einer Laborkugelmühle extrem grob auf 33, 40, 50, 60, 70, 80 und 90 % Rückstand auf dem 80 μm-Sieb und bei einem konstanten Rückstand auf dem 200 μm-Sieb von 5 % in einem Korngrößenbereich von 0,01 bis 500 μm und - wiederum nach allgemein bekannter Technologie- auf 20 % Rückstand auf dem 80 μm-Sieb und 5 % Rückstand auf dem 200 μm-Sieb in einem Korngrößenbereich von 0,01 bis 315 μm feinaufgemahlen.

Basalt, Schiefer, Pyritabbrand und Phosphorschlacke wurden nach allgemein bekannter Technologie auf un-

ter 80 μm aufgemahlen.

Tabelle 4:

| Chemische Zusammensetzung der Rohstoffe. | | | | | | | |
|---|---|---|---|---|---|---|---|
| Chemische Bestandteile | Rohstoffe 1 | | Rohstoffe 2 | | Rohstoffe 3 | | |
| | Kalkstein 1 | Basalt | Kalkstein 2 | Phosphor-schlacke | Kalkmergel | Schiefer | Pyritabbrand 2 |
| Glühverlust | 41,33 | | 42,30 | | 36,17 | 25,96 | 0,10 |
| $SiO_2$ | 2,20 | 43,92 | 2,60 | 40,48 | 11,17 | 25,36 | 14,28 |
| $Al_2O_3$ | 0,45 | 11,98 | 0,50 | 2,29 | 2,63 | 6,37 | 3,41 |
| $Fel_2O_3$ | 0,90 | 12,85 | 0,15 | 0,23 | 1,73 | 3,92 | 74,62 |
| CaO | 54,52 | 10,54 | 53,66 | 47,89 | 45,56 | 33,29 | 3,71 |
| MgO | 0,40 | 7,10 | 0,31 | 2,60 | 1,15 | 1,43 | 1,55 |
| $SO_3$ | 0,15 | 0,45 | 0,33 | 0,51 | 0,78 | 0,78 | 2,01 |
| $P_2O_5$ | - | - | - | 1,93 | - | - | - |
| F | - | - | - | 1,87 | - | - | - |
| $K_2O$ | 0,03 | 2,65 | 0,05 | 0,42 | 0,05 | 1,34 | 0,22 |
| $Na_2O$ | 0,02 | 1,55 | 0,04 | 0,30 | 0,04 | 0,90 | 0,10 |
| Rest | | 8,96 | 0,06 | 1,48 | 0,72 | 0,65 | |
| Summe | 100,00 | 100,00 | 100,00 | 100,00 | 100,00 | 100,00 | 100,00 |

Um den Einfluß des Verhältnisses der < 80 μm-Kornfraktion zur >80 μm-Kornfraktion der basischen und sauren Rohmehlbestandteile auf die Reaktivität der aus den von Natur aus drei ungleichartigen Rohstoffgruppen zu untersuchen, wurden aufgrund der durchgeführten Berechnungen für jede Rohstoffgruppe 7 Rohmehle hergestellt (Tabelle 5). Damit die Ergebnisse der neuen Technologie mit üblicher Technologie verglichen werden können, wurde darüber hinaus noch für jede Rohstoffgruppe ein Referenzrohmehl aus den auf 20 %-Rückstand auf dem 80 μm-Sieb und 5 %-Rückstand auf dem 200 μm-Sieb in einem Korngrößenbereich von 0,01 bis 315 μm aufgemahlenen hochprozentigen Kalksteinen und auf unter 80 μm aufgemahlenen Basalt, Phosphorschlacke und Schiefer und Pyritabbrand 1 sowie ein Referenzrohmehl aus dem auf 20 %-Rückstand auf dem 80 μm-Sieb und auf 5 %-Rückstand auf dem 200 μm-Sieb in einem Korngrößenbereich von 0,01 bis 315 μm aufgemahlenen Kalkmergel und auf unter 80 μm gemahlenen Schiefer und Pyritabbrand 2 vorbereitet. Die hergestellten Rohmehle aus denselben Rohstoffen unterscheiden sich überwiegend in ihrem Verhältnis zwischen den < 80 μm- und > 80 μm-Kornfraktionen, und zwar nicht nur der basischen, sondern auch der sauren Rohstoffe. Deshalb wurde die Kornfraktion von 200 bis 500 μm bezüglich des Rohmehls nicht auf 3,63 oder 3,87 %, wie es nach Ausführungsbeispiel des Anspruchs 1 tatsächlich ist, sondern auf 5 % konstant gehalten.
Die Homogenisierung der Rohmehle wurde innerhalb von jeweils zwei Stunden in einem Mischer mit Gummikugeln als Mischkörper durchgeführt.
Für die nachfolgenden Brennversuche wurden aus den Rohmehlen Tabletten mit konstantem Gewicht von 4 g und konstantem Durchmesser von 20 mm bei konstantem Preßdruck von 200 bar hergestellt. Die gepreßten Tabletten wurden in einem Laborelektroofen bei 1.450°C auf folgende Weise gebrannt.
Für jedes Brennen wurden von jedem Rohmehl 2 Tabletten in den auf 700°C vorgeheizten Laborofen eingestellt. Anschließend wurden die Tabletten von 700°C bis auf 1.450°C mit einer gleichmäßigen Aufheizgeschwindigkeit von 17°C/min aufgeheizt und abschließend jeweils 35 min isotherm gehalten. Danach wurden die gebrannten Tabletten aus dem Ofen geholt und an ruhender Luft auf Raumtemperatur raschabgekühlt.
Jeweils eine Tablette eines Rohmehls wurde auf notwendige Feinheit zerkleinert und der Gehalt an Freikalk naßchemisch bestimmt.
Die chemische Charakteristik der Rohmehle und der in Abhängigkeit von Korngrößenverhältnis des Rohmehls festgestellte Energieaufwand und Freikalkgehalt sind in Tabellen 5, 6 und 7 dargestellt.
Die in Tabellen 5, 6 und 7 dargestellten Ergebnisse zeigen, daß bei einer Verringerung des Kornfraktionen verhältnisses von 4:1 bis 2:1 bzw. einer Zunahme des Rückstands des Rohmehls auf dem 80 μm-Sieb von 12,1-15,5 % bis 33,3 % unabhängig von der Natur der untersuchten Rohmehle der Freikalkgehalt in drei bei 1.450°C gebrannten Rohmehlarten steigt, d.h. daß die Reaktionsfähigkeit der Rohmehle, wie zu erwarten war, dabei behindert wird. Jedoch wird beobachtet, daß die Erhöhung des Freikalkgehalts in diesem Fall, wenn die saure und basische Komponente grob aufgemahlen sind, niedriger ist als bei gebrannten Rohmehlen nach den vorherigen Beispielen.

Bei einer weiteren gleichzeitigen Verringerung des Kornfraktionenverhältnisses der basischen und der sauren Rohmehlbestandteile im Bereich von 1,5:1 bis 1:4 - 1:9 wird jedoch die Brennbarkeit der untersuchten Rohmehle bei maximaler Reaktionsfähigkeit in der Mitte dieses Bereiches im Vergleich zum Referenzrohmehl (Bezugsrohmehl) erhöht. Eine Absenkung dieses Verhältnisses bis zu 1:9 führt zur Behinderung der Rohmehlreaktivität, was die Erhöhung des Freikalkgehaltes entsprechend bis zu 1,12 bzw. 0,95 bzw. 1,32 % bestätigt. Dabei sei bemerkt, daß der Freikalkgehalt besonders bei den Rohmehlen, die den Basalt oder die Phosphorschlacke als saure Komponente enthalten, wesentlich niedriger bleibt als bei den vorhergehenden Beispielen. Dies ermöglicht die Herstellung des Klinkers aus einem gröberen Rohmehl.

Tabelle 5:

| Untersuchungsergebnisse der Rohmehle der Rohstoffe 1. | | | | | | | | |
|---|---|---|---|---|---|---|---|---|
| Rohmehl | Zusammensetzung des Rohmehls [%] | | Kst II | SM | TM | Verhältnis der <80 µm-zur> 80 µm-Fraktion des Rohmehls (Rückstand auf dem 80µm-Sieb des Rohmehls [%]) | Freikalkgehalt [%] | Sp. Energieaufwand für des Rohmehlmahlen [kWh/t] |
| | Kalkstein | Basalt | | | | | | |
| Referenzrohmehl nach bekannter Technologie | | | | | | | | |
| 1 | 75,20 | 24,8 | 94,1 | 1,81 | 1,5 | 4:1 (15,0) | 0,42 | 15,1 |
| Rohmehl nach Anspruch 1 | | | | | | | | |
| 2 | 75,20 | 24,8 | 94,1 | 1,81 | 1,5 | 1:1 (37,6) | 0,28 | 5,3 |
| Rohmehle nach neuer Technologie | | | | | | | | |
| 3 | 75,20 | 24,8 | 94,1 | 1,81 | 1,5 | 2:1 (33,3) | 0,65 | 8,9 |
| 4 | 75,20 | 24,8 | 94,1 | 1,81 | 1,5 | 1,5:1 (40) | 0,41 | 6,4 |
| 5 | 75,20 | 24,8 | 94,1 | 1,81 | 1,5 | 1:1 (50) | 0,28 | 5,3 |
| 6 | 75,20 | 24,8 | 94,1 | 1,81 | 1,5 | 1:1,5 (60) | 0,36 | 4,9 |
| 7 | 75,20 | 24,8 | 94,1 | 1,81 | 1,5 | 1:2 (66,7) | 0,50 | 4,6 |
| 8 | 75,20 | 24,8 | 94,1 | 1,81 | 1,5 | 1:3 (75) | 0,63 | 4,4 |
| 9 | 75,20 | 24,8 | 94,1 | 1,81 | 1,5 | 1:4 (80) | 0,74 | 4,2 |
| 10* | 75,20 | 24,8 | 94,1 | 1,81 | 1,5 | 1:9 (90) | 1,12 | 3,9 |

Tabelle 6:

| Rohmehl | Zusammensetzung des Rohmehls [%] | | Kst II | SM | TM | Verhältnis der <80μm-zur> 80μm-Fraktion des Kalkmergels (Rückstand auf dem 80μm-Sieb des Rohmehls [%]) | Freikalkgehalt [%] | Sp. Energieaufwand für das Rohmehlmahlen [kWh/t] |
|---|---|---|---|---|---|---|---|---|
| | Kalkstein | Phosphorschlacke | | | | | | |
| Untersuchungsergebnisse der Rohmehle der Rohstoffe 2 . | | | | | | | | |
| Referenzrohmehl nach bekannter Technologie | | | | | | | | |
| 1 | 60,60 | 39,40 | 100 | 12,68 | 6,59 | 4:1 (12,1) 1 | 0,44 | 15,6 |
| Rohmehl nach Anspruch 1 | | | | | | | | |
| 2 | 60,60 | 39,40 | 100 | 12,68 | 6,59 | 1:1 (30,3) | 0,30 | 8,1 |
| Rohmehle nach neuer Technologie | | | | | | | | |
| 3 | 60,60 | 39,40 | 100 | 12,68 | 6,59 | 2:1 (33,3) | 0,62 | 8,8 |
| 4 | 60,60 | 39,40 | 100 | 12,68 | 6,59 | 1,5:1 (40) | 0,53 | 5,4 |
| 5 | 60,60 | 39,40 | 100 | 12,68 | 6,59 | 1:1 (50) | 0,30 | 5,1 |
| 6 | 60,60 | 39,40 | 100 | 12,68 | 6,59 | 1:1,5 (60) | 0,43 | 4,9 |
| 7 | 60,60 | 39,40 | 100 | 12,68 | 6,59 | 1:2 (66,7) | 0,50 | 5,1 |
| 8 | 60,60 | 39,40 | 100 | 12,68 | 6,59 | 1:3 (75) | 0,53 | 4,4 |
| 9 | 60,60 | 39,40 | 100 | 12,68 | 6,59 | 1:4 (80) | 0,64 | 4,1 |
| 10 | 60,60 | 39,40 | 100 | 12,68 | 6,59 | 1:9 (90) | 0,95 | 3,7 |

Tabelle 7:

| Rohmehl | Zusammensetzung des Rohmehls [%] | | | Kst II | SM | TM | Verhältnis der <80µm-zur> 80µm-Fraktion des Kalkmergels (Rückstand auf dem 80µm-Sieb des Rohmehls [%]) | Freikalkgehalt [%] | Sp. Energieaufwand für das Rohmehlmahlen [kWh/t] |
|---|---|---|---|---|---|---|---|---|---|
| | Kalkmergel | Schiefer | Pyritabbrand 2 | | | | | | |
| Untersuchungsergebnisse der Rohmehle der Rohstoffe 3. | | | | | | | | | |
| Referenzrohmehl nach bekannter Technologie | | | | | | | | | |
| 1 | 77,41 | 22,36 | 0,23 | 93,2 | 2,45 | 1,45 | 4:1 (15,5) | 0,74 | 14,8 |
| Rohmehl nach Anspruch 1 | | | | | | | | | |
| 2 | 77,41 | 22,36 | 0,23 | 93,2 | 2,45 | 1,45 | 1:1,5 (46,4) | 0,38 | 6,0 |
| Rohmehle nach neuer Technologie | | | | | | | | | |
| 3* | 77,41 | 22,36 | 0,23 | 93,2 | 2,45 | 1,45 | 2:1 (33,3) | 0,82 | 8,5 |
| 4 | 77,41 | 22,36 | 0,23 | 93,2 | 2,45 | 1,45 | 1,5:1 (40) | 0,58 | 5,2 |
| 5 | 77,41 | 22,36 | 0,23 | 93,2 | 2,45 | 1,45 | 1:1 (50) | 0,26 | 4,9 |
| 6 | 77,41 | 22,36 | 0,23 | 93,2 | 2,45 | 1,45 | 1:1,5 (60) | 0,32 | 4,6 |
| 7 | 77,41 | 22,36 | 0,23 | 93,2 | 2,45 | 1,45 | 1:2 (66,7) | 0,40 | 4,3 |
| 8 | 77,41 | 22,36 | 0,23 | 93,2 | 2,45 | 1,45 | 1:3 (75) | 0,55 | 4,0 |
| 9 | 77,41 | 22,36 | 0,23 | 93,2 | 2,45 | 1,45 | 1:4 (80) | 0,75 | 3,8 |
| 10* | 77,41 | 22,36 | 0,23 | 93,2 | 2,45 | 1,45 | 1:9 (90) | 1,32 | 3,6 |

Aufgrund der durchgeführten Laboruntersuchungen folgt, daß bei der gleichzeitigen Vergröberung der basischen und sauren Rohmehlbestandteile bei Übereinstimmung der chemischen Zusammensetzung der mit homogenem Gefüge verfügbaren sauren Rohmehlbestandteile den neu betrachteten an $SiO_2$ reichen Eutektika der Bereich des optimalen Kornfraktionenverhältnisses der < 80 µm-Kornfraktion zur > 80 µm-Kornfraktion zwischen 1,5:1 und 1:9 liegt.

Darüber hinaus folgt aus den in Tabellen 5, 6, und 7 vorliegenden Daten, daß der Energieaufwand für das Ermahlen des Rohmehls mit Senkung des Kornfraktionenverhältnisses beider Rohmehlbestandteile noch erheblich verringert wird.

Im Gegensatz zu allen bisherigen Vorstellungen kann also sehr wohl gröberes Rohmehl gut gesintert und granuliert werden, wenn entsprechende Voraussetzungen dazu geschaffen werden.

Erfindungsgemäß wird dabei vorgeschlagen, daß bei einem Zementherstellungsverfahren unter einer dynamischen Sinterung des Rohmehls, d.h. einer mechanischen Beanspruchung während thermischer Behandlung des Rohmehls im drehenden Ofen, und beiden genannten Kornfraktionenverhältnissen Korngrößenfraktion von > 80 µm der basischen Rohmehlbestandteile die Körner bis 2.000 µm enthält.

Die erfindungsgemäß auftretenden Phänomene werden wie folgt erklärt:

Durch die Vergröberung des Grobfraktionsanteils der basischen (calcithaltigen) Rohmehlbestandteile bis 2.000 µm wird die Reaktionsoberfläche des basischen Rohmehlbestandteils wesentlich vermindert. Als Folge davon wird die unerwünschte, topochemische Bildung des $C_2S$ anstatt des CS und/oder $C_3S_2$ vor der Sinterzone an der Oberfläche der zeitlich später entsäuerten groben Calcitteilchen noch wesentlich vermindert und der Anteil der Klinkerschmelze durch die Lösung des in größerer Menge entstehenden CS und $C_3S_2$ in der Schmelze, d.h. durch die höhere Anreicherung der Schmelze an $SiO_2$, vergrößert. Mit der Temperaturerhöhung werden die Viskosität und Oberflächenspannung der Klinkerschmelze vermindert. Als Folge davon erlangt die Schmelze die Fähigkeit in die Poren des zeitlich später entsäuerten grobkörnigen Calcits einzudringen. Dies ruft eine Abspaltung hervor und infolgedessen eine anschließende Dispergierung der groben Kalkkörner zu den einzelnen Kristallblöcken hervor. Die Geschwindigkeit der Lösung der entstehenden Kristallblöcke ist dabei sehr hoch, da einerseits das Vorhandensein des erhöhten Schmelzvolumens die konvektive Entfernung der mit $Ca^{2+}$-Kationen übersättigten Grenzschichten "CaO-Schmelz" bedingt und andererseits der aus den Kristallblöcken bestehende CaO-Rest am geringsten rekristallisiert wird. Demzufolge wird durch-den beschleunigten Übergang der neuen Anteile an abgespalteten groben Kalkkörnern in der Schmelze die Klinkerbildung beschleunigt. Dies gewährleistet günstigere Bedingungen für die Alit- und Belitbildung aus der Schmelze.

Selbstverständlich ist, daß unter dynamischen Bedingungen des Brennens im drehenden Ofen, d.h. einer mechanischen Beanspruchung während der thermischen Behandlung des Rohmehls, die Reaktivität des gröbsten Rohmehls mehr als die des feinsten Rohmehls beschleunigt wird. Es folgt daraus, daß das feinste Rohmehl aufgrund seiner Feinheit verhältnismäßig homogen ist. Deswegen ist beim feinsten Rohmehl im Vergleich zu den gröberen Rohmehlen kein starker Diffusionswiderstand zu erwarten, der unter dynamischen Brennbedingungen zu überwinden wäre.

Dazu seien nachfolgend weitere Ausführungsbeispiele der Erfindung beschrieben:

Es wurden ein Kalkstein als basischer Rohmehlbestandteil sowie ein Ton und ein Pyritabbrand als saure Rohmehlbestandteile verwendet. Die chemische Zusammensetzung der Rohstoffe ist in Tabelle 8 dargestellt.

Der Kalkstein wurde auf folgende Korngrößenbereiche von 0,01-500 µm, 0,01-1000 µm, 0.01-1500 µm, 0,01-2.000 µm und 0,01-2.500 µm aufgemahlen. Der dabei in Abhängigkeit vom Korngrößenverhältnis des Kalksteins festgestellte Energieaufwand ist in Tabelle 9 dargestellt.

Tabelle 8:

| Chemische Zusammensetzung der Rohstoffe. | | | |
|---|---|---|---|
| Chemische Bestandteile | Kalkstein | Ton | Pyritabbrand |
| Glühverlust | 41,36 | 9,70 | 0,70 |
| $SiO_2$ | 2,36 | 63,14 | 10,61 |
| $Al_2O_3$ | 0,76 | 17,00 | 3,85 |
| $FeI_2O_3$ | 0,81 | 6,45 | 56,30 |
| CaO | 53,60 | 1,03 | 3, 68 |
| MgO | 0,70 | 1,13 | 6,22 |
| $SO_3$ | 0,15 | 0,50 | 12,54 |
| $K_2O$ | 0,06 | 0,63 | 0,70 |
| $Na_2O$ | 0,04 | 0,41 | 0,55 |

Tabelle 8:   (fortgesetzt)

| Chemische Zusammensetzung der Rohstoffe. | | | |
|---|---|---|---|
| Chemische Bestandteile | Kalkstein | Ton | Pyritabbrand |
| Rest | 0,16 | 0,01 | 4,85 |
| Summe | 100,00 | 100,00 | 100,00 |

Tabelle 9:

| Tatsächlicher Energiebedarf für das Mahlen des Kalksteins in Abhängigkeit von aufgemahlenen Korngrößenbereichen und Fraktionsverhältnissen. | | | | |
|---|---|---|---|---|
| Nr. des Mahlens | Korngrößenbereich [μm] | Verhältnis der 0,01-80 μm-Fraktion zur >80 μm- Fraktion | Rückstand auf dem 80 μm- Sieb [%] | Spezifischer Energiebedarf kWh/h |
| 1 Mahlen | 0,01-500 | 1,5:1 | 40 | 4,01 |
| 2 Mahlen | 0,01-1000 | 1,0:1,0 | 50 | 3,30 |
| 3 Mahlen | 0,01-1500 | 1:1,5 | 60 | 2,90 |
| 4 Mahlen | 0,01-2000 | 1:2,33 | 70 | 2,60 |
| 5 Mahlen | 0,01-2500 | 1:2,5 | 70 | 2,45 |
| 6 Referenzmahlen je nach üblicher Technologie | 0,01-315 | 4:1 | 18 | 10,41 |

Die dargestellten Daten zeigen eindeutig, daß der Energieaufwand für das Aufmahlen des Kalksteins mit Erhöhung der Korngrößen erheblich sinkt.

Aus dem auf verschiedene Korngrößenbereiche aufgemahlenen Kalkstein und aus unter 80 μm aufgemahlenem Ton und Pyritabbrand wurden aufgrund von durchgeführten Berechnungen für die nachfolgenden Brennversuche auf folgende Weise 6 Rohmehlmischungen hergestellt.

Die Homogenisierung der Rohmehle wurde auch wiederum in einem Mischer mit Gummikugeln durchgeführt. Danach wurden aus den Rohmehlen mit Zusatz von Wasser Granalien mit einem Durchmesser von 5-10 mm hergestellt, die zwei Stunden bei 110°C getrocknet wurden.

Die hergestellten Labormehle unterscheiden sich nur in den aufgemahlenen Korngrößenbereichen des Kalksteins >80 μm und in den Verhältnissen der Kalksteinfraktionen zwischen < 80 μm und > 80 μm. Die chemische Zusammensetzung von sechs hergestellten Rohmischungen ist dabei gleich und ist in Tabelle 8 dargestellt.

Tabelle 10:

| Chemische Zusammensetzung der Rohmehle | |
|---|---|
| Chemische Bestandteile | Rohmehl |
| Glühverlust | 35,03 |
| $SiO_2$ | 13,76 |
| $Al_2O_3$ | 3,82 |
| $FeI_2O_3$ | 2,44 |
| CaO | 43,29 |
| MgO | 0,81 |
| $SO_3$ | 0,63 |
| $K_2O$ | 0,18 |
| $Na_2O$ | 0,11 |

Tabelle 10:   (fortgesetzt)

| Chemische Zusammensetzung der Rohmehle | |
|---|---|
| Chemische Bestandteile | Rohmehl |
| Kst II | 97,0 |
| SM | 2,2 |
| TM | 1,6 |

Die chemischen Charakteristika, Kalksteinkornfraktionen- und Rohstoff-Verhältnisse der hergestellten Rohmehle und der in bei 1.450°C gebrannten Rohmehlen festgestellte Freikalkgehalt sind in Tabelle 11 dargestellt.

Tabelle 11:

| Auswirkung der Korngrößenbereiche und Fraktionsmischungsverhältnisse des Kalksteins auf die Reaktivität des Rohmehls. | | | | | | | | | |
| Rohmehle | KSt II | SM | TM | Korngrößenbereich des Kalksteins [µm] | Verhältnis zwischen den Rohmehlbestandteilen [%] | | | | Freikalkgehalt [%] |
| | | | | | Kalksteinfraktion <80µm | Kalksteinfraktion >80µm | Ton <80µm | Pyritabbrand <80µm | |
| 1 | 97 | 2,2 | 1,6 | 0,01-500 | 48,21 | 32,13 | 18,62 | 1,04 | 0,85 |
| 2 | 97 | 2,2 | 1,6 | 0,01-1000 | 40,17 | 40,17 | 18,62 | 1,04 | 0,72 |
| 3 | 97 | 2,2 | 1,6 | 0,01-1500 | 32,13 | 48,21 | 18,62 | 1,04 | 0,65 |
| 4 | 97 | 2,2 | 1,6 | 0,01-2000 | 24,1 | 56,24 | 18,62 | 1,04 | 0,81 |
| 5-außerhalb optimalern Bereich | 97 | 2,2 | 1,6 | 0,01-2500 | 24,1 | 56,24 | 18,62 | 1,04 | 1,82 |
| 6- nach üblicher Technologie | 97 | 2,2 | 1,6 | 0,01-315 | 65,88 | 14,46 | 18,62 | 1,04 | 0,94 |

Das Rohmehl 1 mit grob aufgemahlenem Kalkstein ist repräsentativ für das bereits oben beschriebene erfindungsgemäße Verfahren. Das Rohmehl 6 mit dem fein aufgemahlenen Kalkstein ist repräsentativ für die bekannte Technologie und dient als Bezugsrohmehl. Die hergestellten Granalien wurden bei 1.450°C auf folgende Weise gebrannt.

Für das Brennen wurde von jedem Rohmehl eine Probe von etwa 500 g verwendet.

Die getrockneten Granalien von jedem Rohmehl wurden in dem auf 600°C vorgeheizten Labordrehofen mit elektrischer Heizung in 50 min auf 1.450°C erhitzt und danach 30 min bei dieser Temperatur gesintert. Anschließend wurden die gebrannten Rohmehle aus dem Ofen ausgeladen und auf Raumtemperatur an der ruhenden Luft rasch abgekühlt. Danach wurde jeweils eine Probe des hergestellten Klinkers auf die notwendige Feinheit zerkleinert und der Gehalt an Freikalk naßchemisch bestimmt. Die in der Tabelle 11 dargestellten Ergebnisse des Freikalkgehalts zeigen, daß bei einer Zunahme des Korngrößenbereiches von 0,01-500 µm bis 0,01-2.000 µm und einem Rückstand auf dem 80 µm-Sieb von 40,17-56,24 % der Freikalkgehalt bei den gebrannten Rohmehlen 2, 3 und 4 im Vergleich zu gebrannten Rohmehlen 1, 5 und 6 geringer ist. Es sei bemerkt, daß sich der Freikalkgehalt in einem so breiten Korngrößenbereich von >80 µm nur geringfügig ändert, d.h. daß er unter 1 % liegt. Eine Erhöhung des Korngrößenbereiches der Kalksteinfraktionen von >80 µm bis auf 80-2.500 µm führt zu einer Behinderung der Rohmehlreaktivität. Dies bestätigt eine Erhöhung des Freikalkgehalts bis auf 1,8 %.

Aus den durchgeführten Laboruntersuchungen folgt, daß bei einer dynamischen Sinterung des Rohmehls, d.h. einer mechanischen Beanspruchung während der thermischen Behandlung des Rohmehls im drehenden Ofen, der optimale Korngrößenbereich des basischen Rohmehlbestandteils oberhalb 80 µm liegt und bis auf 2.000 µm beträgt.

Es sei betont, daß die obere Korngrößengrenze des basischen Rohmehlbestandteils zur Herstellung von Zementklinker nicht nur bei 500 µm und bei 2.000 µm liegt, sondern sie kann jeden beliebigen Wert zwischen 500 und 2.000 µm annehmen.

Es wird wiederum bestätigt, daß im Gegensatz zu allen bisherigen Vorstellungen gröberes Rohmehl gut gesintert und granuliert werden kann, wenn entsprechende Voraussetzungen dazu geschaffen werden. Aufgrund mikroskopischer Klinkeruntersuchungen muß somit die frühere Auffassung korrigiert werden, daß das grobe Rohmehl einen ungünstigen Einfluß auf die Homogenität des Klinkers ausübt. Trotz extrem hoher Siebrückstände resultiert daraus ein überraschend homogener Klinker, was bisher nicht beobachtet werden konnte.

Es wurde festgestellt, daß sich der Alit bei der Klinkersinterung aus optimal vergröbertem Rohmehl meistens in der rhomboedrischen Modifikation herauskristallisiert. Dies bewirkt, daß die Aktivität eines daraus hergestellten Klinkers bzw. Zementes ansteigt, was durch die Festigkeitsprüfung des Zementes bestätigt wurde.

In einer weiteren Ausgestaltung der Erfindung wird vorgeschlagen, daß bei einem Zementherstellungsverfahren unter einer dynamischen Sinterung des Rohmehls, d.h. einer mechanischen Beanspruchung während thermischer Behandlung des Rohmehls im drehenden Ofen ,und unter einem Kornklassenverhältnis der 0,01-80 µm-Kornklasse zur > 80,01 µm-Kornklasse des Rohmehls von 1,5:1 bis 1:9 die Kornfraktion mit Korngrößen von >80,01 µm sowohl der basischen Rohmehlbestandteile als auch der mit einer Schmelztemperatur von maximal 1.300°C vorhandenen sauren Rohmehlbestandteile Korngrößen von bis zu 2.000 µm enthält.

Durch diese Maßnahme ist möglich, den Klinkerschmelzgehalt in der Sinterstufe zusätzlich zu erhöhen und die Schmelztemperatur zu senken, wodurch die Klinkerbildung beschleunigt und die Sintertemperatur bei der Klinkerbildung gesenkt werden kann.

Selbstverständlich wird dabei der spezifische Energieaufwand beim Rohmehlmahlen und Klinkersinterung zusätzlich erheblich verringert und die Durchsatzleistung der Mahlanlage und des Drehrohrofens erhöht. Der Staubausstoß aus dem Ofen wird dabei verringert, wodurch der Wärmeverlust beim Ofen reduziert wird. Die Betriebskosten bei der Klinkerherstellung werden somit gesenkt.

Dies läßt sich folgendermaßen erklären :

Durch die Vergröberung des Grobfraktionsanteils der basischen und sauren Rohmehlbestandteile bis 2.000 µm wird die Reaktionsoberfläche zwischen den basischen und sauren Rohmehlbestandteilen wesentlich beschränkt. Als Folge davon wird die unerwünschte topochemische Bildung des $C_2S$ anstelle des in den sauren Rohmehlbestandteilen bereits vorhandenen CS oder $C_3S_2$ vor der Sinterzone noch wesentlich vermindert und der Anteil der an $SiO_2$ reichen Klinkerschmelze vergrößert, die aus den sauren Rohmehlbestandteilen entsteht.

Für weitere Ausführungsbeispiele wurden die Laboruntersuchungen der in Tabelle 4 dargestellten Rohstoffe 2 und 3 verwendet. Die Rohstoffe 2 bestehen aus Kalkstein und Phosphorschlacke, und die Rohstoffe 3 bestehen aus Kalkmergel, Schiefer und Pyritabbrand 2. Die Rohmehlvorbereitung und die Brände der Rohmehle wurden genau so wie im dort erläuterten Beispiel durchgeführt. Im Unterschied dazu wurden nun nicht nur die basischen, sondern auch die sauren Rohmehlbestandteile auf Korngrößenbereiche von 0,01-500 µm, 0,01-1.000 µm, 0,01-1.500 µm und 0,01-2.000 µm aufgemahlen.

Die Homogenisierung der Rohmehle wurde wiederum in einem Mischer mit Gummikugeln durchgeführt. Danach wurden aus den Rohmehlen mit Zusatz von Wasser Granalien mit einem Durchmesser von 5-10 mm hergestellt, die zwei Stunden bei 110°C getrocknet wurden.

Diese Granalien wurden bei 1.450°C auf folgende Weise gebrannt.

Für das Brennen wurde von jedem Rohmehl eine Probe von etwa 500 g verwendet. Die getrockneten Granalien von jedem Rohmehl wurden in dem auf 600 °C vorläufig vorgeheizten Labordrehofen mit elektrischer Heizung in 50 min auf 1.450°C erhitzt, danach 30 min bei dieser Temperatur gesintert. Anschließend wurden die gebrannten Rohmehle aus dem Ofen ausgeladen und rasch auf Raumtemperatur abgekühlt. Danach wurde jeweils eine Probe eines hergestellten Klinkers auf notwendige Feinheit zerkleinert und der Gehalt an Freikalk naßchemisch bestimmt.

Die chemischen Charakteristika der Rohmehle sowie der in Abhängigkeit von den aufgemahlenen Korngrößenverhältnissen und Korngrößenbereichen des Rohmehls festgestellte Energieaufwand und Freikalkgehalt sind in den Tabellen 12 und 13 angegeben.

Tabelle 12

| Rohmehl | Zusammensetzung des Rohmehls [%] | | Kst II | SM | TM | Korngrößenbereiche des Rohmehls [μm] Verhältnis der <80μm-zur> 80μm-Fraktion des Kalksteins (Rückstand auf dem 80μm-Sieb des Rohmehls [%]) | Freikalkgehalt [%] | Sp. Energieaufwand für das Rohmehlmahlen [kWh/t] |
|---|---|---|---|---|---|---|---|---|
| | Untersuchungsergebnisse des Rohmehls aufgrund der Rohstoffe 2. | | | | | | | |
| | Kalkstein | Phosphorschlacke | | | | | | |
| Rohmehl mit max. 500μm | | | | | | | | |
| 1 | 60,60 | 39,40 | 100 | 12,68 | 6,59 | 500 (1:1) | 0,30 | 5,1 |
| Rohmehle mit max. 2000μm | | | | | | | | |
| 2 | 60,60 | 39,40 | 100 | 12,68 | 6,59 | 500 (1,5:1) | 0,53 | 5,4 |
| 3 | 60,60 | 39,40 | 100 | 12,68 | 6,59 | 1000 (1:1) | 0,22 | 4,5 |
| 4 | 60,60 | 39,40 | 100 | 12,68 | 6.59 | 1500 (1:1,5) | 0,40 | 3,5 |
| 5 | 60,60 | 39,40 | 100 | 12,68 | 6,59 | 2000 (1:2) | 0,46 | 3,0 |
| 6 | 60,60 | 39,40 | 100 | 12,68 | 6,59 | 2000 (1:3) | 0,55 | 2,8 |
| 7 | 60,60 | 39,40 | 100 | 12,68 | 6,59 | 2000 (1:9) | 0,98 | 2,2 |

EP 0 801 636 B1

Tabelle 13:

| Rohmehl | Zusammensetzung des Rohmehls [%] | | | Kst II | SM | TM | Korngrößenbereiche des Rohmehls [µm] Verhältnis der <80µm- zur> 80µm-Fraktion des Kalksteins (Rückstand auf dem 80µm-Sieb des Rohmehls [%]) | Freikalkgehalt [%] | Sp. Energieaufwand für das Rohmehlmahlen [kWh/t] |
|---|---|---|---|---|---|---|---|---|---|
| | Kalkmergel | Schiefer | Pyritabbrand 2 | | | | | | |
| Untersuchungsergebnisse des Rohmehls aufgrund der Rohstoffe 3. | | | | | | | | | |
| Rohmehl mit max. 500µm | | | | | | | | | |
| 1 | 77,41 | 22,36 | 0,23 | 93,2 | 2,45 | 1,45 | 500 (1:1) | 0,26 | 4,9 |
| Rohmehle mit max. 2000µm | | | | | | | | | |
| 2 | 77,41 | 22,36 | 0,23 | 93,2 | 2,45 | 1,45 | 500 (1,5:1) | 0,58 | 5,2 |
| 3 | 77,41 | 22,36 | 0,23 | 93,2 | 2,45 | 1,45 | 1000 (1:1) | 0,24 | 4,6 |
| 4 | 77,41 | 22,36 | 0,23 | 93,2 | 2,45 | 1,45 | 1500 (1:1,5) | 0,30 | 4,0 |
| 5 | 77,41 | 22,36 | 0,23 | 93,2 | 2,45 | 1,45 | 2000 (1:2) | 0,44 | 3,2 |
| 6 | 77,41 | 22,36 | 0,23 | 93,2 | 2,45 | 1,45 | 2000 (1:3) | 0,68 | 3,0 |
| 7* | 77,41 | 22,36 | 0,23 | 93,2 | 2,45 | 1,45 | 2000 (1:9) | 1,56 | 2,6 |

Die in den Tabellen 12 und 13 dargestellten Ergebnisse zeigen, daß der Freikalkgehalt in bei 1.450°C gebrannten Proben aus zwei untersuchten Rohmehlarten bei einer Verringerung des Kornfraktionenverhältnisses von 1,5:1 bis 1:9 und einer Zunahme des Korngrößenbereiches von 0,01-500 μm bis 0,01-2.000 μm unabhängig von der Natur des Rohmehls im wesentlichen etwas niedriger ist als bei den Proben mit max. 500μm, d.h. daß die Reaktionsfähigkeit der Rohmehle steigt.

Dabei ist anzumerken, daß bei einer gleichzeitigen Abnahme des Kornfraktionenverhältnisses der basischen und der sauren Rohmehlbestandteile im Bereich von 1,5:1 bis 1:4 - 1:9 und bei einer Zunahme der Korngrößenbereiche bis auf 0,01-1.000 μm, 0,01-1.500 μm und 0,01-2.000 μm die Reaktionsfähigkeit der untersuchten Rohmehle (bei maximaler Reaktionsfähigkeit in der Mitte dieses Bereiches) im Vergleich zum Rohmehl mit max. 500μm erhöht wird. Die Senkung des Kornfraktionenverhältnisses bis auf 1:9 führt zur Behinderung der Rohmehlreaktivität, was durch eine Erhöhung des Freikalkgehalts entsprechend bis 0,98 und 1,56 % bestätigt wird. Dabei ist der Freikalkgehalt beim Kornfraktionenverhältnis von 1:9 etwas höher beim Beispiel mit max. 500μm. Trotzdem ist die Herstellung des Klinkers aus dem gröberen Rohmehl möglich.

Aus den durchgeführten Untersuchungen folgt, daß der optimale Korngrößenbereich des Rohmehls bei den Verhältnissen der < 80 μm-Kornfraktion zur > 80 μm-Kornfraktion von 1,5:1 bis 1:9 bei gleichzeitiger Vergröberung der basischen und sauren Rohmehlbestandteile und bei Übereinstimmung der chemischen Zusammensetzung der sauren Rohmehlbestandteile in den neu betrachteten Eutektika bis auf 2.000 μm erhöht werden kann.

Aus den in Tabellen 12 und 13 vorliegenden Daten folgt darüber hinaus, daß der Energieaufwand für das Ermahlen des Rohmehls mit Senkung des Kornfraktionenverhältnisses und einer Zunahme der Korngrößenbereiche bis auf 0,01-1.000 μm, 0,01-1.500 μm und 0,01-2.000 μm beider Rohmehlbestandteile erheblich sinkt.

Gemäß einer weiteren Ausgestaltung der Erfindung wird vorgeschlagen, daß der Anteil für die fein zu mahlende basische Rohmehl-Feinkornfraktion mit den unterhalb 80 μm fein zu mahlenden sauren Rohmehlbestandteilen ($SiO_2$-, $Al_2O_3$- und $Fe_2O_3$-Träger) auf eine Korngröße von 0,01-32 μm bis 0,01-70 μm aufgemahlen wird, daß der Anteil für die oberhalb 80 μm zu mahlende basische Rohmehl-Grobkornfraktion auf eine Korngröße von 90-2.000 μm bis 200-2.000 μm aufgemahlen wird und daß eine Zwischenkornfraktion der basischen Rohmehlbestandteile mit Korngrößen von 70-90 μm bis 32-200 μm völlig oder teilweise entfernt wird.

Durch diese Maßnahme ist es bereits bei niedrigen Temperaturen möglich, die Festreaktionen erheblich zu beschleunigen und als Folge die Bildung der leichtschmelzbaren Silikate wie CS und $C_3S_2$ anstatt des $C_2S$ zu erhöhen. Daraus resultiert eine Steigerung der Durchsatzleistung des Ofens und Senkung des spezifischen Brennstoffbedarfs zur Klinkerherstellung.

Dies ist folgendermaßen zu erklären:

Die vorhandenen experimentellen und thermodynamischen Untersuchungen zeigen, daß das Mineral, welches sich im heterogenen CaO - $SiO_2$-System unabhängig von CaO:$SiO_2$-Verhältnis unter metastabilen Bedingungen als erstes bildet, $C_2S$ ist. Bei einem CaO:$SiO_2$-Molekülverhältnis von 1:1 oder 3:2 können entsprechend CS oder $C_2S_2$ erst dann gebildet werden, wenn der festkörperreaktionsfähige Anteil des CaO, dessen $Ca^{2+}$-Ionen die beweglichsten sind, völlig eingebunden ist. Dies bedeutet, daß die gewünschte CS- oder $C_2S_2$-Bildung im CaO - $SiO_2$-System verlangsamt wird, das eine bestimmte Zeit erfordert. Das heißt, daß solange bis die festreaktionsfähigen Partikel (<80 μm) der basischen und sauren Rohmehlbestandteile bis zu 1.200°C (vor der Schmelzbildung) überhaupt nicht eingebunden worden sind und der schwer schmelzbare $C_2S$ vorzugsweise völlig zu den leicht schmelzbaren CS- und $C_3S_2$-Silikaten überhaupt nicht umgewandelt ist, wird der Schmelzanteil bei der Alitbildung in der Sinterzone nicht erhöht. Als Folge davon kann dabei die neue Technologie nicht vollkommen durchgesetzt werden.

Eine zusätzliche Zerkleinerung des feingemahlenen Anteils der basischen Rohmehlbestandteile und besonders der sauren Roh-mehlbestandteile, die festreaktionsfähig werden sollen, bis unter 70 μm oder 32 μm, bewirkt eine erhebliche Beschleunigung der Festreaktionen. Daraus resultiert eine rechtzeitige Bildung der leicht schmelzbaren Silikate anstatt des $C_2S$, die das ausgewählte Eutektikum bilden, bevor das Rohmehl auf ca. 1.250°C erhitzt wird. Dies führt zu einer Festigung und Aufrechterhaltung der chemischen Zusammensetzung des entstehenden neuen, $SiO_2$-reichen Eucektikums, bevor es geschmolzen wird. Daraus resultiert eine Erhöhung des Schmelzanteils.

Die Vergröberung des schmelzreaktionsfähigen Anteils der basischen Rohmehlbestandteile (Grobkornfraktion zwischen 80-2.000 μm) durch die Entnahme einer Zwischenkornfraktion mit einer Korngröße von 80-90 μm bis zu 80-200 μm führt aufgrund einer Abnahme der Reaktionsoberfläche der basischen Rohmehlbestandteile zu einer Verringerung der topochemischen Bildung des $C_2S$ bei 1.200-1.280°C bevor die Klinkerschmelze eintritt. Daraus resultiert eine Erhöhung des Klinkerschmelzanteils. Als Folge davon läßt sich die Reaktivität des Rohmehls erhöhen.

Um die oben beschriebene Erklärung zu verallgemeinern, ist zu konstatieren, daß der Korngrößenbereich (Zwischenkornfraktion) von 32 μm bis 200 μm bezüglich seiner (fest- oder schmelzreaktionsfähigen) Reaktionsfähigkeit eine Zwischenposition besitzt. Um die Reaktivität des Rohmehls zu erhöhen, ist es daher vernünftig, diese Zwischenkornfraktion zu entfernen.

Für weitere Beispiele wurden die Laboruntersuchungen mit dieselben-Rohstoffkomponente wie beim Beispiel 1 verwendet, die in Tabelle 1 dargestellt sind.

Der Ton gemeinsam mit dem Pyritabbrand und der fein gemahlene Anteil des Kalksteins wurden separat zusätzlich auf Korngrößenbereiche von 0,01-20 µm, 0,01-32 µm, 0,01-45 µm und 0,01-72 µm aufgemahlen. Die Grobkornfraktion des Kalksteins wurde auf Korngrößenbereiche von 90-2.000 µm, 125-2.000 µm, 200-2.000 µm und 250-2.000 µm aufgemahlen. Die Korngrößenverhältnisse des Kalksteins sind in Tabelle 14 dargestellt.

Tabelle 14:

| Die Korngrößenbereiche des Kalksteins und ihre Verhältnisse zueinander. | | | | | |
|---|---|---|---|---|---|
| Nr. des Mahlens | Korngrößen-fraktionen in % | | Verhältnis der Fraktionen | Rückstand auf dem 80 µm- Sieb % | Spezifischer Energiebedarf kWh/h |
| | <80µm | >80µm | | | |
| 1 Mahlen | 0,01-32 | 80-2000 | 1,0:1,5 | 60 | 3,20 |
| 2 Mahlen | 0,01-45 | 80-2000 | 1,0:1,5 | 60 | 2,87 |
| 3 Mahlen | 0,01-72 | 80-2000 | 1,0:1,5 | 60 | 2,68 |
| 4 Mahlen | 0,01-32 | 90-2000 | 1,0:1,0 | 50 | 3,10 |
| 5 Mahlen | 0,01-45 | 125-2000 | 1,5:1,0 | 40 | 2,96 |
| 6 Mahlen | 0,01-72 | 200-2000 | 1,5:1,0 | 40 | 2,85 |
| 7 Mahlen - außer optimalen Bereich | 0,01-72 | 250-2000 | 1,5:1,0 | 40 | 2,61 |
| 8 Mahlen - außer optimalen Bereich | 0,01-25 | 90-2000 | 1,0:1,0 | 50 | 3,60 |
| 9 Mahlen nach Anspruch 1 | 0,01-80 | 80-500 | 1,5:1,0 | 40 | 4,04 |

Danach wurden aus dem Ton, Pyritabbrand und den Kalksteinfraktionen aufgrund von durchgeführten Berechnungen Rohmischungen hergestellt, deren Mischungsverhältnisse in der Tabelle 6 dargestellt sind.

Die Homogenisierung und die Brände der Rohmehle wurden genau so wie im weiter oben angeführten Beispiel durchgeführt.

Tabelle 15 zeigt die Ergebnisse dieser Untersuchungen.

Tabelle 15:

| Rohmehl | KSt II | SM | TM | Korngrößenfraktion des Kalksteins | | Verhältnis zwischen den Rohmehlbestanteilen [%] | | | | Freikalkgehalt [%] |
|---|---|---|---|---|---|---|---|---|---|---|
| Auswirkung bei Entfernung der Zwischenkornfraktionen aus dem Kalkstein, Ton und Pyritabbrand auf die Reaktivität des Rohmehls. | | | | | | | | | | |
| | | | | <80μm | >80μm | Kalksteinfraktion <80μm | Kalksteinfraktion >80μm | Ton >80μm | Pyritabbrand <80μm | |
| 1 | 2 | 3 | 4 | 5 | 6 | 7 | 8 | 9 | 10 | 11 |
| Ton und Pyritabbrand unter 32 μm | | | | | | | | | | |
| 1 | 97 | 2,2 | 1,6 | 0,01-32 | 80-2000 | 32,13 | 48,21 | 18,62 | 1,04 | 0,24 |
| 2 | 97 | 2,2 | 1,6 | 0,01-45 | 80-2000 | 32,13 | 48,21 | 18,62 | 1,04 | 0,36 |
| 3 | 97 | 2,2 | 1,6 | 0,01-72 | 80-2000 | 32,13 | 48,21 | 18,62 | 1,04 | 0,51 |
| 4 | 97 | 2,2 | 1,6 | 0,01-32 | 90-2000 | 40,17 | 40,17 | 18,62 | 1,04 | 0,18 |
| 5 | 97 | 2,2 | 1,6 | 0,01-45 | 125-2000 | 32,13 | 48,21 | 18,62 | 1,04 | 0,31 |
| 6 | 97 | 2,2 | 1,6 | 0,01-72 | 200-2000 | 32,13 | 48,21 | 18,62 | 1,04 | 0,42 |
| Ton und Pyritabbrand unter 45 μm | | | | | | | | | | |
| 7 | 97 | 2,2 | 1,6 | 0,01-32 | 80-2000 | 32,13 | 48,21 | 18,62 | 1,04 | 0,33 |
| 8 | 97 | 2,2 | 1,6 | 0,01-45 | 80-2000 | 32,13 | 48,21 | 18,62 | 1,04 | 0,45 |
| 9 | 97 | 2,2 | 1,6 | 0,01-72 | 80-2000 | 32,13 | 48,21 | 18,62 | 1,04 | 0,59 |
| 10 | 97 | 2,2 | 1,6 | 0,01-32 | 90-2000 | 40,17 | 40,17 | 18,62 | 1,04 | 0,26 |
| 11 | 97 | 2,2 | 1,6 | 0,01-45 | 125-2000 | 32,13 | 48,21 | 18,62 | 1,04 | 0,42 |
| 12 | 97 | 2,2 | 1,6 | 0,01-72 | 200-2000 | 32,13 | 48,21 | 18,62 | 1,04 | 0,51 |
| Ton und Pyritabbrand unter 72 μm | | | | | | | | | | |
| 13 | 97 | 2,2 | 1,6 | 0,01-32 | 80-2000 | 32,13 | 48,21 | 18,62 | 1,04 | 0,45 |
| 14 | 97 | 2,2 | 1,6 | 0,01-45 | 80-2000 | 32,13 | 48,21 | 18,62 | 1,04 | 0,53 |
| 15 | 97 | 2,2 | 1,6 | 0,01-72 | 80-2000 | 32,13 | 48,21 | 18,62 | 1,04 | 0,60 |
| 16 | 97 | 2,2 | 1,6 | 0,01-32 | 90-2000 | 40,17 | 40,17 | 18,62 | 1,04 | 0,38 |
| 17 | 97 | 2,2 | 1,6 | 0,01-45 | 125-2000 | 32,13 | 48,21 | 18,62 | 1,04 | 0,59 |

EP 0 801 636 B1

Tabelle 15: (fortgesetzt)

| Rohmehl | KSt II | SM | TM | Korngrößenfraktion des Kalksteins | | Verhältnis zwischen den Rohmehlbestanteilen [%] | | | | Freikalkgehalt [%] |
|---|---|---|---|---|---|---|---|---|---|---|
| Auswirkung bei Entfernung der Zwischenkornfraktionen aus dem Kalkstein, Ton und Pyritabbrand auf die Reaktivität des Rohmehls. | | | | | | | | | | |
| Ton und Pyritabbrand unter 72 μm | | | | | | | | | | |
| 18 | 97 | 2,2 | 1,6 | 0,01-72 | 200-2000 | 32,13 | 48,21 | 18,62 | 1,04 | 0,60 |
| Außer optimalen Parametern - Ton und Pyritabbrand unter 52 μm | | | | | | | | | | |
| 19 | 97 | 2,2 | 1,6 | 0,01-72 | 250-2000 | 32,13 | 48,21 | 18,62 | 1,04 | 1,53 |
| 1 | 2 | 3 | 4 | 5 | 6 | 7 | 8 | 9 | 10 | 11 |
| 20 | 97 | 2,2 | 1,6 | 0,01-25 | 90-2000 | 40,17 | 40,17 | 18,62 | 1,04 | 0,16 |
| Rohmehl nach Anspruch 1 | | | | | | | | | | |
| 21 | 97 | 2,2 | 1,6 | 0,01-80 | 80-500 | 32,13 | 48,21 | | | 0,85 |

**EP 0 801 636 B1**

Die vorliegenden Ergebnisse zeigen, daß eine Entfernung der Korngrößenfraktionen oberhalb und unterhalb 80 µm zu einer Erhöhung der Reaktivität des Rohmehls führt.

Dabei kann beispielsweise auch die Entfernung einer Zwischenkornfraktion von 32-200 µm im Rohmehl sowohl vollständig als auch teilweise durchgeführt werden.

Nach einer weiteren Ausgestaltung der Erfindung wird vorgeschlagen, daß bei eine an Quarzkristallkörner größer als 40 µm angereicherte Korngrößenfraktion von basischen Rohmehlbestandteilen abgetrennt und anschließend unter 40-80 µm mit den fein zu mahlenden sauren Rohmehlbestandteilen und dem für die basische Rohmehl-Feinkornfraktion zu mahlenden Anteil fein aufgemahlen wird.

Dadurch ist es bereits bei relativ niedrigen Temperaturen möglich, die Festreaktionen für die chemische Einbindung des Quarzes erheblich zu beschleunigen und die Bildung der leichtschmelzbaren Silikate wie CS und $C_3S_2$ anstatt des $C_2S$ zu erhöhen. Daraus resultiert eine Steigerung der Durchsatzleistung des Ofens und eine Senkung des spezifischen Brennstoffbedarfs zur Klinkerherstellung.

Dies ist folgendermaßen zu erklären:

Die Quarzkörner sind um das ca. 2fache härter als Calcitkörner. Daraus resultiert beim Rohmehlmahlen eine Anreicherung des Quarzes in einem Korngrößenbereich, der mit den häufigsten Korngrößen des Quarzes übereinstimmt.

Wenn die Quarzkörner fein und regelmäßig im Gestein verteilt sind, d.h. wenn die Quarzkörner unter 40 µm vorliegen, besteht keine Gefahr, daß die Reaktivität des Rohmehls behindert wird. Wenn die Quarzkorngröße oberhalb 40 µm liegt, dann wird die Reaktivität des Rohmehls sowohl nach herkömmlicher Technologie, wonach das Rohmehl üblicherweise fein aufgemahlen wird, als auch bei der neu vorgeschlagenen Technologie, nach der die basische Rohmaterialien grob aufgemahlen werden, erheblich behindert.

Die groben Quarzpartikel (> 40 mm) können in einem niedrigen Temperaturbereich von 900-1.200°C chemisch nicht vollständig eingebunden werden. Hierdurch ist überschüssiger, festreaktionsfähiger freier CaO vorhanden. Daraus resultiert die unerwünschte topochemische Bildung des $C_2S$- anstelle der leicht schmelzbaren CS- oder $C_3S_2$-Silikate. Da die groben Quarzkörner somit nicht zu den leichtschmelzbaren Silikaten (CS und $C_3S_2$) umgesetzt werden können, wird der Schmelzanteil verringert und die Klinkerbildung behindert. Deswegen ist es nötig, den mit $SiO_2$ angereicherten Grobkornbereich abzutrennen und auf unter 40-70 bzw. 80 µm fein aufzumahlen.

Im folgenden seien noch weitere Ausführungsbeispiele der Erfindung beschrieben, wobei für die Untersuchungen Kalkstein, Ton und Pyritabbrand eines Zementwerkes verwendet wurden, deren chemischen Zusammensetzung in Tabelle 16 dargestellt ist.

Tabelle 16:

| Chemische Zusammensetzung der Rohstoffe | | | |
|---|---|---|---|
| Bestandteile | Kalkstein | Ton | Pyritabbrand |
| Glühverlust | 40,66 | 13,95 | 8,70 |
| $SiO_2$ | 5,40 | 54,68 | 12,20 |
| $Al_2O_3$ | 1,13 | 15,41 | 2,58 |
| $Fe_2O_3$ | 0,56 | 3,83 | 68,70 |
| CaO | 51,15 | 8,93 | 2,25 |
| MgO | 0,84 | 1,43 | 0,98 |
| $SO_3$ | 0,12 | 0,60 | 3,45 |
| $K_2O$ | 0,05 | 0,71 | 0,64 |
| $Na_2O$ | 0,03 | 0,36 | 0,31 |
| Rest | 0,06 | 0,1 | 0,19 |
| Summe | 100 | 100 | 100 |

Der Quarzanteil im Kalkstein nach der chemischen Analyse beträgt 2,8 %. Aufgrund seines rechnerisch ermittelten Calcitgehaltes von 91 % ist dieses Material als mergeliger Kalkstein zu bezeichnen. Der Charakter der Quarzverteilung wurde mit Hilfe von Dünnschliffe im Durchlicht untersucht. Der Quarz zeigt oft einen Zonaraufbau. Die Korngröße der langgestreckten Kristalle reicht von 150*70 µm bis 600*150 µm. Die häufigste Korngröße des Quarzes ist ca. 180*90 µm. Um die Verteilung des Quarzes festzustellen, wurde der grob gemahlene Kalkstein mit einem Rückstand auf dem 80 µm-Sieb von 50 % mittels Handsiebung in Korngrößenfraktionen von < 32 µm, 32-63 µm, 63-90 µm, 90-125 µm, 125-200 µm, 200-250 µm, 250-315 µm, 315-500 µm, 500-1.000 µm und > 1.000 µm aufgeteilt.

Der Quarzgehalt der Gesamtprobe und der einzelnen Fraktionen wurde nach chemischer analysiert. Die Ergebnisse sind der anliegenden Tabelle 17 zu entnehmen.

Tabelle 17:

| Massenanteil [%] | Gesamtprobe | Kongrößenfraktion [%] | | | | | | | | |
|---|---|---|---|---|---|---|---|---|---|---|
| Auswirkung des Mahlens auf die Quarzverteilung zwischen den Kornklassen. | | | | | | | | | | |
| | | >1000 | 315-500 | 250-315 | 200-250 | 125-200 | 80-125 | 63-80 | 32-63 | <32 |
| Fraktionsanteil | 100 | 2,4 | 4,1 | 5,3 | 8,5 | 15,5 | 9 | 5,4 | 7,0 | 39,6 |
| Quarzgehalt in einzelnen Fraktionen | 2,2 | 2,2 | 2,15 | 2,14 | 2,11 | 2,64 | 4,31 | 4,07 | 2,75 | 1,24 |
| Quarzanteil Gesamtgehalt | 100 | 2,27 | 4,09 | 5,00 | 8,18 | 18,64 | 17,73 | 10,00 | 8,64 | 22,27 |

Der gemahlene Kalkstein zeichnet sich durch eine deutliche Anreicherung an den Quarzgehalt in einem Bereich von 63-200 µm aus. Dieser an Quarz angereicherte Bereich stimmt mit dem maximalen Anteil des Quarzes in Kristallkörnern von 180*90 mm überein. Selbstverständlich ist eine Quarz-Anreicherung in Grobkornfraktionen weder für das in üblicher Weise fein gemahlene noch für das grob gemahlene Rohmehl günstig.

Um die negative Auswirkung der Quarz-Anreicherung in der Kornfraktion mit 63-200 µm auf die Reaktivität des Rohmehls festzustellen, wurde aus der zweiten Hälfte des grob aufgemahlenen Kalksteins eine Kornfraktion mit 63 µm bis 200 µm abgetrennt, anschließend unter 40 µm nachgemahlen und danach dem übrigen Anteil dieser Hälfte zurückzugesetzt. Damit ist es möglich, fast die Hälfte des Quarzes, genauer gesagt 1,02 % von 2,2 % oder 46,37 % vom Gesamtgehalt des Quarzes, auf unter 40 µm aufzumahlen. Abschließend wurden folgende zwei Rohmehle hergestellt:

- ein erstes Rohmehl aus der ersten Hälfte des grob aufgemahlenen Kalksteins;
- ein zweites Rohmehl aus der zweiten Hälfte des grob aufgemahlenen Kalksteins, in dem eine an Quarz angereicherte Kornfraktion mit 63-200 µm auf unter 40 µm nachgemahlen wurde.

Auch hier wurden die Vorbereitung und die Brände der Rohmehle genau so wie im oben beschriebenen Beispiel durchgeführt.

Das Verhältnis der Kornfraktionen des Kalksteins zwischen unterhalb 80 µm und oberhalb 80 µm, und das Verhältnis der Rohmehlbestandteile und darüber hinaus der Freikalkgehalt in gebrannten Proben sind in Tabelle 18 dargestellt.

Aus vorliegenden Daten folgt, daß in dem bei 1.450°C innerhalb 30 min gebrannten Rohmehl, dessen Kalkstein in einem Korngrößenbereich von 63-200 µm nicht nachgemahlen wurde, der Freikalkgehalt deutlich höher ist als beim Brenngut aus dem Rohmehl, dessen Kalkstein in einer an Quarz angereicherten Kornfraktion von 63-200 µm nachgemahlen wurde. Daraus ist zu schließen, daß wenn die mit grobkristallinem Quarz angereicherte Kornfraktion des basischen Rohmehlbestandteils nicht nachgemahlen wird, die neue Technologie nicht funktionieren kann, d.h. daß die Klinkerbildung dann nach dem herkömmlichen Mechanismus abläuft.

Darüber hinaus kann zum Beispiel auch die Trennung und nachfolgende Nachmahlung unter 40-80 µm der mit grobkristallinem Quarz angereicherten Kornfraktion der basischen Rohmehlbestandteile beim gemeinsamen Mahlen aller Rohstoffe erfolgen.

Tabelle 18:

| Auswirkung des Nachmahlens der an grobkristallinen Quarz angereicherten Kornfraktion des basischen Rohmehlbestandteils auf die Reaktivität des Rohmehls. | | | | | | | | | | | | | |
|---|---|---|---|---|---|---|---|---|---|---|---|---|---|
| Kt IPI | SM | MT | Rohstoffverhältnis [%] | | | Chemische Zusammensetzung des Rohmehls [%] | | | | | Verhältnis zwischen Kalkstein-fraktionen <80:>80µm | Rückstand des Rohmehls auf dem 80µm-Sieb [%] | Freikalkgehalt [%] |
| | | | Kalkstein | Ton | Pyritabbrand | Glühverlust | $SiO_2$ | $Al_2O_3$ | $Fe_2O_3$ | CaO | | | |
| Der an Quarz angereicherte Bereich von 63-200 µm ist nicht nachgemahlen | | | | | | | | | | | | | |
| 95 | 2,5 | 1,8 | 81,08 | 17,65 | 1,27 | 65,54 | 14,18 | 3,67 | 2,00 | 43,08 | 1,17:1,0 | 37,3 | 6,23 |
| Der an Quarz angereicherte Bereich von 63-200 µm wurde unter 40 µm nachgemahlen | | | | | | | | | | | | | |
| 95 | 2,5 | 1,8 | 81,08 | 17,65 | 1,27 | 35,54 | 14,18 | 3,67 | 2,00 | 43,08 | 1,70:1,0 | 30,0 | 0,89 |

Gemäß einer anderen Ausgestaltung der Erfindung wird vorgeschlagen, daß der Anteil der basischen (calcithaltigen) Rohmaterialien für die Grobkornfraktion separat von dem Anteil der basischen (calcithaltigen) Rohmaterialien für die Feinkornfraktion und dieser Anteil für die basische Feinkornfraktion gemeinsam mit den unterhalb 80 μm fein zu mahlenden sauren Rohmaterialbestandteilen aufgemahlen und in bezug auf einen optimalen KSt II anschließend ohne Vormischung nach bekanntem Verfahren direkt dem Brennvorgang zugeführt werden.

Durch diese Maßnahme ist es möglich, die Reaktivität des Rohmehls zu erhöhen, d.h. die Durchsatzleistung des Ofens zu erhöhen und den Brennstoffbedarf für das Brennen des Klinkers zu senken.

Dies läßt sich folgendermaßen erklären:

Es ist bekannt, daß bei einem Feinmahlen des Mahlgutes eine Agglomeratbildung und Verpelzung entsteht. Solche Wiederverfestigung fein gemahlenen Materials wird verursacht durch:

- statische Elektrizität: Die feinsten Teilchen werden beim Mahlen mit statischer Elektrizität aufgeladen, wobei die mit ungleicher Elektrizität geladenen Teilchen einander anziehen und auf diese Weise agglomerieren;
- Oberflächen-Energien: Die Wertigkeit von Atomen oder Atomgruppen an der Oberfläche fester Körper ist (möglicherweise und bei Verwendung der Mahlhilfen) nicht vollständig gesättigt;
- mechanische Packung: Die Agglomerate werden beim Zusammenstoßen der Mahlkörper gerammt und festgestampft.

Diese Erscheinungen können vorteilhaft für die Erhöhung der Reaktivität des Rohmehls unter den Bedingungen der neu vorgeschlagenen Technologie ausgenutzt werden.

Die Bildung der Agglomerate nur aus dem feinen Anteil des homogenisierten Rohmehls mit anschließender Fescstampfung der Agglomerate führt einerseits durch eine Verdichtung des Rohmehls, d.h. durch eine Verminderung des Abstandes zwischen feinen Partikeln, zu einer Steigerung der Geschwindigkeit von Feststoffreaktionen. Als Folge davon wird die Umwandlung des $SiO_2$ sowie des fein gemahlenen Calcites zu leichtschmelzbaren CS und $C_3S_2$ unter vorläufiger $C_2S$-Bildung erhöht.

Anderseits führt eine Verringerung der Oberflächenreaktionen zwischen dem fein aufgemahlenen Anteil und dem grob aufgemahlenen Anteil des Rohmehls wegen der Abwesenheit der Homogenisierung zur Aufrechterhaltung und Festigung der leichtschmelzbaren Brenngut-Zusammensetzung. Daraus resultiert bei der Garbrandtemperatur eine Steigerung des Schmelzanteils und der Reaktivität des Rohmehls.

Für die Untersuchungen zu weiteren Ausführungsbeispielen der Erfindung wurden wiederum dieselben Rohmehlbestandteile wie bei den bereits weiter oben erläuterten Beispiele verwendet. Die Vorbereitung und die Bründe der Rohmehle wurden genau so wie zuvor durchgeführt. Hierbei wurde der unter 80 μm zu mahlende Anteil der Rohmaterialien für die Feinkornfraktion gemeinsam und der oberhalb 80 μm zu mahlende calcithaltige Anteil der basischen Rohmaterialbestandteile für die Grobkornfraktion separat aufgemahlen.

Tabelle 19:

| Rohmehl | KstII | SM | TM | Kornfraktionenen des Kalksteins [μm] | | Verhältnis zwischen den Rohmehlbestandteilen [%] | | | | Freikalkgehalt [%] |
|---|---|---|---|---|---|---|---|---|---|---|
| Einfluß des Homogenisierungsverfahrens auf die Reaktivität des Rohmehls. | | | | | | | | | | |
| | | | | <80μm | >80μm | Kalksteinfraktion <80μm | Kalksteinfraktion >80μm | Ton | Pyritabbrand | |
| Gemeinsames Mahlen aller Rohstoffkomponenten | | | | | | | | | | |
| 1 | 97 | 2,2 | 1,6 | 0,01-80 | 80,01-2000 | 32,13 | 48,23 | 18,62 | 1,04 | 0,61 |
| 2 | 97 | 2,2 | 1,6 | 0,01-45 | 80,01-2000 | 32,13 | 48,23 | 18,62 | 1,04 | 0,33 |
| 3 | 95 | 2,5 | 1,83 | 0,01-63 | 125-1500 | 51,08 | 30,00 | 17,65 | 1,27 | 0,82 |
| Separates Mahlen aller Rohstoffkomponenten mit anschließender Homogenisierung des Rohmehls vor dem Brennen | | | | | | | | | | |
| 4 | 97 | 2,2 | 1,6 | 0,01-80 | 80,01-2000 | 32,13 | 48,23 | 18,62 | 1,04 | 0,67 |
| 5 | 97 | 2,2 | 1,6 | 0,01-45 | 80,01-2000 | 32,13 | 48,23 | 18,62 | 1,04 | 0,36 |
| 6 | 95 | 2,5 | 1,83 | 0,01-63 | 125-1500 | 51,08 | 30,00 | 17,65 | 1,27 | 0,89 |
| Gemeinsames Mahlen saurer Rohmaterialbestandteile mit dem Anteil Rohmehl-Feinkornfraktion der basischen Bestandteile. Homogenisierung des Rohmehls im Mischer ohne Mischkörper vor dem Brennen | | | | | | | | | | |
| 7 | 97 | 2,2 | 1,6 | 0,01-80 | 80,01-2000 | 32,13 | 48,23 | 18,62 | 1,04 | 0,46 |
| 8 | 97 | 2,2 | 1,6 | 0,01-15 | 80,01-2000 | 32,13 | 48,23 | 18,62 | 1,04 | 0,24 |
| 9 | 95 | 2,5 | 1,83 | 0,01-63 | 125-1500 | 51,08 | 30,00 | 17,65 | 1,27 | 0,73 |

Die Daten in der Tabelle zeigen deutlich, daß das gemeinsame Mahlen des Rohmaterialanteils für die Feinkornfraktion die Reaktivität des Rohmehls verbessert.

Bei einer weiteren Ausgestaltung der Erfindung ist vorgesehen, daß die Feinkornfraktion der basischen (calcithaltigen) Rohmehlbestandteilezusammen mit den unterhalb 80 μm feinaufgemahlenensauren Rohmehlbestandteilen separat von der auf oberhalb 80 μm aufgemahlenen Grobkornfraktion der basischen Rohmehlbestandteile in denjenigen Strang eines zweistrangigen Zyklonvorwärmers mit einer in eine Vorcalcinierstufe und eine Nachcalcinierstufe unterteilten Calcinierstufe eingeführt wird, der durch die Abgase der Sinterstufe beheizt wird, und die Grobkornfraktion der basischen Rohmehlbestandteile separat dem zweiten Strang zugeführt wird, der durch die Heißgase aus der Vorcalcinierstufe beheizt wird.

Auch durch diese Maßnahme ist es möglich, die Reaktivität des Rohmehls zu erhöhen, d.h. die Durchsatzleistung des Ofens zu erhöhen und den Brennstoffbedarf für das Brennen des Klinkers zu senken.

Dazu folgende Erklärungen:

1) Um eine $SO_3$-, $Cl_2$- und $F_2$-Emission zu vermeiden, ist es zweckmäßig, die Ofengase durch den fein aufgemahlenen Anteil des Rohmehls hindurchzuführen. Der Grund dafür ist die erhöhte Reaktionsoberfläche.

2) Die Anwesenheit gasförmiger Nebenbestandteile, wie flüchtige Cl-, F-, S- und Alkalien-Verbindungen, in den Ofengasen beschleunigt die chemischen Umwandlungen der grobkörnigen Quarzpartikel. Das ist besonders wichtig für die Erhöhung des CS und/oder $C_3S_2$-Anteils anstelle des $C_2S$. Daraus resultierten eine Erhöhung des Klinkerschmelzanteils und der Reaktivität des Rohmehls.

3) Es ergeben sich eine Herabsetzung der Ansatzbildung in der Einlaufkammer des Ofens und in den untersten Zyklonen des Wärmetauschers.

4) Ein separates Erhitzen der fein aufgemahlenen Rohmehlanteile von den grob aufgemahlenen Rohmehlanteilen verbessert die Bedingungen zur Erhöhung der Klinkerschmelzmenge.

Weitere Ausführungsbeispiele der Erfindung sind nachfolgenden beschrieben:

Für Untersuchungen weiterer Ausführungsbeispiele wurde das Rohmehl 4 aus dem obigen Beispiel verwendet. Dem auf drei Proben verteilten Rohmaterial wurde vorab in den fein zu mahlenden Anteil separat 0,5 % $MgSiF_6$, 0,5 % $CaCl_2$ und 1,0 % $Na_2O$ mit $K_2O$ im Verhältnis von 1:3 zugeführt anschließend wurde es gemahlen und homogenisiert. Auf diese Weise wurde ein Kreislauf simuliert. Die Rohmehlvorbereitung und Brennbehandlung wurden auf dieselbe Weise genau wie beim obigen Beispiel durchgeführt.

Um die separate Auswirkung des $MgSiF_6$, $CaCl_2$ und der Alkalien auf den Quarzbindungsgrad zu den Silikaten zu bestimmen, wurde zusätzlich der freie Quarzgehalt im Brenngut bei 1.200°C analysiert. Die gewonnen Daten sind in Tabelle 20 aufgeführt.

Aus den Ergebnissen folgt, daß der Gehalt an ungebundenem Quarzit bei den Proben mit $MgSiF_6$, $CaCl_2$ und Alkalien bei 1.200°C niedriger ist als beim Rohmehl ohne Zusatz. Dies bedingt eine Senkung des Freikalkgehalts im Brenngut im Garbrandbereich (1.450°C nach 30 min isothermischen Brennens), da der Schmelzanteil wegen der Bildung von CS und/oder $C_3S_2$ anstelle des $C_2S$ steigt.

Darüber- hinaus zeigen die vorhandenen Daten, daß die positive Auswirkung der $MgSiF_6$-, $CaCl_2$- und Alkalien-Zusätze auf die Reaktivität des Rohmehls, dessen Kalkstein grob aufgemahlen ist, effektiver ist als auf das Referenzrohmehl, das nach herkömmlicher Technologie fein aufgemahlen ist.

Darüber hinaus kann zum Beispiel auch des unter 80 μm aufgemahlene Anteil des Rohmehls einem beliebigen Strang eines zweistrangigen Zyklonvorwärmers separat zugeführt werden, in dem beide Stränge durch die Abgase der Sinterstufe beheizt werden.

Tabelle 20:

| Auswirkung von F-, Cl- und alkalihaltigen Zusätzen auf die Reaktivität des Rohmehls | | | | | | | | | | |
|---|---|---|---|---|---|---|---|---|---|---|
| Rohmehl | KStII | SM | TM | Korngrößen bereich des Kalksteins [%] | Verhältnis zwischen den Rohmehlbestandteilen [%] | | | | Quarzgehalt bei 1.200°C [%] | Freikalkgehalt bei 1.450°C [%] |
| | | | | | Kalksteinfraktion <80$\mu$m | Kalksteinfraktion >80$\mu$m | Ton <80$\mu$m | Pyritabbrand <80$\mu$m | | |
| nach Anspruch 1 | 97 | 2,2 | 1,6 | 0,01-2000 | 24,10 | 56,24 | 18,62 | 1,04 | 2,01 | 0,81 |
| mit 0,5% $MgSiF_6$ | 97 | 2,2 | 1,6 | 0,01-2000 | 24,10 | 56,24 | 18,62 | 1,04 | 0,84 | 0,19 |
| mit 0,5% $CaCl_2$ | 97 | 2,2 | 1,6 | 0,01-2000 | 24,10 | 56,24 | 18,62 | 1,04 | 0,95 | 0,28 |
| mit 1% $Na_2O$ + $K_2O$ | 97 | 2,2 | 1,6 | 0,01-2000 | 24,10 | 56,24 | 18,62 | 1,04 | 1,23 | 0,64 |
| Referenzrohmehl | 97 | 2,2 | 1,6 | 0,01-250 | 79,00 | 1,33 | 18,62 | 1,04 | 1,90 | 0,93 |
| Referenzrohmhel mit 0,5% $MgSiF_6$ | 97 | 2,2 | 1,6 | 0,01-250 | 79,00 | 1,33 | 18,62 | 1,04 | 0,98 | 0,70 |
| Referenzrohmehl mit 1% $Na_2O$ + $K_2O$ | 97 | 2,2 | 1,6 | 0,01-250 | 79,00 | 1,33 | 18,62 | 1,04 | 1,15 | 1,26 |

In einer weiteren Ausgestaltung ist vorgesehen, daß unter Berücksichtigung der Auswirkung des Alkalikreislaufs auf den tatsächlichen Gehalt an Alkalien im Heißmehl bei der Aufgabe des Rohmehls in die Sinterstufe und in Übereinstimmung mit dem tatsächlichen Gehalt an festreaktionsfähigem Mgo im Heißmehl, d.h. mit dem MgO-Gehalt im unterhalb 80 µm gemahlenem Anteil des Rohmehls, bei der Aufgabe von MgO- oder Alkali-Korrekturzusätzen das Verhältnis des MgO-Gehalt zum gesamten Alkaligehalt in einem Bereich von 2:1 bis 5:1 liegen muß.

Durch diese Maßnahme ist es ebenfalls möglich, die Reaktivität des Rohmehls zu erhöhen. Darüber hinaus steigt die Sulfatbeständigkeit und Fristbeständigkeit des Zements an.

Dazu folgende Erklärungen:

Beim Brennen von Zernentklinker im Drehofen verflüchtigt sich ein Teil der Alkalien in der Sinterzone und gibt Anlaß zu einem Alkalikreislauf. Das aus dem Rohmehl und Brennstoff entstehende $SO_2$ verbindet sich im Ofengas unter Sauerstoffaufnahme mit dem verflüchtigten Alkali zu einem dampfförmigen Alkalisulfat, welches in den kälteren Ofenzonen, im Vorwärmer und im Calcinator auf dem Brenngut kondensiert. Als Folge davon wandert das Alkalisulfat hauptsächlich mit dem Brenngut zur Sinterzone zurück und wird dank seiner Schwerflüchtigkeit, wenn es bei geringem $O_2$-Partialdruck und hoher Temperatur nicht zerlegt wird, im Klinker ausgetragen. Die Alkalicarbonate, soweit sie nicht in der Klinkerphasen eingebunden sind, werden erneut in der Sinterzone verdampft. So erhöht sich die Konzentration der Alkalien im Brenngut zwischen der Sinterzone und dem Zyklonvorwärmer. Einerseits beschleunigt dies die Festkörperreaktionen im einzelne die Quarzumwandlungen, anderseits behindert dies die Alitbildung. Um die negative Auswirkung der Alkalien auf die Alitbildung zu vermeiden und die Sulfatbeständigkeit und Fristbeständigkeit des Zements zu verbessern, ist es nötig, die Alkalien am Ende der Klinkerbildung in die Alkali-Magnesia-Silikate, nämlich $Na_2O*MgO*SiO_2$ und $K_2O*MgO*6SiO_2$ einzubinden. Entstehende Alkali-Magnesia-Silikate können auch den Quarz chemisch aktivieren.

Keine Probleme entstehen mit der Raumbeständigkeit, da das Alkali-Magnesia-Silikat $Na_2O*MgO*SiO_2*K_2O*MgO*SiO_2$ bis 1.450°C temperaturbeständig ist und der unter Bedingungen des erfindungsgemäßen Verfahrens entstehende Alit mehr MgO enthalten kann.

Für weitere Ausführungsbeispiele wurde für die Untersuchungen das Rohmehl 4 wiederum aus dem obigen Beispiel etwa nach Anspruch 1 verwendet. Dem in fünf Proben aufgeteilten Rohmehl wurden separat Alkalien und Magnesium zugegeben, und es wurde anschließend homogenisiert. Die Mengenverhältnisse sind in Tabelle 21 dargestellt.

Tabelle 21:

| Mengenverhältnisse der Zusätze in den zu brennenden Rohmehlen. | | | | | |
|---|---|---|---|---|---|
| Zusätze | Zusatzgehalt (auf geglühte Materie) [%] | | | | |
| | Probe 1 | Probe 2 | Probe 3 | Probe 4 | Probe 5 |
| $Na_2O$ | 0,4 | 0,4 | 0,4 | 0,4 | 0,4 |
| $K_2O$ | 1,1 | 1,1 | 1,1 | 1,1 | 1,1 |
| MgO | 1,5 | 3,0 | 4,0 | 5,0 | 8,0 |

Die Rohmehlvorbereitung und Brennbehandlung wurden ebenfalls auf dieselbe Weise beim obigen Beispiel durchgeführt.

Um Auswirkung der gemeinsamen Anwesenheit des MgO mit den Alkalien bei verschiedenen Verhältnissen auf die Reaktionsfähigkeit des Quarzes und insgesamt des Rohmehls zu bestimmen, wurde der Freiquarzgehalt bei 1.200°C und der Freikalkgehalt bei 1.450°C nach der 30 min Dauer im Brenngut naßchemisch analysiert. Die gewonnenen Daten sind in Tabelle 22 eingetragen.

Die vorliegenden Ergebnisse zeigen deutlich, daß unter optimal eingestellten MgO:Alkalien-Verhältnissen die Reaktivität des Rohmehls (Tabelle 22) und die Sulfatbeständigkeit des Zements (Tabelle 23) erhöht werden. Wie die mineralogischen Untersuchungen gezeigt haben, sind diese positiven Auswirkungen mit der Bildung der Alkali-Magnesium-Silikate verbunden.

| Rohmehl | Alkaligehalt | MgO-Gehalt | KStII | SM | TM | Korngrößenbereich des Kalksteins [µm] | Verhältnis zwischen den Rohmehlbestandteilen [%] | | | | Freiquarzgehalt [%] | Freikalkgehalt [%] |
|---|---|---|---|---|---|---|---|---|---|---|---|---|
| | | | | | | | Kalksteinfraktion <80µm | Kalksteinfraktion >80µm | Ton <80µm | Pyritabbrand <80µm | | |
| 1 | 1.5 | 1.5 | 97 | 2.2 | 1.6 | 0,01-2000 | 24,10 | 56,24 | 18,62 | 1,04 | 1,20 | 0,63 |
| 2 | 1.5 | 3.0 | 97 | 2.2 | 1.6 | 0,01-2000 | 24,10 | 56,24 | 18,62 | 1,04 | 1,01 | 0,47 |
| 3 | 1.5 | 4.0 | 97 | 2.2 | 1.6 | 0,01-2000 | 24,10 | 56,24 | 18,62 | 1,04 | 0,90 | 0,42 |
| | 1.5 | 6.0 | 97 | 2.2 | 1.6 | 0,01-2000 | 24,10 | 56,24 | 18,62 | 1,04 | 0,88 | 0,40 |
| 5 | 1.5 | 8.0 | 97 | 2.2 | 1.6 | 0,01-2000 | 24,10 | 56,24 | 18,62 | 1,04 | 0,92 | 0,41 |

Tabelle 23:

| Auswirkung des MgO-Gehalts auf die Sulfatbeständigkeit. | | | | |
|---|---|---|---|---|
| Alkaligehalt [%] | MgO-Gehalt [%] | Sulfatbeständigkeitsgrad | | |
| | | $Na_2SO_4$-Gehalt in der Erhärtungslösung [%] | | |
| | | 0,37 | 0,92 | 3,0 |
| 0,5 | 1,5 | 0,79 | 0,73 | 0,64 |
| 1,5 | 4,0 | 0,83 | 0,81 | 0,73 |

Bei einer weiteren Ausgestaltung der Erfindung wird die Grobkornfraktion der basischen Rohmehlbestandteile mit Korngrößen von 80-500 bis 80-2.000 µm separat in einer entsprechenden Menge unmittelbar durch die Ofenflamme und die gegenüberliegende Seite des Ofens hinter der Sinterzone in einen Temperaturbereich von 1.250-1.350°C eingeführt, um diese eingeführte Grobkornfraktion basischen Rohmehlbestandteile dem Klinker einzuverleiben. Die Menge dieser Grobkornfraktion kann so groß sein, daß ein vollständiges Einverleiben in den Klinker gewährleistet ist.

Hierdurch soll vor allem eine Verringerung der topochemischen $C_2S$-Bildung anstelle von CS und $C_3S_2$ unmittelbar vor der Sinterzone erreicht werden. Damit werden die Bedingungen für die Bildung des neuen, an $SiO_2$ reichen Eutektikums begünstigt und infolgedessen der Schmelzanteil erhöht.

Ferner ist es auch durch diese Maßnahme möglich, die Reaktivität des Rohmehls zu erhöhen, d.h. die Durchsatzleistung des Ofens zu erhöhen und den Brennstoffbedarf zum Brennen des Klinkers zu senken.

Dazu folgende Erklärungen:

Die Trennung und separate Einführung der Grobkornfraktion der basischen Rohmehlbestandteile in den Ofen in einem Temperaturbereich von 1.250-1.350°C bewirkt im Brenngut weiter verbesserte Bedingungen für die Aufrechterhaltung und Festigung der leichtschmelzbaren Zusammensetzung des $SiO_2$-angereicherten neuen Eutektikums. Daraus resultiert eine noch größere Steigerung des Schmelzanteils in der chemischer Zusammensetzung des $SiO_2$-angereicherten Eutektikums. Dies führt zu einer Steigerung der Rohmehlreaktivität. Darüber hinaus bedingt die Bildung des frisch entstehenden Freikalks unmittelbar vor und in der Sinterzone eine Erhöhung der chemischen Aktivität des Freikalks, da der Freikalk fein ausgebildet und noch nicht rekristallisiert ist.

Für die Untersuchungen in bezug auf diese Ausführung wurde das Rohmehl 7 aus der Tabelle 19 verwendet. Die Rohmehlvorbereitung und das Brennverhalten unterscheiden sich von den dortigen Untersuchungen nur dadurch, daß die Grobkornfraktion der basischen Rohmehlbestandteile nicht vom Brennbeginn zum fein aufgemahlenen Anteil des Rohmehls zugeführt wurde, sondern nachdem der fein auf gemahlene Rohmehlanteil bereits bis zu 1.250-1.400°C im drehenden Laborofen aufgeheizt worden war. Die Ergebnisse sind in Tabelle 24 dargestellt.

Aus vorliegenden Daten folgt, daß die Reaktivität des grob gemahlenen Rohmehls unter durchgeführten Bedingungen nach Anspruch 12, d.h. bei separater Aufgabe des grob gemahlenen Kalksteinanteils zum im drehenden Ofen vorläufig bis zu 1.250-1.350°C aufgeheizten fein gemahlenen Rohmehlanteil, steigt.

Tabelle 24:

| Auswirkungen auf die Reaktivität des Rohmehls bei der separaten Zuführung der Grobkornfraktion der Kalksteinanteile zum im drehenden Ofen zu dem vorab bis auf 1.250-1.350°C aufgeheizten, fein aufgemahlenen Rohmehlanteil | | | | | | | | | | | |
|---|---|---|---|---|---|---|---|---|---|---|---|
| Rohmehl | KStII | SM | TM | Korngrößenbereich des Kalksteins [µm] | | Verhältnis zwischen den Rohmehlbestandteilen [%] | | | | Temperatur der vorläufigen Aufheizung des Feinanteils von Rohmehl [°C] | Freikalkgehalt [%] |
| | | | | <80µm | >80µm | Kalksteinfraktion <80µm | Kalksteinfraktion >80µm | Ton >80µm | Pyritabbrand >80µm | | |
| Gemeinsames Feinmahlen saurer Rohmehlbestandteile mit dem fein zu mahlenden Kalkstein- anteil und separates Mahlen des grob zu mahlenden Kalksteinanteils. Der grob gemahlene Kalksteinanteil wurde vor dem Brennbeginn zum fein gemahlenen Rohmehlanteil zugeführt. | | | | | | | | | | | |
| 1 | 97 | 3,3 | 1,6 | 0,01-80 | 80,01-2000 | 32,13 | 48,23 | 18,62 | 1,04 | - | 0,46 |
| Der grob gemahlene Kalksteinanteil wurde zum fein gemahlenen Rohmehlanteil zugeführt, bevor der fein gemahlene Rohmehlanteil im drehenden Ofen bis zu 1250-1350°C aufgeheizt worden war. | | | | | | | | | | | |
| 2 | 97 | 3,3 | 1,6 | 0,01-80 | 80,01-2000 | 32,13 | 48,23 | 18,62 | 1,04 | 1250 | 0,28 |
| 3 | 97 | 3,3 | 1,6 | 0,01-80 | 80,01-2000 | 32,13 | 48,33 | 18,62 | 1,04 | 1300 | 0,23 |
| 4 | 97 | 3,3 | 1,6 | 0,01-80 | 80,01-2000 | 32,13 | 48,23 | 18,62 | 1,04 | 1350 | 0,38 |
| 5 | 97 | 3,3 | 1,6 | 0,01-80 | 80,01-2000 | 32,13 | 48,33 | 18,62 | 1,04 | 1400 | 1,80 |
| 6 | 97 | 3,3 | 1,6 | 0,01-80 | 80,01-2000 | 32,13 | 48,33 | 18,62 | 1,04 | 1200 | 0,410,45 |

Nach der Erfindung kann ober zum Beispiel auch der abgetrennte Anteil des Rohmehls sowohl in vorgewärmtem als auch in calciniertem Zustand in den Ofen in einem Temperaturbereich von 1.250-1.350°C eingeführt werden.

Erfindungsgemäß kann es ferner auch vorteilhaft sein, wenn nach Anspruch 13 eine Zwischenkornfraktion der basischer Rohmehlbestandteile mit Korngrößen von 60-125 µm bis 80-200 µm separat in einer mehr oder weniger großen Menge unmittelbar durch die Ofenflamme und durch die gegenüberliegende Seite des Ofens hinter der Sinterzone in einen Temperaturbereich von 1.250-1.400°C eingeführt wird, um diese eingeführte Zwischenkornfraktion der basischen Rohmehlbestandteile in den Klinker einzuverleiben.

Es soll bevorzugt wiederum eine Verringerung der topochemischen $C_2S$-Bildung anstelle von CS und $C_3S_2$ unmittelbar vor der Sinterzone erreicht werden. Damit werden die Bedingungen für die Bildung des neuen an $SiO_2$ reichen Eutektikums begünstigt und infolgedessen der Schmelzanteil erhöht. Somit ist es auch hier möglich, die Reaktivität des Rohmehls zu erhöhen.

Die separate Einführung des Zwischenkornfraktion der basischen Rohmehlbestandteile hinter der Sinterzone des Ofens in einen Temperaturbereich von 1.250-1.450°C bewirkt im Brenngut noch bessere Bedingungen für eine Aufrechterhaltung und Festigung der leichtschmelzbaren Zusammensetzung des $SiO_2$-angereicherten Eutektikums. Daraus resultiert eine noch größere Steigerung des Schmelzanteils und der Reaktivität des Rohmehls. Der frisch gebildete Freikalk von Calcitpartikeln mit einer Größe von 60-200 µm wird sofort dem Klinker einverleibt, da der Anteil dieser Zwischenkornfraktion kleiner ist als der Anteil der Grobkornfraktion mit 80-2.000 µm. Das Fehlen von Kalziumkarbonatpartikeln <60 µm in der Zwischenkornfraktion schließt den Staubausstoß bei ihrer Aufgabe durch die Ofenflamme hinter der Sinterzone aus. Darüber hinaus ist die Zwischenkornfraktion bezüglich des Korngrößenbereiches verhältnismäßig enger als der ganze Bereich oberhalb 80 µm, d.h. von 80 bis 2.000 µm. Deswegen ist es möglich. die Zufuhr der Zwischenkornfraktion der basischen Rohmehlbestandteile in den Bereich zwischen Sinter- und Übergangzonen des Ofens genauer zu erfüllen. Die $C_2S$-Bildung unmittelbar vor der Sinterzone ist daher ausgeschlossen.

Ausführungsbeispiele hierzu werden nachfolgend beschrieben. Für die Untersuchungen wurden das Rohmehl 4 aus der Tabelle 11 und das Rohmehl 7 aus der Tabelle 19 verwendet. Die Rohmehlvorbereitung und das Brennverhalten im drehenden Ofen wurden wie folgt durchgeführt.

Die Zwischenkornfraktionen der basischen Rohmehlbestandteile mit 60-200 µm wurden abgetrennt. Der Rest der basischen Rohmehlbestandteile, d.h. die Partikel <60 µm und die Partikel über 200 µm, wurden gemeinsam mit den sauren Rohmehlbestandteilen in den auf 600°C vorgeheizten elektrischen Labordrehofen (mit oder ohne vorheriger Homogenisierung) zugeführt. Um die Proben bei 600°C homogen aufzuheizen, wurden sie am Anfang des Brennens 3 min isotherm gehalten. Anschließend, bevor diese Zwischenkornfraktion in den Drehofen eingeführt wurde, war der übrige Hauptanteil des Rohmehls von 600°C auf 1.250-1.450°C mit einer gleichmäßigen Aufheizgeschwindigkeit von 17°C/min aufgeheizt worden. Danach wurde die abgetrennte Zwischenkornfraktion der basischen Rohmehlbestandteile dem im Dreh-Ofen auf 1.250-1.450°C vorgeheizten Hauptanteil des Rohmehls zugeführt. Anschließend wurde die gesamte Probe jeweils bei erforderlicher Temperatur in einem Bereich von 1.250-1.450°C 3 min isotherm gehalten und auf Garbrandtemperatur (1.450°C) mit gleicher Aufheizgeschwindigkeit von 17°C/min weiter aufgeheizt und abschließend jeweils 30 min isotherm gehalten. Am Ende des Brennens wurde der gewonnene Klinker rasch auf Raumtemperatur an der ruhenden Luft abgekühlt.

Die Ergebnisse der durchgeführten Untersuchungen sind in Tabelle 25 vorgestellt.

Die vorliegenden Daten zeigen eindeutig, daß durch die Zufuhr der von der Grobkornfraktion (mit Partikeln von 0-2.000 µm) der basischen Rohmehlbestandteil abgetrennten Zwischenkornfraktion (mit Partikeln von 60-200 µm) in den Bereich zwischen Sinter- und Übergangzonen des Ofens bei Temperaturen von 1.250-1.450°C die Reaktivität des Rohmehls erhöht wird. Dies bestätigt eine Senkung des Freikalkgehalts im gewonnen Klinker. Daraus resultiert eine Erhöhung der Durchsatzleistung des Ofens und eine Senkung des Brennstoffbedarfs für das Brennen des Klinkers.

EP 0 801 636 B1

| Rohmehl | KStII | SM | TM | Korngrößenverteilung des Kalksteins [µm] | | | Verhältnis zwischen den Rohmehlbestandteilen [%] | | | | | Zuführtemperatur Kalkstein-Zwischenkornfraktion [°C] | Freikalkgehalt [%] |
|---|---|---|---|---|---|---|---|---|---|---|---|---|---|
| | | | | Feinkornfraktion | Zwischenkornfraktion | Grobkornfraktion | Kalkstein | | | Ton | Pyritabbrand | | |
| | | | | | | | Feinkornfraktion | Zwischenkornfraktion | Grobkornfraktion | | | | |
| Unter optimalen Bedingungen | | | | | | | | | | | | | |
| 1 | 97 | 2.2 | 1.6 | 0.01-63 | 63.01-90 | 90.01-2000 | 28.63 | 5.90 | 45.83 | 18.62 | 1.04 | 1300 | 0.20 |
| 2 | 97 | 2.2 | 1.6 | 0.01-63 | 63.01-125 | 125.01-2000 | 28.63 | 10.20 | 41.53 | 18.62 | 1.04 | 1300 | 0.15 |
| 3 | 97 | 2.2 | 1.6 | 0.01-63 | 63.01-200 | 200.01-2000 | 28.63 | 14.50 | 37.23 | 18.62 | 1.04 | 1300 | 0.19 |
| 4 | 97 | 2.2 | 1.6 | 0.01-72 | 72.01-125 | 125.01-2000 | 30.33 | 8.50 | 41.53 | 18.62 | 1.04 | 1300 | 0.27 |
| 5 | 97 | 2.2 | 1.6 | 0.01-80 | 80.01-200 | 200.01-2000 | 32.13 | 11.00 | 37.23 | 18.62 | 1.04 | 1300 | 0.22 |
| 6 | 97 | 2.2 | 1.6 | 0.01-63 | 63.01-125 | 125.01-2000 | 28.63 | 10.20 | 41.53 | 18.62 | 1.04 | 1250 | 0.23 |
| 7 | 97 | 2.2 | 1.6 | 0.01-63 | 63.01-125 | 125.01-2000 | 28.63 | 10.20 | 41.53 | 18.62 | 1.04 | 1350 | 0.20 |
| 8 | 97 | 2.2 | 1.6 | 0.01-63 | 63.01-125 | 125.01-2000 | 28.63 | 10.20 | 41.53 | 18.62 | 1.04 | 1400 | 0.45 |
| 9 | 97 | 2.2 | 1.6 | 0.01-63 | 63.01-200 | 200.01-2000 | 28.63 | 14.50 | 37.23 | 18.62 | 1.04 | 1250 | 0.25 |
| 10 | 97 | 2.2 | 1.6 | 0.01-63 | 63.01-90 | 90.01-2000 | 28.63 | 5.90 | 45.83 | 18.62 | 1.04 | 1400 | 0.30 |
| Außerhalb optimaler Bedingungen | | | | | | | | | | | | | |
| 11 | 97 | 2.2 | 1.6 | 0.01-45 | 45.01-80 | 80.01-2000 | 25.03 | 7.10 | 48.23 | 18.62 | 1.04 | 1300 | 1.30 |
| 12 | 97 | 2.2 | 1.6 | 0.01-90 | 90.01-250 | 250.01-2000 | 32.13 | 7.60 | 40.63 | 18.62 | 1.04 | 1300 | 0.90 |
| 13 | 97 | 2.2 | 1.6 | 0.01-63 | 63.01-125 | 125.01-2000 | 28.63 | 10.20 | 41.53 | 18.62 | 1.04 | 1200 | 0.78 |
| 14 | 97 | 2.2 | 1.6 | 0.01-63 | 63.01-125 | 125.01-2000 | 28.63 | 10.20 | 41.53 | 18.62 | 1.04 | 1450 | 0.91 |

um Vergleich ein Beispiel nach Anspruch 5 des Rohmehls 4, Gemeinsames Mahlen aller Rohstoffkomponente

| | KStII | SM | TM | Feinkorn | Zwischenkorn | Grobkorn | Kalkstein | Zwischen | Grob | Ton | Pyritabbrand | Temp | Freikalk |
|---|---|---|---|---|---|---|---|---|---|---|---|---|---|
| 5 | 97 | 2.2 | 1.6 | 0.01-80 | - | 80.01-2000 | 32.13 | - | 48.23 | 18.62 | 1.04 | - | 0.46 |

39

| Zum Vergleich ein Beispiel nach Anspruch 5 des Rohmehls 7. Gemeinsames Mahlen saurer Rohstoffe mit fein zu mahlendem Kalksteinanteil und separates Mahlen grob zu mahlenden Kalksteinanteils ohne vorläufiger Homogenisierung des Rohmehls vor dem Brennen | | | | | | | | | | | | | |
|---|---|---|---|---|---|---|---|---|---|---|---|---|---|
| 16 | 97 | 2.2 | 1,6 | 0,01-45 | - | 80,01-2000 | 32.13 | - | 48,23 | 18,62 | 1,04 | - | 0,24 |

Tabelle 25 Auswirkung der Abtrennung des Zwischenkornfraktion von basischem Rohmehlbestandteil mit nachfolgender Zufuhr hin in den Temperaturbereich zwischen Übergang- und Sinterzonen bei 1.250-1.400°C auf die Reaktivität des Rohmehls.

Gemäß einer weiteren vorteilhaften Ausgestaltung wird die basische Rohmehl-Feinkornfraktion mit Korngrößen unterhalb 60-80 µm gemeinsam mit den unter 60-80 µm fein gemahlenen sauren Rohmehlbestandteilen separat von der oberhalb 80 µm aufgemahlenen Grobkornfraktion der basischen Rohmehlbestandteile unmittelbar in die Ofenflamme durch den Ofenauslauf und/oder durch die Einlaufkammer des Ofens hinter der Sinterzone in einen Temperaturbereich von 1.100-1.400°C eingeführt, um diese unterhalb 60-80 µm aufgemahlene Feinkornfraktion der basischen Rohmehlbestandteile gemeinsam mit diesen fein gemahlenen sauren Rohmehlbestandteilen dem Klinker einzuverleiben.

Auch hierdurch werden die Bedingungen für die Bildung des neuen an $SiO_2$ reichen Eutektikums begünstigt und infolgedessen der Schmelzanteil erhöht, und außerdem ist es möglich, die Reaktivität des Rohmehls zu erhöhen.

Dazu folgende Erklärung:

Die separate Einführung des Feinkornfraktion der basischen Rohmehlbestandteile gemeinsam mit den fein aufgemahlenen sauren Rohmehlbestandteilen insbesondere in einen Temperaturbereich von 1.200-1.450°C bewirkt im Brenngut noch bessere Bedingungen für die Aufrechterhaltung und Festigung der leichtschmelzbaren Zusammensetzung des neuen Eutektikums als nach dem oben erläuterten Beispiel. Daraus resultiert eine noch höhere Steigerung des Schmelzanteils mit chemischer Zusammensetzung des $SiO_2$-angereicherten Eutektikums, was zu der Erhöhung der Rohmehlreaktivität führt.

Für Untersuchungen nach dementsprechenden Beispielen wurde das Rohmehl aus der Tabelle 24 verwendet. Die Rohmehlvorbereitung und das Brennverhalten unterscheiden sich bei dieser Untersuchungen im Vergleich zu einem der vorhergehenden Beispiele nur insofern, daß nicht die Grobkornfraktion der basischen Rohmehlbestandteile beim Brennbeginn dem zuvor aufgeheizten, fein aufgemahlenen Anteil des Rohmehls zugeführt wurde, sondern der fein aufgemahlene Rohmehlanteil der zuvor bis auf 1.200-1.450°C im drehenden Laborofen aufgeheizten Grobkornfraktion der basischen Rohmehlbestandteile zugeführt wurde. Die Ergebnisse sind in Tabelle 26 dargestellt.

Tabelle 26:

| Auswirkung der separaten Einführung des fein gemahlenen Rohmehlanteils zu dem im drehenden Ofen bis zu 1.250-1.450°C zuvor aufgeheizten groben Kalksteinanteil auf die Reaktivität des Rohmehls. | | | | | | | | | | | |
|---|---|---|---|---|---|---|---|---|---|---|---|
| Rohmehl | KstII | SM | TM | Kornfraktionen von Kalkstein | | Verhältnis zwischen den Rohmehlbestandteilen [%] | | | | Temperatur der aufgeheizten des Grobkornfraktion des Kalksteins [°C] | Freikalkgehalt [%] |
| | | | | <80μm | >80μm | Kalkstein fraktion <80μm | Kalkstein fraktion >80μm | Ton >80μm | Pyritabbrand >80μm | | |
| Der fein gemahlene Rohmehlanteil wurde zum grob gemahlenen Kalksteinanteil zugeführt, nachdem der grob gemahlene Kalksteinanteil im drehendeh Ofen bis zu 1200-1450°C aufgeheizt worden war. | | | | | | | | | | | |
| 1 | 97 | 3,3 | 1,6 | 0,01-80 | 80,01-2000 | 32,13 | 48,23 | 18,62 | 1,04 | 1200 | 0,22 |
| 2 | 97 | 3,3 | 1,6 | 0,01-80 | 80,01-2000 | 32,13 | 48,23 | 18,62 | 1,04 | 1300 | 0,29 |
| 3 | 95 | 3,3 | 1,83 | 0,01-80 | 80,01-2000 | 32,13 | 48,23 | 18,62 | 1,04 | 1400 | 0,36 |
| 4 | 97 | 3,3 | 1,6 | 0,01-80 | 80,01-2000 | 32,13 | 48,23 | 18,62 | 1,04 | 1450 | 0,85 |
| 5 | 97 | 3,3 | 1,6 | 0,01-80 | 80,01-2000 | 32,13 | 48,23 | 18,62 | 1,04 | 1100 | 0,39 |

Die vorliegenden Daten zeigen, daß die Reaktivität des Rohmehls unter optimalen Bedingungen erhöht wird.

Nach Erfindung kann aber zum Beispiel auch der abgetrennte Anteil des Rohmehls sowohl in vorgewärmtem als auch in calciniertem Zustand in den Ofen in einem Temperaturbereich von 1.250-1.350°C eingeführt werden.

Bei dem erfindungsgemäß vorgesehenen Verhältnis von Feinkornfraktion zu Grobkornfraktion der basischen Rohmehlbestandteile oder des Rohmehls ist es ferner möglich, die thermische Behandlung des zu brennenden Rohmehls in einem Temperaturbereich von 850C bis 1.250°C unter reduzierender Gasatmosphäre durchzuführen.

Dabei soll eine chemische Aktivierung des Quarzes erreicht werden. Damit wird die topochemische $C_2S$-Bildung anstelle von CS und $C_3S_2$ vor der Sinterzone weitgehend vermieden und die Bildung des neuen an $SiO_2$ reichen Eutektikums begünstigt, mit dem Resultat einer Erhöhung des Schmelzanteils und der Reaktivität des Rohmehls.

Dazu folgende Erklärungen:

Unter reduzierenden Bedingungen, die durch das reduzierende Gasmedium im Brenngut geschaffen werden können, vollzieht sich in der Sinterstufe eine Reduzierung der Eisenoxide ($Fe_2O_3 \rightarrow Fe_3O_4 \rightarrow FeO$) sowie der S-, Cr- und Mn-Oxide. Das Kristallgitter des Quarzes wird dabei chemisch aktiviert. Die chemische Aktivierung des unter reduzierendem Gasmedium thermisch behandelten Quarzes wird bei den höheren Temperaturen durch eine Verringerung des stöchiometrischen Sauerstoff:Silizium-Molekülverhältnisses von unter 2 bewirkt. Dies führt zu einem Sauerstoffmangel im Quarzkristallgitter. Die dabei entstehenden $O^2$-Vakanzen im Kristallgitter des Quarzes bewirken, daß die kristall-chemischen Umwandlungen und die chemische Aktivität des Quarzes ansteigen.

Die sich unter reduzierender Bedingung vollziehende Entsäuerung des $CaCO_3$ ist bis auf 60°C zu senken.

Die katalytische Auswirkung des reduzierenden Gasmediums auf die chemische Aktivität des Quarzes ist darüber hinaus durch die extrem erhöhte chemische Aktivität des entstehenden $Fe^{2+}$-Ions zuer klären. Die unter reduzierendem Gasmedium entstehenden $Fe^{2+}$-Ionen sind in der Lage, eine neue Lösung mit verschiedenen Komponenten, die $Ca^{2+}$-Ionen enthalten, und leichtschmelzbarer Lokalschmelze mit niedriger Viskosität in den Kontaktzonen mit $SiO_2$ zu bilden.

Auf diese weise kann die vollständige Bindung des Quarzes an den leichtschmelzbaren Silikaten nämlich CS und $C_3S_2$ unmittelbar vor der Sinterzone bei 1100-1200°C begünstigt werden. Daraus resultiert eine Steigerung der Bildung des CS und/oder $C_3S_2$ anstelle von $CS_2$ und die Erhöhung des Schmelzanteils.

Für die Untersuchungen zugehöriger Ausführungsbeispiele wurde das Rohmehl 4 aus der Tabelle 11 verwendet. Die Homogenisierung des Rohmehls wurde innerhalb von zwei Stunden wiederum in einem Mischer mit Gummikugeln als Mischkörper durchgeführt. Für die nachfolgenden Brennversuche wurden aus dem Rohmehl unter Zusatz von Wasser Granalien mit einem Durchmesser von 5-10 µm hergestellt. Die Granalien wurden zwei Stunden bei 110°C getrocknet. Diese Granalien wurden auf folgende Weise gebrannt.

Die jeder Probe wurden in der Menge von 400 g dem auf 600°C vorgeheizten Labordrehofen aufgegeben. Anschließend wurde das Brenngut in 50 min auf 1.450°C mit einer gleichmäßigen Aufheizgeschwindigkeit von 17°C/min erhitzt. Danach wurde das Brenngut jeweils bei 1.450°C 30 min isotherm gehalten.

Um reduzierendes Gasmedium im Brenngut des Drehofens in einem Temperaturbereich von 850-1000°C bis 850-1.200°C zu schaffen, wurden bei jedem Brand in den Drehofen bei 850°C Grafitkugeln mit einem Durchmesser von 30 mm aufgegeben und entsprechend bei 950°C, 1.000°C, 1.100°C, 1.200°C und 1.250°C ausgeladen. So wurde reduzierendes Gasmedium im Brenngut des Drehofens in den Temperaturbereichen von jeweils 850-950°C, 850-1.000°C, 850-1.100°C, 850-1.200°C und 850-1.250°C geschaffen. Abschließend wurden die reduzierend gebrannten Rohmehl-Proben aus dem Ofen ausgeladen und rasch auf Raumtemperatur abgekühlt.

Um die Auswirkungen des reduzierenden Gasmediums bei verschiedenen Temperaturbereichen auf die Reaktionsfähigkeit des Quarzes und insgesamt des Rohmehls zu bestimmen, wurde Freiquarzgehalt bei 1.200°C und Freikalkgehalt bei 1 450°C nach der 30 min Dauer im Brenngut chemisch analysiert. Die gewonnenen Daten sind in Tabelle 27 eingetragen.

Die vorliegenden Daten zeigen deutlich daß die Reaktivität des Rohmehls unter reduzierenden Bedingungen mit Zunahme des Temperaturbereichs bis auf 850-1.200°C wächst Weitere Zunahme des reduzierenden Temperaturbereichs bis zu 850-1.250°C bringt keine Steigerung der Rohmehlreaktivität.

Tabelle 27:

| | Einfluß des reduzierenden Gasmediums auf die Reaktivität des Rohmehls in Abhängigkeit von der Temperatur. | | | | | | | | | |
|---|---|---|---|---|---|---|---|---|---|---|
| Nr. | KStII | SM | TM | Korngrößenbereich des Kalksteins [%] | Verhältnis zwischen Rohmehlbestandteilen [%] | | | | Temperaturbereich des reduzierenden Brennens | Freiquarzgehalt bei 1.200°C [%] | Freikalkgehalt bei 1.450°C [%] |
| | | | | | Kalksteinfraktionen [µm] | | Ton | Pyritabbrand | | | |
| | | | | | <80µm | >80µm | | | | | |
| 1 | 97 | 2,2 | 1,6 | 0,01-2000 | 24,10 | 56,24 | 18,62 | 1,04 | - | 2,01 | 0,81 |
| 2 | 97 | 2,2 | 1,6 | 0,01-2000 | 24,10 | 56,24 | 18,62 | 1,04 | 850-950 | 1,95 | 0,78 |
| 3 | 97 | 2,2 | 1,6 | 0,01-2000 | 24,10 | 56,24 | 18,62 | 1,04 | 850-1000 | 1,46 | 0,54 |
| 4 | 97 | 2,2 | 1,6 | 0,01-2000 | 24,10 | 56,24 | 18,62 | 1,04 | 850-1100 | 0,89 | 0,29 |
| 5 | 97 | 2,2 | 1,6 | 0,01-2000 | 24,10 | 56,24 | 18,62 | 1,04 | 850-1200 | 0,56 | 0,15 |
| 6 | 97 | 2,2 | 1,6 | 0,01-2000 | 24,10 | 56,24 | 18,62 | 1,04 | 850-1250 | 0,52 | 0,16 |

Gemäß einer weiteren Ausgestaltung der Erfindung wird vorgeschlagen, daß für das Ermahlen der Feinkornfraktion und der Grobkornfraktion der basischen Rohmehlbestandteile das Verhältnis der Mahlkörperfüllung zur Mahlgutfüllung in der Mühle zwischen 2 und 5 liegt, wobei die erste Kammer einer Zweikammermühle und eine Einkammermühle bei binärer Kugelfüllung mit einem mitteleren Kugeldurchmesser von 84,7 mm und bei einer aus verschiedenen Kugelgrößen bestehenden Kugelfüllung mit einem mitteleren Kugeldurchmesser von 82 bis 88 mm beladen werden und wobei eine Trennwand der im geschlossenen und offenen Kreislauf betriebenen Zweikammerrohrmühle bei einem Längenverhältnis der ersten Kammer zur zweiten Kammer von 2.1 bis 5,6:1 in die Mühle eingebaut wird.

Durch diese Maßnahme ist es möglich, den Energieaufwand für das Mahlen der Rohmaterialien zu verringern, die Durchsatzleistung der Mühle, den Rückstand auf dem 80 µm-Sieb zu erhöhen und den Lärmpegel sowie den Abrieb an Mahlkörpern und Panzerung beim Betrieb der Rohrmühle zu vermindern.

Dazu folgende Erklärung:

Bekanntlich entsteht beim Feinmahlen von Mahlgut eine Agglomeratbildung und Verpelzung, und zwar als Ursache von statischer Elektrizität, Oberflächen-Energien oder mechanischer Packung, wie es bereits weiter oben (auf Seite 44) beschrieben worden ist.

Diese Erscheinungen behindern erheblich den Mahlvorgang beim Feinmahlen, während diese negativen Erscheinungen beim Grobmahlen sehr gering sind.

Nach dem Stand der Technik prallen die Mahlkugeln in der Mühle oft aneinander, ohne ein Mahlgutkorn zu treffen. Diese Erscheinung ist besonders in der ersten Kammer von Bedeutung, da sich die Zerkleinerung überwiegend durch die Kugelschläge vollzieht.

Um die Mahlenergie optimal auszunutzen, sollte das Verhältnis von Mahlkörperfüllung zu Mahlgutfüllung entsprechend aufeinander abgestimmt werden, und zwar unter Berücksichtigung der Mahlfeinheit. Dieses Verhältnis ist um so größer, je größer die Feinheit des Mahlgutes sein soll. Ein empfohlenes Verhältnis der Kugelfüllung zur Mahlgutfüllung ist bei maximaler Ausnutzung der Mahlenergie auf die Endfeinheit angepaßt, d.h. daß es viel größer ist, als es für die erste Mahlkammer optimal sein kann. Deswegen wird die erste Mahlkammer üblicherweise nicht völlig belastet, d.h., sie wird bei einer Durchsatzleistung betrieben die niedriger ist, als die optimale.

Da Schlitzöffnungen nur vorgemahlenes Gut bestimmter Korngröße hindurchlassen, ist es darüber hinaus bekannt, daß die Trennwände den Durchgang von Mahlgut-Überkorn in die nächste Mahlkammer verhindern. Das ist der Grund dafür, daß bereits bei einer geringen Erhöhung der Durchsatzleistung von Mühlen und einer üblichen Position der Trennwand unter einem Längenverhältnis der ersten Kammer zur zweiten Kammer von 1:2 bis 1:1 das Mahlgut-Überkorn nicht in die zweite Kammer hindurchgelassen wird. Dadurch wird die erste Mahlkammer überfüllt, wodurch den Mahlvorgang zusammenbricht. d.h. daß die erste Mahlkammer bei einer niedrigeren als der optimalen Belastung betrieben wird. Das verstärkt die nicht effektive Arbeit der Kugeln in der ersten Kammer bzw. die Leerarbeit der Kugelschläge wird vergrößert. Der Kugel- und Panzerungsabrieb (Verschleiß) wird dabei erhöht. Daraus resultiert z.B. sowohl beim Rohmaterialmahlen als auch beim Zementmahlen ein Verlust des Weißgrades von Weißzement.

Um die Mahlenergie optimal auszunutzen, besteht somit das Bedürfnis, die erste Kammer bei höherer Mahlgutfüllung bzw. relativ niedrigem Verhältnis von Kugelfüllung zu Aufgabegutfüllung zu betreiben. Dabei ist noch zu bemerken, daß die spezifische Oberfläche des Mahlgutes im einfachen Durchlauf im gröberen Feinheitsbereich, wo sich die Vermahlung überwiegend durch den Aufprall vollzieht, weniger vom Verhältnis der Mahlkörper-Oberfläche zum Mahlkörper-Volumen abhängt. Die optimale Kugelfüllung kann dabei nicht verändert werden, da sie auf optimale Ausnutzung kinetischer Energie von fallenden Kugeln bezogen (optimiert) ist.

Aus den obigen Erläuterungen ergibt sich, daß die Mahlgutfüllung der ersten Kammer optimiert werden soll. Dazu ist die Position der Trennwand zu korrigieren.

Für Untersuchungen hinsichtlich der zuletzt erwähnten Ausführungsform der Erfindung wurde Kalkstein mit einer Korngröße bis zu 20 mm verwendet. Das Mahlen des Kalksteins wurde in zwei Etappen in einer aus zwei Mahlkammern bestehenden Kugelmühle durchgeführt. Allgemeine Mahldauer in beiden Mahl-Etappe betrug 20 min, was einer Verweilzeit des Mahlgutes in einer industriellen Rohrmühle mit Abmessungen von 2,6*13 m der 3,2*15 m entspricht. Die Mahldauer der ersten Etappe, in der Kalkstein mit Kugeln zerkleinert wurde, betrug 10,12, 13, 14, 15, 16 und 17 min. In der zweiten Etappe wurde Kalkstein in der mit Cylpebs beladenen Mahlkammer bis zu einer summarischen Mahldauer von 20 min, d.h. entsprechend noch 10, 8, 7, 6, 5, 4, und 3 min, nachgemahlen. Auf diese Weise wurde das Arbeiten der industriellen Rohrmühle in Abhängigkeit von der Anordnung der Trennwand simuliert und der Auswirkung der Anordnung von Trennwand auf Siebrückstände untersucht.

Für die erste Mahl-Etappe wurde die erste Mahlkammer mit binärer und üblicher Kugelcharge bei einem Füllungsgrad von 30 % beladen. Die übliche Kugelcharge bestand aus den Mahlkugeln mit einem Durchmesser von 90, 80, 70, 60 und 50 mm bei einem mitteleren Kugeldurchmesser von 76,5; 79,25; 82; 84; 86 und 88 mm. Die binäre Kugelcharge bestand aus Kugeln mit einem Durchmesser von 90 und 50 mm bei einem Gewichtverhältnis von 9:1 und einem mitteleren Kugeldurchmesser von 84,7 mm. Somit wurde der Einfluß der Kugelgattierung auf Siebrückstände untersucht.

Für die zweite Mahl-Etappe wurde die zweite Kammer mit Cylpebs bei einem Füllungsgrad von 30 % gefüllt.

Um die Auswirkung der Durchsatzleistung von Rohrmühle auf Siebrückstände des Kalksteins auf dem 80 µm- und 200 µm-Sieb zu simulieren, wurde darüber hinaus auch und die Kalksteinfüllung in der Mahlkammer bei einem Verhältnis von Mahlkörperfüllung zu Mahlgutfüllung von 2; 3,7; 4 und 8 geändert.

Um eine maximale Menge der Korngröße < 80 µm produzieren zu können, sind derzeit existierende Mahlkörpergattierungen und Anordnungen der Trennwand in der Rohrmühle entsprechend gewählt. Deshalb unterteilen die Trennwände in industriellen Zweikammermühlen den Mühlenzylinder in zwei Kammern üblicherweise mit einem Längenverhältnis der ersten Kammer zur zweiten Kammer von ca. 1:1. Daraus folgt, daß bei einer allgemeinen Verweilzeit des Mahlgutes in der Zweikammermühle von 20 min die Verweilzeit in jeder Kammer etwa 10 min beträgt. Um bei diesen Untersuchungen eine Erhöhung des Rückstands auf dem 80 µm-Sieb bei gleichzeitiger Verringerung der Korngröße größer als 500-2.000 µm zu erzielen, wurde Auswirkung der Mahlgutfüllung bei Veränderung des Längenverhältnis der ersten Kammer zur zweiten Kammer und Mahlkörpergattierung untersucht.

Die Ergebnisse einer Auswahl der durchgeführten Untersuchungen (bei bekannten und erfindungsgemäßen Ausführungen) sind in Tabelle 28 dargestellt.

Tabelle 28:

| | Auswirkung der Mahlgutfüllung von Kalkstein bei Veränderung des Längenverhältnisses der ersten Kammer zur zweiten Kammer und Mahlkörpergattierung auf Siebrückstände. | | | | | | | |
|---|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [µm] | Siebrückstand [%] | |
| | | | 1 Kammer | 2 Kammer | | | 1 Kammer | 2 Kammer |
| 1 | 2 | 3 | 4 | 5 | 6 | 7 | 8 | 9 |
| Bekannte Kugelgattierungen mit Kugelgrößen von 40 mm bis 100 mm | | | | | | | | |
| *) 13 | 79,25 | 8 | 10 | 10 | 1:1 | 200 | 34,6 | 14,6 |
| | | | | | | 80 | 25,6 | 23,9 |
| *) 14 | 79,25 | 4 | 10 | 10 | 1:1 | 200 | 28,2 | 13,6 |
| | | | | | | 80 | 38,2 | 34,2 |
| *) 15 | 79,25 | 2,7 | 10 | 10 | 1:1 | 200 | 27,2 | 12,0 |
| | | | | | | 80 | 42,1 | 37,8 |
| *) 16 | 79,25 | 8 | 13 | 7 | 1,86:1 | 200 | 27,8 | 10,4 |
| | | | | | | 80 | 31,3 | 25,6 |
| *) 17 | 79,25 | 4 | 13 | 7 | 1,86:1 | 200 | 24,6 | 11,6 |
| | | | | | | 80 | 39,6 | 36,6 |
| *) 18 | 79,5 | 2,7 | 13 | 7 | 1,86:1 | 200 | 23,6 | 11,3 |
| | | | | | | 80 | 42,7 | 39,4 |
| *) 19 | 79,5 | 8 | 15 | 5 | 3:1 | 200 | 22,5 | 8,68,6 |
| | | | | | | 80 | 31,6 | 25,8 |
| *) 20 | 79,5 | 4 | 15 | 5 | 3:1 | 200 | 20,1 | 9,7 |
| | | | | | | 80 | 41,8 | 40,1 |
| *) 21 | 79,5 | 2,7 | 15 | 5 | 3:1 | 200 | 20,4 | 9,9 |
| | | | | | | 80 | 43,0 | 40,8 |
| *) 22 | 79,5 | 8 | 17 | 3 | 5,6:1 | 200 | 20,6 | 11,9 |

Tabelle 28: (fortgesetzt)

| Auswirkung der Mahlgutfüllung von Kalkstein bei Veränderung des Längenverhältnisses der ersten Kammer zur zweiten Kammer und Mahlkörpergattierung auf Siebrückstände. | | | | | | | | |
|---|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [µm] | Siebrückstand [%] | |
| | | | 1 Kammer | 2 Kammer | | | 1 Kammer | 2 Kammer |
| 1 | 2 | 3 | 4 | 5 | 6 | 7 | 8 | 9 |
| Bekannte Kugelgattierungen mit Kugelgrößen von 40 mm bis 100 mm | | | | | | | | |
| | | | | | | 80 | 32,1 | 29,4 |
| *) 23 | 79,5 | 4 | 17 | 3 | 5,6:1 | 200 | 18,7 | 13,2 |
| | | | | | | 80 | 42,0 | 38,9 |
| *) 24 | 79,5 | 2,7 | 17 | 3 | 5,6:1 | 200 | 19,4 | 14,1 |
| | | | | | | 80 | 43,4 | 40,7 |
| Bekannte und erfindungsgemäße Kugelgattierungen mit Kugelgrößen von 40 mm bis 100 mm | | | | | | | | |
| *) 25 | 82 | 8 | 10 | 10 | 1:1 | 200 | 38,6 | 17,6 |
| | | | | | | 80 | 22,6 | 27,6 |
| *) 26 | 82 | 4 | 10 | 10 | 1:1 | 200 | 29,0 | 14,6 |
| | | | | | | 80 | 36,6 | 35,0 |
| *) 27 | 82 | 2,7 | 10 | 10 | 1:1 | 200 | 26,1 | 13,2 |
| | | | | | | 80 | 42,2 | 39,8 |
| *) 28 | 82 | 8 | 12 | 8 | 1,5:1 | 200 | 34,6 | 14,4 |
| | | | | | | 80 | 24,8 | 28,6 |
| *) 29 | 82 | 4 | 12 | 8 | 1,5:1 | 200 | 26,6 | 13,5 |
| | | | | | | 80 | 37,2 | 38,2 |
| *) 30 | 82 | 2,7 | 12 | 8 | 1,5:1 | 200 | 24,8 | 11,0 |
| | | | | | | 80 | 41,5 | 40,6 |
| *) 31 | 82 | 8 | 13 | 7 | 1,86:1 | 200 | 32,4 | 13,6 |

Tabelle 28: (fortgesetzt)

| Auswirkung der Mahlgutfüllung von Kalkstein bei Veränderung des Längenverhältnisses der ersten Kammer zur zweiten Kammer und Mahlkörpergattierung auf Siebrückstände. | | | | | | | |
|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] |
| Bekannte und erfindungsgemäße Kugelgattierungen mit Kugelgrößen von 40 mm bis 100 mm | | | | | | | |
| | | | | | | 80 | 26,2 | 29,8 |
| *) 32 | 82 | 4 | 13 | 7 | 1,86:1 | 200 | 25,6 | 12,5 |
| | | | | | | 80 | 37,4 | 39,6 |
| *) 33 | 82 | 2,7 | 13 | 7 | 1,86:1 | 200 | 22,8 | 10,8 |
| | | | | | | 80 | 42,5 | 42,0 |
| *) 34 | 82 | 8 | 14 | 6 | 2,33:1 | 200 | 30,6 | 12,0 |
| | | | | | | 80 | 28,8 | 28,6 |
| 35 | 82 | 4 | 14 | 6 | 2,33:1 | 200 | 24,6 | 10,5 |
| | | | | | | 80 | 40,0 | 37,6 |
| 36 | 82 | 2,7 | 14 | 6 | 2,33:1 | 200 | 20,6 | 7,7 |
| | | | | | | 80 | 41,4 | 42,4 |
| *) 37 | 82 | 8 | 15 | 5 | 3:1 | 200 | 25,6 | 8,8 |
| | | | | | | 80 | 29,0 | 29,9 |
| 38 | 82 | 4 | 15 | 5 | 3:1 | 200 | 18,4 | 8,0 |
| | | | | | | 80 | 42,4 | 43,6 |
| 39 | 82 | 2,7 | 15 | 5 | 3:1 | 200 | 18,5 | 5,4 |
| | | | | | | 80 | 44,6 | 48,6 |
| *) 40 | 82 | 8 | 16 | 4 | 4:1 | 200 | 24,0 | 9,6 |
| | | | | | | 80 | 33,5 | 33,4 |
| 41 | 82 | 4 | 16 | 4 | 4:1 | 200 | 19,0 | 8,8 |
| | | | | | | 80 | 41,2 | 44,5 |

Tabelle 28: (fortgesetzt)

| |
|---|
| Auswirkung der Mahlgutfüllung von Kalkstein bei Veränderung des Längenverhältnisses der ersten Kammer zur zweiten Kammer und Mahlkörpergattierung auf Siebrückstände. |

| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [µm] | Siebrückstand [%] | |
|---|---|---|---|---|---|---|---|---|
| Bekannte und erfindungsgemäße Kugelgattierungen mit Kugelgrößen von 40 mm bis 100 mm | | | | | | | | |
| 42 | 82 | 2,7 | 16 | 4 | 4:1 | 200 | 18,4 | 7,5 |
| | | | | | | 80 | 45,4 | 49,8 |
| *) 43 | 82 | 8 | 17 | 3 | 5,6:1 | 200 | 22,0 | 14,0 |
| | | | | | | 80 | 34,2 | 31,2 |
| 44 | 82 | 4 | 17 | 3 | 5,6:1 | 200 | 18,2 | 12,4 |
| | | | | | | 80 | 42,0 | 41,0 |
| 45 | 82 | 2,7 | 17 | 3 | 5,6:1 | 200 | 15,6 | 11,2 |
| | | | | | | 80 | 44,8 | 43,4 |
| *) 52 | 84 | 8 | 13 | 7 | 1,86:1 | 200 | 32,2 | 13,8 |
| | | | | | | 80 | 26,8 | 29,8 |
| *) 53 | 84 | 4 | 13 | 7 | 1,86:1 | 200 | 25,6 | 13,1 |
| | | | | | | 80 | 37,8 | 39,9 |
| *) 54 | 84 | 2,7 | 13 | 7 | 1,86:1 | 200 | 23,3 | 12,3 |
| | | | | | | 80 | 43,0 | 42,4 |
| *) 55 | 84 | 8 | 14 | 6 | 2,33:1 | 200 | 30,9 | 12,5 |
| | | | | | | 80 | 29,4 | 28,6 |
| 56 | 84 | 4 | 14 | 6 | 2,33:1 | 200 | 24,6 | 11,2 |
| | | | | | | 80 | 41,0 | 41,2 |
| 57 | 84 | 2,7 | 14 | 6 | 2,33:1 | 200 | 20,6 | 8,1 |
| | | | | | | 80 | 41,9 | 44,1 |
| *) 58 | 84 | 8 | 15 | 5 | 3:1 | 200 | 25,6 | 10,3 |

| | Auswirkung der Mahlgutfüllung von Kalkstein bei Veränderung des Längenverhältnisses der ersten Kammer zur zweiten Kammer und Mahlkörpergattierung auf Siebrückstände. | | | | | | |
|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] |
| Bekannte und erfindungsgemäße Kugelgattierungen mit Kugelgrößen von 40 mm bis 100 mm | | | | | | | |
| | | | | | | 80 | 30,3 | 29,8 |
| 59 | 84 | 4 | 15 | 5 | 3:1 | 200 | 18,4 | 10,0 |
| | | | | | | 80 | 42,6 | 44,9 |
| 60 | 84 | 2,7 | 15 | 5 | 3:1 | 200 | 18,6 | 8,2 |
| | | | | | | 80 | 44,4 | 48,9 |
| *) 61 | 84 | 8 | 16 | 4 | 4:1 | 200 | 24,0 | 12,1 |
| | | | | | | 80 | 33,4 | 34,9 |
| 62 | 84 | 4 | 16 | 4 | 4:1 | 200 | 18,8 | 10,1 |
| | | | | | | 80 | 41,4 | 46,6 |
| 63 | 84 | 2,7 | 16 | 4 | 4:1 | 200 | 18,3 | 9,6 |
| | | | | | | 80 | 45,8 | 50,8 |
| *) 64 | 84 | 8 | 17 | 3 | 5,6:1 | 200 | 21,8 | 13,7 |
| | | | | | | 80 | 36,6 | 34,4 |
| 65 | 84 | 4 | 17 | 3 | 5,6:1 | 200 | 17,3 | 12,8 |
| | | | | | | 80 | 44,2 | 44,0 |
| 66 | 84 | 2,7 | 17 | 3 | 5,6:1 | 200 | 15,6 | 12,2 |
| | | | | | | 80 | 46,3 | 47,3 |
| *) 74 | 86 | 8 | 13 | 7 | 1,86:1 | 200 | 32,2 | 14,3 |
| | | | | | | 80 | 26,8 | 29,9 |
| *) 75 | 86 | 4 | 13 | 7 | 1,86:1 | 200 | 25,8 | 13,8 |
| | | | | | | 80 | 38,4 | 40,4 |

| Auswirkung der Mahlgutfüllung von Kalkstein bei Veränderung des Längenverhältnisses der ersten Kammer zur zweiten Kammer und Mahlkörpergattierung auf Siebrückstände. | | | | | | | | |
|---|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [µm] | Siebrückstand [%] | |
| Bekannte und erfindungsgemäße Kugelgattierungen mit Kugelgrößen von 40 mm bis 100 mm | | | | | | | | |
| *) 76 | 86 | 2,7 | 13 | 7 | 1,86:1 | 200 | 24,0 | 12,3 |
|  |  |  |  |  |  | 80 | 43,8 | 42,9 |
| *) 77 | 86 | 2 | 13 | 7 | 1,86:1 | 200 | 23,4 | 12,2 |
|  |  |  |  |  |  | 80 | 44,2 | 43,0 |
| *) 78 | 86 | 8 | 14 | 6 | 2,33:1 | 200 | 30,9 | 12,7 |
|  |  |  |  |  |  | 80 | 30,2 | 28,2 |
| 79 | 86 | 4 | 14 | 6 | 2,33:1 | 200 | 24,7 | 11,7 |
|  |  |  |  |  |  | 80 | 41,5 | 43,0 |
| 80 | 86 | 2,7 | 14 | 6 | 2,33:1 | 200 | 20,7 | 8,3 |
|  |  |  |  |  |  | 80 | 47,4 | 45,5 |
| 81 | 86 | 2 | 14 | 6 | 2,33:1 | 200 | 18,4 | 8,0 |
|  |  |  |  |  |  | 80 | 49,6 | 47,9 |
| *) 82 | 86 | 8 | 15 | 5 | 3:1 | 200 | 25,6 | 11,4 |
|  |  |  |  |  |  | 80 | 30,9 | 29,8 |
| 83 | 86 | 4 | 15 | 5 | 3:1 | 200 | 19,2 | 11,2 |
|  |  |  |  |  |  | 80 | 43,8 | 44,9 |
| 84 | 86 | 2,7 | 15 | 5 | 3:1 | 200 | 18,6 | 9,6 |
|  |  |  |  |  |  | 80 | 44,4 | 48,9 |
| 85 | 86 | 2 | 15 | 5 | 3:1 | 200 | 17,8 | 9,4 |
|  |  |  |  |  |  | 80 | 45,2 | 50,3 |
| *) 86 | 86 | 8 | 16 | 4 | 4:1 | 200 | 23,8 | 12,7 |

Tabelle 28:   (fortgesetzt)

| | Auswirkung der Mahlgutfüllung von Kalkstein bei Veränderung des Längenverhältnisses der ersten Kammer zur zweiten Kammer und Mahlkörpergattierung auf Siebrückstände. | | | | | | |
|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] |
| Bekannte und erfindungsgemäße Kugelgattierungen mit Kugelgrößen von 40 mm bis 100 mm | | | | | | | |
| | | | | | | 80 | 34,8 | 35,8 |
| 87 | 86 | 4 | 16 | 4 | 4:1 | 200 | 18,8 | 11,6 |
| | | | | | | 80 | 42,4 | 47,4 |
| 88 | 86 | 2,7 | 16 | 4 | 4:1 | 200 | 18,2 | 10,8 |
| | | | | | | 80 | 46,1 | 51,0 |
| 89 | 86 | 2 | 16 | 4 | 4:1 | 200 | 18,0 | 10,3 |
| | | | | | | 80 | 46,4 | 52,0 |
| *) 90 | 86 | 8 | 17 | 3 | 5,6:1 | 200 | 21,7 | 13,7 |
| | | | | | | 80 | 37,2 | 36,8 |
| 91 | 86 | 4 | 17 | 3 | 5,6:1 | 200 | 17,0 | 12,9 |
| | | | | | | 80 | 45,4 | 47,5 |
| 92 | 86 | 2,7 | 17 | 3 | 5,6:1 | 200 | 15,6 | 12,4 |
| | | | | | | 80 | 47,8 | 51,6 |
| 93 | 86 | 2 | 17 | 3 | 5,6:1 | 200 | 15,3 | 12,0 |
| | | | | | | 80 | 48,6 | 53,8 |
| *) 101 | 88 | 8 | 13 | 7 | 1,86:1 | 200 | 32,4 | 14,8 |
| | | | | | | 80 | 27,2 | 29,9 |
| *) 102 | 88 | 4 | 13 | 7 | 1,86:1 | 200 | 25,6 | 14,2 |
| | | | | | | 80 | 38,7 | 41,0 |
| *) 103 | 88 | 2,7 | 13 | 7 | 1,86:1 | 200 | 24,1 | 12,4 |
| | | | | | | 80 | 44,0 | 43,6 |

Tabelle 28: (fortgesetzt)

| Auswirkung der Mahlgutfüllung von Kalkstein bei Veränderung des Längenverhältnisses der ersten Kammer zur zweiten Kammer und Mahlkörpergattierung auf Siebrückstände. | | | | | | | |
|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] |
| Bekannte und erfindungsgemäße Kugelgattierungen mit Kugelgrößen von 40 mm bis 100 mm | | | | | | | |
| *) 104 | 88 | 2 | 13 | 7 | 1,86:1 | 200 | 23,6 | 11,9 |
| | | | | | | 80 | 45,7 | 44,5 |
| *) 105 | 88 | 8 | 14 | 6 | 2,33:1 | 200 | 31,2 | 12,9 |
| | | | | | | 80 | 30,4 | 27,5 |
| *) 106 | 88 | 4 | 14 | 6 | 2,33:1 | 200 | 24,8 | 12,0 |
| | | | | | | 80 | 42,0 | 44,1 |
| 107 | 88 | 2,7 | 14 | 6 | 2,33:1 | 200 | 20,8 | 8,4 |
| | | | | | | 80 | 42,8 | 46,2 |
| 108 | 88 | 2 | 14 | 6 | 2,33:1 | 200 | 18,6 | 8,1 |
| | | | | | | 80 | 43,9 | 47,5 |
| *) 109 | 88 | 8 | 15 | 5 | 3:1 | 200 | 25,6 | 12,4 |
| | | | | | | 80 | 31,0 | 29,9 |
| 110 | 88 | 4 | 15 | 5 | 3:1 | 200 | 19,6 | 12,3 |

Tabelle 28: (fortgesetzt)

| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] | |
|---|---|---|---|---|---|---|---|---|
| Auswirkung der Mahlgutfüllung von Kalkstein bei Veränderung des Längenverhältnisses der ersten Kammer zur zweiten Kammer und Mahlkörpergattierung auf Siebrückstände. | | | | | | | | |
| Bekannte und erfindungsgemäße Kugelgattierungen mit Kugelgrößen von 40 mm bis 100 mm | | | | | | | | |
| | | | | | | 80 | 42,2 | 46,6 |
| 111 | 88 | 2,7 | 15 | 5 | 3:1 | 200 | 18,5 | 10,8 |
| | | | | | | 80 | 44,6 | 49,4 |
| 112 | 88 | 2 | 15 | 5 | 3:1 | 200 | 18,0 | 11,6 |
| | | | | | | 80 | 45,7 | 51,2 |
| *) 113 | 88 | 8 | 16 | 4 | 4:1 | 200 | 23,2 | 13,5 |
| | | | | | | 80 | 36,2 | 36,6 |
| 114 | 88 | 4 | 16 | 4 | 4:1 | 200 | 18,6 | 12,4 |
| | | | | | | 80 | 42,6 | 48,4 |
| 115 | 88 | 2,7 | 16 | 4 | 4:1 | 200 | 18,0 | 11,3 |
| | | | | | | 80 | 46,4 | 51,2 |
| 116 | 88 | 2 | 16 | 4 | 4:1 | 200 | 17,7 | 11,0 |
| | | | | | | 80 | 48,3 | 52,7 |
| *) 117 | 88 | 8 | 17 | 3 | 5,6:1 | 200 | 20,4 | 13,6 |
| | | | | | | 80 | 38,9 | 38,7 |
| 118 | 88 | 4 | 17 | 3 | 5,6:1 | 200 | 16,3 | 13,2 |
| | | | | | | 80 | 46,2 | 49,9 |
| 119 | 88 | 2,7 | 17 | 3 | 5,6:1 | 200 | 15,4 | 12,8 |
| | | | | | | 80 | 48,6 | 54,3 |
| 120 | 88 | 2 | 17 | 3 | 5,6:1 | 200 | 14,9 | 12,6 |
| | | | | | | 80 | 50,1 | 56,2 |

EP 0 801 636 B1

Tabelle 28:   (fortgesetzt)

| Auswirkung der Mahlgutfüllung von Kalkstein bei Veränderung des Längenverhältnisses der ersten Kammer zur zweiten Kammer und Mahlkörpergattierung auf Siebrückstände. | | | | | | | |
|---|---|---|---|---|---|---|---|
| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [μm] | Siebrückstand [%] |
| Bekannte und erfindungsgemäße binäre Kugelgattierungen mit Kugelgrößen von 90 und 40 mm | | | | | | | |
| 127 | *) 84,7 | 8 | 13 | 7 | 1,86:1 | 200 | 32,0 | 13,6 |
| | | | | | | 80 | 26,1 | 29,8 |
| 128 | *) 84,7 | 4 | 13 | 7 | 1,86:1 | 200 | 24,8 | 11,4 |
| | | | | | | 80 | 38,6 | 39,0 |
| 129 | *) 84,7 | 2,7 | 13 | 7 | 1,86:1 | 200 | 23,7 | 10,8 |
| | | | | | | 80 | 42,6 | 42,4 |
| 130 | *) 84,7 | 8 | 14 | 6 | 2,33:1 | 200 | 30,6 | 12,8 |
| | | | | | | 80 | 28,8 | 29,4 |
| 131 | 84,7 | 4 | 14 | 6 | 2,33:1 | 200 | 24,2 | 10,2 |
| | | | | | | 80 | 39,1 | 39,8 |
| 132 | 84,7 | 2,7 | 14 | 6 | 2,33:1 | 200 | 20,6 | 7,7 |
| | | | | | | 80 | 41,1 | 41,3 |

EP 0 801 636 B1

Tabelle 28: (fortgesetzt)

| Auswirkung der Mahlgutfüllung von Kalkstein bei Veränderung des Längenverhältnisses der ersten Kammer zur zweiten Kammer und Mahlkörpergattierung auf Siebrückstände. |
|---|

| Nr. | Mittelerer Kugeldurchmesser [mm] | Verhältnis der Mahlkörper zur Kalksteinfüllung | Mahldauer (min) | | Längenverhältnis der ersten zur zweiten Kammer | Siebgröße des Siebversuches [µm] | Siebrückstand [%] | |
|---|---|---|---|---|---|---|---|---|
| Bekannte und erfindungsgemäße binäre Kugelgattierungen mit Kugelgrößen von 90 und 40 mm | | | | | | | | |
| *) 133 | 84,7 | 8 | 15 | 5 | 3:1 | 200 | 25,8 | 3,6 |
|  |  |  |  |  |  | 80 | 29,2 | 29,7 |
| 134 | 84,7 | 4 | 15 | 5 | 3:1 | 200 | 19,6 | 8,4 |
|  |  |  |  |  |  | 80 | 41,8 | 42,4 |
| 135 | 84,7 | 2,7 | 15 | 5 | 3:1 | 200 | 18,4 | 5,4 |
|  |  |  |  |  |  | 80 | 42,6 | 44,8 |
| *) 136 | 84,7 | 8 | 16 | 4 | 4:1 | 200 | 24,8 | 10,1 |
|  |  |  |  |  |  | 80 | 32,1 | 30,4 |
| 137 | 84,7 | 4 | 16 | 4 | 4:1 | 200 | 18,8 | 9,8 |
|  |  |  |  |  |  | 80 | 41,8 | 43,4 |
| 138 | 84,7 | 2,7 | 16 | 4 | 4:1 | 200 | 17,0 | 8,9 |
|  |  |  |  |  |  | 80 | 43,8 | 47,0 |
| *) 139 | 84,7 | 8 | 17 | 3 | 5,6:1 | 200 | 22,3 | 14,3 |
|  |  |  |  |  |  | 80 | 33,8 | 30,6 |
| 140 | 84,7 | 4 | 17 | 3 | 5,6:1 | 200 | 17,2 | 12,4 |
|  |  |  |  |  |  | 80 | 42,4 | 40,4 |
| 141 | 84,7 | 2,7 | 17 | 3 | 5.6:1 | 200 | 16,0 | 11,6 |
|  |  |  |  |  |  | 80 | 43,8 | 42,4 |
| In dieser Tabelle sind die Versuchs-Nummern (Nr) bzw. Daten von bekannten Ausführungen durch *) gekennzeichnet. | | | | | | | | |

EP 0 801 636 B1

Die in der Tabelle 28 vorliegenden Ergebnisse zeigen, daß die optimale Mahlkörpergattierung, um das Rohmehl auf Rückstände auf dem 80 μm-Sieb von 30-50 % und auf dem 200 μm von 5-30 % aufzumahlen, für binäre Kugelfüllung einem mitteleren Kugeldurchmesser von 84.7 mm und für die aus verschiedenen Kugelgrößen bestehende übliche Kugelfüllung einem erhöhten mitteleren Kugeldurchmesser von 82 bis 88 mm entspricht.

Hierbei führt eine Längenvergrößerung der ersten Kammer durch eine entsprechende gleichzeitige Längenverkürzung der zweiten Kammer bei gleichzeitiger Erhöhung der Kalksteinfüllung in der Mühle bis um das 2-4 fache gegenüber bekannten Ausführungen zur Steigerung des Rückstands auf dem 80 μm-Sieb ohne eine proportionale Steigerung des Rückstands auf dem 200 μm-Sieb. Dies bedeutet daß ein zu kleiner mittelerer Kugeldurchmesser der Mahlkugelgattierung, wie er beim üblichen Mahlen von Rohmaterial verwendet wird, unter erhöhter Mahlgutfüllung viel mehr Überkorn im Mahlgut hinterläßt als beim erfindungsgemäßen Mahlverfahren. Das optimale Längenverhältnis der ersten Kammer zur zweiten Kammer liegt dabei bei 2:1 bis 5,6:1. Eine Vergrößerung des Längenverhältnisses der ersten Kammer zur zweiten Kammer bis über 4:1 führt zur geringfügigen Steigerung des Siebrückstandes auf dem 80 μm-Sieb bei einer gleichzeitigen beträchtlichen Erhöhung des Siebrückstandes auf dem 200 μm-Sieb. Eine Verringerung des Längenverhältnisses der ersten Kammer zur zweiten Kammer unter 2:1 führt zur drastischen Senkung des Rückstands auf dem 80 μm-Sieb.

Die durchgeführten Berechnungen der erhaltenen Ergebnisse haben dabei ferner deutlich gezeigt, daß das Verhältnis der Mahlkörperfüllung zur Mahlgutfüllung zwischen 2 und 5 für das Grobmahlen liegen muß. Daraus ist ersichtlich, daß die Durchsatzleistung der Mühle unter gleichem Energieaufwand um das 2-4fache erhöht und der spezifische metallische Abrieb von Mahlkörper und Panzerung - bezogen auf Mahlgut - entsprechend gesenkt werden kann.

Auf diese Weise bewirkt ein Grobmahlen unter den vorgeschlagenen Bedingungen bei einer spezifischen Oberfläche von 1.500-1.800 cm$^2$/g nach Bleine eine 2-4 mal größere Durchsatzleistung, einen 2-4 mal geringeren spezifischen Energieaufwand und entsprechend einen 3 mal geringeren spezifischen Metallabrieb. Darüber hinaus wird der Lärmpegel beim Betrieb der Rohrmühle entsprechend drastisch vermindert. Der Energiebedarf bezogen auf 1 cm$^2$ erzeugte Oberfläche ist im einfachen Durchlauf unter vorgeschlagenen Bedingungen ca. 1,5 mal weniger als bei üblicher Feinmahlung bei einer Feinheit des Mahlgutes von ca. 3.000-3.200 cm$^2$/g.

Da die für das Feinmahlen nachgeordneten Kammern einer Verbundmühle bei so extrem erhöhter Leistung der ersten Kammer die Arbeit nicht leisten können, muß die erste Kammer z.B. bei einer Zweikammermühle abgetrennt, d.h. separat betrieben werden. Es kann auch eine neue Mahlanlage konstruiert werden, die diese Grundforderungen erfüllen kann. Im Prinzip können die oben beschriebenen Voraussetzungen des erfindungsgemäßen Verfahrens leicht mit einer sogenannten Doppelrotator-Mühle (Doppelrotator-Mahltrocknungsmühle) erfüllt werden, d.h. daß die Doppelrotator-Mühle baulich den Grundforderungen dieses neuen Mahlverfahrens anzupassen sind.

Nach einer weiteren vorteilhaften Ausgestaltung der Erfindung ist vorgesehen, daß - bezogen auf die Rohmehlführung - eine zweistrangige Vorwärmstufe verwendet wird, wobei dem einen Vorwärmstrang ausschließlich die Grobkornfraktion der basischen Rohmehlbestandteile mit Korngrößen von 60-500 μm bis 80-2.000 μm und dem anderen Vorwärmstrang ausschließlich das Gemisch aus den unterhalb 30-80 μm aufgemahlenen sauren Rohmehlbestandteilen und der unterhalb 30-80 μm aufgemahlenen Feinkornfraktion der basischen Rohmehlbestandteile zugeführt wird, wobei ferner ein Grobanteil mit Korngrößen von 125-500 μm bis 200-2.000 μm der Grobkornfraktion der basischen Rohmehlbestandteile unter der Schwerkraft bereits in der Heißgasleitung abgetrennt wird und über Gasleitungen in die Calcinierstufe durchfällt, und der ganze oder mindestens ein Feinanteil mit Korngrößen von 60-125 μm bis 80-200 μm der Grobkornfraktion der in den drei ersten Zyklonen oder im erstem Zyklon vorgewärmten basischen Rohmehlbestandteile anschließend (in Richtung der Bewegung von Material) nach dem dritten oder ersten Zyklon des drei- bis fünfstufigen Vorwärmers in den Reaktionsbereich des Ofens zwischen Übergangund Sinterzonen eingeleitet wird, um den genannten Feinanteil der Grobkornfraktion der basischen Rohmehlbestandteile (60-2.000 μm) dem Klinker chemisch einzuverleiben.

Es ist insbesondere bei der Klinkersinterung von Vorteil, daß der ganze oder mindestens ein Teil der basischen Rohmehlbestandteile im Bereich der Zwischenkornfraktion von 60 bis 200 μm nach dem dritten Zyklon der vier- oder fünfstufigen Vorwärmer direkt in den Bereich zwischen Sinter- und Übergangzonen des Ofens eingeleitet wird, um die Kalksteinpartikel aus dieser Zwischenkornfraktion dem Klinker einzuverleiben.

Dabei wird die Zwischenkornfraktion der basischen Rohmehlbestandteile bereits vor der Zufuhr in den Bereich zwischen Übergang- und Sinterzonen etwa bis über 600°C aufgeheizt. Dies beschleunigt die Aufheizung der Zwischenkornfraktion auf Sintertemperatur bei der Aufgabe in den Ofen und erleichtert die thermische Belastung der Sinterzone. Sehr wichtig ist, daß der Anteil der basischen Rohmehlbestandteile, der aus der dritten Zyklonstufe abgetrennt wird, nicht mehr als 10-20 % des gesamten Rohmehls bzw. 20-40 % des in den zweiten Vowärmstrang separat aufgegebenen basischen (calcithaltigen) Anteils beträgt.

Etwa 60-80 % der in dem zweiten Vorwärmstrang separat aufgegebenen basischen (calcithaltigen) Komponentanteile mit Korngrößen von ca. 200 bis 2.000 μm fällt wegen zu großer Abmessungen der Calcitkörner aus der zweiten Zyklonstufe in die vierte Zyklonstufe durch. Von dort wird dieser Kalksteinfraktionsanteil direkt oder durch den Calcinator in den Ofen eingeleitet.

Die Aufgabe der Zwischenkornfraktion des Kalksteins von 60-200 µm in den Bereich zwischen Übergang- und Sinterzonen des Ofens kann durch Einblasen sowohl durch den Einlauf als auch durch den Auslauf des Ofens erfolgen, d.h. es gibt verschiedene technische Lösungen für dieses Einblasen.

Um die technische Arbeitsfähigkeit der Heißgase zur Vorwärmung der Rohmaterialien vollkommen ohne Verlust auszunutzen, wird mindestens ein Teil des Rohmehls aus dem Vorwärmstrang, in dem das aus den sauren Rohmehlbestandteilen und der Feinkornfraktion der basischen Rohmehlbestandteile-bestehende Gemisch bereits vorgewärmt wurde, dem untersten Zyklon des anderen Vorwärmstrangs eingeleitet, in dem der Grobanteil der Grobkornfraktion der basischen Rohmehlbestandteile vorgewärmt wurde.

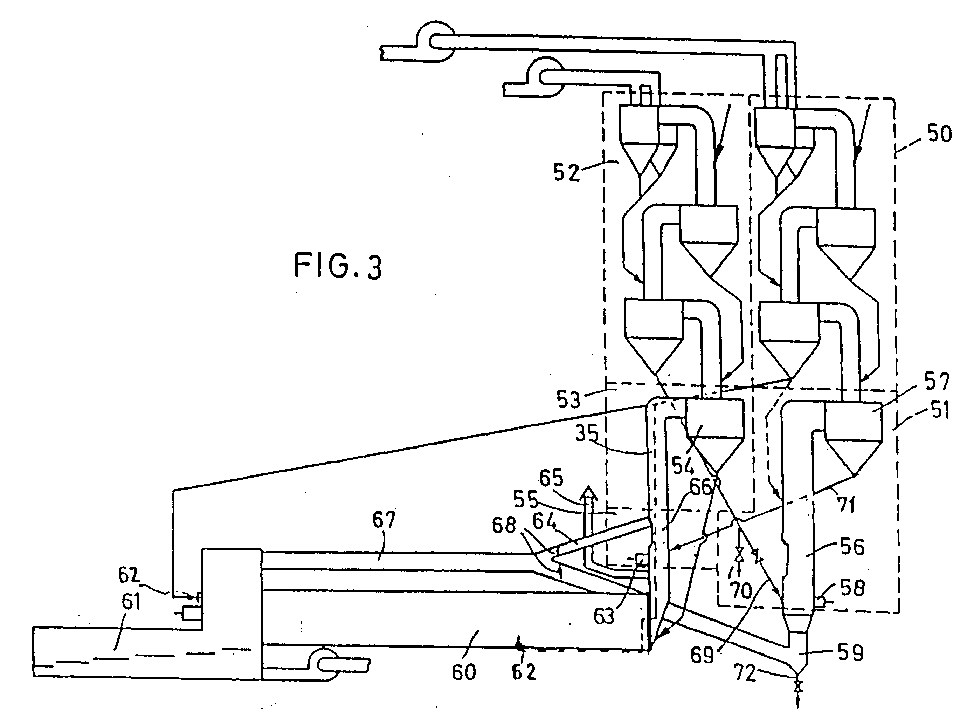

Die Vorteile dieses erfindungsgemäßen Brennverfahrens bestehen darin, daß die Fein- und Grobanteile des Rohmehls in den Vorwärm- und Calciniereinrichtungen separat unter optimal angepaßten Bedingungen thermisch behandelt werden. Um die Reaktivität des Rohmehls bei der Klinkersinterung zusätzlich zu erhöhen, ist es möglich, die Zwischenkornfraktion mit Korngrößen von 80-125 µm bis 80-200 µm der basischen Rohmehlbestandteile bei der thermischen Behandlung des Grobanteils in einem separaten Vorwärmstrang abzutrennen und in den Ofen einzugeben, wie es nachfolgend noch (anhand der Fig. 1 und 3) näher beschrieben wird.

Eine weitere vorteilhafte Ausgestaltung der Erfindung sieht vor, daß - bezogen auf die Rohmehlführung - eine zweistrangige Vorwärmstufe verwendet wird und daß ein in einem mit Heißgasen aus einer Vorcalcinierstufe beaufschlagten Vorwärmstrang aufgeheizter Anteil des basischen Rohmehls mit Korngrößen von 60-200 µm bis 80-200 µm direkt in der Sinterstufe in den Bereich zwischen Sinter- und Übergangzonen mit Temperatur von $1.250\text{-}1.450°C$ eingeleitet wird, während der Anteil des basischen Rohmehls mit Korngrößen von 125-500 µm bis 200-2.000 µm, der unter dem Einfluß der Schwerkraft aus der zweiten Zyklonstufe desselben Vorwärmstrangs in die vierte Zyklonstufe bzw. einen Abscheider der Vorcalcinierstufe durchfällt, in eine Reaktionskammer bzw. Reaktionszone zwischen den Sinter- und Nachcalcinierstufen gemeinsam mit weiteren Rohmehlanteilen eingeführt wird, wobei in die Reaktionszone gasstromaufwärts ein grobkörniges Reduktionsmittel mit einer Korngrößen von 0,01-3.000 µm eingeführt wird. Dabei wird freier Sauerstoff in die Ofenabgasen eingebunden, das im fein aufgemahlenen Rohmehlanteil enthaltene $Fe_2O_3$-Oxid zu FeO-Oxid teilweise reduziert und die thermische Zersetzung besonders der groben Calcitpartikel von 200 µm bis 2.000 µm bei hohen Temperaturen beschleunigt.

Dazu folgende Erklärungen:

Durch die Einbindung des in den Ofenabgasen enthaltenen Sauerstoffs und teilweise des Kohlendioxids zum Kohlenmonoxid entsteht in der Reaktionszone ein reduzierendes Gasmedium, das, wie experimentelle und thermodynamische Untersuchungen zeigen, zur Senkung der Zersetzungstemperatur von Calcit führt. Im Anschluß an die thermisch-chemischen Reaktionen wird Abgassauerstoff, vorzugsweise Heißluft aus der Kühlstufe, eingeführt, so daß gegebenenfalls das entstehende CO-Oxid, nachdem die Zersetzung des Calcits beschleunigt wurde, noch verbrannt werden kann. Auf diese Weise kann die entstehende Wärme zur Calcinierung des fein aufgemahlenen Rohmehlanteils genutzt werden, d.h. nachdem die Zersetzung des Calcits unter Reduktionsbedingungen in der Reaktionskammer beschleunigt wird, kann der fein aufgemahlene Rohmehlanteil zusätzlich durch Nachbrennen des CO erhitzt werden. So wird bei der Klinkerbildung ein Doppeleffekt erzielt. Anders gesagt kann so mit Vorteil gegebenenfalls im Überschuß in die Reaktionskammer eingeführtes brennbares Reduktionsmittel, wie z.B. Stein- und Braunkohle, magere Kohle und zerkleinerte Altreifen, nach teilweiser Ausnutzung des Reduktionspotentials zur Reduzierung des $Fe_2O_3$-Oxids ausgenutzt werden, was ebenfalls nachfolgend noch (Fig. 1 und 3) näher beschrieben wird.

Nach einer weiteren Ausgestaltung der Erfindung ist vorgesehen, daß ein Reduktionsmittel und/oder ein Katalysator zur thermisch-chemischen Aktivierung des im Heißrohmehl enthaltenen Quarzes zugeführt wird, daß nach dem Trockenverfahren das Reduktionsmittel zwischen den Sinter- und Calcinierstufen in das Heißmehl eingeführt und dabei, wenn die Vorwärmstufe und Calcinierstufe zweistrangig ausgebildet sind, zwischen der Sinterstufe und demjenigen Strang der Calcinier- oder Nachcalcinierstufe zugeführt wird, in dem unterhalb 30-80 µm gemahlener Feinkornanteil des Rohmehls thermisch behandelt wird, daß ferner der Katalysator beim Mahlen des unterhalb 30-80 mm zu mahlenden Feinkornanteils des Rohmehls aufgegeben wird und daß nach dem Naßverfahren das Reduktionsmittel zwischen den Übergang- und Calcinierzonen der Sinterstufe und der Katalysator beim Mahlen des unterhalb 80 µm zu mahlenden Feinkornanteils des Rohmehls aufgegeben wird.

Dies hat zum einen den Vorteil, daß die Aufgabe des Reduktionsmittels und Katalysators in die mit $SiO_2$ angereicherte Kornfraktion des Rohmehls erfolgt, so daß eine maximale Effektivität der chemischen Aktivierung des Quarzes erzielt wird. Dies wird später noch anhand eines Ausführungsbeispieles (Fig. 1 und 3) näher beschrieben.

Eine vorteilhafte Ausgestaltung hierzu sieht vor, daß ein grobkörniger Brennstoff mit Korngrößen von 0,01-3.000 µm bis 500-3.000 µm als Reduktionsmittel - bezogen auf das vollständige Ausbrennen des Reduktionsmittels bis an die Grenze zwischen Sinter- und Übergangzonen des Dreh-ofens, d.h. bis zu $1.200\text{-}1.250°C$ - im Bereich einer Stelle (im überschuß) eingeführt wird, wo Rohmehl aus der Vorwärmstufe den Ofenabgasen zugemischt wird, so daß der unverbrannte Grobanteil des Reduktionsmittels unter der Schwerkraft über den Ofeneinlauf in den Ofen durchfällt und auf diese Weise dem Rohmehl zugemischt wird.

Hierdurch ergibt sich der Vorteil, daß einerseits der in den Abgasen enthaltende Sauerstoff gänzlich vom feinen Anteil des Reduktionsmittels gebunden wird und andererseits der unverbrannte Grobanteil des Reduktionsmittels, der gemeinsam mit Heißmehl in den Ofen gelangt, unter stufenweiser Verbrennung ein Reduktionsgasmedium in der Brandschicht des Ofens bis zu 1.150-1.250°C bewirkt. Dies beschleunigt die kristall-chemischen Umwandlungen des Quarzes zu CS und $C_3S_2$ und die Austreibung des Restes von Kohlendioxid aus den basischen Rohmehlbestandteilen. Im Anschluß an die thermisch-chemischen Redoxreaktionen des Reduktionsmittels wird vorzugsweise Heißluft aus der Kühlstufe in den Calcinator eingeführt, so daß gegebenenfalls unvollständig verbrannter, in CO umgewandelter Brennstoff nachverbrannt wird, um die entstehende Wärme zur Nachcalcinierung der Rohmaterialien zu nutzen. Es ist anzumerken, daß die Aufgabenmenge des Reduktionsmittels vom Sauerstoffgehalt in den Ofenabgasen und darüber hinaus von den Korngrößen und der Ausbrenngeschwindigkeit des Brennstoffs abhängig ist. Auch dies wird später noch anhand eines Ausführungsbeispieles (Fig. 3) näher beschrieben.

Erfindungsgemäß können als Katalysator verwendete fluorhaltige Stoffe oder Industrieabfälle (z.B. Phosphoschlacke) und magnesiumhaltige Zusätze in den unterhalb 80 μm aufzumahlenden Anteil des Rohmaterials beim Mahlen eingeführt werden, so daß der Katalysator gemeinsam mit dem Feinanteil des Rohmehls nach thermischer Behandlung im Vorwärmer und Calcinator im untersten Zyklon abgeschieden und danach in den Ofen eingeführt wird, wobei die Menge der magnesiumhaltigen Zusätze in Übereinstimmung mit dem tatsächlichen Gehalt an Alkalien und MgO im Heißmehl am Anfang des Ofens ein Verhältnis des MgO-Gehalts zum gesamten Alkaligehalt von 2:1 bis 5:1 gewährleisten muß. So wird bei der Ausnutzung von Industrieabfällen zur Klinkerherstellung ein Doppeleffekt erzielt, da auf der einen Seite die Klinkerbildung wesentlich beschleunigt wird und auf der anderen Seite die Industrieabfälle effektiv ausgenutzt werden.

Gemäß einer weiteren Ausgestaltung der Erfindung ist vorgesehen, daß - bezogen auf die Rohmehlführung - bei Verwendung einer zweistrangig ausgebildeten Vorwärmstufe der Grobkornanteil der basischen Rohmehlbestandteile mit Korngrößen von 60-500 μm bis 80-2.000 μm ausschließlich in einem Vorwärmstrang thermisch behandelt wird, der mit einer angeschlossenen Vorcalcinierstufe oder zusammen mit einer von zwei vorhandenen Calcinierstufen als Fließbettreaktor oder als Drallströmungscalcinierkammer (Convex-Kammer) mit Heißgaserzeuger ausgebildet ist.

Der Einsatz des Fließbettreaktors oder der Drallströmungscalcinierkammer (Convex-Kammer) mit Heißgaserzeuger als Calciniereinrichtung anstelle der Vorcalcinierstufe mit der Vorwärmung zur Calcinierung des Grobkornanteils der basischen Rohmehlbestandteile hat den Vorteil, daß die für die Calcitzersetzung erforderliche Dissoziationszeit aufrechterhalten bleibt.

Bei diesem erfindungsgemäßen Brennverfahrens ist es auch von Vorteil, daß die Fein- und Grobkornanteile des Rohmehls in den Vorwärm- und Calciniereinrichtungen separat unter optimal angepaßten Bedingungen thermisch behandelt werden. Um die Reaktivität des Rohmehls bei der Klinkersinterung zusätzlich zu erhöhen, ist es auch möglich, einen Zwischenkornanteil mit Korngrößen von 80-125 μm bis 80-200 μm der basischen Rohmehlbestandteile bei der thermischen Behandlung des Grobkornanteils in einem separaten Vorwärmstrang abzutrennen und dem Ofen aufzugeben.

Eine Anlage zur Herstellung von Zementklinker aus basischen und sauren Rohmaterialien ist erfindungsgemäß durch folgende Merkmale gekennzeichnet:

a) die Einrichtungen zum Mahlen und Trocknen sind derart ausgeführt, daß die basischen Rohmaterialien in wenigstens zwei basische Rohmehlfraktionen aufmahlbar sind, wobei eine Feinkornfraktion einen Korngrößenbereich von 0,01 - 80 μm und eine Grobkornfraktion für dynamische Sinterbedingungen einen Korngrößenbereich von 80,01 - 2000 μm und für statische und dynamische Sinterbedingungen einen Korngrößenbereich von 80,01 - 500 μm aufweist;

b) es sind Einrichtungen zur Zusammenführung und gemeinsamen Wärmebehandlung von auf < 80 μm aufgemahlenen sauren Rohmehlbestandteilen mit der basischen Rohmehl-Feinkornfraktion in der Weise vorgesehen, daß der Anteil dieser basischen Rohmehl-Feinkornfraktion in einem Bereich einstellbar ist, der beim Sintern nur für die Bildung von CS und/oder $C_3S_2$ sowie für $C_2AS$, $C_3A$, $C_{12}A_7$ und $C_4FA$ ausreichend ist.

Bei dieser erfindungsgemäßen Anlage wird es ferner als vorteilhaft angesehen, wenn sie so ausgebildet ist, daß die Calciniereinrichtung in voneinander getrennte Vor- und Nachcalciniereinrichtungen derart unterteilt ist, daß die Nachcalciniereinrichtung mit der Abgasseite der Sintereinrichtung und Vorcalciniereinrichtung mit einem Heißgaserzeuger in Verbindung steht, und daß im Bereich der Zufuhreinrichtung für den Brennstoff zur Sintereinrichtung eine Zufuhreinrichtung für eine Zwischenkornfraktion der basischen Rohmehlbestandteile und zwischen der Calciniereinrichtung und der Sintereinrichtung eine Reaktionskammer mit einer Zufuhreinrichtung für Reduktionsmittel und/oder Katalysatoren zur chemischen Aktivierung des im Heißmehl enthaltenen Quarzes angeordnet ist.

Letzteres gilt auch für Modifikationen des Quarzes wie des Tridymits und Kristabolits. Zweckmäßig ist hierbei außerdem im Bereich einer Stelle der Zufuhreinrichtung für den Brennstoff zur Sintereinrichtung eine Zufuhreinrichtung für eine Zwischenkornfraktion der basischen Rohmehlbestandteile von 60-125 µm bis 80-200 µm angeordnet.

Auf diese Weise kann der im Rohmehl enthaltene Quarz (und seine Modifikationen) chemisch in CS oder $C_3S_2$ vor der Sinterzone eingebunden werden. Daraus resultiert eine Erhöhung der Reaktivität des Rohmehls.

Nach einer besonderen Ausgestaltung ist vorgesehen, daß in der Reaktionskammer die Zufuhreinrichtung für das grobkörnige brennbare Reduktionsmittel zur Amorphisierung des Quarzes und darüber hinaus in der Sintereinrichtung die Zufuhreinrichtung für die nicht vorgewärmte oder vorgewärmte und teilweise vorcalcinierte Zwischenkornfraktion der basischen (calcithaltigen) Rohmehlbestandteile mit Korngrößen von 60-200 µm bis 80-200 µm oder für das basische Rohmehl mit Korngrößen von 200-2.000 µm oder für das Gemisch aus dem unter 60-80 µm aufgemahlenen Feinanteil der basischen Rohmehlbestandteile und den fein aufgemahlenen sauren Rohmehlbestandteilen ($SiO_2$-, $Al_2O_3$- und $Fe_2O_3$- Träger) gasstromaufwärts und die Zufuhreinrichtung für Luft/Sauerstoff stromabwärts angeordnet sind. Dies wird später noch anhand eines Ausführungsbeispieles (Fig. 1 und 3) näher beschrieben.

Im Heißgaserzeuger können Verwirbelungseinbauten eingebaut sein.

Ferner wird es auch als vorteilhaft angesehen, wenn die Vorwärmeinrichtung aus mindestens zwei separaten Vorwärmsträngen für das Zementrohmehl besteht, wobei gasseitig ein Vorwärmstrang an die Nachcalciniereinrichtung und der andere Vorwärmstrang an die Vorcalciniereinrichtung angeschlossen ist.

Es kann ferner besonders Vorteilhaft sein, wenn der gasseitig an die Vorcalciniereinrichtung angeschlossene Vorwärmstrang materialaustragsseitig entweder mit dem Heißgaserzeuger der Vorcalciniereinrichtung oder/und mit der Sintereinrichtung (dem Ofen) in Verbindung steht, und wenn der gasseitig an die Nachcalciniereinrichtung angeschlossene Vorwärmstrang materialaustragsseitig mit der Vorcalciniereinrichtung in Verbindung steht.

Erfindungsgemäß können die Reaktionskammer und die Nachcalciniereinrichtung aus einer an die Sintereinrichtung angeschlossenen, rohrförmigen, vorzugsweise Verwirbelungseinbauten enthaltenden Gassteigleitung mit nachfolgendem Absdcheidezyklon bestehen. Außerdem können gasseitig Drosselorgane im obersten Teil des Zyklonvorwärmers vorgesehen sein.

Eine vorteilhafte Ausgestaltung der Erfindungsgemäßen Anlage ist im Anspruch 22 angegeben, wonach Einrichtungen zur separaten Mahlung und Trocknung der sauren und basischen Rohmaterialien sowie zu deren separaten und/oder gemeinsamen Vorwärmung, Calcinierung und gemeinsamen Sinterung sowie zur Kühlung von Zementklinker vorgesehen sind. Hierbei ist in einem Vorwärmstrang (in dem die basischen Rohmehlbestandteile separat thermisch behandelt werden) unter einem Doppelzyklon-Entstauber ein Mehrkomponententrennsichter (MKT-Sichter) angeordnet, der die im Doppelzyklon-Entstauber abgeschiedenen basischen Rohmehlbestandteile in drei Kornfraktionen aufteilt, von denen eine Feinkornfraktion mit Korngrößen von < 60-80 µm über Fallrohre ausgetragen und in die gasführende Leitung des anderen, parallelen Vorwärmstrangs eingeleitet wird, eine Zwischenkornfraktion mit Korngrößen von 60-125 µm bis 80-200 µm über die Fallrohre ausgetragen und mit Hilfe einer Zufuhreinrichtung unmittelbar durch die Ofenflamme hinter der Sinterzone in den Temperaturbereich von 1.250-1.400°C eingeleitet wird, um sie dem Klinker einzuverleiben, und von denen eine Grobkornfraktion mit Korngrößen von 125-500 µm bis 200-2.000 µm über Fallrohre ausgetragen und in die gasführende Leitung desselben Vorwärmstrangs eingeleitet wird.

Eine andere Ausgestaltung der Erfindung enthält Anspruch 23. Hiernach ist eine Rollenpresse zum Grobmahlen des Rohmaterials im geschlossenen Kreislauf mit einer für die Desagglomerierung der aus dem Kalkstein entstandenen gepreßten Schülpen bestimmten Hammermühle und einem auf einem Steigrohrtrockner aufgebauten Luftstromsichter in Verbindung mit einer in den geschlossenen Kreislauf mit einem Zyklon und einem Gebläse eingeschalteten Kugelmühle stromab hinter dem Zyklon angeordnet. Dabei ist ferner in Strömungsrichtung der Abgase dem Gebläse ein Elektrofilter nachgeschaltet, in dem das enthaltende Feinfertiggut mit Korngrößen kleiner 32-70 µm abgeschieden wird. Darüber hinaus sind eine Zufuhreinrichtung für die basischen und harten sauren Rohmaterialien an der Rollenpresse und eine Zufuhreinrichtung für die tonartigen sauren Rohmaterialien an der Hammermühle angeordnet.

Die hiermit erzielbaren Vorteile beim Ermahlen von Rohmehl bestehen darin, daß die Reaktivität des Rohmehls bei der Klinkersinterung erhöht wird. Beispielsweise ist es möglich, eine Zwischenkornfraktion mit Korngrößen von 70-90 µm bis 30-200 µm der basischen Rohmehlbestandteile zu entfernen und beim Mahlen der sauren Rohmaterialien mit einem erforderlichen Anteil des basischen Rohmaterialien eine Feinheit weit unter 80 µm zu erreichen.

Des weiteren kann an der Kugelmühle eine Zufuhreinrichtung für saure Rohmaterialien mit einem Teil des Kalksteins von etwa 5-15 % des Gesamtrohmehls und an der Rollenpresse eine Zufuhreinrichtung für nur basische Rohmaterialien angeordnet sein.

Nach einer anderen Ausgestaltung der Erfindung (Anspruch 24) ist eine Gutbett-Walzenmühle vorgesehen, die zum Grobmahlen des Rohmaterials im geschlossenen Kreislauf mit einer zur Desagglomerierung der aus dem Rohmaterial entstandenen gepreßten Schülpen bestimmten Hammermühle und einem auf einem Steigrohrtrockner aufgebauten statischen Vorsichter (zum Abscheiden von Grieß bzw. Grobgut mit Korngrößen >500-2.000 µm) zusammengeordnet ist, wobei materialaustrags- und gasseitig nacheinander ein Fertigsichter, in dem Grobgut mit Korngrößen von 80-500 µm bis 125-2.000 µm abgeschieden wird, ein Zyklon, ein Gebläse und ein Elektrofilter angeschlossen sind.

Hierdurch ist es beim Ermahlen von Rohmehl möglich, die basischen Rohmehlbestandteile in einen Feinanteil mit Korngrößen < 80µm und einen Grobanteil mit Korngrößen von 80-500 µm bis 80-2.000 µm nach dem erforderlichen Verhältnis aufzuteilen.

Gemäß einer vorteilhaften weiteren Ausgestaltung der Erfindung ist vorgesehen (Anspruch 25) daß an eine zum Grobmahlen des Rohmaterials im geschlossenen Kreislauf betriebene Rollenmühle über ein Becherwerk ein dynamischer Sichter angeschlossen ist, dessen Gutaustrag für eine Grobgutfraktion mit Korngrößen von 125-500 µm bis 200-2.000 µm des basischen Rohmaterials mit einem Fertiggutförderer und dessen Gutaustrag für Grießgut mit Korngrößen gröber 500-2.000 µm mit der Mühlenaufgabe der Rollenmühle zur weiteren Aufmahlung in Verbindung steht, und daß ferner zwischen der Rollenmühle und einem Elektrofilter an einem Steigrohrtrockner ein Luftstromsichter angeordnet ist, dessen Gutaustrag für eine Zwischenkornfraktion mit Korngrößen von 80-125 µm bis 60-200 µm der basischen Rohmehlbestandteile mit dem Fertiggutförderer für diese Zwischenkornfraktion verbunden ist, und daß in Strömungsrichtung der Abgase nach dem Luftstromsichter zur Abscheidung einer Feinkornfraktion mit Korngrößen kleiner 60-80 µm aus den sauren und basischen Rohmehlbestandteilen ein Elektrofilter angeordnet ist, der materialaustragsseitig mit einem Feingutförderer in Verbindung steht.

Die Vorteile dieses bestehen darin, daß die basischen Rohmehlbestandteile in drei Fraktionen aufgeteilt werden und die erhaltenen Kornfraktionen beliebig nach dem erfindungsgemäßen Verfahren zu nutzen sind. Um die Reaktivität des Rohmehls bei der Klinkersinterung zu erhöhen, ist es beispielsweise möglich, die Zwischenkornfraktion mit Korngrößen von 70-90 µm bis 30-200 µm der basischen Rohmehlbestandteile zu entfernen oder in den Ofen aufzugeben oder die mit Quarzkristallkörnern >40 µm angereicherte Kornfraktion der basischen (calcithaltigen) Rohmehlbestandteile abzutrennen und anschließend auf unter 40-80 µm separat oder gemeinsam mit den sauren Rohmehlbestandteilen und den für die Feinkornfraktion vorgesehenen basischen Rohmehlbestandteilen fein aufzumahlen.

Bei einer weiteren vorteilhaften Ausgestaltung der erfindungsgemäßen Anlage (Anspruch 26) ist es vorgesehen, daß in einer zum Grobmahlen des Rohmateriales im geschlossenen Kreislauf betriebenen Rollenmühle ein Luftstromsichter mit einer unteren Austragseinrichtung für eine Grobkornfraktion mit Korngrößen von 125 - 500 µm bis 200 - 2000 µm des basischen Rohmehls angeordnet ist und diese Austragseinrichtung mit einem Fertiggutförderer für diesen basischen Rohmehlbestandteil in Verbindung steht, daß ferner zwischen der Rollenmühle und dem Elektrofilter dem Steigrohrtrockner ein Luftstromsichter nachgeordnet ist, dessen Gutaustrag für eine Zwischenkornfraktion mit Korngrößen von 80 - 125 µm bis 60 - 200 µm des basischen Rohmehls mit einem Fertiggutförderer für diese Zwischenkornfraktion in Verbindung steht, daß in Strömungsrichtung der Abgase nach dem Luftstromsichter zur Abscheidung einer Feinkornfraktion mit Korngrößen von kleiner als 60 - 80 µm ein Elektrofilter angeordnet ist, der materialaustragsseitig mit einem Feingutförderer für die unter 80 µm aufgemahlenen sauren und basischen Rohmehlbestandteile in Verbindung steht, und daß zur Rückführung von Grießgut mit Korngrößen über 500 - 2000 µm zur Rollenmühle ein Becherwerk angeordnet ist.

Die hiermit erzielbaren Vorteile beim Ermahlen von Rohmehl bestehen darin, daß zunächst wiederum die erhaltenen Kornfraktionen bei dem erfindungsgemäßen Verfahren beliebig genutzt werden können. Um die Reaktivität des Rohmehls bei der Klinkersinterung zu erhöhen, ist es beispielsweise möglich, die Zwischenkornfraktion mit Korngrößen von 70 - 90 µm bis 30 - 200 µm der basischen Rohmehlbestandteile zu entfernen oder in den Ofen aufzugeben oder die mit Quarzkristallkörnern größer als 40 µm angereicherte Kornfraktion der basischen Rohmehlbestandteile abzutrennen und anschließend auf unter 40 - 80 µm separat oder gemeinsam mit den sauren Rohmehlbestandteilen und dem für den Feinanteil vorgesehenen basischen Rohmehlbestandteil fein aufzumahlen.

Gemäß einer anderen Ausgestaltung der erfindungsgemäßen Anlage (Anspruch 27) ist vorgesehen, daß eine zum Grob- und Feinmahlen des Rohmaterials im geschlossenen Kreislauf betriebene Doppelrotator-Mahltrocknungsmühle beidseitige Zuführungen für Mahlgut, Grießgut und Heißgase, einen Vortrockner, eine Feinmahlkammer und eine Grobmahlkammer sowie eine zwischen der Feinmahl- und der Grobmahlkammer angeordnete Trennwand mit separaten Mittenausträgen für basische und saure Rohmehlkomponenten enthält, daß außerdem der Mittenaustrag der hauptsächlich mit sauren Rohmaterialbestandteilen beschickten Feinmahlkammer über ein Becherwerk und parallel dazu über ein Austragsgehäuse mit nachgeschaltetem Luftstromsichter mit einem Streuwindsichter in Verbindung steht, an den auch die mit basischem Rohmaterial beschickte Grobmahlkammer nur über dieses Austragsgehäuse und den Luftstromsichter angeschlossen ist, wobei dieser Streuwindsichter durch einen Gutaustrag für Grobgut mit Korngrößen größer als 60 - 80 µm mit der Mühlenaufgabe der Feinmahlkammer und durch einen weiteren Gutaustrag für Feingut der sauren Rohmehlbestandteile außerdem mit einem Feinanteil des basischen Rohmaterials beschickten Fertiggutförderer in Verbindung steht, und daß die Grobmahlkammer ferner über ihren Mittenaustrag und ein Becherwerk an einen weiteren Streuwindsichter angeschlossen ist, der durch einen Gutaustrag für Grießgut mit Korngrößen gröber als 50 - 2000 µm des basischen Rohmateriales mit der nur mit Frischgut des basischen Rohmaterials beschickten Mühlenzuführung und durch einen Gutaustrag für Fertiggut mit Korngrößen von 80 - 500 µm bis 80 - 2000 µm des basischen Rohmaterials mit dem Fertiggutförderer in Verbindung steht, wobei dieses Fertiggut mit dem im Streuwindsichter in Zyklonen und im Elektrofilter abgeschiedenen Feingut mit Korngrößen kleiner als 80 µm der sauren und basischen Rohmehlbestandteile der Sintereinrichtung zuführbar ist.

Bei diesem Ermahlen von Rohmehl kann die Reaktivität des Rohmehles bei der Klinkersinterung durch das Entfernen der Zwischenkornfraktion mit Korngrößen von 70 - 90 µm bis 30 - 200 µm der basischen Rohmehlbestandteile erhöht werden.

Die erfindungsgemäße Anlage kann ferner (entsprechend Anspruch 28) auch so ausgestaltet sein, daß der Mittenaustrag der Grobmahlkammer der Mahltrocknungsmühle über das Becherwerk an einen Mehrkomponenten-Trennsichter zur Aufteilung des Sichtergutes in vier Korngrößenfraktionen angeschlossen sein, wobei dieser Mehrkomponenten-Trennsichter materialaustragsseitig durch eine Austragseinrichtung für Grießgut mit Korngrößen größer als 50 - 2000 µm mit der Mahlgutzuführung der Grobmahlkammer in Verbindung steht, durch für Grobgut mit einem gesamten Korngrößenbereich von 60 - 2000 µm bestimmte Austragseinrichtungen mit einem Fertiggutförderer, von denen die eine Austragseinrichtung für ein Grobgut mit Quarzkörnern gröber als 60 µm materialaustragsseitig auch mit der Mahlgutzuführung zur Feinmahlkammer und die andere Austragseinrichtung für Grobgut ohne grobe Quarzkristalle von über 60 µm mit Fertiggutförderern in Verbindung steht, und durch eine Austragseinrichtung für Feingut mit Korngrößen kleiner als 60 - 80 µm mit dem Fertiggutförderer in Verbindung steht.

Auch hier erweist es sich als vorteilhaft, daß die erhaltenen Kornfraktionen beliebig genutzt werden können, beispielsweise zur Erhöhung der Reaktivität des Rohmehls bei der Sinterung, indem die Zwischenkornfraktion mit Korngrößen von 70 - 90 µm bis 30 - 200 µm der basischen Rohmehlbestandteile entfernt oder in den Ofen aufgegeben wird.

Eine weitere vorteilhafte Ausgestaltung der erfindungsgemäßen Anlage wird (nach Anspruch 29) darin gesehen, daß eine zum Grob- und Feinmahlen von Rohmaterial im geschlossenen Kreislauf betriebene Doppelrotator-Mahltrocknungsmühle eine beidseitige Zuführung für Mahlgut, Grießgut und Heißgase, eine Vortrockner-Feinmahlkammer, eine Grobmahlkammer, eine für die Mittenausträge beider Rohmaterialien zwischen Fein- und Grobmahlkammer angeordnete Trennwand enthält und an ihre Mittenausträge ein über ein gemeinsames Austragsgehäuse aufgebauter Luftstromsichter sowie parallel dazu ein über den Mittenaustrag der Feinmahlkammer und eine Luftförderrinne angeschlossenes Becherwerk angeschlossen sind, wobei die Grobgut-Ausgabe sowohl des auf das Austragsgehäuse aufgebauten Luftstromsichters als auch das Becherwerk materialaustragsseitig für Grobgut mit Korngrößen gröber als 60 - 80 µm mit der hauptsächlich saures Frischgut aufnehmenden Vortrockner-Feinmahlkammer in Verbindung stehen, wobei die Mahlgut-Aufgabe des auf das Austragsgehäuse aufgebauten Luftstromsichters sowohl mit der Vortrockner-Feinmahlkammer als auch mit der Grobmahlkammer und das Becherwerk mit der Vortrockner-Feinmahlkammer in Verbindung stehen, daß ferner ein zur Aufnahme von Grobgut basischen Rohmateriales vorgesehener, mit basischem Frischgut beschickter Schlagpralltrockner über ein Becherwerk an einen Windsichter angeschlossen ist, der durch einen Gutaustrag für Grießgut des basischen Rohmaterials mit Korngrößen über 500 - 200 µm mit der Grobmahlkammer und durch einen weiteren Gutaustrag für Fertiggut mit Korngrößen von 60 - 500 µm bis 80 - 200 µm, in dem auch basische Bestandteile vorhanden sind, mit einem Fertiggutförderer in Verbindung steht, und daß in Strömungsrichtung der Abgase Luftstromsichter, Becherwerk und Streuwindsichter parallel zu einem Zyklon angeschlossen sind, dessen Gutaustrag das abgeschiedene Feingut, das aus den sauren Rohmehlbestandteilen und einem Feinanteil der basischen Rohmehlbestandteile mit Korngrößen kleiner als 80 µm besteht, mit dem Fertiggutförderer in Verbindung steht, wobei nach dem Zyklon ein Gebläse angeordnet ist.

Auch in diesem Falle kann beim Ermahlen von Rohmehl die Reaktivität des Rohmehls durch Entfernen der Zwischenkornfraktionen (Korngrößen von 70 - 90 µm bis 30 - 200 µm) der basischen Rohmehlbestandteile bei der Klinkersinterung erhöht werden.

Gemäß einer anderen Ausgestaltung der Erfindung (Anspruch 30) ist es von Vorteil, wenn zwischen einer zum Feinmahlen von hauptsächlich sauren Rohmaterialbestandteilen in einem Luftstrom-Mahltrocknungskreislauf betriebenen Kugel- oder Rohrmühle und einer zum Grobmahlen von basischen Rohmaterialbestandteilen im geschlossenen Kreislauf betriebenen Schlagprall- oder Prallhammermühle über eine an diese angeschlossene Trockner-Rohrleitung und einen anschließenden Zyklon ein Mehrkomponenten-Trennsichter angeordnet ist, der materialaustragsseitig durch einen Gutaustrag für Grießgut des Kalksteins mit Korngrößen über 500 - 2000 µm mit der im Umlauf so betriebenen Schlagprallmühle, durch einen Gutaustrag für Grobgut des Kalksteins mit Korngrößen von ca. 125 - 500 µm bis 200 - 2000 µm mit einem Fertiggutförderer, durch einen Gutaustrag für Zwischenkorngut des Kalksteins mit Korngrößen von 60 - 125 µm bis 80 - 200 µm mit der Luftstrommühle oder der Sintereinrichtung und durch einen Gutaustrag für Feingut mit Korngrößen kleiner als 50 - 80 µm mit dem Fertiggutförderer in Verbindung steht, wobei in Strömungsrichtung der Abgase ein Luftstromsichter und ein Zyklon parallel zu einem weiteren Zyklon angeschlossen sind, der durch einen Gutaustrag für abgeschiedenes Feingut, das aus sauren Rohmehlbestandteilen mit einem Feinanteil von ca. 5 bis 60 % des basischen Rohmehlbestandteils mit Korngrößen kleiner als 80 µm besteht, mit dem Fertiggutförderer in Verbindung steht und nach dem ein Gebläse angeordnet ist.

Hier ist anzumerken, daß an die für das Feinmahlen des Rohmaterials im Luftstrom-Mahltrocknungskreislauf betriebene Kugel- oder Rohrmühle material- und gasseitig unmittelbar ein über dem Steigrohrtrockner aufgebauter Luftstromsichter angeordnet ist, wobei dieser Luftstromsichter materialseitig über den Gutaustrag für Grobgut mit Korngrößen gröber als 60 - 80 µm mit der Luftstrom-Feinmahlmühle in Verbindung steht, in die über eine im Steigrohrtrockner eingebaute Aufgabe Frischgut, z.B. im wesentlichen saure Komponenten, aufgegeben wird. Dabei ist der zum Grobmahlen im geschlossenen Kreislauf betriebenen Prallhammermühle (Schlägermühle), in die als Frischgut beispielsweise ein Kalkstein aufgegeben wird, eine Trockner-Rohrleitung und daran anschließend ein Zyklon und ein Mehrkomponenten-Trennsichter zugeordnet.

Die erfindungsgemäße Anlage kann ferner so ausgestaltet sein, daß ein Teil des Abgasstromes der Mahlanlage, um die Förderung des Mahlgutes zum Zyklon und Luftstromsichter zu unterstützen, parallel zur Luftstrommühle und zur Prallhammermühle (Schlägermühle) im Kreislauf geführt wird.

Die erfindungsgemäße Anlage kann generell zur Durchführung des weiter oben beschriebenen erfindungsgemäßen Verfahrens betrieben werden. Dabei kann gemäß einer anderen Ausgestaltung bei der aus zwei separaten Vorwärmsträngen bzw. -einheiten und zwei Calciniereinheiten bestehenden Vorwärm- und Calciniereinrichtung anstelle der einen Vorwärmeinheit bzw. des einen Vorwärmstranges und einer Calciniereinheit für eine separate Vorwärmung und Entsäuerung des grob aufgemahlenen Rohmaterials (Rohmaterialanteil) parallel ein anderer Vorwärm- und Calcinierstrang (Vorwärm- und Calciniereinheit) als Fließbettreaktor oder Drallströmungscalcinierkammer (Konvex-Kammer) mit separatem Heißgaserzeuger angeordnet sein.

Gemäß einer anderen Ausführungsvariante dieser Anlage ist bei der aus zwei separaten Vorwärmsträngen und zwei Calciniereinheiten bestehenden Vorwärm- und Calciniereinrichtung anstelle einer Calciniereinheit für die separate Entsäuerung des grob aufgemahlenen Rohmehlanteils mit den Heißgasen des Heißgaserzeugers parallel zur anderen Calciniereinheit ein Fließbettreaktor oder eine Drallströmungscalcinierkammer (Konvex-Kammer) mit separatem Heißgaserzeuger angeordnet.

Auch bei diesen Ausführungsarten der Anlage kann beim Brennen von Rohmehl der Vorteil erzielt werden, daß Fein- und Grobanteil des Rohmehls in den Vorwärm- und Calciniereinrichtungen separat unter optimal angepaßten Bedingungen thermisch behandelt wird. Um dabei die Reaktivität des Rohmehls bei der Klinkersinterung zusätzlich zu erhöhen, kann wiederum das Zwischenkorngut mit Korngrößen von 80 - 125 µm bis 80 - 200 µm der basischen Rohmehlbestandteile bei der thermischen Behandlung des Grobgutanteils des Rohmehls in einem separaten Vorwärmstrang abgetrennt und in den Ofen aufgegeben werden.

Die Erfindung wird nachfolgend anhand von in der Zeichnung veranschaulichten Ausführungsbeispielen (sowohl hinsichtlich des erfindungsgemäßen Verfahrens als auch hinsichtlich der erfindungsgemäßen Anlage) näher erläutert. In dieser Zeichnung zeigen

Fig. 1 eine schematische Darstellung des Erfindungsgemäßen Verfahrens mit den Material- und Gasführungen für die thermische Behandlung der Rohmaterialien zur Herstellung von Zementklinker ;

Fig. 2 ein Anlagenschema zur Herstellung von Zementklinker aus Zementrohmaterialien, mit zweistrangigem Wärmetauscher und Calcinator, wobei basische Rohmehlanteile separat und saure Rohmehlbestandteile ebenfalls separat oder zusammen mit einem Teil der basischen Rohmehlanteile von 5-15 % gemahlen wird und der Vorwärmstufe in einem Verhältnis, das die erforderlichen KSt II, SM und TM gewährleistet, zugeführt wird ;

Fig. 3 ein Anlagenschema zur Herstellung von Zementklinker, wobei der Wärmetauscher wie bei der Anlage gemäß Fig. 2 auch zweistrangig und die Calciniereinrichtung in eine Vorcalcinierstufe und eine Nachcalcinierstufe unterteilt ist ;

Fig. 4 ein Beispiel eines Anlagenschema zum Mahlen von Rohmaterialien mit Rohmaterial- und Gasführungen ;

Fig. 5 ein Anlagenschema eines weiteren Ausführungsbeispieles zum Mahlen von Kalkstein und Ton zu Rohmehl, dessen Rohmehlbestandteile fein verteilte Quarzkristalle enthalten ;

Fig. 6 ein Anlagenschema eines anderen Ausführungsbeispieles zum Mahlen von aus Kalkstein und Ton bestehenden Rohmaterialien, die fein verteilte Quarzkristalle enthalten ;

Fig. 7 ein Anlagenschema für eine Ausführungsvariante zu Fig. 6 ;

Fig. 8 ein Anlagenschema einer weiteren Ausführungsform zum der Rohmaterial- und Mahlen von aus Kalkstein, Ton und Sand bestehenden Rohmaterialien, von denen Ton und Sand Quarzkristalle größer 60 µm enthalten, wobei der Kalkstein nach dem Mahlen eine Anreicherung an Quarzkristallen gröber 60 µm enthält ;

Fig. 9 ein Anlagenschema mit einer Ausführungsvariante zu Fig. 8 ;

Fig. 10 ein Anlagenschema noch eines weiteren Ausführungsbeispieles zum Mahlen von aus Kalkstein, Ton und Sand bestehenden Rohmaterialien, von denen Ton und Sand Quarzkristalle größer 60 µm enthalten und der Kalkstein nach dem Mahlen eine Anreicherung an Quarzkristalle gröber 60 µm enthält ;

Fig. 11 ein weiteres Anlagenschema für eine Mahltrocknung von aus Kalkstein, Ton und Sand bestehenden Rohmaterialien, in denen Ton und Sand Quarzkristalle größer 60 µm enthalten und der Kalkstein nach dem Mahlen in bestimmten Korngrößen eine Anreicherung an Quarzkristallen gröber 60 µm enthält ;

Fig. 12 ein Anlagenschema zur Herstellung von Zementklinker aus Zementrohmaterialien, wobei der Wärmetauscher im Vergleich zum Beispiel gemäß Fig. 2 ebenfalls zweistrangig ist, wobei jedoch ein Vorwärmstrang gemeinsam mit der Vorkalzinierstufe durch einen Fließbettreaktor oder Drallströmungscalcinierkammer (Convex-Kammer) mit einem Heißgaserzeuger gebildet wird ;

Fig. 13 ein weiteres schema einer Anlage zur Herstellung von Zementklinker, mit zweistrangigem Vorwärmer, ähnlich der Anlage gemäß Fig. 3 auch zweistrangig ist, wobei jedoch in dem Vorwärmstrang, der gasseitig an die Vorcalcinierstufe angeschlossen ist, diese Vorkalzinierstufe durch einen Fließbettreaktor oder eine Drallströmungscalcinierkammer (Convex-Kammer) mit einem Heißgaserzeuger gebildet wird.

Fig. 1 zeigt die schematische Darstellung des Ablaufs des erfindungsgemäßen Verfahrens ohne Angabe spezieller Bauteile für die einzelnen Verfahrensstufen.

Von dem gesamten Rohmaterial wird eine Teilmenge 1, die aus den unterhalb 80 µm gemahlenen sauren Rohmehlbestandteilen und der Feinkornfraktion (<80 µm) der basischen Rohmehlanteile mit Korngrößen von 0,01-60 µm bis 0,01-80 µm besteht, in einer eigenen, nur mit den Abgasen einer Nachcalcinierstufe 5 beaufschlagten Vorwärmstufe 2 vorgewärmt. Die andere Teilmenge 3, die nur aus der Grobkornfraktion der basischen Rohmehlanteile mit Korngrößen von 60,01-2.000 µm bis 80,01-2.000 µm besteht, wird parallel in mindestens einer, nur mit den Abgasen einer Vorcalcinierstufe 14 beaufschlagten Vorwärmstufe 4 vor-gewärmt. Der Nachcalcinierstufe ist in Strömungsrichtung der Gase eine Reaktionszone 6 vorgeschaltet, die ausschließlich mit den Abgasen einer Sinterstufe 7 beaufschlagt wird. In der Reaktionszone 6 wird ein grob zerkleinerter Brennstoff 8 als Reduktionsmittel nur teilweise verbrannt, so daß reduzierende Gasanteile (CO) im Brenngut bis zum Bereich zwischen den Sinter- und Übergangzonen, d.h. bis zu 1.150-1.200°C, entstehen, welche die Eisenoxide und teilweise Siliziumdioxide im Brenngut reduzieren und zur thermisch-chemischen Aktivierung des im heißen Rohmehl enthaltenen Quarzes führen. Die Abgase der Reaktionszone 6 werden in die Nachcalcinierstufe 5 unter gleichzeitiger Zuführung von aus der Kühlstufe 9 stammender heißer Luft (10) für die Nachverbrennung des überschüssigen Brennstoffanteils eingeleitet.

Der Anteil der Teilmenge 3 mit einer Korngröße von 60,01-125 µm bis 80,01-200 µm der vorgewärmten basischen Rohmehlanteile aus der Vorwärmstufe 4, die mit der Vorcalcinierstufe 14 gasseitig verbunden ist, wird -gemäß Zeitung 11 - in den Bereich zwischen den Sinter- und Übergangzonen bei 1.250-1.400°C in die Sinterstufe 7 eingeführt, so daß dort die Einbindung des frisch entstehenden Freikalks beschleunigt wird. Das aus der Vorwärmstufe 2 kommende Rohmaterial 12 wird direkt in die Vorcalcinierstufe 14 geleitet. Die Vorcalcinierstufe 14 wird ausschließlich durch Verbrennung eines Brennstoffanteils 15 in heißer, aus der Kühlstufe 9 stammender Luft 16 beheizt. Damit wird der $CO_2$-Partialdruck in Heißgasen im Vergleich zu Ofenabgasen vermindert und Entsäuerungstemperatur des Calcits gesenkt. Die aus der Vorwärmstufe 4 kommende Grobkornfraktion der basischen Rohmehlanteile mit Korngrößen von 125-2.000 µm bis 200-2.000 µm kann ebenfalls teilweise oder völlig in die Vorcal-cinierstufe 14 eingeführt werden. Das gesamte vorcalcinierte Rohmehl 13, das aus den sauren Rohmehlbestandteilen sowie den fein unterhalb 60-80 µm und den grob oberhalb 125-200 µm aufgemahlenen basischen Rohmehlanteilen besteht, wird in die Nachcalcinierstufe 5 eingeführt. Das nach- und damit hochgradig fertig calcinierte Rohmehl 17 wird aus der Nachcalcinierstufe 5 in die Sinterstufe 7 eingeleitet, die durch Verbrennung des Brennstoffanteils 18 in heißer, aus der Kühlstufe 9 stammender Luft 19 beheizt wird. Der in der Sinterstufe 7 erbrannte Klinker 21 wird in die Kühlstufe 9 eingeführt und dort mittels Luft 20 abgekühlt und als Fertiggut aus dem Wärmebehandlungssystem abgezogen. Zwischen der Sinterstufe 7 und der Reaktionszone 6 wird bei Bedarf eine Teilgasmenge 22 zur Unterbindung von Schadstoffkreisläufen abgezogen, die insbesondere durch in den heißen Abgasen der Sinterstufe 7 enthaltene flüchtige Alkali-, Chlor- und Schwefelverbindungen verursacht werden.

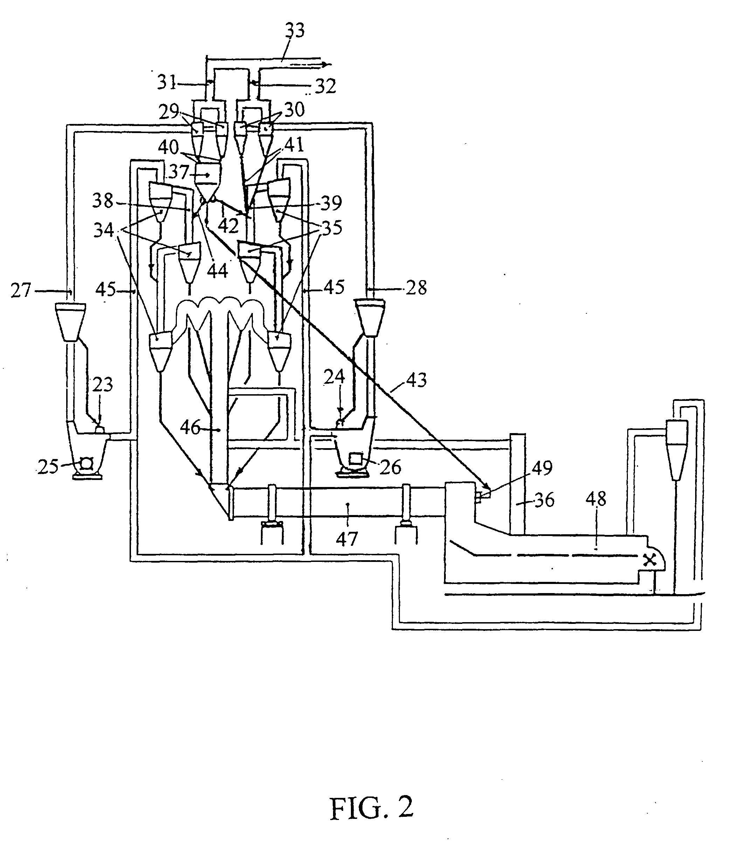

Fig. 2 zeigt ein Anlagenschema als apparative Ausgestaltung des erfindungsgemäßen Verfahrens. Die dargestellte Zementherstellungsanlage enthält zwei Schlägermühlen 25 und 26, zwei Steigrohrtrockner 27 und 28 mit den eingebauten Luftstromsichtern, einen Mehrkomponententrennsichter (MKT-Sichter) 37, Fallrohre 44 für die Grobkornfraktion mit 125-500 µm bis 200-2.000 µm, Fallrohre 43 für eine Zwischenkornfraktion mit 40-125 µm bis 80-200, Fallrohre 42 für die Feinkornfraktion mit 0-40 µm bis 0-80 µm, zwei Sichelschieber (Drosselorganen) 31 und 32, zwei Doppelfallrohren 40 und 41, zwei Abgasleitungen 45, zwei Doppelzyklon-Enstauber 29 und 30, zwei separate Vorwärmstränge 34 und 35, die parallel mit den Abgasen der Calciniereinrichtung 46 beaufschlagt sind, einen Drehrohrofen 47, einen Kühler 48 und zur bereits vorhandenen am Drehrohrofen angeordneten Brennstoffzufuhreinrichtung eine zusätzliche Zufuhreinrichtung 49 für einen Anteil des Rohmehls. Die Vorwärmstränge 34 und 35 bestehen dabei jeweils aus einzelnen Zyklonen, die untereinander mit Gasleitungen verbunden sind. Der Drehrohrofen 47 ist mit den Vorwärmsträngen 34 und 35 über eine Gassteigleitung der Calciniereinrichtung 46 verbunden. Austragsseitig sind die Zyklone der Vorwärmstränge 34 und 35 über Fallrohre mit den Gasleitungen bzw. mit der Calciniereinrichtung 46 verbunden.

Im Betrieb wird das Rohmaterial zur Herstellung von Zement-Klinker folgendermaßen wärmebehandelt.

Der nach der Schlägermühle 25 und dem Steigrohrtrockner 27 separat getrocknete und grob gemahlene basische Rohmehlbestandteil wird im Doppelzyklon-Entstaubung 29 abgeschieden, von dort über die Doppelfallrohre 40 ausgetragen und in den MKT-Sichter 37 eingeleitet. Der MKT-Sichter verteilt den grob gemahlenen Rohmehlbestandteil (z.B. Kalkstein, Kalkmergel oder Kreide) in drei Korngrößenfraktionen: 0-40 bis 0-80 µm, 40-125 bis 80-200 µm und 125-500 bis 200-2.000 µm. Die Feinkornfraktion mit Korngrößen von 0-40 µm bis 0-80 µm wird über die Fallrohre 42 ausgetragen und gemeinsam mit sauren Rohmehlbestandteilen, die über die Doppelfallrohre 41 des Doppelzyklon-Entstaubers 30 ausgetragen werden, in die Gasleitung 39 eingeleitet, die den obersten Zyklon des Vorwärmstrangs 35 über die Schlägermühle 26 und den Steigrohrtrockner 28 mit den eingebauten Luftstromsichtern mit dem Doppelzyklon-Entstauber 30 verbindet.

Von den heißen Gasen aus dem unteren (mittleren) Zyklon des Vorwärmstrangs 35 wird die Zwischenkornfraktion mit Korngrößen von 0-40 µm bis 0-80 µm der basischen Rohmehlanteile gemeinsam mit den sauren Rohmehlbestandteilen mitgenommen, aufgewärmt und im obersten Zyklon des Vorwärmstrangs 35 abgeschieden und gemischt, von dort entsprechend über Fallrohre ausgetragen und in die unten angeordnete gasführende Leitung eingeleitet, d.h. daß der Vorgang bis zum unten angeordneten Zyklon und die Calciniereinrichtung wiederholt wird. Innerhalb dieser Vorgänge wird das Gemisch aus den sauren Rohmehlbestandteilen und der Feinkornfraktion der basischen Rohmehlanteile in der Menge aufgeheizt und endgültig entsäuert, die nur für die Bildung von $C_3A$, $C_4FA$, CS und/oder $C_3S_2$ zugeführt wird. Die Zwischenkornfraktion mit Korngrößen von 40-125 µm bis 80-200 µm wird über die Fallrohre 43 ausgetragen und unmittelbar durch die Flamme des Ofens 47 hinter der Sinterzone in den Temperaturbereich von 1250-1400 °C eingeleitet, um sie dem Klinker einzuverleiben. Somit wird die unerwünschte Bildung des $C_2S$ vor der Sinterzone vermieden (verhindert) und der Klinkerschmelzanteil erhöht. Die Grobkornfraktion mit Korngrößen von 125-500 µm bis 200-2.000 µm wird über die Fallrohre 44 ausgetragen und in die gasführende Leitung 38 eingeleitet, dort separat aufgeheizt, im obersten Zyklon des Vorwärmstrangs 34 abgeschieden und von dort mittels Fallrohre wieder in die unten angeordnete gasführende Leitung eingeleitet d.h. daß der Vorgang bis zum untersten Zyklon und zur Calciniereinrichtung dieses Strangs wiederholt wird. Innerhalb dieser Vorgänge wird der größte Anteil der basischen Rohmehlbestandteile aufgeheizt und entsäuert.

Die nach der Schlägermühle 26 und dem Steigrohrtrockner 28 gemeinsam getrockneten und fein gemahlenen sauren Rohmehlbestandteile und eventuell ein Teil der basischen Rohmehlbestandteile von etwa 5-15 % werden im Doppelzyklon-Entstauber 30 abgeschieden, von dort über die Doppelfallrohre 41 ausgetragen, in die gasführende Leitung 39 eingeleitet. Von dort wird das zu brennende Gemisch bis zum untersten Zyklon und zur Calciniereinrichtung aufgeheizt und endgültig entsäuert. Abschließend wird das zu brennende Rohmehl in den Drehrohrofen 47 zur Sinterung eingeleitet.

Somit wird in einem Vorwärmstrang grobkörniger Kalkstein (mit Korngrößen von 125-500 bis 200-2.000 µm), der nur durch die Schmelze in der Sinterzone zu Klinker umgewandelt werden kann, thermisch behandelt und im anderen Vorwärmstrang ein feinkörniges Gemisch aus den sauren Bestandteilen und Kalkstein in einem Verhältnis thermisch behandelt, das eine Erhöhung der Klinkerschmelze bewirkt.

Da sich die Kornfraktionen der thermisch behandelten Rohmehlanteile in starkem Maß unterscheiden, ist es erforderlich, um optimale Bedingungen zur thermischen Behandlung in beiden Vorwärmsträngen 34, 35 zu schaffen, einen ausreichenden Unterdruck zu gewährleisten. Die beiden Sichelschieber (Drosselorgane) 31 und 32 ermöglichenes, in beiden Vorwärmsträngen bezogen auf den Unterschied der Korngrößen den erforderlichen Unterdruck einzuhalten.

Im diesem Beispiel Kann an Stelle des MKT -Sichters 37 ein üblicher Sichter verwendet werden, der den Kalkstein in zwei Kornfraktionen mit 0-80 µm und 80-2.000 µm verteilt, d.h. daß die Zwischenkornfraktion mit 40-125 µm bis 80-200 µm, die über die Fallrohre 43 ausgetragen und direkt in den Ofen 47 eingeführt werden soll, in diesem Beispiel entfällt. Deswegen wird die Feinkornfraktion (0-80 µm) gemeinsam mit sauren Rohmehlbestandteilen in einem Vorwärmstrang und die Grobkornfraktion (80-2000 µm) im anderen Vorwärmstrang separat thermisch behandelt. Um die Reaktivität des Rohmehls in diesem Fall zu erhöhen, wird ein Teil der Grobkornfraktion der basischen (calcithaltigen) Rohmehlbestandteile (80 bis 2000 µm) oder das aus unter 80 µm aufgemahlenen sauren und basischen Rohmehlbestandteilen bestehende Gemisch separat (in einer mehr oder weniger großen Menge) unmittelbar vom Sichter 37 oder von beliebigen Zyklonen (außer dem untersten des Vorwärmstrangs 34 durch die Flamme des Drehrohrofens 47 mit Hilfe der Zufuhreinrichtung 49 hinter der Sinterzone in den Temperaturbereich von 1.250-1.350°C eingeblasen (eingeführt). Dabei wird der Klinkerschmelzanteil erhöht, da bei Einführung der genannten Rohmehlbestandteile - unter Umgehung der Übergangzone-direkt in die Sinterzone die Bildung des Belits vor der Sinterzone mehr verringert wird.

Fig. 3 zeigt ein anderes Beispiel der erfindungsgemäßen Zementherstellungsanlage, die zwei separate Vorwärmstränge enthält, von denen der eine Vorwärmstrang 50 mit den Abgasen der Vorcalciniereinrichtung 51 und der andere Vorwärmstrang 52 mit den Abgasen der Nachcalciniereinrichtung 53 beaufschlagt wird. Die Vorwärmstränge bestehen dabei jeweils aus einzelnen Zyklonen, die untereinander mit Gasleitungen verbunden sind. Diese Zementherstellungsanlage eignet sich besonders für große Durchsatzleistungen von mehr als 3.000 tato.

Die Nachcalciniereinrichtung 53 besteht aus einer rohrförmig ausgebildeten, Verwirbelungseinbauter enthaltenden Gassteigleitung 35, die mit einem Abscheider 54 verbunden ist. Eine Reaktionskammer 55 ist als Reaktorrohr ausgebildet und geht direkt in die Nachcalciniereinrichtung 53 über. Die Vorcalciniereinrichtung 51 ist ebenfalls als rohrförmige Heißgasleitung 56 mit Abscheider 57 ausgebildet und mit einem Brenner 58 und einer Heißluftzuleitung 59 versehen. Die Sintereinrichtung 60 ist als Drehrohrofen und die Kühleinrichtung 61 als Rostkühler ausgebildet. In die Reaktionskammer 55 werden zur Beschleunigung der Quarzumwandlung die für das optimale MgO:Alkalien-Verhältnis erforderlichen MgO-haltigen Zusätze und/oder F- und Cl-haltige Stoffe als Katalysatoren mit Hilfe der Zufuhreinrichtung 71 oder gemeinsam mit einem fein gemahlenem Anteil des Rohmehls in die Gassteigleitung 35 des Vorwärm-strangs 52 eingeleitet. Auf etwa gleicher Höhe wie die Zufuhreinrichtung 71 wird ein grob zerkleinerter Brennstoff als Reduktionsmittel mit Hilfe einer Zufuhreinrichtung 63 eingeführt.

Zur Beseitigung überschüssiger gasförmiger Schadstoffanteile, wie flüchtige Alkali- Schwefel- oder Chlorverbindungen, wird ein Teil der heißen Ofengase über eine Bypaßleitung 65 aus dem System entfernt.

Oberhalb einer Drosselstelle 66 im Rohrreaktor bzw. in der Gassteigleitung 35 wird heiße Kühlerabluft mittels Heißluftleitung 64 zur Verbrennung des im Überschuß eingesetzten (eingeführten) brennbaren Reduktionsmittels eingeführt. Auf etwa gleiche Höhe wie der Brenner 58 in der Heißgasleitung 56 der Vorcalciniereinrichtung 51 wird vorgewärmtes Rohmehl aus dem mit der Nachcalciniereinrichtung 53 verbundenen Vorwärmstrang 52 eingeführt.

Die Sichtung der in den Vorwärmstrang 50 eingeführten grob-körnigen Anteile der basischen Rohmehlbestandteile mit Korngrößen von 60-500 bis 80-2.000 µm in zwei Kornklassen, d.h. in die Zwischenkornfraktion mit Korngrößen von 60-125 µm bis 80-200 µm und die Grobkornfraktion mit Korngrößen von 125-500 µm bis 200-2.000 µm, erfolgt folgendermaßen:

Diese grob gemahlenen basischen Rohmehlbestandteile werden in die Gasleitung eingeführt, die den Doppelzyklon mit dem mittleren Zyklon des Vorwärmstrangs 50 verbindet. Von den heißen Gasen aus dem mittleren Zyklon des Vorwärmstrangs 50 wird die Zwischkornfraktion mit Korngrößen von 60-125 bis 80-200 µm mitgenommen, aufgewärmt und im Doppelzyklon abgeschieden, von dort über Fallrohre des Doppelzyklons ausgetragen, in die gasführende Leitung, die den mittleren Zyklon mit dem untersten Zyklon des Vorwärmstrangs 50 verbindet, eingeleitet, dort aufgeheizt, im mittleren Zyklon abgeschieden, von dort über Fallrohre des mittleren Zyklons ausgetragen, in die den untersten Zyklon mit dem Abscheider 57 verbindende gasführende Leitung eingeleitet, dort wieder weiter aufgeheizt, im untersten Zyklon des Vorwärmers 50 abgeschieden, von dort über Fallrohre ausgetragen und mit Hilfe der Zufuhreinrichtung 62 in den Ofen 60 aufgegeben. Der Austrag dieser Zwischenkornfraktion erfolgt durch einen Gasstrom, dessen Geschwindigkeit auf die gewünschte Endkorngröße einzustellen ist.

Die Grobkornfraktion mit Korngrößen von 125-500 µm bis 200-2.000 µm fällt unter Wirkung der Schwerkraft bereits bei der Aufgabe in die Gasleitung, die den Doppelzyklon mit dem mittleren Zyklon des Vorwärmstrangs 50 verbindet, über den mittleren Zyklon, die Fallrohre und die Gasleitung, die den Abscheider 57 mit dem untersten Zyklon des Vorwärmers 50 verbindet, durch und gelangt in den Abscheider 57. Von dort wird diese Grobkornfraktion gemeinsam mit den im Abscheider 57 abgeschiedenen, fein aufgemahlenen Rohmehlanteilen, die aus dem Vorwärmer 52 über Fallrohre 69 ausgetragen und in den Vorcalciniereinrichtung 51 eingeleitet werden, über Fallrohre 71 ausgetragen und der Nachcalciniereinrichtung 53 zugeführt.

Unter Zuführung von Brennstoff und Sauerstoff in die Heißgasleitung 56 wird vorgewärmte Rohmehl in den hierdurch schadstofffrei entstehenden heißen Gasen, die darüber hinaus gegenüber der Ofenabgasen einen niedrigeren $CO_2$-Partialdruck besitzen, vorcalciniert und schließlich aus dem Abscheider 57 der Vorcalciniereinrichtung 51 mit Hilfe der Zufuhreinrichtung 71 in die Reaktionskammer 55 auf gleicher Höhe wie der Katalysator der $SiO_2$-Umwandlung eingeleitet.

Unter Zuführung von Ofenabgasen und Brennstoff mit Sauerstoff in die Reaktionskammer 55 und Gassteigleitung 35 werden die vorcalcinierten Materialien nachcalciniert und der im Rohmehl enthaltende Quarz unter der Wirkung der bei der unvollständigen Verbrennung des eingeführten Reduktionsmittels entstehenden reduzierenden Atmosphäre und in den Ofenabgasen enthaltenden gasförmigen Alkali-, Fluor-, Schwefel- und Clorverbindungen oberflächlich, teilweise amorphisiert und schließlich aus dem Abscheider 54 in den Drehrohrofen 60 zur Sinterung eingeleitet. Im unteren Bereich der Heißgasleitung 56 ist eine mit einem Absperrorgan versehene Bypaß-Austragsleitung 72 angeordnet, die in den Drehrohrofen geführt sein kann. Zur besseren Aufteilung der Heißluft auf die Reaktionskammer 55 und die Vorcalciniereinrichtung 51 sind in der Heißluftleitung 59, 64 Absperrorgane 68 angeordnet.

Um die Anlage auch mit außer Betrieb befindlicher Vorcalciniereinrichtung 51 betreiben zu können, sind im Fallrohr 69 des mittleren Zyklons des Vorwärmstrangs 52 eine Umgehungsleitung 70 sowie nicht näher bezeichnete Absperrorgane angeordnet, so daß gegebenenfalls die Zementanlage nur mit der Hälfte der vorgesehenen Durchsatzleistung betrieben werden kann, gleichwohl die Katalysatoren für die Quarzamorphisierung aufgegeben und gasförmige Schadstoffanteile in den Ofenabgasen beseitigt werden können, bevor die heißen Ofenabgase zur thermischen Vorbehandlung der aufgegebenen Zementrohmehl-Bestandteile genutzt werden. Dabei sei bemerkt, daß alle Rohmehlbestandteile entweder gemeinsam in den ersten Zyklonvorwärmstrang aufgegeben werden müssen, oder nur ohne den nicht vorgewärmten basischen Roh-mehlbestandteil der Zwischenkornfraktion mit 60-125 µm bis 80-200 µm, die mit Hilfe des Sichters abgetrennt und dem Ofen aufgegeben werden kann.

Nach einem abgeänderten Ausführungsbeispiel kann der zweistrangige Zyklonvorwärmer mit separat arbeitenden Calcinatoren bzw. Calciniereinrichtungen verwendet werden. Ferner können als Katalysatoren zur Quarzumwandlung anstatt oder in Ergänzung zu den bereits empfohlenen Reduktionsmitteln feinkörnige kohlenhaltige Industrieabfälle wie Ölschieferton, Klinker von Walzanlagen sowie Asche- und Schlackenabfälle eingesetzt werden.

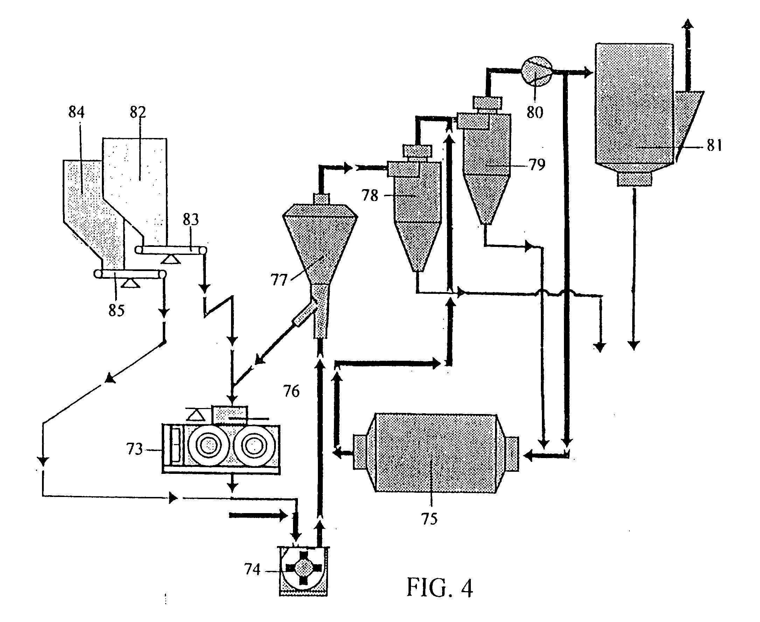

Das Anlagenschema gemäß Fig. 4 zeigt eine apparative Ausgestaltung des erfindungsgemäßen Verfahrens zum Mahlen vom Rohmehl aus Kalkstein und Ton, dessen Rohmehlbestandteile fein verteilte Quarzkristalle enthalten, als auch für Rohmehl aus einem Kalkstein, einem Ton und einem Sand, wobei Ton und Sand Quarzkristalle größer 60 µm enthalten. Aus diesem Grunde können nach diesem Beispiel Kalkstein und Ton Rohmehl gemeinsam in einer Anlage zu gemahlen werden, während aus Kalkstein, einem Ton und einem Sand bestehendes Rohmehl getrennt ermahlen wird.

Die Feinkornfraktion des Rohmehls mit Korngrößen unterhalb von 125-200 µm wird hier nach dem gemeinsamen Mahlen in einer im Kreislauf betriebenen Mühle auf eine Korngröße unter 32-70 µm aufgemahlen.

Das Anlagenbeispiel zum Mahlen von Rohmaterialien gemäß Fig. 4 enthält eine Rollenpresse 73, eine Hammermühle 74, eine Kugelmühle 75, einen Steigrohrtrockner 76 mit aufgebautem Luftstromsichter 77, Zyklone 78 und 79, ein Gebläse 80 und einen Elekcrofilter 81.

Im Betrieb wird der zu mahlende Kalkstein 82 mit Hilfe einer Dosierbandwaage 83 der Rollenpresse 73 aufgegeben. Anschließend gelangen die aus dem Kalkstein entstandenen gepreßten Schülpen in die Hammermühle 74, wo sie desagglomeriert werden. Der Tonanteil 84 der Rohmaterialien wird direkt der Hammermühle 74 zugeführt. Danach werden alle Rohmaterialkomponenten gemeinsam im Steigrohrtrockner 76 getrocknet. Die vom statischen Sichter 77 zurückgeführten Sichtergrieße des Kalksteins werden der Rollenpresse 73 zugeleitet.

Der im Zyklon 78 abgeschiedene Korngrößenanteil des Rohmehls mit Korngrößen von 125-500 µm bis 200-2.000 µm wird als Grobkornfraktion dem Fertiggut zugeleitet. Der im Zyklon 79 abgeschiedene Korngrößenanteil mit Korngrößen unterhalb von 125-200 µm wird nach diesem Beispiel der Kugelmühle 75 zugeleitet, um ihn unter 32-70 µm aufzumahlen. Der im Elektrofilter 81 abgeschiedene Korngrößenanteil mit Korngrößen von 0,01-32 bis 0,01-70 µm wird als Feinkornfraktion dem Fertiggutförderer zugeführt. Die gewonnen Fertiggutfraktionen werden direkt nach oder ohne vorherigem Mischen der thermischen Behandlung zugeleitet. Damit wird die Zwischenkornfraktion mit Korngrößen von 32-125 mm bis 80-200 µm aus der Klinkerbildung ausgeschlossen, was die Reaktivität des Rohmehls erhöht.

Mit einer derartigen Hybridmahlung der sauren Rohmehlbestandteile 84, d.h. mit Vormahlen in der Hammer- oder Schlagmühle 74, können Energieeinsparungen bis 25 % und eine Produktionssteigerung bis zu 60 % erreicht werden. Beim Grobmahlen des Kalksteins 82 in der Rollenpresse 73 mit nachfolgender Desagglomerierung in der Hammer- oder Schlagmühle 74 wird der Energieaufwand etwa um das 3-fache verringert und die Durchsatzleistung etwa um das 3-fache vergrößert.

Falls die sauren Rohmehlbestandteile nach der Hammermühle 74 nicht unter 125 µm zerkleinert werden können, müssen sie nach der Hammermühle 74 direkt in die Kugelmühle 75 eingegeben werden. Hierbei wird der Tonanteil 84 des Rohmehls mit einem Teil des Kalksteins von etwa 5-15 % des Gesamtrohmehls direkt durch die im geschlossenen Kreislauf (oder auch im Durchlaufverfahren) betriebene Kugelmühle 75 geleitet. Danach wird dieser Tonanteil mit dem unterhalb 125-200 µm gemahlenen und im Zyklon 79 abgeschiedenen Anteil des Rohmehls in einem separaten Steigrohrtrockner, der zwischen der Kugelmühle 75 und dem Zyklon 79 installiert ist, nachgetrocknet. Die Weiterleitung der verschiedenen Kornfraktionen und weitere Aufmahlung der Korngrößen anteile unterhalb 125-200 µm erfolgt wie beim vorherigen Vermahlungsbeispiel.

Falls die zu mahlenden Rohmaterialien saure Bestandteile mit Quarzkörnern größer 60-80 µm enthalten, geschieht das Grobmahlen folgendermaßen:

Ein überwiegender Anteil des Kalksteins 82 von 85 bis 100 % wird hauptsächlich separat in der Rollenpresse 73 grob zerkleinert. Die sauren Rohmaterial-Komponenten 84 wie Ton, Eisenerz, Sand und eventuell teilweise(in einer Menge von 5-15 %) Kalkstein gelangen als ein feuchtes Gemisch (bis ca. 6-8 % Feuchte) direkt - die Hammer- oder Schlägermühle 73 umgehend- in die Kugelmühle 75. Dazu kommt noch der in der Rollenpresse unterhalb 125-200 µm vorgemahlen und anschließend im Zyklon 79 abgeschiedene Anteil des Kalksteins.

In der Rollenpresse zerkleinertes, ausschließlich aus basischen Rohmehlbestandteilen 82 bestehendes feuchtes Gemisch wird in der Hammer- oder Schlägermühle 74 desagglomeriert und anschließend im Steigrohrtrockner 76 getrocknet und dem Luftstromsichter 77 zugeleitet, um für ein Aufmahlen auf eine Korngröße unter 500-2.000 µm die Partikeln über 500-2.000 µm abzusichten, wobei der Rest mit dem Luftstrom dem Zyklon 78 zugeführt wird. Auch bei dieser Zerkleinerungsvariante erfolgt das Weiterleiten der verschieden Kornfraktionen sowie das weitere Aufmahlen der Korngrößenanteile unterhalb von 125-200 µm in der Kugelmühle 75 wie bei der oben beschriebenen ersten Ausführungsform gemäß Fig. 4.

Die Heißgase oder Ofen- und Kühlerabgase können sowohl der Hammermühle 74 als auch gleichzeitig der Hammermühle 74 und der Kugelmühle 75 zugeführt werden.

Das Austragen des Mahlgutes aus der Hammer- oder Schlagmühle 74 über den Steigrohrtrockner 76 und den Luftstromsichter 77 in den Zyklon 78 und aus der Kugelmühle 75 über den Steigrohrtrockner in den Zyklon 79 erfolgt durch einen Gasstrom, dessen Geschwindigkeit auf die gewünschte Endkorngröße einzustellen ist.

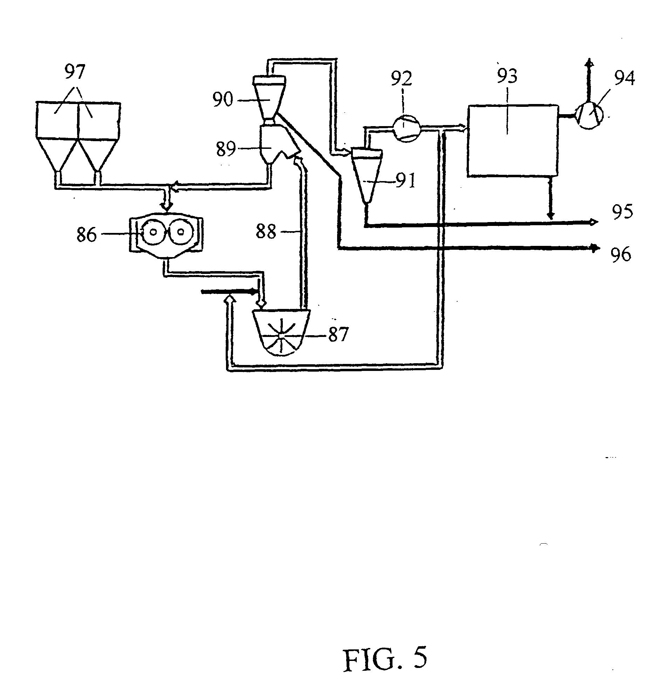

Das Anlagenschema gemäß Fig. 5 offenbart ein Beispiel einer Mahltrocknungseinrichtung für aus Kalkstein und Ton bestehende Rohmaterialien, die fein verteilte Quarzkristalle enthalten und deshalb gemeinsam in einer Mahlanlage gemahlen werden können.

Hiernach wird eine Gutbett-Walzenmühle 86 im Kreislauf betrieben. Die in der Walzenmühle 86 entstehenden Schülpen werden in einer Hammermühle 87 desagglomeriert, von Heißgasen im Steigrohrtrockner 88 getrocknet und einem statischen Vor- und Fertigsichter 89 und 90 zugeführt. Die im Vorsichter 89 abgetrennten Inte Grieße mit Korngrößen größer 500-2.000 µm werden der Walzenmühle 86 zur weiteren Mahlung wieder aufgegeben. Die im Fertigsichter 90 abgetrennte Grobkornfraktion der basischen Rohmehlbestandteile mit 80-500 µm bis 80-2.000 µm wird als grobes Fertiggut 96 des Rohmehls zur thermischen Behandlung separat oder gemeinsam mit feinem Fertiggut 95 verwendet. Das im Heißgasstrom nach den Sichtern 89 und 90 aus den sauren und basischen Rohmehlbestandteilen bestehende feine Fertiggut 95 wird in Zyklonen 91 und im Elektrofilter 93 abgeschieden und je nach vorgesehener Verfahrensführung als Rohmehlanteil zur thermischen Behandlung verwendet.

Es sei bemerkt, daß anstelle der Hammermühle 87 auch eine Kugelmühle eingesetzt werden kann.

Die Vorteile einer solchen Mahlanlage bzw. Mahltrocknungseinrichtung liegen neben der erzielbaren Einsparung an Energie im wesentlichen im einfachen maschinellen Aufbau und in der Möglichkeit, den festreaktionsfähigen (feingemahlenen) Rohmehlanteil und den schmelzreaktionsfähigen (grobgemahlenen) Rohmehlanteil auf zuteilen.

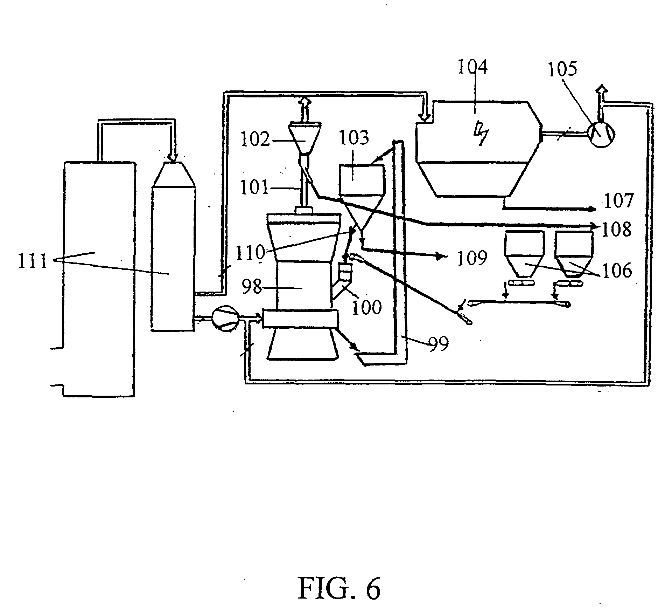

Auch bei dem weiteren Ausführungsbeispiel der Mahltrocknungseinrichtung gemäß Fig. 6 können die aus Kalkstein und Ton bestehenden, fein verteilte Quarzkristalle enthaltenden Rohmaterialien gemeinsam gemahlen werden.

Diese Einrichtung bzw. Anlage enthält eine Rollenmühle 98, ein Becherwerk 99, eine Mühlenaufgabe 100, einen Steigrohrtrockner 101 mit Luftstromsichter 102, einen dynamischen Sichter 103, einen Elektrofilter 104 und ein Gebläse 105. Zum Trocknen des Rohmehls werden die Abgase eines Heißgaserzeugers 111 ausgenutzt.

Im Betrieb werden die zu mahlenden Rohmaterialien 106 mit Hilfe von Dosierbandwaagen der Rollenmühle 98 über eine Mühlenaufgabe 100 aufgegeben. Das zerkleinerte Mahlgut gerät zum Mahltellerrand der Rollenmühle 98, wo es durch einen aus einem Düsenring austretenden Gasstrom zum Sichter aufwärts getragen wird. Das im Luftstromsichter der Rollenmühle 98 abgeschiedene Grobgut fällt zentral auf den Mahlteller zurück, während das Feingut (mit Partikeln überwiegend kleiner 200 µm) mit Hilfe des staubhaltigen Heißgases dem nachgeschalteten statischen Sichter 102 zugeführt wird. Dort werden die noch groben Partikel mit Korngrößen von 80-125 µm bis 60-200 µm aus dem Gasstrom abgeschieden und als Zwischenkornfraktion 108 der basischen Rohmehlbestandteile für die Rohmehlherstellung genutzt. Der restliche Teil des Feingutes mit Korngrößen kleiner 60-80 µm 107, der aus den sauren und basischen Rohmehlbestandteilen betsteht, wird als Feinkornfraktion im Elektrofilter 104 abgeschieden und je nach dem vorgeschlagenen Verfahren als Rohmehlanteil zur thermischen Behandlung genutzt. Bei nicht ausreichender Gasmenge wird das Grobgut nicht mitgenommen und fällt durch den Düsenring nach unten, von wo es vom Becherwerk 99 zum dynamischen Sichter 103 gefördert wird. Dort erfolgt die Trennung in Grieße 110 und Grobkornfraktion 109. Während die Grieße 110 für eine weitere Aufmahlung zur Rollenmühle 98 zurückgeführt werden, wird die Grobkornfraktion mit Korngrößen von 125-500 µm bis 200-2.000 µm der basischen Rohmehlbestandteile wird ebenfalls der thermischen Behandlung zugeführt.

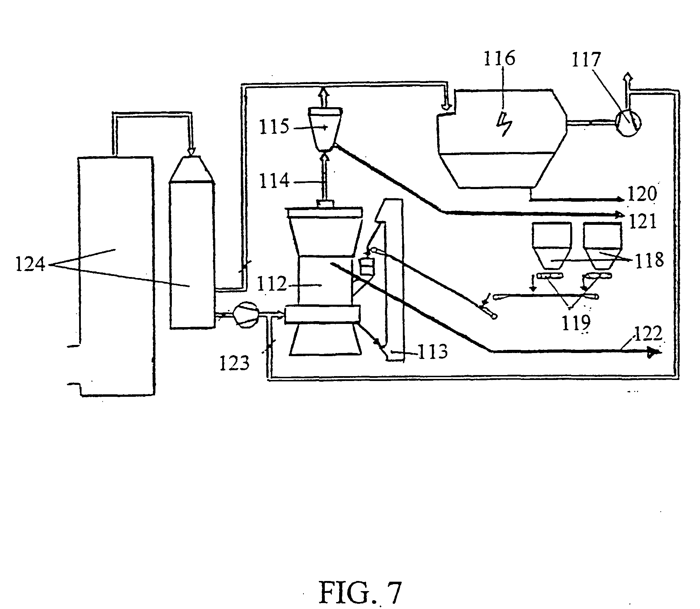

Eine Abwandlung der zuvor (anhand Fig. 6) beschriebenen Mahltrocknungseinrichtung zeigt Fig. 7.

Diese Einrichtung bzw. Anlage enthält wiederum eine Rollenmühle 112, ein Becherwerk 113, einen Steigrohrtrockner 114 mit Luftstromsichter 115, einen Elektrofi1ter 116 und ein Gebläse 117. Zum Trocknen des Rohmehls werden die Abgase eines Heißgaserzeugers 124 ausgenutzt.

In diesem Falle werden die zu mahlenden Rohmaterialien 118 über Dosierbandwaagen 119 der Rollenmühle 112 aufgegeben. Das zerkleinerte Mahlgut wird mittels Gasstrom zum Sichter aufwärts gefördert. Das im Luftstromsichter der Rollenmühle 112 abgeschiedene Grobgut (Kalksteinpartikel größer 125-200 µm) 122 wird aus der Rollenmühle herausgeführt und als Grobkornfraktion der basischen Rohmehlbetandteile abgeführt. Das Feingut (Partikel überwiegend kleiner 125-200 µm) wird mit Hilfe des staubhaltigen Heißgases dem nachgeschalteten statiscnen Sichter 115 über den Steigrohrtrockner 114 zugeführt. Dort werden die noch groben Partikel mit Korngrößen von 60-125 µm bis 80-200µm abgeschieden und als Zwischenkornfraktion 121 der basischen Rohmehlbestandteile für das Rohmehl verwendet. Der restliche Teil des Feingutes mit Korngrößen kleiner 60-80 µm, der aus den sauren und basischen Rohmehlbestandteilen besteht, wird im Elektrofilter 116 abgeschieden und entsprechend der gewählten Verfahrensart als Feinkornfraktion für die thermische Behandlung verwendet. Bei nicht genügender Gasmenge wird auch hier das Grobgut mit Korngrößen größer 600-2.000 µm nach unten ausfallen und vom Becherwerk 113 zur Mühlenaufgabe der Rollenmühle 112 zurückgefordet.

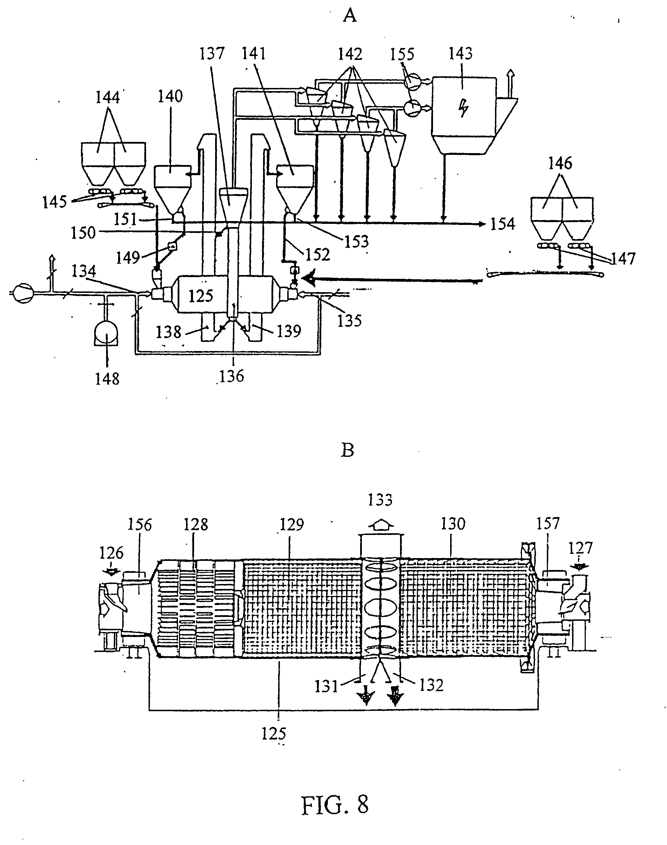

Gemäß Fig. 8 werden die aus Kalkstein. Ton und Sand bestehenden Rohmaterialien, die Quarzkörner größer als 60-80 µm enthalten, getrennt auf gemahlen.

Nach dieser Ausführungsform enthält die Mahltrocknungs-anlage eine Doppelrotator-Mahltrocknungsmühle 125 mit beidseitigen Zuführungen 126, 127 für Mahlgut bzw. Grießgut sowie für Heißgase 134, 135, einem Vortrockner 128, je einer Fein- und Grobmahlkammer 129, 130, einer zwischen diesen beiden Mahlkammern (129, 130) angeordneten Trennwand 133, separaten Mittenausträge 131, 132 für beide Komponenten und mit Beschlifkungszapfen 156 und 157, ferner einen Steigrohrtrockner (Austagsgehäuse) 136, einen Luftstromsichter 137, zwei Becherwerke 138, 139 mit Luftförderrinnen, zwei Windsichter 140, 141, Zyklone 142, einen Elektrofilter 143, Dosierbandwaagen 145,147, einen Heißgaserzeuger 148 und Gebläse 155.

Im Betrieb werden die zu mahlenden sauren Rohmateriabestandteile 144 und basischen Rohmaterialbestandteile 146 mit Hilfe von Dosierbandwaagen 145 und 147 der Mahltrocknungsmühle 125 entgegengesetzt aufgegeben. Dabei werden die sauren Rohmaterialbestandteile 144, die üblicherweise einen hohen Feuchtigkeitsgehalt haben, zusammen mit dem Heißgasstrom durch die Zuführung 126 und den Beschickungszapfen 156 zunächst in die Vortrockenkammer 128 eingeführt. Von der Vortrockenkammer 128 gelangen die fein zu mahlenden sauren Rohmaterialbestandteile 144 durch eine mit Hubschaufeln versehene Schlitzwand in die Feinmahlkammer 129, aus der sie durch den separaten Mittenaustrag 131, über die Luftförderrinne mit dem Becherwerk 138 und darüber hinaus parallel durch das Austragsgehäuse 136 und den Luftstromsichter 137 in den Windsichter 140 gelangen. In diesen Windsichter 140 gelangt aus der Grobmahlkammer 130, durch den separaten Mittenaustrag 132, das Austragsgehäuse 136 und den Luftstromsichter 137 auch der Feinanteil des basischen Rohmehlbestandteils mit Korngrößen unterhalb 125-200 µm. Das im Windsichter 140 abgeschiedene Überkorn bzw. Grobgut 149 (Partikel gröber 60-80 µm) der sauren Rohmehlbestandteile mit einem Feinanteil der basischen Rohmehlbestandteile aus der Grobmahlkammer 130 wird dem tonhaltigen Frischgut bzw. den sauren Rohmaterialbestandteilen 144 zugegeben. Das im Windsichter 140 abgeschiedene Feingut 151 Partikel kleiner 60-80 µm) der sauren Rohmehlbestandteile mit einem Feinanteil der basischen Rohmehlbestandteile (ca. 5-60 %) wird als Feinanteil des Fertigguts 154 genutzt. Dabei sei bemerkt, daß durch das Nachmahlen des Feinanteils von basischen Rohmehlbestandteilen mit Korngrößen unter 80-125 µm unterhalb 60-80 µm die Zwischenkornfraktion mit Korngrößen von 60-125 µm entfernt wird. Daraus resultiert eine Erhöhung der Rohmehlreaktivität.

Die basischen Rohmaterialbestandteile 146, der üblicherweise einen niedrigen Feuchtigkeitsgehalt besitzen, werden zusammen mit dem Heißgasstrom oder mit den Abgasen 135 aus einem Schwebegaswärmetauscher durch die Zuführung 127 und den Beschickungszapfen 157 in die Grobmahlkammer 130 eingeleitet. Der Grobanteil der grob gemahlenen basischen Rohmehlbestandteile mit Korngrößen von 80-500 µm bis 125-2.000 µm gelangt durch den separaten Mittenaustrag 132 über die Luftförderrinne und das Becherwerk 139 in den Windsichter 141. Hierbei sei angemerkt, daß der Mittenaustrag 132 vom Mittenaustrag 131 durch die Trennwand 133 abgetrennt ist, so daß eine Vermischung der sauren und basischen Rohmehlbestandteile in den Mittenausträgen 131,132 ausgeschlossen ist. Eine Vermischung der sauren und basischen Rohmehlbestandteile ist nur beim ihren Austragen durch das Austragsgehäuse 136 mit Luftstrom in den Luftstromsichter 137 zu beobachten.

Der Feinanteil der grob gemahlenen basischen Rohmehlbestandteile 146 mit Korngrößen kleiner 125-200 µm gelangt teilweise durch den separaten Mittenaustrag 132 über das Austragsgehäuse 136 und den Luftstromsichter 137 in den Windsichter 140, wohin außerdem auf ähnliche Art die fein gemahlenen sauren Rohmehlbestandteile 144 gelangen. Anders ausgedrückt verläßt das Mühlenabgas die Mühle 125 ebenfalls durch die Mittenausträge 131, 132 und gelangt durch das Austragsgehäuse 136 in den Luftstromsichter 137, dem das im Gas enthaltene Grobgut mit Korngrößen von ca. 30-125 µm bis 30-200 µm abgeschieden und dem Becherwerk 138 bzw. anschließend dem Windsichter 140 zugeleitet wird.

Das im Heißgasstrom nach dem Luftstromsichter 137 aus den sauren und basischen Rohmehlbestandteilen noch vorhandene restliche feine Fertiggut 154 wird in den Zyklonen 142 und in dem Elektrofilter 143 abgeschieden. Das Fertiggut aus den Windsichtern 140 und 141, Zyklonen 142 und dem Elektrofilter 143 wird durch eine gemeinsame Luftförderrinne abgeführt und je nach der vorgesehenen Verfahrensart als Rohmehl zur thermischen Behandlung genutzt.

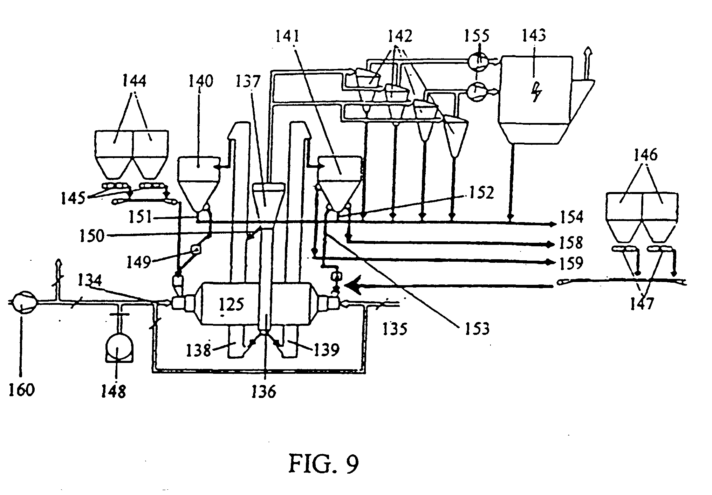

Das in Fig. 9 veranschaulichte Anlagenschema deckt sich weitgehend mit dem gemäß Fig. 8, mit der Ausnahme, daß in der Variante gemäß Fig. 9 ein Mehrkomponenten-Trennsichter (MKT-Sichter) 141 (anstelle der Streuwindsichters 141 in Fig. 8) vorgesehen ist, der vier Korngrößen Fraktionen ermöglicht.

In bezug auf Aufbau und Betriebsweise kann daher zunächst weitgehend auf die vorhergehenden Erläuterungen zum Beispiel gemäß Fig. 8 verwiesen werden, um unnötige Wiederholungen zu vermeiden.

Nach dieser Ausführungsvariante gemäß Fig. 9 werden nun zunächst die basischen Rohmaterialbestandteile 146, die üblicherweise einen niedrigen Feuchtigkeitsgehalt besitzen, ebenfalls (wie in Fig. 8) zusammen mit dem Heißgasstrom oder mit den Abgasen 135 aus einem Schwebegaswärmetauscher und der Kühlerabluft durch die entsprechenden Zuführungen 127 und 135 und den Beschickungszapfen 157 der Mahltrocknungsmühle 125 in deren Grobmahlkammer 130 eingeleitet. Der Grobanteil der grob gemahlenen basischen Rohmehlbestandteile mit Korngrößen von 80-500 μm bis 125-2000 μm gelangt durch den separaten Mittenaustrag 132, über Becherwerk 139 nun in den Mehrkomponententrennungssichter 141.

In diesem Mehrkomponenten-Trennungssichter 141 werden die überwiegend aus den Korngrößen von ca. 80-500 μm bis 80-2000 μm bestehenden basischen Rohmehlbestandteile in folgende vier Korngrößenfraktionen verteilt:

- Grießgut (über Austragseinrichtung 153) mit Korngrößen über 500-2000 μm, das über die Mahlgutzuführung 127 in die Grobmahlkammer 130 eingeführt wird.

- Eine Feingut-bzw. Feinkornfraktion 152, die aus den basischen Rohmehlbestandteilen mit Korngrößen < 60-80 μm besteht. Dieser Feinanteil der basischen Rohmehlbestandteile wird dem Feinanteil aus der Feinmahlkammer 129 zugegeben, um das Verhältnis zwischen basischen und sauren Rohmehlbestandteilen im Feinanteil des Rohmehls ausreichend hoch zu halten, d.h. daß die Basizität des Feinanteils des Rohmehls so hoch sein 1 muß, daß die Bildung des CS und $C_3S_2$ anstelle des $C_2S$ neben den $C_3A$ und $C_4AF$ gewährleistet werden kann.

- Eine Kornfraktion, die aus den basischen Rohmehlbestandteilen mit Korngrößen von 60-125 μm bis 80-200 μm besteht, nämlich die sogenannte Zwischenkornfraktion 158, die durch die Aufgabe in die Feinmahlkammer unterhalb 32-70 μm nachgemahlen oder dem Ofen im Bereich zwischen den Sinter- und der Übergangzonen zugeführt werden kann.

- Eine Grobkornfraktion 159, die aus den basischen Rohmehlbestandteilen mit Korngrößen von 125-500 μm bis 200-2000 μm besteht und direkt dem Rohmehl zugeführt oder teilweise dem Ofen im Bereich zwischen den Sinter- und der Übergangzonen eingeblasen wird.

Der Feinanteil mit Korngrößen unter 125-200 μm der grob gemahlenen basischen Rohmehlbestandteile 146 gelangt in der oben (anhand Fig. 8) bereits erläuterten Weise teilweise in den Windsichter 140, wohin ebenfalls auf ähnliche Art die fein gemahlenen sauren Rohmehlbestandteile 144 gelangen.

Auch nach Fig. 9 wird das im Heißgasstrom noch vorhandene feine Fertiggut 154 aus sauren und basischen Rohmehlbestandteilen in den Zyklonen 142 und in dem Elektrofilter 143 abgeschieden und als Rohmehlanteil separat oder auch gemeinsam der thermischen Behandlung zugeführt.

Dabei sei bemerkt , daß durch ein Nachmahlen des Feinanteils der basischen Rohmehlbestandteile mit Korngrößen kleiner als 80 μm auf unterhalb 60-80 μm die Zwischenkornfraktion mit Korngrößen von 60-80 μm entfernt werden kann, woraus ebenfalls eine Erhöhung der Rohmehlreaktivität resultiert.

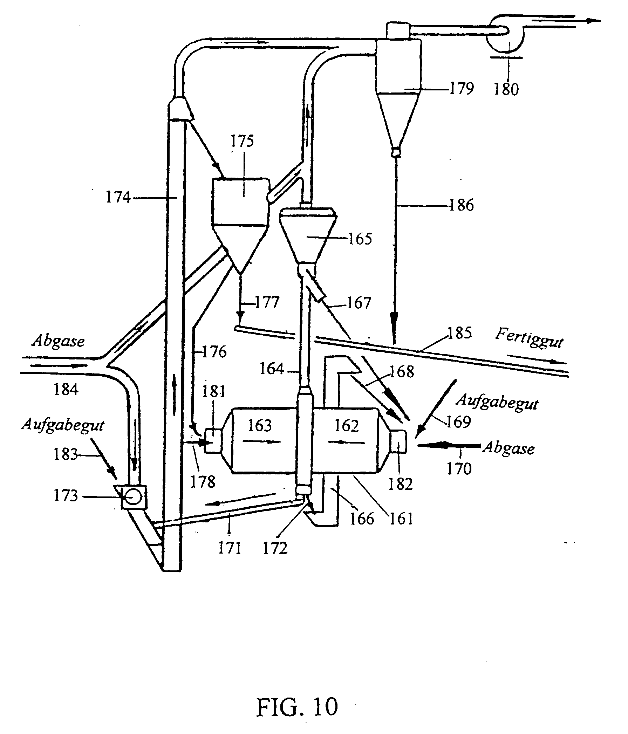

Nach der in Fig. 10 gezeigten apparativen Ausgestaltung für das erfindungsgemäße Mahlverfahren für aus Kalkstein, Ton und Sand bestehendes Rohmehl, dessen saure und basische Rohmehlbestandteile Quarzkörner größer als 60-80 μm enthalten, weshalb diese Bestandteile separat gemahlen werden müssen.

Die in Fig. 10 dargestellte Rohmehl-Herstellungsanlage (Mahltrocknungsanlage) enthält wiederum eine Doppelrotator-Mahltrocknungsmühle 161 mit beidseitigen Zuführungen 169, 176 für Mahlgut bzw. Grießgutes sowie Zuführungen 170, 178 für Heißgase, einer Vortrockner-Feinmahlkammer 162, einer Grobmahlkammer 163, separaten Mittenausträgen 171, 172 für beide Komponenten, und Beschickungszapfen 181, 182, ferner ein Austragsgehäuse 164, einen Luftstromsichter 165, zwei Becherwerke 166, 174 mit Luftförderrinnen, einen Streuwindsichter 175, einen Zyklon 179 und ein Gebläse 180. Die Vortrocknungskammer, die sich vor der Mahlkammer befindet, ist zwecks Erhöhung der Trockenleistung der Mühle versehen.

Die zu mahlenden Rohmaterialien, deren saure Bestandteile die Quarzkörner größer als 60-80 μm enthalten, werden in folgender Weise aufgemahlen.

Der basische Rohmaterial bzw. Aufgabegut 183, das üblicherweise einen niedrigen Feuchtigkeitsgehalt hat, wird gemeinsam mit den Heißgasen oder Abgasen 184 aus einem Schwebegaswärmetauscher einem Schlagpralltrockner 173 zugeführt, wo es zerkleinert und vorgetrocknet wird. Anschließend wird dieses Mühlenaufgabegut zuerst mit Hilfe des Becherwerkes 174 dem Streuwindsichter 175 aufgegeben, wo es gesichtet und hauptsächlich getrocknet wird. Auch wahrend der Förderung im Becherwerk 174 wird das Mahlgut teilweise getrocknet.

Windsichter Grobgut (Grießgut, Überkorn) 176 mit Korngrößen größer 500-2.000 μm wird zusammen mit den Abgasen 178 aus einem Schwebegaswärmetauscher durch den Beschickungszapfen 181 in die Grobmahlkammer 163 zum Aufmahlen eingeleitet. Der Grobanteil der in der Grobmahlkammer 163 grob gemahlenen basischen Rohmehlbestandteile mit Korngrößen gröber 125-200 μm gelangt durch den separaten Mittenaustrag 171, über das Becherwerk 174 in den Streuwindsichter 175, wo er wieder gesichtet wird. Auch hier ist der separate Mittenaustrag 171 von dem separaten Mittenausttrag 172-genau wie gemäß Fig. 8 und 9- durch eine Trennwand 133 abgetrennt.

Windsichter-Feingut 177 mit Korngrößen kleiner 500-2000 μm wird als Anteil des Fertiggutes genutzt.

Der in der Grobmahlkammer 163 entstehende Feinanteil der grob gemahlenen basischen Rohmehlbestandteile 176 mit Korngrößen kleiner 125-200 μm gelangt durch den separaten Mittenaustrag 171 über das Austragsgehäuse 164 in den Luftstromsichter 165, wohin ebenfalls auf ähnliche Art die fein gemahlenen sauren Rohmehlbestandteile 169 gelangen. Anders ausgedrückt verläßt das Mühlenabgas die Mühle 161 ebenfalls durch die Mittenausträge 171, 172 und gelangt durch das Austragsgehäuse 164 in einen Luftstromsichter 165, wo das im Gas enthaltene Grobgut mit Korngrößen gröber 60-80 μm abgeschieden und der Feinmahlkammer 162 der Mahltrocknungsmühle 161 zugeleitet wird.

Die sauren Rohmaterialbestandteile 169, die üblicherweise einen hohen Feuchtigkeitsgehalt haben, werden zusammen mit dem Heißgasstrom durch den Beschickungszapfen 182 der Mahltrocknungsmühle 161 nacheinander in die Vortrocken- und Feinmahlkammer 162 aufgegeben. Der in der Feinmahlkammer 162 gewonnene Grobanteil des Mahlgutes mit Korngrößen größer ca. 125-200 μm wird durch den separaten Mittenaustrag 172 über Luftförderrinne und Becherwerk 166 im Kreislauf gemahlen. Durch das Austragsgehäuse 164 wid parallel dazu der in der Feinmahlkammer gewonnene Feinanteil des sauren Mahlgutes mit Korngrößen kleiner ca. 125-200 μm in den Luftstromsichter 165 eingeleitet. In den Luftstromsichter 165 gelangt, wie es oben geklärt ist, aus der Grobmahlkammer 163 auch der Feinanteil des basischen Rohmehlbestandteils mit Korngrößen unterhalb ca. 125-200 μm.

Das hier im Luftstromsichter 165 abgeschiedene Grobgut 167 (die Partikel gröber 60-80 μm) der sauren Rohmehlbestandteile wird mit einem Feinanteil der basischen Rohmehlbestandteile aus der Grobmahlkammer 163 dem frischem Aufgabegut 169 zugegeben. Das nach dem Luftstromsichter 165 im Heißgasstrom enthaltene Feingut (Partikel kleiner ca. 30 μm) der sauren Rohmehlbestandteile mit einem Feinanteil der basischen Rohmehlbestandteile (ca. 5-60 %) wird im Zyklon 179 als Feinanteil 186 des Fertiggutes 185 abgeschieden.

Das Fertiggut 177, 186 aus dem Streuwindsichter 175 und den Zyklonen 179 wird durch eine gemeinsame Luftförderrinne abgeführt und je nach vorgesehenen Verfahrensart als Rohmehl zur thermischen Behandlung genutzt.

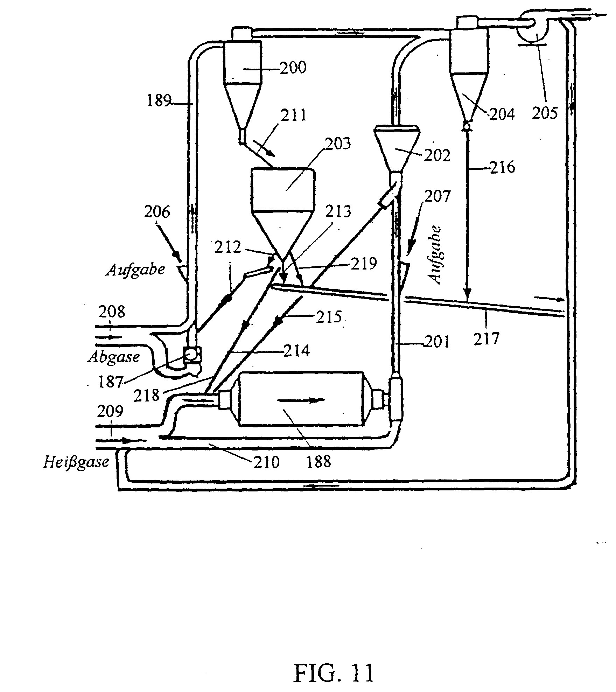

Fig. 11 zeigt noch ein weiteres Ausführungsbeispiel für eine Mahltrocknungsanlage für aus Kalkstein, Ton und Sand bestehende Rohmaterialien, in denen die sauren und basischen Bestandteile Quarzkörner größer als 60-80 μm enthalten und deshalb separat gemahlen werden.

Diese Mahltrocknungsanlage enthält eine im geschlossenen Kreislauf arbeitende Prallhammermühle (Schlägermühle) 187, eine in einem Luftstrom-Kreislauf arbeitende Kugel- oder Rohrmühle 188, eine TrocknerRohrleitung 189, einen Zyklon 200, einen Steigrohrtrockner 201, einen Luftstromsichter 202, einen Mehrkomponeneten-Trennsichter 203, einen Zyklon 204 und ein Gebläse 205. Die Prallhammermühle 187 hat anstelle eines Rostes einen geschlossenen Mahlboden.

Basische Rohmaterialien 206 mit eine Stückgröße von bis zu 100 mm und üblicherweise niedrigem Feuchtigkeitsgehalt werden gemeinsam mit Heißgasen oder Drehofenabgasen und/oder mit Kühlerabluft 208 der Prallhammermühle 187 aufgegeben, wo sie zerkleinert und vorgetrocknet werden. Das Austragsgut aus Prallhammermühle 187 wird pneumatisch durch die Trockner-Rohrleitung 189 dem Zyklon 200 zugeführt, aus dem das abgeschiedene Gut 211 dem Mehrkomponenten-Trennsichter 203 aufgegeben wird. Dieser Windsichter 203 ist materialaustragsseitig durch einen Gutaustrag für Grießgut 212 mit Korngrößen größer 500-2000 μm mit der Prallhammermühle 187 (zum Nachmahlen des Grießgutes), durch einen Gutaustrag für Grobgut 213 mit Korngrößen von ca. 125-500 μm bis 200-2.000 μm (überwiegend schmelzreaktionsfähiger Anteil) mit einem Fertiggutförderer 217, ferner durch einen Gutaustrag für Zwischenkorngut 218 mit Korngrößen von etwa 50-125 μm, in dem sich vermutlich die groben Quarzkörner befinden für eine gemeinsame Mahlung mit sauren Rohmehlbestandteilen 207 mit der Luftstrommühle 188 sowie durch einen Gutaustrag für Feingut 219 mit Korngrößen kleiner etwa 50 μm wird dem Fertiggut förderer 217 verbunden. Wenn dagegen der Quarz im Kalkstein oder Kalkmergel fein und regelmäßig verteilt ist, kann diese Fraktion in den Ofen eingeblasen werden.

Für die sauren Rohmehlbestandteile 207 mit hohem Feuchtigkeitsgehalt ist Luftstrom-Mahltrocknungskreislauf anzuwenden. Dafür werden die sauren Rohmehlbestandteile in den außerhalb der Mühle befindlichen Steigrohrtrockner 201 zwecks Vortrocknung aufgegeben, so daß nur vorgetrocknetes Material in die Mühle eintritt. Nur ein kleiner Teil der Heißgase wird zwecks Nachtrocknung in die Mühle geleitet. Eine maximale Korngröße des Mühlenaufgabegutes von 15 mm ist Voraussetzung für effektives Mahlen. Die Kugel- oder Rohrmühle 188 wird bei der Aufgabe saurer Rohmehlbestandteilen 207 mit Heißluft bzw. Heißgas 209 eines Generators beheizt.

Gemahlene saure Rohmehlbestandteile mit Korngrößen gröber ca. 60-80 μm werden im Luftstromsichter 202 abgeschieden. Das hier im Luftstromsichter 202 abgeschiedene Grobgut 215 mit Korngrößen gröber etwa 60-80 μm der gemeinsam mit einem Zwischenkorngut 218 des basischen Rohmehlbestandteils (Zwischenkorngut 218 mit Korngrößen von etwa 50-125 μm bis 80-200 μm) gemahlenen sauren Rohmehlbestandteile wird der Mühle 188 zugegeben. Das nach dem Luftstromsichter 202 im Heißgasstrom enthaltene Feingut (die Partikel kleiner 60-80 μm) der sauren Rohmehlbestandteile mit einem fein nachgemahlenen Anteil der basischen Rohmehlbestandteile (ca. 5-60 %) wird im Zyklon 204 als Feinanteil 216 abgeschieden und dem Fertiggutförderer 217 zugeführt.

Das Fertiggut 213 aus dem Mehrkomponenten-Trennsichter 203 und das Fertiggut 216 aus dem Zyklon 204 wird durch den gemeinsame Fertiggutförderer (Luftförderrinne) 217 abgeführt und je nach gewählter genem Verfahrenweise als Rohmehl zur thermischen Behandlung genutzt.

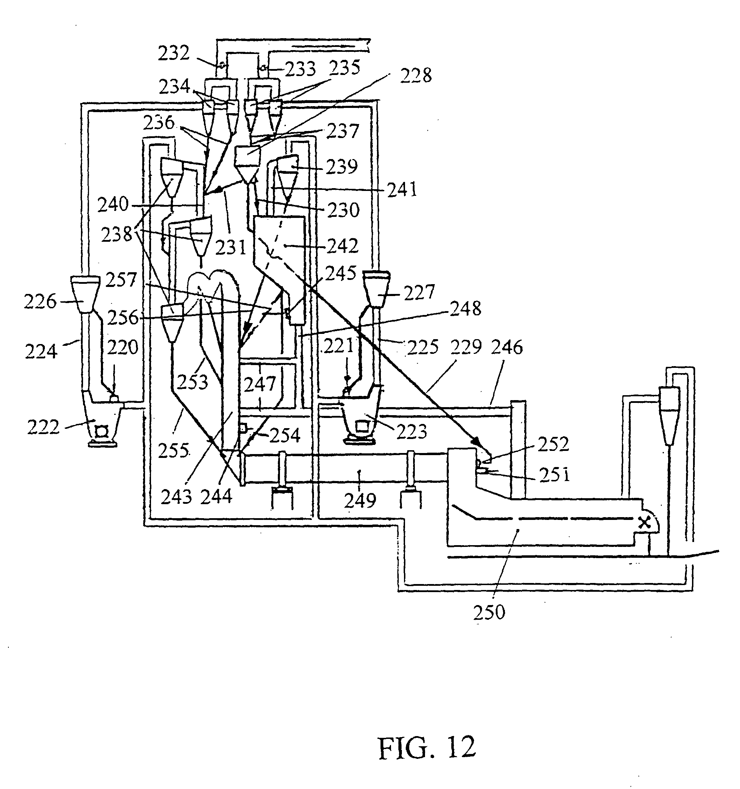

Fig. 12 zeigt eine andere apparative Ausgestaltung des erfindungsgemäßen Verfahrens, die im wesentlichen eine Anlagen variante der Ausführung gemäß Fig. 2 darstellt und in der in dem einen Vorwärmstrang ein Fließbettreaktor oder eine Drallströmungscalcinierkammer (Convex-Kammer) mit Heißgaserzeuger angeordnet ist.

Der Grund dafür ist folgender: Die groben Partikel (>200 oder 500 μm) können unter üblichen Bedingungen, die in Zyklonen vorherrschen, nicht schweben, sondern sie fallen einfach durch die Zyklonen. Dadurch werden die groben Partikeln nicht auf die erforderliche Temperatur aufgeheizt. Entsprechende Veränderungen der technologischen Parameter des Wärmetauschers und Calcinators führen bei der Nutzung des Wärmetauschers und Calcinators wegen Steigerung des Druckverlustes zur Erhöhung des Energiebedarfs. Deswegen ist es vernünftig, aus wirtschaftlichem Sicht einen Fließbettreaktor oder eine Drallströmungscalcinierkammer (Convex-Kammer) mit einem Heißgaserzeuger zu installieren.

Die dargestellte Zementherstellungsanlage enthält eine Aufgabeeinrichtung 220 für saure Rohmehlbestandteile, die eventuell bis ca. 5-20 % des basischen Rohmehlbestandteils enthalten können, und eine andere Aufgabeeinrichtung 221 nur für basische Rohmehlbestandteile, zwei Schlägermühlen 222 und 223, zwei Steigrohrtrockner 224 und 225 mit den eingebauten Luftstromsichtern 226 und 227, einen Mehrkomponeneten-Trennsichter (MKT-Sichter) 228, eine Fallrohr 229 für die Korngrößenfraktion von 125-500 μm bis 200-2.000 μm, ein Fallrohre 230 für die Korngrößenfraktion von 40-125 μm bis 80-200, eine Fallrohr 231 für die Korngrößenfraktion von 0-40 μm bis 0-80 μm, zwei Sichelschieber (Drosselorgane) 232 und 233, zwei Doppelzyklon-Enstauber 234 und 235, zwei Doppelfallrohre 236 und 237, einen mit den Abgasen der Calciniereinrichtung 243 beaufschlagten separaten Vorwärmstrang 238, einen Zyklon 239, zwei Abgasleitungen 240 und 241, einen Fließbettreaktor oder eine Drallströmungscalcinierkammer (Convex-Kammer) mit Heißgaserzeuger 242, eine Zufuhreinrichtung 244 für Brennstoff zum Calcinator 243, eine Zufuhreinrichtung 245 für Brennstoff zum Fließbettreaktors oder zur Drallströmungscalcinierkammer (Convex-Kammer) 242, eine Heißluftleitung 246, die sich in zwei Heißluftleitungen 247 bzw. 248 für den Calcinator 243 und den Fließbettreaktor oder die Drallströmungscalcinierkammer (Convex-Kammer) 242 verzweigt, einen Drehrohofen 249, einen Kühler 250 sowie eine der Brennstoffzufuhreinrichtung 251 am Drehrohofen zugeordnete, zusätzliche Zufuhreinrichtung 252 für einen Anteil des Rohmehls (die Zwischen- oder Grobkornfraktion des Kalksteins oder Feinkornfraktion des Rohmehls). Der Vorwärmstrang 238 besteht aus einzelnen Zyklonen, die untereinander durch Gasleitungen verbunden sind. Der Drehrohofen 249 ist gasseitig mit dem Vorwärmstrang 238 über eine Gassteigleitung des Calcinators 243 verbunden. Austragsseitig stehen die Zyklone des Vorwärmstrangs 238 über Fallrohre 253 mit dem Calcinator 243 und anschließend über Fallrohre 255 mit dem Ofen in Verbindung. Der Fließbettreaktor oder die Drallströmungscalcinierkammer (Convex-Kammer) hat gasseitig mit dem Ofen 249 hingegen keine Verbindung. Austragsseitig steht der Fließbettreaktor oder die Drallströmungscalcinierkammer 242 über Fallrohre 254 direkt oder über Fallrohre 257 über den Kalzinator 243) indirekt mit dem Ofen 249 in Verbindung. Gasseitig ist der Fließbettreaktor oder die Drallströmungscalcinierkammer (Convex-Kammer) 242 über Abgasleitung 241 und Zyklon 239 mit der Hammermühle 223 verbunden. Austragsseitig ist der Zyklon 239 über Fallrohre 256 mit dem Calcinator 243 verbunden.

Im Betrieb wird das Rohmaterial zur Klinkerherstellung folgendermaßen behandelt:

Der nach der Schlägermühle 223 und dem Steigrohrtrockner 225 separat getrocknete und grob gemahlene basische Rohmehlbestandteil wird im Doppelzyklon-Entstauber 235 abgeschieden, von dort über die Doppelfallrohre 237 ausgetragen und in den MKT-Sichter 228 eingeleitet. Der MKT-Sichter 228 trennt den grob gemahlenen Rohmehlbestandteil (z.B. Kalkstein oder Kreide) in drei Korngrößenfraktionen: 0-40 bis 0-80 μm, 40-125 bis 80-200 μm und 125-500 bis 200-2.000 μm. Die Korngrößenfraktion von 0-40 μm bis 0-80 μm wird über die Fallrohre 231 ausgetragen und gemeinsam mit sauren Rohmehlbestandteilen, die über die Doppelfallrohre 236 des Doppelzyklon-Entstaubers 234 ausgetragen werden, in die Gasleitung 240 eingeleitet, die den obersten Zyklon 238 über die Schlägermühle 222 und den Steigrohrtrockner 224 mit dem eingebauten Luftstromsichter 226 und den Doppelzyklon 234 verbindet.

Von den heißen Gasen aus dem mittleren Zyklon des Vorwärmstrangs 238 wird die Korngrößenfraktion von 0-40 μm bis 0-80 μm des basischen Rohmehlbestandteils gemeinsam mit den sauren Rohmehlbestandteilen mitgenommen aufgewärmt und im obersten Zyklon des Vorwärmstrangs 238 abgeschieden und gemischt und von dort über Fallrohre nach unten ausgetragen, wobei dieser Vorgang- wie bekannt- bis zum untersten Zyklon und Calcinacor 243 wiederholt wird. Innerhalb diese Vorgänge wird das Gemisch aus den sauren Rohmehlbestandteilen und dem feinen Anteil des basischen Rohmehlbestandteils in der Menge, die nur für die Bildung von $C_3A$, $C_4FA$, CS und/oder $C_3S_2$ zugeführt wird, aufgeheizt und endgültig entsäuert.

Die Zwischenkornfraktion mit Korngrößen von 40-125 μm 80-200 μm wird über die Fallrohre 229 ausgetragen und unmittelbar durch die Flamme des Ofens 249 hinter der Sinterzone in den Temperaturbereich von 1.250-1.400°C eingeleitet, um es dem Klinker einzuverleiben. Somit wird die unerwünschte Bildung von $C_2S$ vor der Sinterzone verhindert und der Klinkerschmelzanteil erhöht.

Die Grobkornfraktion von 125-500 μm bis 200-2.000 μm wird über die Fallrohre 230 ausgetragen und in den Fließbettreaktor oder die Drallströmungscalcinierkammer 242 eingeleitet. Innerhalb dieses Vorgangs wird der gröbste Anteil des basischen Rohmehlbestandteils aufgeheizt und entsäuert.

Die nach der Schlägermühle 222 und dem Steigrohrtrockner 224 gemeinsam getrockneten und fein gemahlenen sauren Rohmehlbestandteile eventuell mit einem Teil des basischen Rohmehlbestandteils von 5-15 % werden in der Doppelzyklon-Entstaubung 234 abgeschieden, von dort über die Doppelfallrohre 236 ausgetragen, in die Gasleitung 240 eingeleitet. Von dort wird - wie bereits erläutert- das zu brennende Gemisch bis zum untersten Zyklon und Calcinator aufgeheizt und endgültig entsäuert, worauf es in den Drehrohrofen 249 zur Sinterung eingeleitet wird.

Somit werden in dem Fließbettreaktor oder der Drallströmungs calcinierkammer grobkörniger Kalkstein mit Korngrößen von 125-500 bis 200-2000 µm, der nur durch die Schmelze in der Sinterzone zu Klinker umgewandelt werden kann, und im vorwärmstrang 238 ein feinkörniges Gemisch aus den sauren Bestandteilen mit Kalkstein im Verhältnis, das die Erhöhung der Klinkerschmelze bedingt, thermisch behandelt.

Da sich die Korngröße der thermisch behandelten Anteile des Rohmehls und der Einrichtungen zur Calcinierung stark unterscheiden, ist es erforderlich, optimale Bedingungen zur thermischen Behandlung im Vorwärmstrang und im Fließbettreaktor oder Drallströmungscalcinierkammer 242 zu schaffen, d.h. einen erforderlichen (genügenden) Unterdruck zu gewährleisten, wozu zwei Sichelschieber (Drosselorgane) 232 und 233 in den Abgasleitungen von Vorwärmer 238 und eßbettreaktor oder Drallströmungscalcinierkammer 242 angeordnet sind.

Die Erfindung ist nicht auf das zuvor beschriebene Ausführungsbeispiel beschränkt. So kann kann auch an Stelle des MKT-Sichters 228 ein üblicher Sichter verwendet werden, der den Kalkstein in zwei Kornfraktionen mit 0-80 µm und 80-2.000 µm trennt, d.h. daß die Zwischenkornfraktion von 40-125 µm 80-200, die über die Fallrohre 229 ausgetragen und direkt in den Ofen 249 eingeführt werden sollte, wird in diesem Fall ausgeschlossen. Deswegen wird 0-80 µm-Fraktion des basischen Rohmehlbestandteils gemeinsam mit sauren Rohmehlbestandteilen in dem aus Zyklonen bestehenden Vorwärmstrang 238 und die 80-2.000 µm-Fraktion in dem Vorwärmstrang mit dem Fließbettreaktor oder der Drallströmungscalcinierkammer 242 separat thermisch behandelt. Um die Reaktivität des Rohmehls in diesem Fall zu erhöhen, wird ein Teil der Grobkornfraktion der basischen Rohmehlbestandteile (80 bis 2.000 µm) oder das aus den unter 80 µm aufgemahlenen sauren Rohmehlbestandteilen mit Kalkstein bestehende Gemisch separat unmittelbar vom Sichter 228 oder von beliebigen Zyklonen des Vorwärmstranges durch die Flamme des Ofens 249 hinter der Sinterzone in den Temperaturbereich von 1.250-1.350°C eingeblasen. Dabei wird der Klinkerschmelzanteil erhöht, da bei Einführung des genannten Rohmehlbestandteils (unter Umgehung der Übergangzone) direkt in der Sinterzone die Bildung des Belits vor der Sinterzone verringert wird.

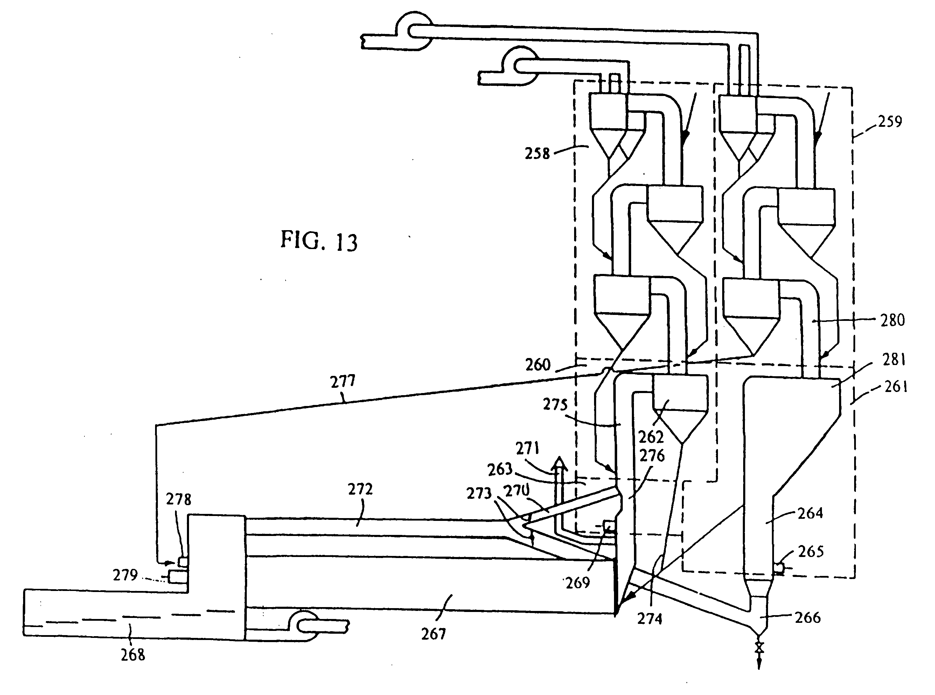

Das Anlagenbeispiel gemäß Fig. 13 ist eine weitere apparative Ausgestaltung des erfindungsgemäßen Verfahrens und stellt eine Abwandlung der Anlage gemäß Fig. 3 dar. Diese Zementherstellungsanlage enthält zwei separate Vorwärmstränge, von denen der eine Vorwärmstrang 259 mit den Abgasen eines Fließbettreaktors oder einer Drallströmungscalcinierkammer (Convex-Kammer) 261 mit Heißgaserzeuger und der andere Vorwärmstrang 258 mit den Abgasen der Calciniereinrichtung 260 beaufschlagt wird. Die Vorwärmstränge bestehen dabei jeweils aus einzelnen Zyklonen, die untereinander mit Gasleitungen verbunden sind. Auch diese Zementherstellungsanlage eignet sich besonders für große Durchsatzleistungen von mehr als 3.000 tato.

Gleichartig wie bei der Anlage gemäß Fig. 3, besteht die Calciniereinrichtung 260 des Vorwärmstranges 258 aus einer rohrförmig ausgebildete Verwirbelungseinbauten enthaltenden Gassteigleitung 275, die mit einem Abscheider 262 verbunden ist, wobei eine Reaktionskammer 263 als Rohrreaktor ausgebildet ist und direkt in die Calciniereinrichtung übergeht. Im anderen Vorwärmstrang 259 wird die Vorcalcinierstufe durch den Fließbettreaktor oder die Drallsträmungscalcinierkammer 26 gebildet, der bzw. die mit einem Brenner 265 und einer Heißluftzuleitung 266 versehen ist. Die Sintereinrichtung ist als Drehrohrofen 267 und die Kühleinrichtung als Rostkühler 268 ausgebildet.

In die Reaktionskammer 263 werden zur Beschleunigung der Quarzumwandlung die für das optimale MgO: Alkalien- Verhältnis erforderlichen MgO- haltigen Zusätze und/oder F- und Cl-haltige Stoffe als Katalysatoren mit Hilfe einer Zufuhreinrichtung 269 oder gemeinsam mit fein gemahlenem Anteil des Rohmehls in die Gasleitung des Vorwärmstrangs 258 eingeleitet. Auf etwa gleicher Höhe wie die Zufuhreinrichtung 269 wird ein grob zerkleinerter Brennstoff als Reduktionsmittel mit Hilfe der Zufuhreinrichtung 269 eingeführt.

Zur Beseitigung überschüssiger gasförmiger Schadstoffanteile, wie flüchtige Alkali- Schwefel- oder Clorverbindungen, wird ein Teil der heißen Ofengase über die Bypassleitung 271 aus dem System entfernt.

Oberhalb der Drosselstelle 276 im Rohrreaktor 263 wird heiße Kühlerabluft mittels einer Heißluftleitung 270 zur Verbrennung des im Überschuß eingesetzten brennbaren Reduktionsmittels eingeführt.

Unter Zuführung von Brennstoff und Sauerstoff in den Fließbettreaktor oder die Drallströmungscalcinierkammer 261 wird der vorgewärmte grob körnige basische Rohmehlbestandteil in den hierdurch schadstofffrei entstehenden heißen Gasen, die gegenüber den Ofenabgasen einen niedrigeren $CO_2$-Partialdruck besitzen, calciniert und schließlich in den Drehrohrofen 267 zur Sinterung eingeleitet. Aus dem untersten Zyklon des Vorwärmers 259 wird die Zwischenkorngößenfraktion von 60-125 µm bis 80-200 µm des basischen Rohmehlbestandteils mit Hilfe der Zufuhreinrichtung 277 entgegengesetzt in den Ofen 267 eingeleitet.

Die Sichtung des in den Vorwärmstrang 259 eingeführten grobkörnigen Anteils von basischen Rohmehlbestandteil mit Korngrößen von 60-500 bis 80-2.000 µm in zwei Kornklassen, d.h. in die Zwischenkornfraktion mit Korngrößen von 60-125 µm bis 80-200 µm und in die Grobkornfraktion mit Korngrößen von 125-500 µm bis 200-2.000 µm, geschieht im wesentlichen in gleicher Weise, wie es weiter oben für die Anlage gemäß Fig. 3 im Zusammenhang mit dem dortigen Vorwärmstrang 50 beschrieben worden ist, so daß darauf verwiesen werden kann. Auch im Falle dieser Anlage gemäß Fig. 13 wird dem entsprechend die Zwischenkornfraktion entsprechend aufgeheizt, im untersten Zyklon des Vorwärmers 259 abgeschieden, von dort über Fallrohre 277 ausgetragen und in den Ofen 267 mit Hilfe der Zufuhreinrichtung 278 aufgegeben. Der Austrag der Zwischenkornfraktion in einem Korngrößenbereich von 60-125 bis 80-200 µm erfolgt durch einen Gasstrom, dessen Geschwindigkeit auf die gewünschte Endkorngröße einzustellen ist.

Auch hier fällt die Grobkornfraktion mit Korngrößen von 125-500 µm bis 200-2.000 µm unter Wirkung der Schwerkraft bereits bei der Aufgabe in die den Doppelzyklon mit dem mittleren Zyklon des Vorwärmstrangs 259 verbindenden Gasleitung über den mittleren Zyklon, die Fallrohre und die Gasleitung 280, die den Fließbettreaktor oder die Drallströmungscalcinierkammer 261 mit dem untersten Zyklon verbindet, durch und gelangt in den Fließbettreaktor oder Drallströmungscalcinierkammer 261.

Unter Zuführung von Ofenabgasen und Brennstoff mit Sauerstoff in die Reaktionskammer 263 und Gassteigleitung 275 werden die vorgewärmten Materialien calciniert und die im Rohmehl enthaltenden Quarzkörner unter der Wirkung der bei der unvollständigen Verbrennung des eingeführten Reduktionsmittels entstehenden reduzierenden Atmosphäre und der in Ofenabgasen enthaltender gasförmiger Alkali-, Fluor-, Schwefel- und Clorverbindungen oberflächlich teilweise amorphisiert und schließlich aus dem Abscheider 262 in den Drehrohrofen 267 zur Sinterung geleitet. Zur besseren Aufteilung der Heißluft auf die Reaktionskammer 263 und den Fließbettreaktor oder die Drallströmungscalcinierkammer 261 sind in der Heißluftleitung 266, 270 Absperrorgane 273 angeordnet.

Um die Anlage auch vollständig ohne Fließbettreaktor oder Drallströmungscalcinierkammer 261 betreiben zu können, werden in der Heißluftleitung 266 die Absperrorgane 273 verwendet, so daß die Anlage gegebenenfalls nur mit der Hälfte der vorgesehenen Durchsatzleistung betrieben werden kann, gleichwohl die Katalysatoren für die Quarzamorphisierung aufgegeben und gasförmige Schadstoffanteile in den Ofenabgasen beseitigt werden können, bevor die heißen Ofengasen zur thermischen Vorbehandlung der der Anlage aufgegebenen Zementrohmaterialien genutzt werden. Dabei sei bemerkt, daß alle Rohmehlbestandteile entweder völlig gemeinsam dem dem Calcinator zugeordneten Zyklonvorwärmen oder nur ohne die Zwischenkornfraktion des basischen Rohmehlbestandteils im Korngrößenbereich von 60-125 µm bis 80-200 µm aufgegeben werden können, die mit Hilfe des Sichters abgetrennt und dem Ofen aufgegeben werden kann.

Gemäß der Erfindung können als Katalysatoren für die Quarzumwandlung anstatt oder in Ergänzung zu bereits empfohlenen Reduktionsmitteln die grobkörnigen kohlenhaltigen Industrieabfälle sowie Ölschieferton, Klinker von Walzverfahren, Asche- und Schlackenabfälle eingesetzt werden. Es kann ferner nicht nur dreistufiger, sondern auch ein zweistufiger Vorwärmer bzw. Vorwärmstrang mit dem Fließbettreaktor oder der Drallströmungscalcinierkammer (Convex-Kammer) mit Heißgaserzeuger verwendet werden.

Erfindungsgemäß kann ferner zum Beispiel sowohl der einstrangige, als auch der zweistrangige Zyklonvorwärmer mit den separat funktionierenden Calcinatoren verwendet werden. Dabei kann ein Strang der zweistrangigen Vorwärm- und Calciniereinrichtung nicht nur durch den Fließbettreaktor oder die Drallströmungscalcinierkammer ersetzt werden, sondern auch durch andere beliebig passende Vorwärm- und Calciniereinrichtungen für grob gemahlene Anteile des Rohmehls. So können auch nicht nur Kalkstein oder Kalkmergel, wie den obigen Ausführungsbeispielen, sondern auch Mergel und Industrieabfälle, die sich hinsichtlich ihrer chemischen Zusammensetzung der chemischen Zusammensetzung des Zementklinkers ähneln, nach dem erfindungsgemäßen Verfahren verwendet werden.

**Patentansprüche**

1. Verfahren zur Herstellung von Zementklinker aus basischen und sauren Rohmaterialien, wobei die Rohmaterialien zunächst zu Rohmehl gemahlen und getrocknet, dann Rohmehlanteile gemischt werden und danach die Rohmehlanteile in einer stufenweisen Wärmebehandlung vorgewärmt, calciniert und zu Zementklinker gesintert (gebrannt) werden und der Zementklinker abgekühlt wird, dadurch gekennzeichnet, daß

   a) die basischen Rohmaterialbestandteile zumindest in eine Feinkornfraktion mit Korngrößen von 0,01 - 80 µm und eine Grobkornfraktion mit Korngrößen von 80,01 - 2000 µm bei einem Verhältnis von Feinkornfraktion zu Grobkornfraktion von 1,5:1 bis 1:9 für ein Sintern unter dynamischen Bedingungen aufgemahlen werden und

   b) auf < 80 µm aufgemahlene saure Rohmehlbestandteile im Gemisch zumindest mit der basischen Rohmehl-Feinkornfraktion wärmebehandelt werden, wobei der Anteil dieser basischen Rohmehl-Feinkornfraktion in bezug auf diese sauren Rohmehlbestandteile in einem Bereich gehalten wird, der beim Sintern nur für die Bildung von CS und/oder $C_3S_2$ sowie für $C_2AS$, $C_3A$, $C_{12}A_7$ und $C_4FA$ ausreichend ist.

2. Verfahren nach Anspruch 1, dadurch gekennzeichnet, daß die basische Rohmehl-Grobkornfraktion für ein Sintern (Brennen) unter statischen und dynamischen Bedingungen in einem Korngrößenbereich von 80,01 bis 500 µm gehalten wird.

3. Verfahren nach Ansprüch 1 oder 2, dadurch gekennzeichnet, daß die sauren Rohmehlbestandteile und/oder Sekundärstoffe mit einem Modul

$$M = CaO + MgO + FeO + 0,31Fe_3O_4/(0,93\text{-}1,4)\ SiO_2 + 0,94\ Al_2O_3 + 0,7\ Fe_2O_3 + 0,7{\times}0,69{\times}\ Fe_3O_4$$

von 0,25 bis 1,2 für eine Schmelztemperatur von maximal 1300°C mit dem basischen Rohmehlbestandteil aufgemahlen werden.

4. Verfahren nach Anspruch 3, dadurch gekennzeichnet, daß sich die thermische Behandlung des zu brennenden Rohmehls in einem Temperaturbereich von 850°C bis 1250°C unter reduzierter Gasatmosphäre vollzieht.

5. Verfahren nach Anspruch 1, dadurch gekennzeichnet, daß der Anteil für die fein zu mahlende basische Rohmehl-Feinkornfraktion mit den unterhalb 80 µm fein zu mahlenden sauren Rohmehlbestandteilen auf eine Korngröße von 0,01 - 32 µm bis 0,01 - 70 µm aufgemahlen wird daß der Anteil für die oberhalb 80 µm zu mahlende basische Rohmehl-Grobkornfraktion auf eine Korngröße von 90 - 2000 µm bis 200 - 2000 µm aufgemahlen wird und daß eine Zwischenkornfraktion der basischen Rohmehlbestandteile mit Korngrößen von 70 - 90 µm bis 32 - 200 µm wenigstens teilweise entfernt wird.

6. Verfahren nach Anspruch 1, dadurch gekennzeichnet, daß, eine an Quarzkristallkörner größer als 40 µm angereicherte Korngrößenfraktion von basischen Rohmehlbestandteilen abgetrennt und anschließend mit den fein zu mahlenden sauren Rohmehlbestandteilen und dem für die basische Rohmehl-Feinkornfraktion zu mahlenden Anteil unter 40 bis 80 µm aufgemahlen wird.

7. Verfahren nach einem der Ansprüche 1 bis 6 dadurch gekennzeichnet, daß der Anteil der basischen Rohmaterialien für die Grobkornfraktion separat von dem Anteil der basischen Rohmaterialien für die Feinkornfraktion und dieser Anteil für die basische Feinkornfraktion mit den unterhalb 80 µm fein zu mahlenden sauren Rohmaterialbestandteilen aufgemahlen und in bezug auf einen optimalen KSt II im entsprechenden Verhältnis dem Brennvorgang zugeführt werden.

8. Verfahren nach einem der Ansprüche 1 bis 7, dadurch gekennzeichnet, daß die Feinkornfraktion der basischen Rohmehlbestandteile mit den unterhalb 80 µm fein gemahlenen sauren Rohmehlbestandteilen separat von der Grobkornfraktion der basischen Rohmehlbestandteile in denjenigen Strang eines zweistrangigen Zyklonvorwärmers mit einer in eine Vorcalcinierstufe und eine Nachcalcinierstufe unterteilten Calcinierstufe eingeführt wird, der durch die Abgase der Sinterstufe beheizt wird, und die Grobkornfraktion der basischen Rohmehlbestandteile dem zweiten Strang zugeführt wird, der durch die Heißgase aus der Vorcalcinierstufe beheizt wird.

9. Verfahren nach einem der Ansprüche 1 bis 8, dadurch gekennzeichnet, daß unter Berücksichtigung der Auswirkung des Alkalikreislaufs auf den Gehalt an Alkalien im Heißmehl bei der Aufgabe des Rohmehls in die Sinterstufe und in übereinstimmung mit dem Gehalt an festreaktionsfähigem MgO im Heißmehl, bei der Aufgabe von MgO- oder Alkali-Korrekturzusätzen das Verhältnis des festreaktionsfähigen MgO-Gehalts zum gesamten Alkaligehalt in einem Bereich von 2:1 bis 5:1 liegen muß.

10. Verfahren nach einem der Ansprüche 1 bis 9, dadurch gekennzeichnet, daß die Grobkornfraktion der basischen Rohmehlbestandteile mit Korngrößen von 80 - 500 µm bis 80 - 2000 µm in entsprechenden Mengen durch die Ofenflamme und die gegenüberliegende Seite des Ofens hinter der Sinterzone in einen Temperaturbereich von 1250 bis 1350°C eingeführt wird.

11. Verfahren nach Anspruch 1, dadurch gekennzeichnet, daß eine Zwischenkornfraktion der basischen Rohmehlbestandteile mit Korngrößen von 60 - 125 µm bis 80 - 200 µm in einer entsprechenden Menge durch die Ofenflamme und die gegenüberliegende Seite des Ofens hinter der Sinterzone in einen Temperaturbereich von 1250 bis 1400°C eingeführt wird.

**12.** Verfahren nach einem der Ansprüche 1 bis 10, dadurch gekennzeichnet, daß die basische Rohmehl-Feinkornfraktion mit korngrößen, unterhalb 60 bis 80 μm mit den unter 60 bis 80 μm fein gemahlenen sauren Rohmehlbestandteilen separat von der oberhalb 80 μm aufgemahlenen Grobkornfraktion der basischen Rohmehlbestandteile in die Ofenflamme durch einen Ofenauslauf und/oder durch die Einlaufkammer eines Ofens hinter der Sinterzone in einen Temperaturbereich von 1100 bis 1400°C eingeführt wird.

**13.** Verfahren nach Anspruch 1, dadurch gekennzeichnet, daß für das Ermahlen der Feinkornfraktion und der Grobkornfraktion der basischen Rohmehlbestandteile das verhältnis der Mahlkörper-Füllung zur Mahlgutfüllung in der Mühle zwischen 2 und 5 liegt, wobei die erste Kammer einer Zweikammermühle und eine Einkammermühle bei binärer Kugelfüllung mit einem mittleren Kugeldurchmesser von 84,7 mm und bei einer aus verschiedenen Kugelgrößen bestehenden Kugelfüllung mit einem mittleren Kugeldurchmesser von 82 bis 88 mm beladen werden und wobei eine Trennwand der im geschlossenen und offenen Kreislauf betriebenen Zweikammerrohrmühle bei einem Längenverhältnis der ersten Kammer zur zweiten Kammer von 2:1 bis 5,6:1 in die Mühle eingebaut wird.

**14.** Verfahren nach Anspruch 1, dadurch gekennzeichnet, daß - bezogen auf die Rohmehlführung - eine zweistrangige Vorwärmstufe verwendet wird, wobei dem einen Vorwärmstrang die Grobkornfraktion der basischen Rohmehlbestandteile mit Korngrößen von 60 - 500 μm bis 80 - 2000 μm zugeführt wird, und dem anderen Vorwärmstrang das Gemisch aus den unterhalb 30 bis 80 μm aufgemahlenen sauren Rohmehlbestandteile und der Feinkornfraktion der basischen Rohmehlbestandteile mit Korngrößen von 0,01 - 30 μm bis 0,01 - 80 μm zugeführt wird, wobei ferner ein Grobanteil mit Korngrößen von 125 - 500 μm bis 200 - 2000 μm der Grobkornfraktion der basischen Rohmehlbestandteile unter der Schwerkraft bereits in der Heißgasleitung abgetrennt wird und über Gasleitungen in die Calcinierstufe durchfällt und der ganze oder mindestens ein Feinanteil mit Korngrößen von 60 bis 125 μm bis 80 bis 200 μm der Grobkornfraktion der in drei ersten Zyklonen oder im ersten Zyklon vorgewürmten basischen Rohmehlbestandteile nach dem -in Richtung der Bewegung von Material des drei- bis fünfstufigen Vorwärmers- dritten oder ersten Zyklon in den Reaktionsbereich des Ofens zwischen den Übergang- und Sinterzonen eingeleitet wird.

**15.** Verfahren nach Anspruch 1, dadurch gekennzeichnet, daß - bezogen auf die Rohmehlfürung - eine zweistrangig ausgebildete Vorwärmstufe verwendet wird, und daß ein in einem mit Heißgasen aus einer Vorcalcinierstufe beaufschlagten Vorwärmstrang aufgeheizter Anteil des basischen Rohmehls mit Korngrößen von 60 - 200 μm bis 80 - 200 μm in die Sinterstufe in den Bereich zwischen Sinter- und Übergangzonen mit einer Temperatur von 1250 bis 1450°C eingeleitet wird, während der Anteil des basischen Rohmehls mit Korngrößen von 125 - 500 μm bis 200 - 2000 μm, der aus der zweiten Zyklonstufe desselben Vorwärmstrangs in einen Abscheider der Vorcalcinierstufe durchfällt, in eine Reaktionszone zwischen den Sinter- und Nachcalcinierstufen mit weiteren Rohmehlanteilen eingeführt wird, wobei in die Reaktionszone gasstromaufwärts ein grobkörniges Reduktionsmittel mit einer Korngröße von 0,01 bis 3000 μm eingeführt wird.

**16.** Verfahren nach Anspruch 1, dadurch gekennzeichnet, daß ein Reduktionsmittel und/oder ein Katalysator zur thermisch-chemischen Aktivierung des im Heißrohmehl enthaltenen Quarzes zugeführt wird, daß nach dem Trockenverfahren das Reduktionsmittel zwischen den Sinter- und Calcinierstufen in das Heißmehl eingeführt und dabei bei einer zweistrangig ausgebildeten Vorwärm- und Calcinierstufe zwischen der Sinterstufe und demjenigen Strang der Calcinier- oder Nachcalcinierstufe zugeführt wird, in dem unterhalb 30 bis 80 μm gemahlener Feinkornanteil des Rohmehls thermisch behandelt wird, daß ferner der Katalysator beim Mahlen des unterhalb 30 bis 80 μm zu mahlenden Feinkornanteils des Rohmehls aufgegeben wird, und daß nach dem Naßverfahren das Reduktionsmittel zwischen den Ubergang- und Calcinierzonen der Sinterstufe und der Katalysator beim Mahlen des unterhalb 80 μm zu mahlenden Feinkornanteils des Rohmehls aufgegeben wird.

**17.** Verfahren nach Anspruch 16, dadurch gekennzeichnet, daß ein grobkörniger Brennstoff mit Korngrößen von 0,01 - 3000 μm bis 500 - 3000 μm als Reduktionsmittel im Überschuß im Bereich einer Stelle in die Ofenabgase eingeführt wird, wo Rohmehl aus der Vorwärmstufe den Ofenabgasen zugemischt wird, wobei der unverbrannte Grobanteil des Reduktionsmittels über den Ofeneinlauf in den Ofen fällt und dem Rohmehl zugemischt wird.

**18.** Verfahren nach Anspruch 1, dadurch gekennzeichnet, daß - bezogen auf die Rohmehlführung - bei Verwendung eines zweistrangig ausgebildeten Vorwärmstufe der Grobkornanteil der basischen Rohmehlbestandteile mit Korngrößen von 60 - 500 μm bis 80 - 2000 μm ausschließlich in einem Vorwärmstrang -thermisch behandelt wird der mit einer angeschlossenen Vorcalcinierstufe oder zusammen mit einer von zwei vorhandenen calcinierstufen als Fließbettreaktor oder als Drallströmungscalcinierkammer mit Heißgaserzeuger ausgebildet ist.

**19.** Anlage zur Herstellung von Zementklinker aus basischen und sauren Rohmaterialien, enthaltend Einrichtungen (25, 26, 27, 28) zum Mahlen und Trocknen der Rohmaterialien zu Rohmehl sowie eine Vorrichtung zur aufeinanderfolgenden stufenweisen Wärmebehandlung des Rohmehles mit einer Vorwärmeinrichtung (2, 4; 34, 35; 50, 52), einer Calciniereinrichtung (5, 14; 46; 51, 53), einer Sintereinrichtung (7, 47; 60) und einer Kühleinrichtung (9; 48; 61), insbesondere zur Durchführung des Verfahrens nach wenigstens einem der Ansprüche 1 bis 18, gekennzeichnet durch folgende Merkmale:

a) die Einrichtungen (25, 26, 27, 28) zum Mahlen und Trocknen sind derart ausgeführt, daß die basischen Rohmaterialien in wenigstens zwei basische Rohmehlfraktionen aufmahlbar sind, wobei eine Feinkornfraktion einen Korngrößenbereich von 0,01 - 80 μm und eine Grobkornfraktion für dynamische Sinterbedingungen einen Korngrößenbereich von 80,01 - 2000 μm und für statische und dynamische Sinterbedingungen einen Korngrößenbereich von 80,01 - 500 μm aufweist;

b) es sind Einrichtungen (42; 35; 56) zur Zusammenführung und gemeinsamen Wärmebehandlung von auf < 80 μm aufgemahlenen sauren Rohmehlbestandteilen mit der basischen Rohmehl-Feinkornfraktion in der Weise vorgesehen, daß der Anteil dieser basischen Rohmehl-Feinkornfraktion in einem Bereich einstellbar ist, der beim Sintern nur für die Bildung von CS und/oder $C_3S_2$ sowie für $C_2AS$, $C_3A$, $C_{12}A_7$ und $C_4FA$ ausreichend ist.

**20.** Anlage nach Anspruch 19, dadurch gekennzeichnet, daß die Calciniereinrichtung (51,53) in voneinander getrennte Vor- und Nachcalciniereinrichtungen (51 ; 53) derart unterteilt ist, daß die Nachcalciniereinrichtung (53) mit der Abgasseite der Sintereinrichtung (60) und die Vorcalciniereinrichtung (51) mit einem Heißgaserzeuger (58, 59) in Verbindung steht, und daß im Bereich der Zufuhreinrichtung für den Brennstoff zur Sintereinrichtung (60 ; 47) eine Zufuhreinrichtung (62 ; 43) für eine Zwischenkornfraktion der basischen Rohmehlbestandteile und zwischen der Calciniereinrichtung (46 ; 53) und der Sintereinrichtung (47 ; 60) eine Reaktionskammer (55) mit einer Zufuhreinrichtung (63 ; 49) für Reduktionsmittel und/oder Katalysatoren zur chemischen Aktivierung des im Heißmehl enthaltenden Quarzes angeordnet ist.

**21.** Anlage nach Anspruch 20, dadurch gekennzeichnet, daß ein gasseitig an die Vorcalciniereinrichtung angeschlossener Vorwärmstrang (50) materialaustragsseitig mit dem Heißgaserzeuger (56) der Vorcalciniereinrichtung (51) und/oder mit der Sintereinrichtung (60) in Verbindung steht und daß ein gasseitig an die Nachcalciniereinrichtung (53) angeschlossener Vorwärmstrang (52) materialaustragsseitig mit der Vorcalciniereinrichtung (51) in Verbindung steht.

**22.** Anlage nach Anspruch 19, mit Einrichtungen zur separaten Mahlung (25, 26) und Trocknung (27, 28) der sauren und basischen Rohmaterialien sowie zu deren Vorwärmung (34, 35), calcinierung (46) und gemeinsamen Sinterung (47) sowie zur Kühlung (48) von Zementklinker, dadurch gekennzeichnet, daß in einem Vorwärmstrang unter einem Doppelzyklon-Entstauber (29) ein Mehrkomponententrennsichter (37) zur Aufteilung von Rohmehl in Kornfraktionen angeordnet ist, von denen eine Feinkornfraktion (42) mit Korngrößen von < 60 - 80 μm über Fallrohre (42) ausgetragen und in eine gasführende Leitung (39) eines parallelen Vorwärmstrangs, eine Zwischenkornfraktion (43) mit Korngrößen von 60 - 125 μm bis 80 - 200 μm über Fallrohre (43) ausgetragen und mit Hilfe einer Zufuhreinrichtung (49, 62) unmittelbar durch die Ofenflamme (47) hinter der Sinterzone in einen Temperaturbereich mit 1.250 bis 1.400°C und eine Grobkornfraktion mit Korngrößen von 125 - 500 μm bis 200 - 2.000 μm über Fallrohre (44) ausgetragen und in eine gasführende Leitung (38) desselben Vorwärmstrangs eingeleitet wird.

**23.** Anlage nach Anspruch 19, mit Einrichtungen zur Mahltrocknung (75), Desagglomerierung (74), Sichtung (77) und Abscheidung (78, 79 und 81), dadurch gekennzeichnet, daß eine Rollenpresse (73) zum Grobmahlen des Rohmaterials im geschlossenen Kreislauf mit einer für die Desagglomerierung der aus Kalkstein entstandenen gepreßten Schülpen bestimmten Hammermühle (74) und einem auf einem Steigrohrtrockner (76) aufgebauten Luftstromsichter (77) in Verbindung mit einer in den geschlossenen Kreislauf mit einem Zyklon (79) und einem Gebläse (80) eingeschalteten Kugelmühle (75) stromab hinter dem Zyklon (79) angeordnet ist, daß in Strömungsrichtung der Abgase dem Gebläse ein Elektrofilter (81) nachgeschaltet ist und daß eine Zufuhreinrichtung für die basischen und harten sauren Rohmaterialien an der Rollenpresse (73) und eine Zufuhreinrichtung für die tonartigen sauren Rohmaterialien an der Hammermühle (74) angeordnet ist.

**24.** Anlage nach Anspruch 19, mit Einrichtungen zur Mahltrocknung (86, 88), Desagglomerierung (87), Sichtung (89, 90) und Abscheidung (91 und 93), dadurch gekennzeichnet, daß eine Gutbett-Walzenmühle (86) vorgesehen ist, die zum Grobmahlen des Rohmaterials im geschlossenen Kreislauf mit einer zur Desagglomerierung der aus dem Rohmaterial entstandenen gepreßten Schülpen bestimmten Hammermühle (87) und einem auf einem Steigrohrtrockner (88) aufgebauten statischen Vorsichter (89) zusammengeordnet ist, wobei materialaustrags- und gasseitig nacheinander ein Fertigsichter (90), ein Zyklon (91), ein Gebläse (92) und ein Elektrofilter (93) angeschlossen sind.

**25.** Anlage nach Anspruch 19, mit Einrichtungen zur Mahltrocknung (98), Förderung (99), Sichtung (98, 102, 103) und Abscheidung (104), dadurch gekennzeichnet, daß an eine zum Grobmahlen des Rohmaterials im geschlossenen Kreislauf betriebene Rollenmühle (98) über ein Becherwerk (99) ein dynamischer Sichter (103) angeschlossen ist, dessen Gutaustrag für eine Grobkornfraktion (109) mit Korngrößen von 125 - 500 µm bis 200 - 2000 µm des basischen Rohmaterials mit einem Fertiggutförderer und dessen Gutaustrag für Grießgut (110) mit Korngrößen gröber 500 - 2000 µm mit der Mühlenaufgabe (100) der Rollenmühle (98) in Verbindung steht, daß ferner zwischen der Rollenmühle (98) und einem Elektrofilter (104) an einem Steigrohrtrockner (101) ein Luftstromsichter (102) angeordnet ist, dessen Gutaustrag für eine Zwischenkornfraktion (108) mit Korngrößen von 80 - 125 µm bis 60 - 200 µm des basischen Rohmaterials mit dem Fertiggutförderer für diese Zwischenkornfraktion (108) verbunden ist, und daß in Strömungsrichtung der Abgase nach dem Luftstromsichter (102) zur Abscheidung einer Feinkornfraktion (107) aus unter 80 µm aufgemahlenen sauren und basischen Rohmaterialbestandteilen ein Elektrofilter (104) angeordnet ist, der materialaustragsseitig mit einem Feingutförderer (107) in Verbindung steht.

**26.** Anlage nach Anspruch 19, mit Einrichtungen zur Mahltrocknung (112), Förderung (113), Sichtung (112, 115) und Abscheidung (116), dadurch gekennzeichnet, daß in einer zum Grobmahlen des Rohmaterials im geschlossenen Kreislauf betriebenen Rollenmühle (112) ein Luftstromsichter mit einer unteren Austragseinrichtung für eine Grobkornfraktion (122) mit Korngrößen von 125 - 500 µm bis 200 - 2000 µm des basischen Rohmaterials angeordnet ist und diese Austragseinrichtung mit einem Fertiggutförderer für diesen basischen Rohmehlbestandteil in Verbindung steht, daß ferner zwischen der Rollenmühle (112) und dem Elektrofilter (116) dem Steigrohrtrockner (114) ein Luftstromsichter (115) nachgeordnet ist, dessen Gutaustrag für eine Zwischenkornfraktion (121) mit Korngrößen von 80 - 125 µm bis 60 - 200 µm des basischen Rohmehls mit einem Fertiggutförderer für diese Zwischenkornfraktion (121) in Verbindung steht, daß in Strömungsrichtung der Abgase nach dem Luftstromsichter (115) zur Abscheidung einer Feinkornfraktion (120) mit Korngrößen kleiner 60 - 80 µm ein Elektrofilter (116) angeordnet ist, der materialaustragsseitig mit einem Feingutförderer (120) für die unter 80 µm gemahlenen sauren und basischen Rohmehlbestandteile in Verbindung steht, und daß zur Rückführung von Grießgut mit Korngrößen über 500 - 2000 µm zur Rollenmühle (112) ein Becherwerk (113) angeordnet ist.

**27.** Anlage nach Anspruch 19, mit Einrichtungen zur Mahltrocknung (125), Förderung (138, 139), Sichtung (140, 141) und Abscheidung (142, 143), dadurch gekennzeichnet, daß eine zum Grob- und Feinmahlen des Rohmaterials im geschlossenen Kreislauf betriebene Doppelrotator-Mahltrocknungsmühle (125) beidseitige Zuführungen (126, 127, 134, 135) für Mahlgut, Grießgut und Heißgase, einen Vortrockner (128), eine Feinmahlkammer (129) und eine Grobmahlkammer (130) sowie eine zwischen der Feinmahl- und der Grobmahlkammer (129, 130) angeordnete Trennwand (133) mit separaten Mittenausträgen (131, 132) für basische und saure Rohmehl-Komponenten enthält, daß der Mittenaustrag (131) der hauptsächlich mit sauren Rohmaterial bestandteilen beschickten Feinmahlkammer (125) über ein Becherwerk (138) und parallel dazu über ein Austragsgehäuse (136) mit nachgeschaltetem Luftstromsichter (137) mit einem Streuwindsichter (140) in Verbindung steht, an den auch die mit basischem Rohmaterial beschickte Grobmahlkammer (130), nur über dieses Austragsgehäuse (136) und den Luftstromsichter (137) angeschlossen ist, wobei dieser Streuwindsichter (140) durch einen Gutaustrag für Grobgut (149) mit Korngrößen gröber 60 - 80 µm mit der Mühlenaufgabe (126) der Feinmahlkammer (129) und durch einen weiteren Gutaustrag für Feingut (151) der sauren Rohmehlbestandteile mit einem außerdem mit einem Feinanteil des basischen Rohmaterials beschickten Fertiggutförderer (154) in Verbindung steht, und daß die Grobmahlkammer (130) ferner über ihren Mittenaustrag (132) und ein Becherwerk (139) an einen weiteren Streuwindsichter (141) angeschlossen ist, der durch einen Gutaustrag für Grießgut (152) mit Korngrößen gröber 500 - 2000 µm des basischen Rohmaterials mit der nur mit Frischgut (147) des basischen Rohmaterials beschickten Mühlen zuführung (127) und durch einen Gutaustrag für Fertiggut (153) mit Korngrößen von 80 - 500 µm bis 80 - 2000 µm des basischen Rohmaterials mit dem Fertiggutförderer (154) in Verbindung steht, wobei dieses Fertiggut (153) mit dem im Streuwindsichter (140), in Zyklonen (142) und im Elektrofilter (143) abgeschiedenen Feingut mit Korngrößen kleiner 80 µm der sauren und basischen Rohmehlbestandteile der Sintereinrichtung zuführbar ist.

**28.** Anlage nach Anspruch 27, dadurch gekennzeichnet, daß der Mittenaustrag (132) der Grobmahlkammer (130) der Mahltrocknungsmühle (125) über das Becherwerk (139) an einen Mehrkomponenten-Trennsichter (141) zur Aufteilung des Sichtergutes in vier Korngrößenfraktionen angeschlossen ist, wobei dieser Mehrkomponenten-Trennsichter (141) materialaustragsseitig durch eine Austrageinrichtung (153) für Grießgut mit Korngrößen größer 500 - 2000 µm mit der Mahlgutzuführung (127) der Grobmahlkammer in Verbindung steht, durch für Grobgut mit einem gesamten Korngrößenbereich von 60 - 2000 μm bestimmte Austragseinrichtungen (158 und 159) mit einem Fertiggutförderer, von denen die nach eine Austragseinrichtung (158 oder 159) für ein Grobgut mit Quarzkörnern gröber 60 μm, materialaustragsseitig auch mit der Mahlgutzuführung (126) zur Feinmahlkammer (129) und die andere Austragseinrichtung (158 oder 159) für Grobgut ohne grobe Quarzkristalle von über 60 μm mit Fertiggutförderern in Verbindung steht, und durch eine Austragseinrichtung für Feingut (154) mit Korngrößen kleiner 60 - 80 μm mit dem Fertiggutförderer in Verbindung steht.

29. Anlage nach Anspruch 19, mit Einrichtungen zur Mahltrocknung (161), Förderung (174), Sichtung (165, 175) und Abscheidung (179), dadurch gekennzeichnet, daß eine zum Grob- und Feinmahlen von Rohmaterial im geschlossenen Kreislauf betriebene Doppelrotator-Mahltrocknungsmühle (161) eine beidseitige Zuführung (169, 176, 170, 178) für Mahlgut, Grießgut und Heißgase, eine Vortrockner-Feinmahlkammer (162), eine Grobmahlkammer (163), eine für die Mittenausträge (171, 172) beider Rohmaterialien zwischen Fein- und Grobmahlkammer (162, 163) angeordnete Trennwand (133) enthält und an ihre Mittenausträge (171, 172) ein über ein gemeinsames Austragsgehäuse (164) aufgebauter Luftstromsichter (165) sowie parallel dazu ein über den Mittenaustrag (172) der Feinmahlkammer (162) und eine Luftförderrinne angeschlossenes Becherwerk (166) angeschlossen sind, wobei die Grobgut-Ausgabe sowohl des auf das Austragsgehäuse (164) aufgebauten Luftstromsichters (165) als auch das Becherwerk (166) materialaustragsseitig für Grobgut (167, 168) mit Korngrößen gröber 60 - 80 μm mit der hauptsächlich saures Frischgut aufnehmenden Vortrockner-Feinmahlkammer (162) in Verbindung stehen, wobei die Mahlgut-Aufgabe des auf das Austragsgehäuse (164) aufgebauten Luftstromsichters (165) sowohl mit der Vortrockner-Feinmahlkammer (162) als auch mit der Grobmahlkammer (163) und das Becherwerk (166) mit der Vortrockner-Feinmahlkammer (162) in Verbindung stehen, daß ein zur Aufnahme von Grobmahlgut basischen Rohmaterials vorgeschener, mit basischem Frischgut beschickter Schlagpralltrockner (173), über ein Becherwerk (174) an einen Streuwindsichter (175) angeschlossen ist, der durch einen Gutaustrag für Grießgut (176) des basischen Rohmaterials mit Korngrößen über 500 bis 2000 μm mit der Grobmahlkammer (163) und durch einen weiteren Gutaustrag für Fertiggut mit Korngrößen von 60 bis 500 μm bis 80 bis 2000 μm, in dem auch basische Bestandteile vorhanden sind mit einem Fertiggutförderer (185) in Verbindung steht, und daß in Strömungsrichtung der Abgase Luftstromsichter (165), Becherwerk (174) und Streuwindsichter (175) parallel zu einem Zyklon (179) angeschlossen sind, dessen Gutaustrag für das abgeschiedene Feingut, das aus den sauren Rohmehlbestandteilen und einem Feinanteil der basischen Rohmehlbestandteile mit Korngrößen kleiner 80 μm besteht, mit dem Fertiggutförderer (185) in Verbindung steht, wobei nach dem Zyklon ferner ein Gebläse (180) angeordnet ist.

30. Anlage nach Anspruch 19, mit Einrichtungen zur Mahltrocknung (187, 188), Luftstromförderungstrocknung (189, 201), Sichtung (202, 203) und Abscheidung (200, 204), dadurch gekennzeichnet, daß zwischen einer zum Feinmahlen von hauptsächlich sauren Rohmaterialbestandteilen in einem Luftstrom-Mahltrocknungskreislauf betriebenen Kugel- oder Rohrmühle (188) und einer zum Grobmahlen von basischen Rohmaterialbestandteilen im geschlossenen Kreislauf betriebenen Schlagprall- oder Prallhammermühle (187) über eine an diese angeschlossene Trockner-Rohrleitung (189) und einen anschließenden Zyklon (200) ein Mehrkomponenten-Trennsichter (203) angeordnet ist, der materialaustragsseitig durch einen Gutaustrag für Grießgut (212) des Kalksteins mit Korngrößen über 500 - 2000 μm mit der im Umlauf so betriebenen Schlagprallmühle (187), durch einen Gutaustrag für Grobgut (219) des Kalksteins mit Korngrößen von ca. 125 - 500 μm bis 200 - 2000 μm mit einem Fertiggutförderer (217), durch einen Gutaustrag für Zwischenkorngut (218) des Kalksteins mit Korngrößen von 60 - 125 μm bis 80 - 200 μm mit der Luftstrommühle (188) oder der Sintereinrichtung und durch einen Gutaustrag für Feingut (213) mit Korngrößen kleiner 50 - 80 μm mit dem Fertiggutförderer (217) in Verbindung steht, wobei in Strömungsrichtung der Abgase ein Luftstromsichter (202) und ein Zyklon (200) parallel zu einem weiteren Zyklon (204) angeschlossen sind, der durch ein Gutaustrag für abgeschiedenes Feingut (216), das aus sauren Rohmehlbestandteilen mit einem Feinanteil, von ca. 5-60% des basischen Rohmehlbestandteils mit Korngrößen kleiner 80 μm besteht, mit dem Fertiggutförderer (217) in Verbindung steht und nach dem ein Gebläse (205) angeordnet ist.

## Claims

1. Method of producing cement clinker from basic and acidic raw materials, wherein the raw materials are first of all ground to form raw meal and dried, then raw meal fractions are mixed and then the raw meal fractions are preheated in preheating stages, calcined and sintered (roasted) to form cement clinker and the cement clinker is cooled, characterised in that

   a) the basic raw material components are ground into a fine grain fraction with grain sizes of 0.01 to 80 μm and a coarse grain fraction with grain sizes from 80.01 to 2000 μm with a ratio of the fine grain fraction to the coarse grain fraction of 1.5:1 to 1:9 for sintering under dynamic conditions, and

b) acidic raw meal components in the mixture which are ground to < 80 μm area at least heat treated with the fme grain fraction of the raw meal, wherein the proportion of this basic fine grain fraction of the raw meal relative to these acidic raw meal components is kept in a range which is sufficient only for the formation of CS and/or $C_3S_2$ as well as for $C_2AS$, $C_3A$, $C_{12}A_7$ and $C_4FA$.

2. Method as claimed in Claim 1, characterised in that the basic coarse grain fraction of the raw meal is kept in a grain size range from 80.01 to 500 μm for sintering (roasting) under static and dynamic conditions.

3. Method as claimed in Claim 1 or 2, characterised in that the acidic raw meal components and/or secondary substances with a module

$$M = Ca) - MgO + FeO + 0.31Fe_3O_4/(0.93-1.4) \ SiO_2 + 0.94 \ Al_2O_3 + 0.7 \ Fe_2O_3 +$$

$$0.7x0.69xFe_3O_4$$

of 0.25 to 1.2 for a melting temperature of a maximum of 1300°C is ground up with the basic raw meal component.

4. Method as claimed in Claim 3, characterised in that the heat treatment of the raw meal to be roasted takes place in a temperature range from 850°C to 1250°C under reduced gas atmosphere.

5. Method as claimed in Claim 1, characterised in that the proportion for the basic fine grain fraction of the raw meal to be fine-ground is ground up with the acid raw meal components to be fine-ground below 80μm to a grain size of 0.01-32μm to 0.01-70μm, that the proportion for the basic coarse grain fraction of the raw meal to be ground above 80 μm is ground to a grain size of 90-2000 μm to 200-2000μm, and that an intermediate grain fraction of the basic raw meal components with grain sizes of 70-90 μm to 32-200 μm is at least partially removed.

6. Method as claimed in Claim 1, characterised in that a grain size fraction of basic raw meal components which is enriched with quartz crystal grains greater than 40 μm is separated off and is then fine-ground below 40 to 80 μm with the acidic raw meal components which are to be fine-ground and with the basic fine grain fraction of the raw meal for the proportion to be fine-ground.

7. Method as claimed in one of Claims 1 to 6, characterised in that the proportion of the basic raw meal components for the coarse grain fraction is ground separately from the proportion of the basic raw materials for the fine grain fraction, and this proportion for the fine grain fraction is ground with the acidic raw meal components to be fine-ground below 80 μm and delivered in a corresponding ratio based on an optimum LS II to the roasting operation.

8. Method as claimed in one of Claims 1 to 8, characterised in that the fine grain fraction of the basic raw meal components together with the acidic raw meal components fine-ground below 80 μm are introduced separately from the coarse grain fraction of the basic raw meal components into the string of a double-string cyclone preheater, with a calcination stage divided into a precalcination stage and a recalcination stage, which is heated by the exhaust gases from the sintering stage, and the coarse grain fraction of the basic raw meal components is delivered to the second string which is heated by the hot gases from the precalcination stage.

9. Method as claimed in one of Claims 1 to 8, characterised in that taking account of the effect of the circulation of alkali on the actual content of alkalis in the hot meal when it is fed into the sintering stage and in conformity with the content of the MgO capable of solid state reaction in the hot meal, during the feeding of the MgO or alkali correcting additions the ratio of the MgO content to the total alkali content must lie in the range from 2:1 to 5:1.

10. Method as claimed in one of Claims 1 to 9, characterised in that the coarse grain fraction of the basic raw meal components with grain sizes of 80 - 500 μm to 80 - 2000 μm is introduced in corresponding quantities through the kiln flame and the opposite side of the kiln behind the sintering zone into a temperature range of 1250 to 1350°C.

11. Method as claimed in Claim- 1, characterised in that an intermediate grain fraction of the basic raw meal components with grain sizes of 60 - 125 μm to 80 - 200 μm is introduced in an appropriate quantity through the kiln flame and the opposite side of the kiln behind the sintering zone into a temperature range of 1250 to 1400°C.

**12.** Method as claimed in one of Claims 1 to 10, characterised in that the basic fine grain fraction of the raw meal components with grain sizes below 60 to 80 μm together with the acidic raw meal components fine-ground below 60 to 80 μm is introduced separately from the coarse grain fraction of the basic raw meal components ground above 80 μm into the kiln flame through a kiln outlet and/or through the inlet chamber of a kiln behind the sintering zone into a temperature range of 1100 to 1400°C.

**13.** Method as claimed in Claim 1, characterised in that for the grinding of the fine grain fraction and the coarse grain fraction of the basic raw meal components the ratio of the grinding media charge to the feed material charge is between 2 and 5, wherein the first chamber of a two-chamber mill and a single-chamber mill is charged with binary ball charge with a mean ball diameter of 84.7 mm and with a ball charge consisting of various ball sizes with a mean ball diameter from 82 to 88 mm and wherein a partition of the two-chamber tube mill operated in closed and open circuit is installed in the mill with a ratio of lengths of the first chamber to the second chamber of 2:.1 to 5.6:1.

**14.** Method as claimed in Claim 1, characterised in that - based on the guiding of the raw meal - a preheating stage of double-string construction is used, wherein the coarse grain fraction of the basic raw meal components with grain sizes from 60 - 500 μm to 80 - 2000 μm is delivered into one preheating string and the mixture of the acidic raw meal components ground below 30 to 80 μm and the fine grain fraction of the basic raw meal components with grain sizes from 0.01 - 30 μm to 0.01 - 80 μm is delivered into the other preheating string, wherein furthermore a coarse proportion of the coarse grain fraction with grain sizes of 125 - 500 μm to 200 - 2000 μm of the basic raw meal components is already separated off under the effect of gravity in the hot gas pipe and falls through by way of gas pipes into the calcination stage, and all or at least a fine proportion with grain sizes of 60 to 125 μm to 80 to 200 μm of the coarse grain fraction of the basic raw meal components preheated in three first cyclones or in the first cyclone is introduced into the reaction zone of the kiln between the transition zone and the sintering zone after the third or first cyclone in the direction of movement of the material of the three-stage to five-stage preheater.

**15.** Method as claimed in Claim 1, characterised in that - based on the guiding of the raw meal - a preheating stage of double-string construction is used and that a proportion of the basic raw meal heated in a preheating string supplied with hot gases from the precalcination stage with grain sizes from 60 - 200 μm to 80 - 200 μm is introduced into the sintering stage into the zone between the sintering and transition zones with a temperature of 1250 to 1450°C, whilst the proportion of the basic raw meal with grain sizes of 125 - 500 μm to 200- 2000 μm which falls through from the second cyclone stage of the same preheating string into a precipitator of the precalcination stage is introduced into a reaction zone between the sintering and recalcination stages with further proportions of raw meal, wherein a coarse-grained reducing agent is introduced upwards with the gas stream into the reaction zone with a grain size of 0.01 to 3000 μm.

**16.** Method as claimed in Claim 1, characterised in that a reducing agent and/or a catalyst for thermal-chemical activation of the quartz contained in the hot raw meal is delivered, that after the drying process the reducing agent is introduced into the hot meal between the sintering and calcination stages and, in the case of double-string construction of the preheating and calcination stage, is delivered between the sintering stage and the string of the calcination or recalcination stage in which the fine grain proportion of the raw meal ground below 30 to 80 μm is heat treated, and that furthermore the catalyst is fed in during grinding of the fine grain proportion of the raw meal to be ground below 30 to 80 μm, and that after the wet process the reducing agent is delivered to the sintering stage between the transition and calcination zones and the catalyst is fed in during grinding of the fine grain proportion of the raw meal to be ground below 80 μm.

**17.** Method as claimed in Claim 16, characterised in that a coarse-grained fuel with grain sizes from 0.01 - 3000 μm to 500 - 3000 μm as reducing agent is introduced in excess into the kiln exhaust gases in the region of a location where raw meal from the preheating stage is added to the kiln exhaust gases, so that the unburnt coarse fraction falls through via the kiln inlet and in this way is mixed together with the raw meal.

**18.** Method as claimed in Claim 1, characterised in that in the case where a preheating stage of double-string construction is used - based on the guiding of the raw meal - the coarse grain proportion of the basic raw meal components with grain sizes of 60 - 500 μm to 80- 2000 μm is heat treated exclusively in a preheating string which with a connected precalcination stage or together with one of two calcination stages present is constructed as a fluidised bed reactor or as a swirling flow calcination chamber with a hot gas producer.

**19.** Apparatus for producing cement clinker from basic and acidic raw materials, comprising arrangements (25, 26, 27, 28) for grinding and drying of the raw materials to form raw meal as well as a device for heat treatment of the raw meal in successive stages with a preheating arrangement (2, 4; 34, 35; 50, 52), a calcination arrangement (5, 14; 46; 51, 53), a sintering arrangement (7, 47; 60) and a cooling arrangement (9; 48; 61), particularly for carrying out the method according to at least one of Claims 1 to 18, characterised by the following features:

   a) the arrangements (25, 26, 27, 28) for grinding and drying are constructed in such a way that the basic raw materials can be ground into two basic raw meal fractions, wherein a fine grain fraction has a grain size range of 0.01 - 80 µm and a coarse grin fraction has a grain size range of 80.01 - 2000 µm for dynamic sintering conditions and a grain size range of 80.01 - 500 µm for static and dynamic sintering conditions;

   b) arrangements (42; 35; 56) are provided for bringing together and joint heat treatment of acidic raw meal components ground to < 80 µm with the basic fine grain fraction of the basic raw meal in such a way that the proportion of this basic fine grain fraction of the raw meal is adjustable in a range which during sintering is sufficient only for the formation of CS and/or $C_3S_2$ as well as for $C_2AS$, $C_3A$, $C_{12}A_7$ and $C_4FA$.

**20.** Apparatus as claimed in Claim 19, characterised in that the calciner (51, 53) is divided into precalcination and recalcination arrangements (51; 53) which are separated from one another in such a way that the recalcination arrangement (53) is connected to the exhaust gas side of the sintering arrangement (60) and the precalcination arrangement (51) is connected to a hot gas producer (58, 59), and that a feed arrangement (62; 43) for an intermediate grain fraction of the basic raw meal components is disposed in the region of the feed arrangement for the fuel to the sintering arrangement (60; 47) and a reaction chamber (55) with a feed arrangement (63; 49) for reducing agent and/or catalysts is disposed between the calcination arrangement (46; 53) and the sintering arrangement (47; 60) for chemical activation of the quartz contained in the hot meal.

**21.** Apparatus as claimed in Claim 20, characterised in that a preheating string (50) connected on the gas side to the precalcination arrangement is connected on the material discharge side to the hot gas producer (56) of the precalcination arrangement (51) and/or to the sintering arrangement (60), and that a preheating unit (52) connected on the gas side to the recalcination arrangement (53) is connected on the material discharge side to the precalcination arrangement (51).

**22.** Apparatus as claimed in Claim 19 with arrangements for separate grinding (25, 26) and drying (27, 28) of the acidic and basic raw materials as well as preheating (34, 35), calcination (46) and common sintering (47) thereof and also for cooling (48) of cement clinker, characterised in that in a preheating string below a double cyclone dust extractor (29) there is disposed a multi-component classifier (37) for division of the raw meal into fractions, of which a fine grain fraction (42) with grain sizes of < 60 - 80 µm is discharged via a down pipe (42) and introduced into a gas pipe (39) of a parallel preheating string, an intermediate grain fraction (43) with grain sizes of 60 - 125 µm to 80 - 200 µm is discharged via the down pipe (943) and introduced with the aid of a feed arrangement (49, 62) directly through the kiln flame (47) behind the sintering zone into a temperature range at 1250 to 1400°C, and a coarse grain fraction with grain sizes of 125 - 500 µm to 200 - 2000 µm is discharged via a down pipe (494) and introduced into a gas pipe (38) of the same preheating string.

**23.** Apparatus as claimed in Claim 19, with arrangements for drying and grinding (75), disagglomeration (74), classification (77) and precipitation (78, 79 and 81), characterised in that a roller press (73) for coarse grinding of the raw material in closed circuit with a hammer mill (74) intended for the disagglomeration of the pressed scabs produced from limestone and a static classifier (77) built up on a pneumatic conveyor dryer (76) connected to a ball mill (75) connected into the closed circuit with a cyclone (79) and a blower (80) is disposed downstream behind the cyclone (79), that an electrostatic filter (81) is arranged afterwards in the direction of flow of the exhaust gases to the blower, and that a feed arrangement for the basic and hard acidic raw materials is disposed on the roller press (73) and a feed arrangement for the argillaceous acidic raw materials is disposed on the hammer mill (74).

**24.** Apparatus as claimed in Claim 19, with arrangements for drying and grinding (86, 88), disagglomeration (87), classification (89, 90) and precipitation (91 and 93), characterised in that a material bed roller mill (86) is provided which for the coarse grinding of the raw material in closed circuit is co-ordinated with a hammer mill (87) intended for the disagglomeration of the pressed scabs produced from the raw material and with a static pre-classifier (89) built up on a pneumatic conveyor dryer (88), wherein a final classifier (90), a cyclone (91), a blower (92) and an electrostatic filter (93) are connected one after the other on the material discharge side and on the gas side.

**25.** Apparatus as claimed in Claim 19, with arrangements for drying and grinding (98), conveying (99), classification (98, 102, 103) and precipitation (104), characterised in that a roller mill (98) operated in closed circuit for the coarse grinding of the raw material has connected to it by way of a bucket elevator (99) a dynamic classifier (103), of which the material discharge for a coarse grain fraction (109) with grain sizes from 125 - 500 µm to 200 - 2000 µm of the basic raw material is connected to a finished product conveyor, and of which the material discharge for tailings (110) with grain sizes coarser than 500 - 2000 µm is connected to the mill feed (100) of the roller mill (98), that furthermore a static classifier (102) is disposed between the roller mill (98) and an electrostatic filter (104) on a pneumatic conveyor dryer (101) and the material discharge thereof for grain sizes from 80 - 125 µm to 60 - 200 µm of the basic raw material is connected to the finished product conveyor for this intermediate grain product (108), and that in the direction of flow of the exhaust gases to the static classifier (102) for the precipitation of a fine grain fraction (107) of acidic and basic raw material components ground below 80 µm an electrostatic filter (104) is disposed which is connected on the material discharge side to a fine material conveyor (107).

26. Apparatus as claimed in Claim 19, with arrangements for drying and grinding (112), conveying (113), classification (112, 115) and precipitation (116), characterised in that a static classifier with a lower discharge arrangement for a coarse grain fraction (122) with grain sizes from 125 - 500 µm to 200 - 2000 µm of the basic raw material is disposed in a roller mill (112) operated in closed circuit for the coarse grinding of the raw material, and this discharge arrangement is connected to a finished product conveyor for this basic raw meal component, that furthermore a static classifier (115) is disposed downstream of the pneumatic conveyor dryer (114) between the roller mill (112) and the electrostatic filter (116), the material discharge of which for an intermediate grain fraction (121) with grain sizes from 80 - 125 µm to 60 - 200 µm of the basic raw meal is connected to a finished product conveyor for this intermediate grain fraction (121), that in the direction of flow of the exhaust gases towards the static classifier (115) for the precipitation of a fine grain fraction (120) with grain sizes smaller than 60 - 80 µm there is disposed an electrostatic filter (116) which is connected on the material discharge side to a fine product conveyor (120) for the acidic and basic raw meal components ground below 80 µm, and that a bucket elevator (113) is disposed for the return of the tailings with grain sizes over 500 - 2000 µm from the roller mill (112).

27. Apparatus as claimed in Claim 19, with arrangements for drying and grinding (125), conveying (138, 139), classification (140, 141) and precipitation (142, 143), characterised in that a double rotator drying and grinding mill (125), which is operated in closed circuit for the coarse grinding and fine grinding of the raw meal, includes feed arrangements (126, 127, 134, 135) on both sides for the feed material, tailings and hot gases, a pre-dryer (128), a fine-grinding chamber (129) and a coarse-grinding chamber (130) as well as a partition (133) with separate central discharges (131, 132) for basic and acidic raw meal components disposed between the fine-grinding chamber and the coarse-grinding chamber (129, 130), that the central discharge (131) of the fine-grinding chamber (125) which is supplied predominantly with acidic components is connected to a rotary air separator (140) via a bucket elevator (138) and parallel thereto via a discharge housing (136) with subsequent static classifier (137), and also the coarse-grinding chamber (130) which is supplied with basic raw material is connected only via this discharge housing (136) and the static classifier (137) to the rotary air classifier (140), wherein this rotary air classifier (140) is connected by a material discharge for the coarse material (149) with grain sizes coarser than 60 - 80 µm to the mill feed (126) of the fine-grinding chamber (129) and is connected by a further material discharge for the fine material (151) of the acidic raw meal components to a fine product conveyor (154) which is also supplied with a fine proportion of the basic raw material, and that the coarse-grinding chamber (130) is also connected via its central discharge (132) and a bucket elevator (139) to a further rotary air classifier (141) which is connected by a material discharge for tailings (152) with grain sizes coarser than 500 - 2000 µm of the basic raw meal component to the mill feed (127) which is supplied only with fresh material (147) of the basic raw material and is connected by a material discharge for the finished product (153) with grain sizes from 80 - 500 µm to 80 - 2000 µm of the basic raw material to the finished product conveyor (154), wherein this finished product (153) with the fine material with grain sizes smaller than 80 µm of the acidic and basic raw meal components precipitated din the rotary air classifier (140), in cyclones (142) and in the electrostatic filter (143) can be delivered to the sintering arrangement.

28. Apparatus as claimed in Claim 27, characterised in that the central discharge (132) of the coarse-grinding chamber (130) of the drying and grinding mill (125) is connected via the bucket elevator (139) to a multi-component classifier (141) for division of the classification material into four grain size fractions, wherein this multi-component classifier (141) is connected on the material discharge side by a discharge arrangement (153) for tailings with grain sizes larger than 500 - 2000 µm to the feed material supply (127) of the coarse-grinding chamber, is also connected by discharge arrangements (158 or 1590 intended for coarse material with an overall grain size range of 60 - 2000 µm to a finished product conveyor, and of these one discharge arrangement (158 or 159) for a coarse material with quartz grains larger than 60 µm is also connected on the material discharge side to the feed material supply (126) to the fine-grinding chamber (129) and the other discharge arrangement (158 or 159) for coarse material without quartz crystals larger than 60 µm is connected to finished product conveyors, and is connected to the finished product conveyor by a discharge arrangement for the fine material (154) with grain sizes smaller than 60-80 μm.

**29.** Apparatus as claimed in Claim 19, with arrangements for drying and grinding (161), conveying (174), classification (165, 175) and precipitation (179), characterised in that a double rotator drying and grinding mill (161), which is operated in closed circuit for the coarse and fine grinding of raw material includes a feed (169, 176, 170, 178) on both sides for feed material, tailings and hot gases, a pre-dryer fine-grinding chamber (162), a coarse-grinding chamber (163), a partition (133) disposed between the fine-grinding chamber and the coarse-grinding chamber (162, 163) for the central discharges (171, 172) of both raw materials, and a static classifier (165) built up over a common discharge housing (164) is connected to the separate central discharges (171, 172) and connected parallel thereto is a bucket elevator (166) connected via the central discharge of the fine-grinding chamber (162) and a pneumatic trough conveyor, wherein the discharge of the coarse material both from the static classifier (165) built up on the discharge housing (164) and the bucket elevator (166) are connected on the material discharge side for coarse material (167, 168) with grain sizes coarser than 60 - 80 μm to the pre-dryer fine-grinding chamber (162) which predominantly receives acidic fresh material, wherein the supply of feed material from the static classifier (165) built up on the discharge housing (164) is connected both to the pre-dryer fine-grinding chamber (162) and to the coarse-grinding chamber (163) and the bucket elevator (166) is connected to the pre-dryer fine-grinding chamber (162), that an impact crusher dryer (173) provided to receive coarse-ground material of basic raw material and supplied with fresh material is connected via a bucket elevator (174) to a rotary air separator (175) which is connected by a material discharge for tailings (176) of the basic raw material with grain sizes over 500 to 2000 μm to the coarse-grinding chamber (163) and is connected by a further material discharge for finished product with grain sizes from 60 to 500 μm to 80 to 2000 μm, in which basic components are also present, to a finished product conveyor (185), and that in the direction of flow of the exhaust gases the static classifier (165), bucket elevator (174) and rotary air separator (175) are connected parallel to a cyclone (179) from which the material discharge for the precipitated fine material consisting of the acidic raw meal components and a fine proportion of the basic raw meal components with grain sizes smaller than 80 μm is connected to the finished product conveyor (185), and a blower (180)is also arranged after the cyclone.

**30.** Apparatus as claimed in Claim 19, with arrangements for drying and grinding (187, 188), pneumatic conveying and drying (189, 201), classification (202, 203) and precipitation (200, 204), characterised in that between a ball mill or tube mill (188) operated in a pneumatic drying and grinding circuit for the fine grinding of principally acidic raw material components and an impact mill or impact hammer mill (187) operated in closed circuit for the coarse grinding of the basic raw material components a multi-component classifier (203) is disposed above a dryer pipe (189) connected to the said mill and a subsequent cyclone (200), wherein the multi-component classifier (203) is connected on the material discharge side by a material discharge for tailings (212) of the limestone with grain sizes over 500 - 2000 μm to the impact mill (187) thus operated with a circulating load, is connected to a finished product conveyor (217) by a material discharge for tailings (219) of the limestone with grain sizes from approximately 125 - 500 μm to 200 - 2000 μm, is connected to the air-swept mill (188) or to the sintering arrangement by a material discharge for intermediate grain material (218) of the limestone with grain sizes from 60 - 125 μm to 80 - 2000 μm, and is connected to the finished product conveyor (217) by a material discharge for fine material (213) with grain sizes smaller than 50 - 80 μm, wherein in the direction of flow of the exhaust gases a static classifier (202) and a cyclone (200) are connected in parallel to a further cyclone (204) which is connected to the finished product conveyor (217) by a material discharge for precipitated fine material (216) consisting of acidic raw meal components with a fine proportion of approximately 5 - 60% of the basic raw meal component with grain sizes smaller than 80 μm, and a blower (205) is disposed after this.

## Revendications

**1.** Procédé de production de clinker de ciment à partir de matières premières basiques et acides, où les matières premières sont d'abord broyées en farine brute et séchées, puis des portions de farine brute sont mélangées et ensuite les portions de farine brute sont préchauffées dans un traitement thermique par étapes, calcinées et agglomérées (cuites) en clinker de ciment et le clinker de ciment est refroidi, caractérisé en ce que

a) les constituants basiques des matières premières sont broyés au moins en une fraction à grains fins ayant des granulométries de 0,01 - 80 μm et en une fraction à grains grossiers ayant des granulométries de 80,01 - 2000 μm dans un rapport de la fraction à grains fins à la fraction à grains grossiers de 1,5:1 à 1:9 pour une agglomération dans des condition dynamiques et

b) les constituants acides de la farine brute broyés à < 80 μm en mélange au moins avec la fraction à grains fins basique de la farine brute sont traités thermiquement, où la portion de cette fraction à grains fins basique de la farine brute est maintenue par rapport à ces constituants acides de la farine brute dans un domaine qui, au cours de l'agglomération, n'est suffisant que pour la formation de CS et/ou $C_3S_2$ ainsi que de $C_2AS$, $C_3A$, $C_{12}A_7$ et $C_4FA$.

2. Procédé selon la revendication 1 caractérisé en ce que la fraction à grains grossiers basique de la farine brute est maintenue dans un domaine de granulométries de 80,01 à 500 μm pour une agglomération (cuisson) dans des conditions statiques et dynamiques.

3. Procédé selon la revendication 1 ou 2 caractérisé en ce que les constituants acides de la farine brute et/ou les substances secondaires avec un module

$$M = CaO + MgO + FeO + 0{,}31 \; Fe_3O_4/(0{,}93\text{-}1{,}4)SiO_2 + 0{,}94 \; Al_2O_3$$

$$+ \; 0{,}7 \; Fe_2O_3 + 0{,}7 \; x \; 0{,}69 \; x \; Fe_3O_4$$

de 0,25 à 1,2 pour une température de fusion de 1300°C au maximum sont broyés avec le constituant basique de la farine brute.

4. Procédé selon la revendication 3 caractérisé en ce que le traitement thermique de la farine brute à cuire se déroule dans un domaine de température de 850°C à 1250°C sous une atmosphère gazeuse réduite.

5. Procédé selon la revendication 1 caractérisé en ce que la portion pour la fraction à grains fins basique de la farine brute à broyer finement est broyée avec les constituants acides de la farine brute à broyer finement en dessous de 80 μm à une granulométrie de 0,01 à 32 μm à 0,01 - 70 μm, en ce que la portion pour la fraction à grains grossiers basiques de la farine brute à broyer au dessus de 80 μm est broyée à une granulométrie de 90 - 2000 μm à 200 - 2000 μm et en ce qu'une fraction de grains intermédiaires des constituants basiques de la farine brute ayant des granulométries de 70 - 90 μm à 32 - 200 μm est retirée au moins en partie.

6. Procédé selon la revendication 1 caractérisé en ce qu'une fraction granulométrique enrichie en grains cristallins de quartz supérieure à 40 μm est séparée des constituants basiques de la farine brute puis est broyée en dessous de 40 à 80 μm avec les constituants acides de la farine brute à broyer finement et avec la portion à broyer pour la fraction à grains fins basique de la farine brute.

7. Procédé selon l'une des revendications 1 à 6 caractérisé en ce que la portion des matières premières basiques pour la fraction à grains grossiers est broyée séparément de la portion des matières premières basiques pour la fraction à grains fins et cette portion pour la fraction à grains fins basique est broyée avec les constituants acides des matières premières à broyer finement en dessous de 80 μm et elles sont envoyées au processus de cuisson dans le rapport correspondant concernant un Kst II optimal.

8. Procédé selon l'une des revendications 1 à 7 caractérisé en ce que la fraction à grains fins des constituants basiques de la farine brute est introduite avec les constituants acides de la farine brute finement broyés en dessous de 80 μm séparément de la fraction à grains grossiers des constituants basiques de la farine brute dans la section d'un préchauffeur à cyclones à deux sections avec un étage de calcination divisé en un étage de précalcination et en un étage de postcalcination, qui est chauffée par les gaz usés de l'étage d'agglomération, et la fraction à grains grossiers des constituants basiques de la farine brute est envoyée à la seconde section qui est chauffée par les gaz chauds provenant de l'étage de précalcination.

9. Procédé selon l'une des revendications 1 à 8 caractérisé en ce que, compte tenu de l'effet du circuit d'alcali sur la teneur en alcalis de la farine chaude lors du chargement de la farine brute dans l'étage d'agglomération et en accord avec la teneur en MgO capable de réaction en phase solide de la farine chaude, lors du chargement d'additifs correcteurs de MgO ou d'alcalis, le rapport de la teneur en MgO capable de réaction en phase solide à la teneur totale en alcalis doit être situé dans un domaine de 2:1 à 5:1.

10. Procédé selon l'une des revendications 1 à 9 caractérisé en ce que la fraction à grains grossiers des constituants basiques de la farine brute avec des granulométries de 80 - 500 μm à 80 - 2000 μm est introduite en quantités correspondantes dans la flamme du four et le côté opposé du four derrière la zone d'agglomération dans un domaine de température de 1250 à 1350°C.

**11.** Procédé selon la revendication 1 caractérisé en ce qu'une fraction à grains intermédiaires des constituants basiques de la farine brute avec des granulométries de 60 - 125 µm à 80 - 200 µm est introduite en une quantité correspondante dans la flamme du four et le côté opposé du four derrière la zone d'agglomération dans un domaine de température de 1250 à 1400°C.

**12.** Procédé selon l'une des revendications 1 à 10 caractérisé en ce que la fraction à grains fins basique de la farine brute avec des granulométries en dessous de 60 à 80 µm est introduite avec les constituants acides de la farine brute finement broyés en dessous de 60 à 80 µm séparément de la fraction à grains grossiers broyée au dessus de 80 µm des constituants basiques de la farine brute dans la flamme du four par une sortie du four et/ou par la chambre d'entrée d'un four derrière la zone d'agglomération dans un domaine de température de 1100 à 1400°C.

**13.** Procédé selon la revendication 1 caractérisé en ce que, pour le broyage de la fraction à grains fins et de la fraction à grains grossiers des constituants basiques de la farine brute, le rapport du garnissage de corps de broyage au garnissage de produit à broyer dans le broyeur est situé entre 2 et 5, où la première chambre d'un broyeur à deux chambres et un broyeur à une chambre dans le cas d'un garnissage de boulets binaire avec un diamètre moyen des boulets de 84,7 mm et dans le cas d'un garnissage de boulets consistant en différentes tailles de boulets avec un diamètre moyen des boulets de 82 à 88 mm sont chargées et où une paroi de séparation du tube broyeur à deux chambres fonctionnant en circuit fermé et en circuit ouvert pour un rapport des longueurs de la première chambre à la seconde chambre de 2:1 à 5,6:1 est incorporée dans le broyeur.

**14.** Procédé selon la revendication 1 caractérisé en ce que, par rapport au traitement de la farine brute, on utilise un étage de préchauffage à deux sections, où la fraction à grains grossiers des constituants basiques de la farine brute avec des granulométries de 60 - 500 µm à 80 - 2000 µm est envoyée à une section de préchauffage, et le mélange constitué par les constituants acides de la farine brute broyés en dessous de 30 à 80 µm et par la fraction à grains fins des constituants basiques de la farine brute avec des granulométries de 0,01 - 30 µm à 0,01 - 80 µm est envoyé à l'autre section de préchauffage, où, en outre, une portion grossière avec des granulométries de 125 - 500 µm à 200 - 2000 µm de la fraction à grains grossiers des constituants basiques de la farine brute est séparée sous la force de pesanteur déjà dans la conduite de gaz chauds et parvient par des conduites de gaz dans l'étage de calcination, et la totalité ou au moins une portion fine avec des granulométries de 60 à 125 µm à 80 à 200 µm de la fraction à grains grossiers des constituants basiques de la farine brute préchauffés dans les trois premiers cyclones ou dans le premier cyclone est introduite après le troisième ou le premier cyclone - dans la direction du mouvement de la matière du préchauffeur à trois à cinq étages - dans le domaine de réaction du four entre les zones de transfert et d'agglomération.

**15.** Procédé selon la revendication 1 caractérisé en ce que, par rapport au traitement de la farine brute, un étage de préchauffage à deux sections est utilisé, et en ce qu'une portion de la farine brute basique, chauffée dans une section de préchauffage alimentée avec des gaz chauds provenant d'un étage de précalcination, avec des granulométries de 60 - 200 µm à 80 - 200 µm est introduite dans l'étage d'agglomération dans le domaine entre les zones d'agglomération et de transfert avec une température de 1250 à 1450°C, tandis que la portion de la farine brute basique avec des granulométries de 125 - 500 µm à 200 - 2000 µm, qui parvient depuis le second étage à cyclones de la même section de préchauffage dans un séparateur de l'étage de précalcination, est introduite dans une zone de réaction entre les étages d'agglomération et de postcalcination avec une autre portion de farine brute, où un réducteur à grains grossiers avec une granulométrie de 0,01 à 3000 µm est introduit dans la zone de réaction en amont du courant de gaz.

**16.** Procédé selon la revendication 1 caractérisé en ce qu'un réducteur et/ou un catalyseur sont introduits pour l'activation thermochimique du quartz contenu dans la farine brute chaude, en ce que, après le procédé de séchage, le réducteur est introduit dans la farine chaude entre les étages d'agglomération et de calcination et est alors envoyé, dans le cas d'un étage de préchauffage et de calcination à deux sections, entre l'étage d'agglomération et la section de l'étage de calcination ou de postcalcination dans laquelle la portion à grains fins de la farine brute broyée en dessous de 30 à 80 µm est traitée thermiquement, en ce que, en outre, le catalyseur est ajouté lors du broyage de la portion à grains fins de la farine brute à broyer en dessous de 30 à 80 µm, et en ce que, selon le procédé humide, le réducteur est ajouté entre les zones de transfert et de calcination de l'étage d'agglomération et le catalyseur est ajouté lors du broyage de la portion à grains fins de la farine brute à broyer en dessous de 80 µm.

**17.** Procédé selon la revendication 16 caractérisé en ce qu'un combustible à grains grossiers avec des granulométries de 0,01 - 3000 µm à 500 - 3000 µm est introduit comme réducteur en excès dans le domaine d'un site dans les gaz usés du four, où la farine brute provenant de l'étage de préchauffage est mélangée avec les gaz usés du four, où la portion grossière non cuite du réducteur tombe dans le four par l'entrée du four et est mélangée avec la farine brute.

**18.** Procédé selon la revendication 1 caractérisé en ce que, par rapport au traitement de la farine brute, lors de l'utilisation d'un étage de préchauffage à deux sections, la portion à grains grossiers des constituants basiques de la farine brute avec des granulométries de 60 - 500 µm à 80 - 2000 µm est traitée thermiquement exclusivement dans une section de préchauffage qui est agencée, avec un étage de précalcination raccordé ou avec l'un des deux étages de calcination présents, sous forme de réacteur à lit fluidisé ou de chambre de calcination à écoulement tourbillonnaire avec un générateur de gaz chauds.

**19.** Installation pour la production de clinker de ciment à partir de matières premières basiques et acides, contenant des dispositifs (25, 26, 27, 28) pour le broyage et le séchage des matières premières en farine brute ainsi qu'un dispositif pour le traitement thermique par étapes successif de la farine brute avec un dispositif de préchauffage (2, 4 ; 34, 35 ; 50, 52), un dispositif de calcination (5, 14 ; 46 ; 51, 53), un dispositif d'agglomération (7, 47 ; 60) et un dispositif de refroidissement (9 ; 48 ; 61), en particulier pour la mise en oeuvre du procédé selon au moins l'une des revendications 1 à 18, caractérisée par les caractéristiques suivantes :

a) les dispositifs (25, 26, 27, 28) pour le broyage et le séchage sont agencés de telle manière que les matières premières basiques peuvent être broyées en au moins deux fractions de farine brute basiques où une fraction à grains fins présente un domaine granulométrique de 0,01 - 80 µm et une fraction à grains grossiers présente pour des conditions d'agglomération dynamiques un domaine granulométrique de 80,01 - 2000 µm et pour des conditions d'agglomération statiques et dynamiques un domaine granulométrique de 80,01 - 500 µm ;
b) il est prévu des dispositifs (42 ; 35 ; 56) pour l'apport combiné et le traitement thermique commun de constituants acides de la farine brute broyés à < 80 µm avec la fraction à grains fins basique de la farine brute de telle manière que la portion de cette fraction à grains fins basique de la farine brute peut être ajustée dans un domaine qui n'est suffisant au cours de l'agglomération que pour la formation de CS et/ou $C_3S_2$ ainsi que de $C_2AS$, $C_3A$, $C_{12}A_7$ et $C_4FA$.

**20.** Installation selon la revendication 19 caractérisée en ce que le dispositif de calcination (51, 53) est divisé en dispositifs de pré- et postcalcination (51 ; 53) séparés l'un de l'autre de telle manière que le dispositif de postcalcination (53) est relié au côté gaz usés du dispositif d'agglomération (60) et que le dispositif de précalcination (51) est relié à un générateur de gaz chauds (58, 59), et en ce que, dans le domaine du dispositif d'apport pour le combustible au dispositif d'agglomération (60 ; 47), est agencé un dispositif d'apport (62 ; 43) pour une fraction à grains intermédiaires des constituants basiques de la farine brute et entre le dispositif de calcination (46 ; 53) et le dispositif d'agglomération (47 ; 60) est agencée une chambre de réaction (55) avec un dispositif d'apport (63 ; 49) pour un réducteur et/ou des catalyseurs pour l'activation chimique du quartz contenu dans la farine chaude.

**21.** Installation selon la revendication 20 caractérisée en ce qu'une section de préchauffage (50) raccordée du côté gaz au dispositif de précalcination est reliée du côté sortie des matières au générateur de gaz chauds (56) du dispositif de précalcination (51) et/ou au dispositif d'agglomération (60) et en ce qu'une section de préchauffage (52) raccordée du côté gaz au dispositif de postcalcination (53) est reliée du côté sortie des matières au dispositif de précalcination (51).

**22.** Installation selon la revendication 19 avec des dispositifs pour le broyage séparé (25, 26) et le séchage séparé (27, 28) des matières premières acides et basiques ainsi que pour leur préchauffage (34, 35), leur calcination (46), leur agglomération commune (47) ainsi que pour le refroidissement (48) du clinker de ciment, caractérisée en ce que, dans une section de préchauffage sous un dépoussiéreur à deux cyclones (29) est agencé un classificateur de séparation en plusieurs composants (37) pour la séparation de la farine brute en fractions granulométriques parmi lesquelles une fraction à grains fins (42) ayant des granulométries < 60 - 80 µm est extraite par le biais d'un tube de descente (42) et est introduite dans une conduite de gaz (39) d'une section de préchauffage parallèle, une fraction à grains intermédiaires (43) avec des granulométries de 60 - 125 µm à 80 - 200 µm est extraite par le biais d'un tube de descente (43) et est introduite à l'aide d'un dispositif d'apport (49, 62) directement dans la flamme du four (47) derrière la zone d'agglomération dans un domaine de température de 1250 à 1400°C, et une fraction à grains grossiers avec des granulométries de 125 - 500 µm à 200 - 2000 µm est extraite par le biais d'un tube de descente (44) et est introduite dans une conduite de gaz (38) de la même section de préchauffage.

**23.** Installation selon la revendication 19 avec des dispositifs pour le séchage par broyage (75), la désagglomération (74), la classification (77) et la séparation (78, 79 et 81) caractérisée en ce qu'une presse à cylindres (73) pour le broyage grossier de la matière première en circuit fermé avec un broyeur à marteaux (74) prévu pour la désagglomération des blocs pressés formés à partir de calcaire et un classificateur à courant d'air (77) monté sur un sécheur à tube ascendant (76) en liaison avec un broyeur à boulets (75) branché en circuit fermé avec un cyclone (79) et une soufflerie (80) est disposée en aval derrière le cyclone (79), en ce qu'un électrofiltre (81) est branché en aval de la soufflerie dans la direction d'écoulement des gaz usés, et en ce qu'un dispositif d'apport pour les matières premières basiques et acides dures est agencé au niveau de la presse à cylindres (73) et un dispositif d'apport pour les matières premières acides argileuses est agencé au niveau du broyeur à marteaux (74).

**24.** Installation selon la revendication 19 avec des dispositifs pour le séchage par broyage (86, 88), la désagglomération (87), la classification (89, 90) et la séparation (91 et 93), caractérisée en ce qu'il est prévu un broyeur à cylindres et à lit de produit (86) qui, pour le broyage grossier de la matière première, est disposé conjointement en circuit fermé avec un broyeur à marteaux (87) prévu pour la désagglomération des blocs pressés formés à partir de la matière première et un préclassificateur statique (89) monté sur un sécheur à tube ascendant (88), où un classificateur final (90), un cyclone (91), une soufflerie (92) et un électrofiltre (93) sont raccordés successivement du côté de la sortie des matières et du côté gaz.

**25.** Installation selon la revendication 19 avec des dispositifs pour le séchage par broyage (98), le transport (99), la classification (98, 102, 103) et la séparation (104), caractérisée en ce qu'à un broyeur à cylindres (98) fonctionnant en circuit fermé pour le broyage grossier de la matière première est raccordé par le biais d'un élévateur (99) un classificateur dynamique (103) dont la sortie de produit pour une fraction à grains grossiers (109) avec des granulométries de 125 - 500 μm à 200 - 2000 μm de la matière première basique est reliée à un transporteur de produit fini et dont la sortie de produit pour le produit granuleux (110) avec des granulométries supérieures à 500 - 2000 μm est reliée à l'alimentation (100) du broyeur à cylindres (98), en ce que, en outre, entre le broyeur à cylindres (98) et un électrofiltre (104) il est prévu au niveau d'un sécheur à tube ascendant (101) un classificateur à courant d'air (102) dont la sortie de produit pour une fraction à grains intermédiaires (108) avec des granulométries de 80 - 125 μm à 60 - 200 μm de la matière première basique est reliée au transporteur de produit fini pour cette fraction à grains intermédiaires (108), et en ce que, dans la direction d'écoulement des gaz usés, après le classificateur à courant d'air (102), pour la séparation d'une fraction à grains fins (107) de constituants acides et basiques des matières premières broyés en dessous de 80 μm, est agencé un électrofiltre (104) qui est relié du côté sortie de matière avec un transporteur de produit fini fin (107).

**26.** Installation selon la revendication 19 avec des dispositifs pour le séchage par broyage (112), le transport (113), la classification (112, 115) et la séparation (116), caractérisée en ce que, dans un broyeur à cylindres (112) fonctionnant en circuit fermé pour le broyage grossier de la matière première, est disposé un classificateur à courant d'air avec un dispositif de sortie inférieur pour une fraction à grains grossiers (122) avec des granulométries de 125 - 500 μm à 200 - 2000 μm de la matière première basique, et ce dispositif de sortie est relié à un transporteur de produit fini pour ce constituant basique de la farine brute, en ce que, en outre, entre le broyeur à cylindres (112) et l'électrofiltre (116) un classificateur à courant d'air (115) est disposé en aval du sécheur à tube ascendant (114), classificateur dont la sortie de produit pour une fraction à grains intermédiaires (121) avec des granulométries de 80 - 125 μm à 60 - 200 μm de la farine brute basique est reliée à un transporteur de produit fini pour cette fraction à grains intermédiaires (121), en ce que, dans la direction d'écoulement des gaz usés après le classificateur à courant d'air (115), pour la séparation d'une fraction à grains fins (120) avec des granulométries inférieures à 60 - 80 μm, est agencé un électrofiltre (116) qui est relié du côté sortie des matières à un transporteur de produit fin (120) pour les constituants acides et basiques de la farine brute broyés en dessous de 80 μm, et en ce qu'il est prévu un élévateur (113) pour le recyclage de produit granuleux avec des granulométries supérieures à 500 - 2000 μm dans le broyeur à cylindres (112).

**27.** Installation selon la revendication 19 avec des dispositifs pour le séchage par broyage (125), le transport (138, 139), la classification (140, 141) et la séparation (142, 143), caractérisée en ce qu'un broyeur de séchage par broyage à deux rotors (125) fonctionnant en circuit fermé pour le broyage grossier et le broyage fin de la matière première contient des entrées des deux côtés (126, 127, 134, 135) pour le produit de broyage, le produit granuleux et les gaz chauds, un présécheur (128), une chambre de broyage fin (129) et une chambre de broyage grossier (130) ainsi qu'une paroi de séparation (133) disposée entre la chambre de broyage fin et la chambre de broyage grossier (129, 130) avec des sorties médianes séparées (131, 132) pour les composants basiques et acides de la farine brute, en ce que la sortie médiane (131) de la chambre de broyage fin (125) alimentée principalement avec des constituants acides des matières premières est reliée par le biais d'un élévateur (138) et parallèlement à celui-ci par le biais d'un boîtier de sortie (136) avec le classificateur à courant d'air (137) branché en aval avec un classificateur à courant d'air dispersé (140), auquel est raccordée aussi la chambre de broyage grossier (130) alimentée en matière première basique uniquement par le biais de ce boîtier de sortie (136) et du classificateur à courant d'air (137), où ce classificateur à courant d'air dispersé (140) est relié par une sortie de produit pour le produit grossier (149) avec des granulométries supérieures à 60 - 80 μm avec l'alimentation de broyeur (126) de la chambre de broyage fin (129) et par le biais d'une autre sortie de produit pour le produit fin (151) des constituants acides de la farine brute avec un transporteur de produit fini (154) alimenté en outre avec une portion fine de la matière première basique, et en ce que la chambre de broyage grossier (130) est raccordée en outre par le biais de sa sortie médiane (132) et d'un élévateur (139) à un autre classificateur à courant d'air dispersé (141) qui est relié par une sortie de produit pour le produit granuleux (152) avec des granulométries supérieures à 500 - 2000 μm de la matière première basique à l'entrée de broyeur alimentée uniquement avec du produit frais (147) de la matière première basique et par une sortie de produit pour le produit fini (153) avec des granulométries de 80 - 500 μm à 80 - 2000 μm de la matière première basique au transporteur de produit fini (154), où ce produit fini (153) peut être envoyé au dispositif d'agglomération avec le produit fin séparé dans le classificateur à courant d'air dispersé (140), dans les cyclones (142) et dans l'électrofiltre (143) avec des granulométries inférieures à 80 μm des constituants acides et basiques de la farine brute.

28. Installation selon la revendication 27 caractérisée en ce que la sortie médiane (132) de la chambre de broyage grossier (130) du broyeur de séchage par broyage (125) est reliée par le biais de l'élévateur (139) à un classificateur de séparation en plusieurs composants (141) pour la séparation du produit de classification en quatre fractions granulométriques, où ce classificateur de séparation en plusieurs composants (141) est relié du côté sortie de matière par un dispositif de sortie (153) pour un produit granuleux avec des granulométries supérieures à 500 - 2000 μm à l'alimentation en produit de broyage (127) de la chambre de broyage grossier, par des dispositifs de sortie (158 et 159) déterminés pour un produit de classification grossier avec un domaine granulométrique total de 60 - 2000 μm avec un transporteur de produit fini, parmi lesquels un dispositif de sortie (158 ou 159) pour un produit de classification grossier avec des grains de quartz plus grossiers que 60 μm, est relié du côté sortie de matière aussi à l'alimentation de produit de broyage (126) de la chambre de broyage fin (129), et l'autre dispositif de sortie (158 ou 159) pour un produit de classification grossier sans cristaux de quartz grossiers supérieurs à 60 μm est relié à des transporteurs de produit fini, et par un dispositif de sortie pour un produit fin (154) avec des granulométries inférieures à 60 - 80 μm est relié au transporteur de produit fini.

29. Installation selon la revendication 19 avec des dispositifs pour le séchage par broyage (161), le transport (174), la classification (165, 175) et la séparation (179), caractérisée en ce qu'un broyeur de séchage par broyage à deux rotors (161) fonctionnant en circuit fermé pour le broyage grossier et fin de la matière première contient une alimentation des deux côtés (169, 176, 170, 178) pour le produit de broyage, le produit granuleux et les gaz chauds, une chambre de broyage fin de présécheur (162), une chambre de broyage grossier (163), une paroi de séparation (133) disposée pour les sorties médianes (171, 172) des deux matières premières entre la chambre de broyage fin et la chambre de broyage grossier (162, 163), et à ses sorties médianes (171, 172) sont raccordés un classificateur à courant d'air (165) monté sur un boîtier de sortie commun (164) ainsi que, parallèlement à celui-ci, un élévateur (166) raccordé par le biais de la sortie médiane (172) de la chambre de broyage fin (162) et d'un conduit de transport d'air, où la sortie de produit de broyage grossier du classificateur à courant d'air (165) monté sur le boîtier de sortie (164) et aussi l'élévateur (166) sont reliés du côté sortie de matière pour un produit grossier (167, 168) avec des granulométries supérieures à 60 - 80 μm à la chambre de broyage fin de présécheur (162) qui reçoit principalement un produit frais acide, où l'alimentation de produit de broyage du classificateur à courant d'air monté sur le boîtier de sortie (164) est reliée à la chambre de broyage fin de présécheur (162) et aussi à la chambre de broyage grossier (163) et l'élévateur (166) est relié à la chambre de broyage fin de présécheur (162), en ce qu'un sécheur à impacts (173) alimenté en produit frais basique, prévu pour recevoir un produit de broyage grossier de matière première basique est raccordé par un élévateur (174) à un classificateur à courant d'air dispersé (175), qui est relié par une sortie de produit pour un produit granuleux (176) de la matière première basique avec des granulométries supérieures à 500 à 2000 μm à la chambre de broyage grossier (163) et par une autre sortie de produit pour un produit fini avec des granulométries de 60 à 500 μm à 80 à 2000 μm, dans lequel des constituants basiques sont présents aussi, à un transporteur de produit fini (185), et en ce que, dans la direction d'écoulement des gaz usés, le classificateur à courant d'air (165), l'élévateur (174) et le classificateur à courant d'air dispersé (175) sont raccordés parallèlement à un cyclone (179) dont la sortie de produit pour le produit fin séparé, qui consiste en les constituants acides de la farine brute et en une portion fine des constituants basiques de la farine brute avec des granulométries inférieures à 80 μm, est reliée au transporteur de produit fini (185), une soufflerie (180) étant disposée en outre après le cyclone.

**30.** Installation selon la revendication 19 avec des dispositifs pour le séchage par broyage (187, 188), le séchage à transport par courant d'air (189, 201), la classification (202, 203) et la séparation (200, 204), caractérisée en ce qu'il est prévu entre un broyeur à boulets ou tube broyeur (188) fonctionnant dans un circuit de séchage par broyage à courant d'air pour le broyage fin de constituants principalement acides des matières premières et un broyeur à impacts ou à marteaux (187) fonctionnant en circuit fermé pour le broyage grossier de constituants basiques des matières premières, par le biais d'une conduite tubulaire de sécheur (189) raccordée à celui-ci puis d'un cyclone (200) un classificateur de séparation en plusieurs composants (203) qui est relié du côté sortie de matière par une sortie de produit pour un produit granuleux (212) du calcaire avec des granulométries supérieures à 500 - 2000 $\mu$m au broyeur à impacts (187) fonctionnant ainsi en circulation, par une sortie de produit pour un produit à grains grossiers (219) du calcaire avec des granulométries d'environ 125 - 500 $\mu$m à 200 - 2000 $\mu$m à un transporteur de produit fini (217), par une sortie de produit pour un produit à grains intermédiaires (218) du calcaire avec des granulométries de 60 - 125 $\mu$m à 80 - 200 $\mu$m au broyeur à courant d'air (188) ou au dispositif d'agglomération, et par une sortie de produit pour un produit fin (213) avec des granulométries inférieures à 50 - 80 $\mu$m au transporteur de produit fini (217), où, dans la direction d'écoulement des gaz usés sont raccordés un classificateur à courant d'air (202) et un cyclone (200) parallèlement à un autre cyclone (204) qui est relié au transporteur de produit fini (217) par une sortie de produit pour un produit fin séparé (216) qui consiste en constituants acides de la farine brute avec une portion fine d'environ 5-60 % du constituant basique de la farine brute avec des granulométries inférieures à 80 $\mu$m, et après lequel est disposé une soufflerie (205).

FIG.1

FIG. 2

FIG.3

EP 0 801 636 B1

FIG. 4

FIG. 5

FIG. 6

FIG. 7

A

B

FIG. 8

FIG. 9

FIG. 10

FIG. 11

FIG. 12

FIG. 13

EP 0 801 636 B1